(19) Europäisches Patentamt
European Patent Office
Office européen des brevets

(11) **EP 4 778 882 A1**

(12) **EUROPEAN PATENT APPLICATION**
published in accordance with Art. 153(4) EPC

(43) Date of publication:
**22.07.2026 Bulletin 2026/30**

(21) Application number: **24863905.6**

(22) Date of filing: **16.09.2024**

(51) International Patent Classification (IPC):
*B82Y 30/00* (2011.01)          *B82Y 40/00* (2011.01)
*C08F 8/42* (2006.01)           *C08K 3/22* (2006.01)
*C08K 3/08* (2006.01)           *C01F 17/00* (2020.01)
*C08K 9/00* (2006.01)           *C09C 1/36* (2006.01)
*C01G 23/04* (2006.01)

(52) Cooperative Patent Classification (CPC):
B82Y 30/00; B82Y 40/00; C01F 17/00;
C01G 23/04; C08F 8/42; C08K 3/08; C08K 3/22;
C08K 9/00; C09C 1/36

(86) International application number:
**PCT/BR2024/050419**

(87) International publication number:
**WO 2025/054693 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 BR 102023018703**

(71) Applicant: **Instituto Hercílio Randon
95181899 Farroupilha (BR)**

(72) Inventors:
• **BOARETTO, Joel
  95032-180 Caxias do Sul (BR)**

• **CRUZ, Robinson Carlos Dudley
  95020-472 Caxias do Sul (BR)**
• **MALAGRINO, Thiago Ramos Stellin
  88802-070 Criciúma (BR)**
• **ZARUR, Guilherme Dias
  88804-400 Criciúma (BR)**
• **DICK, Gabriel
  88801-240 Criciúma (BR)**

(74) Representative: **WSL Patentanwälte
Partnerschaft mbB
Kaiser-Friedrich-Ring 98
65185 Wiesbaden (DE)**

(54) **FUNCTIONAL NANOPARTICLE PREMIX, PROCESS FOR OBTAINING SAME, PROCESS FOR MODIFYING MATERIAL PROPERTIES AND MATERIAL WITH MODIFIED PROPERTIES**

(57)    The present invention is in the field of Materials Engineering and Nanotechnology. More specifically, the invention discloses: a functional premix comprising nanoparticles and a carrier or compatibilizer; a process for obtaining the same; a process for modifying the properties of materials; and modified materials provided with improved properties. Surprisingly, the premix of the invention is useful for modifying properties of materials of different natures, such as polymers, metals, ceramic materials and/or composites of different materials. The premix of the invention provides several advantages in the transport, use, and incorporation of nanoparticles into different materials. In one embodiment, the invention provides notable modifications in the properties of polymers, breaking, in practice, with the previous concepts in this technical field. In another embodiment, the invention provides advantages when modifying the properties of metallic and/or ceramic materials.

EP 4 778 882 A1

Fig. 22

**Description**

**Field of the Invention**

The present invention is in the field of Materials Engineering and Nanotechnology. More specifically, the invention discloses: a functional premix comprising nanoparticles and a carrier or compatibilizer; a process for obtaining the same; a process for modifying the properties of materials; and modified materials provided with improved properties. Surprisingly, the premix of the invention is useful for modifying properties of materials of different natures, such as polymers, metals, ceramic materials and/or composites of different materials. The premix of the invention provides several advantages in the transport, use, and incorporation of nanoparticles into different materials. In one embodiment, the invention provides notable modifications in the properties of polymers, breaking, in practice, with the previous concepts in this technical field. In another embodiment, the invention provides advantages when modifying the properties of metallic and/or ceramic materials.

**Background of the Invention**

The use of nanoparticles to modify the properties of various materials has been the subject of intense research and development. In one hand, the large-scale use still faces multiple limitations, starting with the non-availability of nanoparticle preparations with high concentration, purity, and precise particle size profile. On the other hand, even when such nanoparticles are available, several technical difficulties need to be overcome, including amount, purity, dispersibility, stability, and compatibility with the material to be modified.

In the field of polymers, the use of nanoparticles is not typically the subject of studies or technologies, partly due to the limitations indicated above and partly due to its molecular structure. The present invention provides an approach to changing the properties of polymers that was not known in the prior art, both in terms of the different modified properties and their magnitude. Furthermore, some polymers are not physically and chemically compatible with certain nanoparticles, notably due to the issue of polarity. The present invention also provides a solution to this problem.

These and other reasons contribute to the fact that no polymers doped with nanoparticles are yet available on an industrial scale with a particle size distribution of choice and entirely within the nanometer range. The present invention solves these problems.

In the field of metals or ceramic materials, the use of nanoparticles is the subject of several studies and technologies. However, a recurring difficulty when using nanoparticles in these materials is the dispersion and/or homogenization issues. The present invention provides a solution to such problems.

After searching the prior art in scientific and patent literature, the following documents related to the topic were found:

Patent application WO2022036427, with inventors in common with the present invention, discloses a preparation of niobium nanoparticles obtained by a top down approach. Said preparation concomitantly includes the following technical characteristics: particles completely in the particle size range of nanometers; high purity; on an industrial scale, with an adequate cost for economic feasibility. Said nanometric powder preparation has very high purity, since the process does not add impurities or lead to the formation of reaction products, as is the case with state-of-the-art bottom-up (or synthesis) processes. On the other hand, WO2022036427 does not mention modulations in polymer properties resulting from a particular nanoparticle preparation as disclosed in the present patent application.

Patent document US20070116976A1 relates to how to provide a composition that combines improved impact resistance with effective corona resistance. As a solution, US20070116976A1 discloses a nanocomposite comprising a polymeric composition and nanoparticles with a mean largest dimension less than or equal to about 500 nanometers. However, US20070116976A1 does not mention the modulation in the properties of polymers resulting from a particular nanoparticle preparation as disclosed in the present patent application.

Patent document CN110229412 refers to solving the compatibility problems of nanomaterials with the polymer so that mechanical properties such as hardness are not affected. Thus, CN110229412 discloses a nanocomposite with increased strength and hardness obtained by melt blending a premix. The premix comprises: a) a nanomaterial which may be metal oxides, transition metals and rare earth elements, b) a liquid medium which may be water and other solvents, c) polypropylene and, preferably, to increase the amount of liquid medium to which the nanomaterial is bound, an auxiliary agent may also be added. However, CN110229412 does not mention the modulation in the properties of polymers resulting from a particular nanoparticle preparation as disclosed in the present patent application.

The article by Hajduk et al. (2021) (Thermal and optical properties of PMMA films reinforced with $Nb_2O_5$ nanoparticles) discloses the effect of niobium pentoxide nanoparticles on altering the thermal and physical properties of polymethyl methacrylate (PMMA). On the other hand, Hajduk et al. (2021) does not mention modulations in polymer properties resulting from a particular nanoparticle preparation as disclosed in the present patent application.

Patent document US2009226711A1 discloses a biaxially oriented nanocomposite film formed by a process comprising mixing a nanofiller and a polymer composition to form a nanocomposite; extruding the nanocomposite as a melt to form a molten tube; expanding the tube biaxially by means of mechanical force and air pressure to form a bubble; and collapsing the bubble to form at least one sheet of a biaxially oriented nanocomposite film, wherein the biaxially oriented nanocomposite film has a breaking strength (dielectric strength) of at least 300 V/micrometer. On the other hand, US2009226711A1 does not mention modulations in polymer properties resulting from a particular nanoparticle preparation as disclosed in the present patent application.

Patent document JP2003073558 proposes a method for producing a composition of ultrafine particles of metal oxide and a polymer containing electron donating groups, in which the surface of the particles is modified with acidic and basic groups. More specifically, the method comprises: 1) hydrolysis of a compound to obtain ultrafine metal oxide particles and surface modification with an aliphatic carboxylic acid and an aliphatic amine; 2) dispersing/dissolving the particles in a desired solvent and combining with a polymer solution, forming a mixed solution; 3) optionally, heating and stirring to promote the formation of the composite of the ultrafine metal oxide particles and the polymer. On the other hand, JP2003073558 does not mention modulations in the polymer properties resulting from a particular nanoparticle preparation as disclosed in the present patent application.

From what can be inferred from the researched literature, no documents were found anticipating or suggesting the teachings of the present invention.

## Summary of the Invention

The present invention solves several problems of the prior art by means of a functional premix comprising a nanoparticle filler and at least one carrier. The premix (or premixture) of the invention is surprisingly useful for modifying one or more properties of very different materials, such as polymers, metals, ceramic materials and/or composites of different materials. Surprisingly, it is useful for modifying the property of very different materials, such as polymers, metals, ceramic materials and/or composites of different materials. A process for obtaining said premix is also disclosed.

The premix of the invention is particularly useful for solving problems of stability, dispersibility and/or adequate incorporation of nanoparticles into various materials. The premix of the invention also solves the technical problem of suspending nanometric powders during handling, thus preventing dispersion into the environment.

Modifying polymers or other materials, such as metals and/or ceramic materials, by incorporating particles in the micrometer size range leads to catastrophic failures such as cracks, deformations, geometric irregularities, and other problems. Furthermore, for certain high-cost materials, the mass percentage resulting from the use of micrometer-scale particles can make the product final cost prohibitive. Finally, due to the use of micrometric particles, the so-called "mean free path" and surface energy are unable to interact with the medium so as to generate new structures. The invention solves this problem and provides premixes containing nanoparticles in high concentrations. Since the nanoparticle concentrations in the premixes of the invention are orders of magnitude higher than that required to obtain property improvements in the final materials containing such nanoparticles, the premixes of the invention are particularly useful for the subsequent preparation of materials having lower nanoparticle concentrations, using said premixes as premixtures or compatibilizers. If one wishes to prepare a material having 50 ppm of any of the nanoparticles described in this patent application, simply use a 1:10 mixture of the respective premix with that one wishes to modify, and homogenize until the product with the specified concentration is obtained. Other final concentrations can be obtained by adjusting the premix concentrations in the desired material.

The invention also provides a process for modifying materials, as well as the modified materials obtained.

Therefore, one of the objects of the invention is to provide a functional premix comprising: a solid, semi-solid, paste-like or liquid carrier or compatibilizer; and a filler of 0.0001 to 50% by weight of nanoparticles having a defined particle size and chemically defined composition.

In one embodiment, said carrier or compatibilizer is selected from: a polymeric, ceramic, metallic material, or combinations thereof. In one embodiment, said polymeric material (with the term "polymer" being used in a broad sense) is selected from: diols, polyols, adhesives/plasticizers, such as mesamoll, elastomers, rubbers, thermoplastic polymers, thermosetting polymers, resins, waxes, epoxy resins, phenolic resins, polymethyl methacrylate (acrylic), polystyrene, polyvinyl chloride (PVC), polyethylene, polypropylene, natural polymers selected from rubber, silk, wool, cellulose, or combinations thereof. In one embodiment, said diol or polyol is selected from: alkyl glycol, alkylene glycol, polyalkylene glycol, ethylene glycol, propylene glycol, butyl glycol, polyethylene glycol, polypropylene glycol, or combinations thereof.

. In one embodiment, these nanoparticles are smaller than 750 nm and have a degree of amorphization of at least 19%.

Another object of the invention is to provide a process for obtaining the functional premix comprising at least one step of incorporating a nanoparticle filler into a solid, semi-solid or paste-like carrier into a metallic, ceramic and/or polymeric matrix material during a processing step of said material.

It is another object of the invention to provide a process for modifying the properties of a material, said process comprising one or more steps of incorporating the functional premix of the invention into a metallic, ceramic, polymeric, composite material, or combinations thereof, during a processing step of said material. In one embodiment, where the premix of the invention is used to incorporate nanoparticles into a polymeric material, the carrier is a compatibilizer that integrates into the final polymeric matrix containing nanoparticles. In one embodiment, where the premix of the invention is used to incorporate nanoparticles into a metallic or ceramic material, the carrier usually does not integrate into the final metallic or ceramic matrix due to the high processing temperature and volatilization of the carrier, with the nanoparticles remaining in the modified product.

Another object of the invention is to provide a material having modified properties due to the incorporation of the premix of the invention, said modified material being metallic, ceramic, polymeric, a composite, or combinations thereof.

In one embodiment, the modified polymeric material is selected from polyesters and the like, epoxy, phenolic resins and the like, polyamides and the like, thermoplastic polymers, thermosetting polymers, or combinations thereof. Among other improved properties and characteristics in polymeric materials, special mention is made of the improved resistance to mechanical stress, modified glass transition temperature, among others. In one embodiment, the modified metallic and/or ceramic material has improved properties, notably improved resistance to mechanical stress and/or corrosion, among others.

These and other objects of the invention will be readily appreciated by those skilled in the art and will be described in detail below.

## Brief Description of the Figures

The following figures are presented:

Fig. 1 depicts the FTIR spectra of the samples.

In Fig. 1A, the spectra of epoxy resin - Sample 1, epoxy resin - Sample 2 and epoxy resin - Sample 3 are shown, respectively.

In Fig. 1B, the superposition of said spectra (transmittance in % in the Y-axis and wavenumber in $cm^{-1}$ in the X-axis) is shown.

Fig. 2 depicts the FTIR spectra of the samples.

In Fig. 2A, the spectra of epoxy resin - Sample 4, epoxy resin - Sample 5 and epoxy resin - Sample 6 are shown, respectively.

In Fig. 2B, the superposition of said spectra (transmittance in % in the Y-axis and wavenumber in $cm^{-1}$ in the X-axis) is shown.

Fig. 3 depicts the FTIR spectra of the samples.

In Fig. 3A, the spectra of epoxy resin - Sample 7, epoxy resin - Sample 8 and epoxy resin - Sample 9 are shown, respectively.

In Fig. 3B, the superposition of said spectra (transmittance in % in the Y-axis and wavenumber in $cm^{-1}$ in the X-axis) is shown.

Fig. 4 depicts the FTIR spectra of the samples.

In Fig. 4A, the spectra of epoxy resin - Sample 10, epoxy resin - Sample 11 and epoxy resin - Sample 12 are shown, respectively.

In Fig. 4B, the superposition of said spectra (transmittance in % in the Y-axis and wavenumber in $cm^{-1}$ in the X-axis) is shown.

Fig. 5 depicts the FTIR spectrum of the Lacktherm 1314 resin sample (transmittance in % in the Y-axis and wavenumber in $cm^{-1}$ in the X-axis).

Fig. 6 depicts a thermogravimetric analysis: the mass loss profile as a function of temperature and first derivative of the resin sample Sample 1 (in the Y-axis, on the left, the & of the TG; in the Y-axis on the right, the DTF (%/min); and temperature in degrees Celsius in the X-axis).

Fig. 7 depicts a thermogravimetric analysis: the mass loss profile as a function of temperature and first derivative of the resin sample Sample 2 (in the Y-axis, on the left, the & of the TG; in the Y-axis on the right, the DTF (%/min); and temperature in degrees Celsius in the X-axis).

Fig. 8 depicts a thermogravimetric analysis: the mass loss profile as a function of temperature and first derivative of the resin sample Sample 3 (in the Y-axis, on the left, the & of the TG; in the Y-axis on the right, the DTF (%/min); and temperature in degrees Celsius in the X-axis).

Fig. 9 depicts a thermogravimetric analysis: the mass loss profile as a function of temperature and first derivative of the resin sample Sample 4 (in the Y-axis, on the left, the & of the TG; in the Y-axis on the right, the DTF (%/min); and temperature in degrees Celsius in the X-axis).

Fig. 10 depicts a thermogravimetric analysis: the mass loss profile as a function of temperature and first derivative of the resin sample Sample 5 (in the Y-axis, on the left, the & of the TG; in the Y-axis on the right, the DTF (%/min); and temperature in degrees Celsius in the X-axis).

Fig. 11 depicts a thermogravimetric analysis: the mass loss profile as a function of temperature and first derivative of the resin sample Sample 6 (in the Y-axis, on the left, the & of the TG; in the Y-axis on the right, the DTF (%/min); and temperature in degrees Celsius in the X-axis).

Fig. 12 depicts a thermogravimetric analysis: the mass loss profile as a function of temperature and first derivative of the resin sample Sample 7 (in the Y-axis, on the left, the & of the TG; in the Y-axis on the right, the DTF (%/min); and temperature in degrees Celsius in the X-axis).

Fig. 13 depicts a thermogravimetric analysis: the mass loss profile as a function of temperature and first derivative of the resin sample Sample 8 (in the Y-axis, on the left, the & of the TG; in the Y-axis on the right, the DTF (%/min); and temperature in degrees Celsius in the X-axis).

Fig. 14 depicts a thermogravimetric analysis: the mass loss profile as a function of temperature and first derivative of the resin sample Sample 9 (in the Y-axis, on the left, the & of the TG; in the Y-axis on the right, the DTF (%/min); and temperature in degrees Celsius in the X-axis).

Fig. 15 depicts a thermogravimetric analysis: the mass loss profile as a function of temperature and first derivative of the resin sample Sample 10 (in the Y-axis, on the left, the & of the TG; in the Y-axis on the right, the DTF (%/min); and temperature in degrees Celsius in the X-axis).

Fig. 16 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

Fig. 17 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

Fig. 18 depicts a thermogravimetric analysis: the mass loss profile as a function of temperature and first derivative of the resin sample Sample 12 (in the Y-axis, on the left, the & of the TG; in the Y-axis on the right, the DTF (%/min); and temperature in degrees Celsius in the X-axis).

Fig. 19 depicts a thermogravimetric analysis: the mass loss profile as a function of temperature and first derivative of the Lacktherm 1314-1 resin sample (in the Y-axis, on the left, the & of the TG; in the Y-axis on the right, the DTF (%/min); and temperature in degrees Celsius in the X-axis).

Fig. 20 depicts MEV images and EDS results for resin sample 1. In A) and B) scanning electron microscopy images are shown; in C) the EDS analysis image is shown.

Fig. 21 depicts MEV images and EDS results for resin sample 2. In A) a scanning electron microscopy image is shown;

in B) the EDS analysis image is shown.

Fig. 22 depicts MEV images and EDS results for resin sample 3. In A) and B) scanning electron microscopy images are shown; in C) the EDS analysis image is shown.

Fig. 23 depicts MEV images and EDS results for resin sample 4. In A) and B) scanning electron microscopy images are shown; in C) the EDS analysis image is shown.

Fig. 24 depicts MEV images and EDS results for resin sample 5. In A) and B) scanning electron microscopy images are shown; in C) the EDS analysis image is shown.

Fig. 25 depicts MEV images and EDS results for resin sample 6. In A) and B) scanning electron microscopy images are shown; in C) the EDS analysis image is shown.

Fig. 26 depicts MEV images and EDS results for resin sample 7. In A) and B) scanning electron microscopy images are shown; in C) the EDS analysis image is shown.

Fig. 27 depicts MEV images and EDS results for resin sample 8. In A) and B) scanning electron microscopy images are shown; in C) the EDS analysis image is shown.

Fig. 28 depicts MEV images and EDS results for resin sample 9. In A) and B) scanning electron microscopy images are shown; in C) the EDS analysis image is shown.

Fig. 29 depicts MEV images and EDS results for resin sample 10. In A) and B) scanning electron microscopy images are shown; in C) the EDS analysis image is shown.

Fig. 30 depicts MEV images and EDS results for resin sample 11. In A) and B) scanning electron microscopy images are shown; in C) the EDS analysis image is shown.

Fig. 31 depicts MEV images and EDS results for resin sample 12. In A) and B) scanning electron microscopy images are shown; in C) the EDS analysis image is shown.

Fig. 32 depicts a graph of the modification of the storage modulus (damping effect) of the 1020/1 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis.

Fig. 33 depicts a graph of the modification of the storage modulus (damping effect) of the 1010/1 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis.

Fig. 34 depicts a graph of the modification of the storage modulus (damping effect) of the 1000/0 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. Fig. 35 shows a comparative graph of the storage modules of resins 1020/1, 1010/1 and 1000/0, as shown in the graphs in Figs. 32A, 33A, and 34A.

Fig. 36 shows a comparative graph of the Tangent Delta data of resins 1020/1, 1010/1 and 1000/0, as per graphs in Figs. 32B, 33B, and 34B.

Fig. 37 illustrates comparative curves of the storage modulus (E') by temperature for each sample described in example 8.

Fig. 38 illustrates comparative curves of tangent delta (tan d) by temperature for each sample described in example 8.

Fig. 39 shows a bar graph for mean activation energy (AE) for each sample described in example 8.

Fig. 40 shows a bar graph for mean storage modulus (E') for each sample described in example 8.

Fig. 41 shows a bar graph for mean tangent delta (tan d) for each sample described in example 8.

Fig. 42 shows a line graph comparing the variation of storage modulus (E') by concentration and nanoparticle type.

Fig. 43 shows a line graph comparing the variation of tangent delta (tan d) by concentration and nanoparticle type.

Fig. 44 depicts the FTIR spectra of sample 1000/0 described in example 8 (transmittance in % in the Y-axis and wavenumber in cm$^{-1}$ in the X-axis).

Fig. 45 depicts the FTIR spectra of sample 1010/1 described in example 8 (transmittance in % in the Y-axis and wavenumber in cm$^{-1}$ in the X-axis).

Fig. 46 depicts the FTIR spectra of sample 1010/2 described in example 8 (transmittance in % in the Y-axis and wavenumber in cm$^{-1}$ in the X-axis).

Fig. 47 depicts the FTIR spectra of sample 1010/3 described in example 8 (transmittance in % in the Y-axis and wavenumber in cm$^{-1}$ in the X-axis).

Fig. 48 depicts the FTIR spectra of sample 1010/4 described in example 8 (transmittance in % in the Y-axis and wavenumber in cm$^{-1}$ in the X-axis).

Fig. 49 depicts the FTIR spectra of sample 1020/1 described in example 8 (transmittance in % in the Y-axis and wavenumber in cm$^{-1}$ in the X-axis).

Fig. 50 depicts the FTIR spectra of sample 1020/2 described in example 8 (transmittance in % in the Y-axis and wavenumber in cm$^{-1}$ in the X-axis).

Fig. 51 depicts the FTIR spectra of sample 1020/3 described in example 8 (transmittance in % in the Y-axis and wavenumber in cm$^{-1}$ in the X-axis).

Fig. 52 depicts the FTIR spectra of sample 1020/4 described in example 8 (transmittance in % in the Y-axis and wavenumber in cm$^{-1}$ in the X-axis).

Fig. 53 depicts the FTIR spectra of sample 1030/4 described in example 8 (transmittance in % in the Y-axis and wavenumber in cm$^{-1}$ in the X-axis).

Fig. 54 depicts the FTIR spectra of sample 1040/4 described in example 8 (transmittance in % in the Y-axis and wavenumber in cm$^{-1}$ in the X-axis).

Fig. 55 depicts a comparison of the FTIR spectra of the samples described in example 8 (transmittance in % in the Y-axis and wavenumber in cm$^{-1}$ in the X-axis).

Fig. 56 depicts the storage modulus (E') curve of sample 1010/1 as a function of temperature.

Fig. 57 depicts the tangent delta (tan d) curve of sample 1010/1 as a function of temperature.

Fig. 58 depicts the loss modulus (E") curve of sample 1010/1 as a function of temperature.

Fig. 59 depicts the storage modulus (E') curve of sample 1010/2 as a function of temperature.

Fig. 60 depicts the tangent delta (tan d) curve of sample 1010/2 as a function of temperature.

Fig. 61 depicts the loss modulus (E") curve of sample 1010/2 as a function of temperature.

Fig. 62 depicts the storage modulus (E') curve of sample 1010/3 as a function of temperature.

Fig. 63 depicts the tangent delta (tan d) curve of sample 1010/3 as a function of temperature.

Fig. 64 depicts the loss modulus (E") curve of sample 1010/3 as a function of temperature.

Fig. 65 shows a bar graph of the mean storage modulus (E') for each sample described in example 15.

Fig. 66 shows a bar graph of the mean loss modulus (E") for each sample described in example 15.

Fig. 67 shows a bar graph of the mean glass transition temperature ($T_g$) for each sample described in example 15.

Fig. 68 illustrates the size histogram obtained from transmission microscopy analysis of the Niobium pentoxide particles sample as-received (termed A.R.).

Fig. 69 illustrates the size histogram obtained from transmission microscopy analysis of the Niobium pentoxide particles sample subjected to milling for 1h.

Fig. 70 illustrates the size histogram obtained from transmission microscopy analysis of the Niobium pentoxide particles sample subjected to milling for 3h.

Fig. 71 illustrates the size histogram obtained from transmission microscopy analysis of the Niobium pentoxide particles sample subjected to milling for 6h.

Fig. 72 illustrates the size histogram obtained from transmission microscopy analysis of the Niobium pentoxide particles sample subjected to milling for 12h.

Fig. 73 illustrates a comparison of X-ray diffractograms that demonstrate significant changes in the crystalline phase for Niobium pentoxide particles samples subjected to different milling times (i.e., 1h, 3h, 6h, and 12h).

Fig. 74 shows a graph of crystallinity (%) and crystallite size (nm) and milling time (h).

Fig. 75 shows particles of Niobium pentoxide highlighted in an ultrathin section of the sample with 50 ppm.

Fig. 76 shows particles of Niobium pentoxide highlighted in an ultrathin section of the sample with 100 ppm.

Fig. 77 shows particles of Niobium pentoxide highlighted in an ultrathin section of the sample with 250 ppm.

Fig. 78 shows particles of Niobium pentoxide highlighted in an ultrathin section of the sample with 500 ppm.

Fig. 79 shows a graph of the surface temperature of the brake pad at the end of each braking cycle for each of the samples tested.

Fig. 80 shows photos of samples V1, V6, and V8 after 3 cycles of the accelerated corrosion test.

Fig. 81 shows a graph of the Gogan C hardness and cold compressibility test (5 MPa, whole pad) for the friction materials containing Niobium pentoxide nanoparticles in phenolic resin.

## Detailed Description of the Invention

In the context of the present invention, the term "niobium species or niobium-containing material" should be understood in its broadest sense as any species containing the element niobium. The term "niobium species or niobium-containing material" encompasses various chemical entities containing niobium, including metallic niobium, niobium oxides, oxalates, hydrates, hydrides, carbides, or nitrides, niobium iron or niobium alloyed with other metals or transition metals, or combinations thereof. It also includes niobium pentoxide ($Nb_2O_5$), $NbO_2$, NbO, niobium oxalate, niobic acid, and FeNb.

In the context of the present invention, the term "titanium species or titanium-containing material" should be understood in its broadest sense as any species containing the element titanium. The term "titanium species or titanium-containing material" encompasses various chemical entities containing titanium, including metallic titanium, titanium oxides, oxalates, hydrates, hydrides, carbides, or nitrides, or titanium alloyed with other metals or transition metals, or combinations thereof. It also includes titanium dioxide.

In the context of the present invention, the term "tantalum species or tantalum-containing material" should be understood in its broadest sense as any species containing the element tantalum. The term "tantalum species or tantalum-containing material" encompasses various chemical entities containing tantalum, including metallic tantalum, tantalum oxides, oxalates, hydrates, hydrides, carbides, or nitrides, tantalum iron or tantalum alloyed with other metals or transition metals, or combinations thereof. It also includes tantalum pentoxide.

In the context of the present invention, the term "polymer or polymeric compound" is used in a broad sense, being selected from: diols, polyols, adhesives/plasticizers, such as mesamoll, elastomers, rubbers, thermoplastic polymers, thermosetting polymers, resins, waxes, epoxy resins, phenolic resins, polymethyl methacrylate (acrylic), polystyrene, polyvinyl chloride (PVC), polyethylene, polypropylene, natural polymers selected from rubber, silk, wool, cellulose, or combinations thereof. In one embodiment, said diol or polyol is selected from: alkyl glycol, alkylene glycol, polyalkylene glycol, ethylene glycol, propylene glycol, butyl glycol, polyethylene glycol, polypropylene glycol, or combinations thereof.

It should be understood in its broadest sense as a macromolecule formed by the combination of at least two monomers, where said monomers may comprise the same or different chemical composition.

The premix of the invention, when using a polymeric carrier or compatibilizer, can be useful both for obtaining modified polymers and for obtaining modified metals or ceramics. If modified polymers are obtained, the carrier or compatibilizer is ideally a thermoplastic, due to its better processability. If modified metals or ceramics are obtained, said carrier may be a thermosetting polymer or, preferably, a low molecular weight and/or more fluid polymer, preferably a sacrificial carrier that evaporates while processing the material to be modified.

The invention can also be defined by the following clauses.

A functional premix comprising: a solid, semi-solid, paste-like or liquid carrier or compatibilizer; and a filler of 0.0001 to 50% by weight of nanoparticles having a defined particle size and chemically defined composition.

The premix as defined above, wherein said carrier or compatibilizer is selected from: a polymeric, ceramic, metallic material, or combinations thereof.

The premix as defined above, wherein said polymeric material is selected from: diols, polyols, adhesives/plasticizers, such as mesamoll, elastomers, rubbers, thermoplastic polymers, thermosetting polymers, resins, waxes, epoxy resins, phenolic resins, polymethyl methacrylate (acrylic), polystyrene, polyvinyl chloride (PVC), polyethylene, polypropylene, natural polymers selected from rubber, silk, wool, cellulose, or combinations thereof.

The premix as defined above, wherein said diol or polyol is selected from: alkyl glycol, alkylene glycol, polyalkylene glycol, ethylene glycol, propylene glycol, butyl glycol, polyethylene glycol, polypropylene glycol, or combinations thereof.

The premix as defined above, wherein said nanoparticles are nanoparticles of metals, transition metals, non-metals, oxides, ceramic oxides, rare earth elements, or combinations thereof.

The premix as defined above, wherein said nanoparticles are of a material containing niobium, titanium, tantalum, their oxides, hydrates, carbides, oxalates, graphene, graphene oxide, or combinations thereof.

The premix as defined above, wherein said nanoparticles are of niobium pentoxide, niobium oxalate, niobic acid, FeNb, titanium dioxide, tantalum pentoxide, or combinations thereof.

The premix as defined above, wherein said nanoparticles are smaller than 750 nm, preferably smaller than 500 nm.

The premix as defined above, wherein said nanoparticle filler comprises a degree of crystallinity below 81% or a degree of amorphization of at least 19%.

The premix as defined above, wherein said nanoparticle filler comprises: (i) a degree of crystallinity below 61%, preferably a degree of crystallinity below 45% and more preferably a degree of crystallinity below 30%; or (ii) a degree of amorphization of at least 39%, preferably a degree of amorphization of at least 55% and more preferably a degree of amorphization of at least 70%.

A process for obtaining the functional premix as defined above, comprising the steps of:

- incorporating 0.0001 to 50% by weight of nanoparticles of metals, transition metals, non-metals, oxides, ceramic oxides, rare earth elements, or combinations thereof into a carrier or compatibilizer selected from a polymeric, ceramic, metallic material, or combinations thereof; and

- homogenizing until a solid, semi-solid or paste-like premix is obtained.

A process for modifying materials, comprising one or more steps of adding the functional premix defined above to a processing step of metallic, ceramic, polymeric material or combinations thereof.

Material having modified properties obtained by the process defined above.

The material as defined above, comprising a nanoparticle concentration in the range of 1 to 500 ppm.

In the present invention, the nanoparticles degree of crystallinity or amorphization is relevant for some applications. In one embodiment of the functional premix, said nanoparticle filler comprises (i) a degree of crystallinity below 61%, preferably a degree of crystallinity below 45% and even more preferably a degree of crystallinity below 30%; or (ii) a degree of amorphization of at least 39%, preferably a degree of amorphization of at least 55% and even more preferably a degree of amorphization of at least 70%.

In one embodiment of the functional premix, said nanoparticle filler comprises a degree of amorphization of at least 19%.

In one embodiment of the functional premix, said nanoparticle filler preferably comprises a degree of crystallinity below 80%, more preferably below 75%, more preferably below 70%, more preferably below 65%, more preferably below 61%, more preferably below 60%, more preferably below 55%, more preferably below 50%, more preferably a degree of crystallinity below 45%, more preferably below 40%, more preferably below 35% and even more preferably a degree of crystallinity below 30%. In one embodiment, the degree of crystallinity is below 29%, more preferably below 28%, more preferably below 27%. In a non-limiting embodiment, the degree of crystallinity is 26%.

In one embodiment of the functional premix, said nanoparticle filler preferably comprises a degree of crystallinity below 61%, preferably a degree of crystallinity below 45% and even more preferably a degree of crystallinity below 30%.

In one embodiment of the functional premix, said nanoparticle filler preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of crystallinity of at least 70%. In one embodiment, the degree of amorphization is at least 71%, more preferably at least 72%, more preferably at least 73%. In a non-limiting embodiment, the degree of amorphization is 74%.

In one embodiment of the functional premix, said nanoparticle filler preferably comprises a degree of amorphization of at least 39%, preferably a degree of amorphization of at least 55% and even more preferably a degree of amorphization of at least 70%.

In one embodiment of the functional premix, said nanoparticles are composed of non-metals, metals, transition metals, rare earth elements, species containing the same or combinations thereof.

In one embodiment of the functional premix, said niobium pentoxide nanoparticles comprise a particle size distribution profile of: d10: between 14 and 110 nm; d50: between 29 and 243 nm; and d90: between 89 and 747 nm.

In one embodiment of the functional premix, said nanoparticles of titanium dioxide comprise a particle size distribution profile of: d10 from 148 to 189 nm; d50 from 239 to 485 nm; d90 from 402 to 970 nm.

In one embodiment, the material having modified properties comprises a nanoparticle concentration in the range of tens to hundreds of ppm relative to the material having modified properties.

In one embodiment, the modified material comprises a nanoparticle concentration in the range of 1 to 500 ppm.

In one embodiment, the concentration of said nanoparticles relative to the material is low, e.g., in the range between single-digit, tens and hundreds of ppm, such as (non-limiting): 1, 2, 3, 4, 5, 6, 7, 8, 9, 10, 25, 50, 75, 100, 200, 250, 300, 400, 500, 600, 700, 800, 900, or 999 ppm. In one embodiment, a very low concentration of nanoparticles generated a surprising technical effect in modulating the properties of the polymers to which they were applied.

In one embodiment, the concentration of said nanoparticles relative to the material is 1 to 500 ppm.

In one embodiment, the concentration of said nanoparticles relative to the material is 50, 100, 250 or 500 ppm.

In one embodiment, the material obtained having modified properties has improved chemical, mechanical, electrical and/or optical properties. In one embodiment of the method, the concentration of nanoparticles in the modified material is in the range of tens to hundreds of ppm.

In one embodiment, the modified material is a polymer with a modified crystalline structure. In one embodiment, the modified polymer has modified mechanical properties. In one embodiment, said property is the storage modulus (E'), loss modulus (E"), loss factor (tan $\delta$) and/or glass transition temperature ($T_g$) of a polymer.

The inventors of the present invention not only found that nanoparticles, when incorporated into polymer matrices, are capable of surprisingly improving chemical and mechanical properties (such as storage modulus (E'), loss modulus (E"), glass transition temperature ($T_g$) and tan delta), but also surprisingly that a higher degree of amorphization of the nanoparticles promotes an even more significant change in the properties of the polymer matrix.

In one embodiment, the functional premix of the present invention acts as a dosage adjuster for nanoparticles that are filled together with the carrier for doping metallic, ceramic, polymeric material or combinations thereof.

In one embodiment, the functional premix of the present invention acts as a sacrificial carrier or a compatibilizer.

In one embodiment, the functional premix of the present invention acts as a sacrificial carrier for the incorporation of nanoparticles into a metallic and/or ceramic matrix.

In one embodiment, the functional premix of the present invention acts as a compatibilizer, with both the compatibilizer and the nanoparticles being incorporated into the polymer matrix.

The examples below show non-limiting examples of embodiments for more than one type of polymer and for a series of particle types, varying composition, milling times, mass, particle size distribution, etc., so that the scope of the claims herein is duly supported by the present specification.

**Examples**

The examples shown here are intended only to exemplify some of the various ways of carrying out the invention, however without limiting the scope thereof.

Modifying polymers or other materials, such as metals and/or ceramic materials, by incorporating particles in the micrometer size range leads to catastrophic failures such as cracks, deformations, geometric irregularities, and other problems. The invention solves this problem and provides premixes containing nanoparticles in high concentrations. Since the nanoparticle concentrations in the premixes of the invention are orders of magnitude higher than that required to obtain property improvements in the final materials containing such nanoparticles, the premixes of the invention are particularly useful for the subsequent preparation of materials having lower nanoparticle concentrations, using said premixes as premixtures or compatibilizers. If one wishes to prepare a material having 5 or 50 ppm of any of the nanoparticles described in this patent application, simply use a 1:100 or 1:10 mixture, respectively, of the corresponding premix with the material one wishes to modify, and homogenize until the product with the specified concentration is obtained. Other final concentrations can be obtained by adjusting the premix concentrations in the desired material.

To analyze the modified materials obtained when using the premix of the invention, some tests are performed, such as those described below.

Dynamic Mechanical Thermal Analysis (DMTA) has been widely used in the characterization of polymers by detecting their relaxation processes, both at the macroscopic and molecular levels. In other words, it provides information about the viscoelastic behavior of a system, dividing the modulus into two components, an elastic contribution and a viscous contribution.

The modulus of the E* system is represented mathematically as a complex number composed of two components:

$$E^* = E' + i.E''$$

Where E' is the storage modulus (measurement of the material's elasticity - the material's ability to store energy) and E" is the loss modulus (the material's ability to dissipate energy - energy lost in the form of heat).

DMTA analysis also allows obtaining the loss or damping tangent (tan delta), which is the ratio between the dissipated energy and the maximum potential energy stored during the cycle:

$$\text{Tan delta} = E''/E'$$

Materials having high tan delta dissipate much of the energy used to deform them, while materials with low tan delta are more elastic and have a greater capacity to store energy.

**Example 1** - **Epoxy resin containing nanoparticles of graphene oxide**

One embodiment of the premix of the invention is an epoxy resin with up to 500 ppm of graphene oxide nanoparticles. The epoxy resin used in the experiments is commercially available liquid epoxy resin D.E.R 331™ from Dow Chemical Company which is a liquid reaction product of epichlorohydrin and bisphenol A.

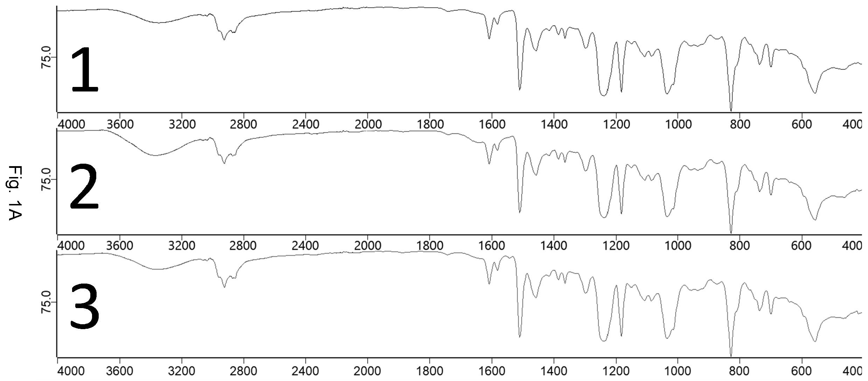

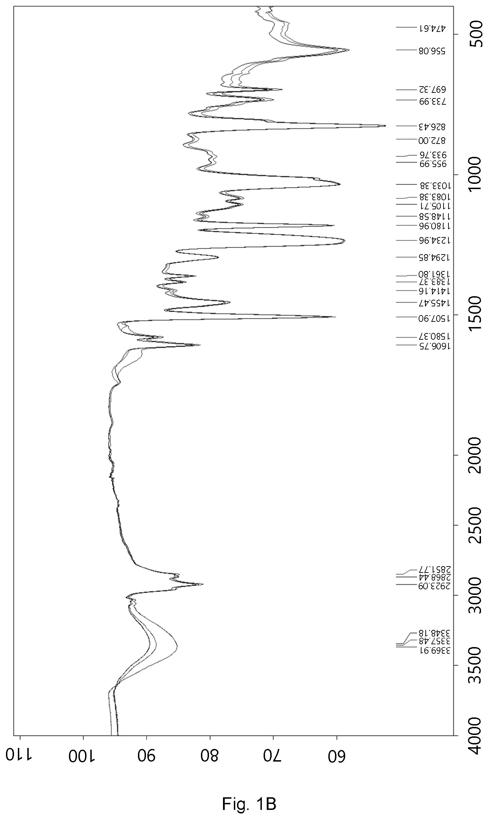

The concentrations of graphene oxide nanoparticles that are incorporated into the resin are described in Table 1 for the samples named in the tests discussed below and illustrated in Figs. 1-31:

**Table 1** - description of samples 1-4

|  | Identification | Nanoparticle amount (ppm) |
|---|---|---|
| **Graphene oxide** | Sample 1 | 500 |
|  | Sample 2 | 250 |
|  | Sample 3 | 100 |
|  | Sample 4 | 50 |

**Example 2** - **Epoxy resin containing Nb$_2$O$_5$ nanoparticles**

Another embodiment of the premix of the invention is an epoxy resin with up to 500 ppm of niobium pentoxide

EP 4 778 882 A1

nanoparticles. The epoxy resin used in the experiments is commercially available liquid epoxy resin D.E.R 331™ from Dow Chemical Company which is a liquid reaction product of epichlorohydrin and bisphenol A.

The concentrations of niobium pentoxide nanoparticles that are incorporated into the resin are described in the table below for the samples named in the tests discussed below and illustrated in Figs. 1-31:

Table 2 - description of samples 5-8

| Niobium pentoxide | Identification | Nanoparticle amount(ppm) |
|---|---|---|
| | Sample 5 | 500 |
| | Sample 6 | 250 |
| | Sample 7 | 100 |
| | Sample 8 | 50 |

The particle size profile of the niobium nanoparticles used is described in detail in patent application WO2022036427 of the same holder for a sample subjected to 12h of milling.

## Example 3 - Epoxy resin containing nanoparticles of TiO$_2$

One embodiment of the premix of the invention is an epoxy resin with up to 500 ppm of titanium dioxide nanoparticles. The epoxy resin used in the experiments is commercially available liquid epoxy resin D.E.R 331™ from Dow Chemical Company which is a liquid reaction product of epichlorohydrin and bisphenol A.

The concentrations of titanium dioxide nanoparticles that are incorporated into the resin are described in the table below for the samples named in the tests discussed below and illustrated in Figs. 1-31:

Table 3 - description of samples 9-12

| Titanium dioxide | Identification | Nanoparticle amount (ppm) |
|---|---|---|
| | Sample 9 | 500 |
| | Sample 10 | 250 |
| | Sample 11 | 100 |
| | Sample 12 | 50 |

The particle size profile of the titanium nanoparticles used is described in detail in patent application BR102022010931 (still confidential) by the same holder for a sample subjected to 12 hours of milling.

## Example 4 - Fourier Transform Infrared Spectroscopy (FTIR) Analysis

The resin premixes with nanoparticles, prepared according to examples 1, 2, and 3, were cured and subsequently subjected to several types of tests. In a first series of tests, they were subjected to infrared spectroscopy. This technique is certainly one of the most important analytical techniques currently available. One of the great advantages of this technique is that most samples, in practically any physical state, can be studied. Liquids, solutions, pastes, powders, films, fibers, gases, and surfaces can be analyzed with careful selection of sampling techniques and preparation. The introduction of Fourier transform infrared (FTIR) spectrometers has dramatically improved the quality of infrared spectra and minimized the time required to obtain data. The constant improvement of computers has allowed the development of a variety of techniques for testing/examining previously intractable samples. Infrared (IR) radiation corresponds approximately to the part of the electromagnetic spectrum located between the visible and microwave regions. The portion of greatest utility in the analysis and identification of materials is located between 4000 cm$^{-1}$ and 400 cm$^{-1}$ (2.5 μm and 25 μm), the so-called mid-infrared. Infrared spectroscopy is based on the vibrations of atoms in a molecule. An infrared spectrum is commonly obtained by passing infrared radiation through a sample and determining the fraction of the incident radiation that is absorbed at each frequency (energy) or wavelength. By absorbing infrared radiation, molecules are excited to higher energy states. This process is quantized, that is, only certain frequencies (energies) are absorbed, and this absorption corresponds to energy changes in the order of 8 to 40 kJ/mol. Although the absorption process in the infrared is quantized, the spectrum usually appears as a series of bands rather than lines, because each change in vibrational energy level corresponds to a series of changes in rotational levels. The lines overlap, giving rise to the observed bands, vibrational-rotation bands. The absorption frequency or wavelength of a radiation depends on the relative

13

masses of the atoms, the bond strength constants, and the geometry of the atoms in the structure of the compound. Each absorption frequency found in an infrared spectrum corresponds to a vibration frequency of a part of a molecule of the sample. The positions of the bands in the infrared spectra can be showed in wavelength ($\mu$m) or wavenumber (cm$^{-1}$), and the intensities of the bands in percentage of transmittance (%T) or absorbance (A). Transmittance is the ratio of the radiant energy transmitted by a sample to the radiant energy incident on it. Absorbance is the decimal logarithm of the inverse of transmittance, that is, A = log10(1/T).

In this example, the Bruker OPTIK GmbH HTS-XT, model Vertex 70, operating in ATR (Attenuated Total Reflectance) mode with a diamond crystal was used. The liquid samples were deposited in the sample holder of the equipment, and the measurements were performed in an observation range from 4,000 cm$^{-1}$ to 400 cm$^{-1}$ with a resolution of 4 cm$^{-1}$ and performing 32 scans.

The results are shown in Figs. 1-5.

Fig. 1 depicts the FTIR spectra of the samples. In Fig. 1A, the spectra of Sample 1, Sample 2, and Sample 3 are shown, respectively. In Fig. 1B, the superposition of said spectra (transmittance in % in the Y-axis and wavenumber in cm$^{-1}$ in the X-axis) is shown.

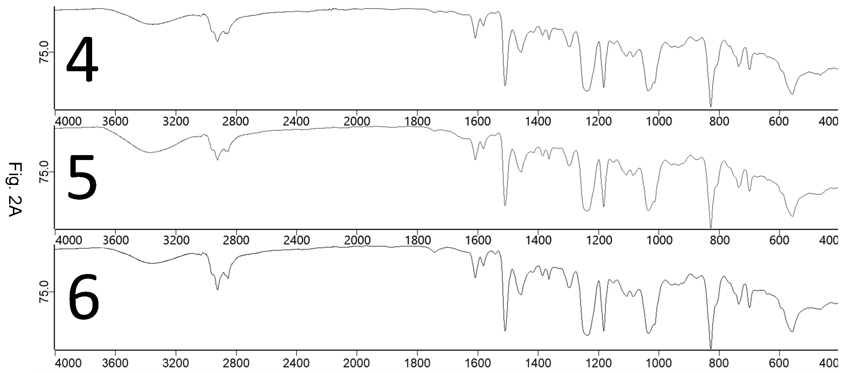

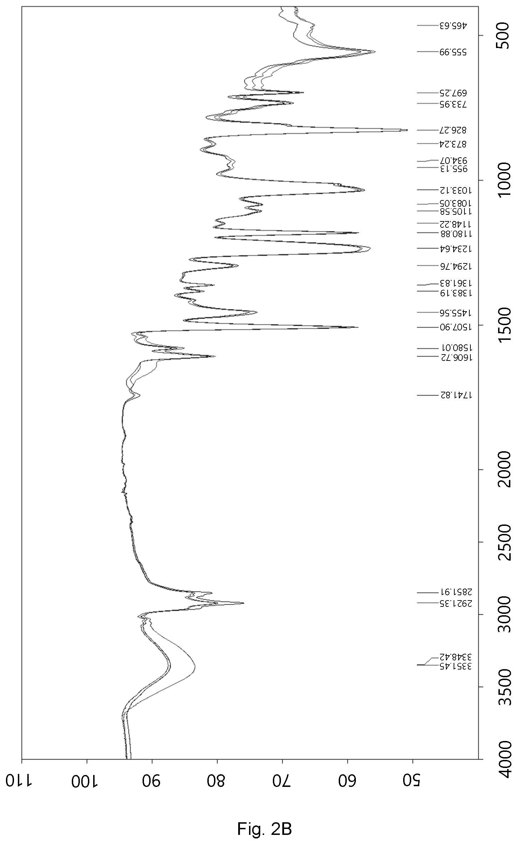

Fig. 2 depicts the FTIR spectra of the samples. In Fig. 2A, the spectra of Sample 4, Sample 5, and Sample 6 are shown, respectively. In Fig. 2B, the superposition of said spectra (transmittance in % in the Y-axis and wavenumber in cm$^{-1}$ in the X-axis) is shown.

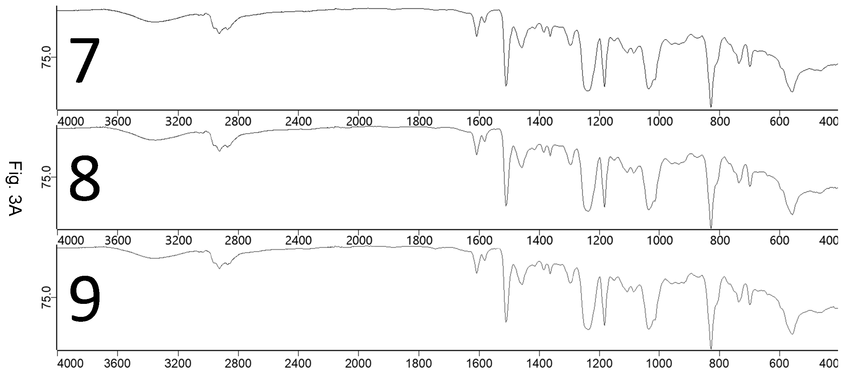

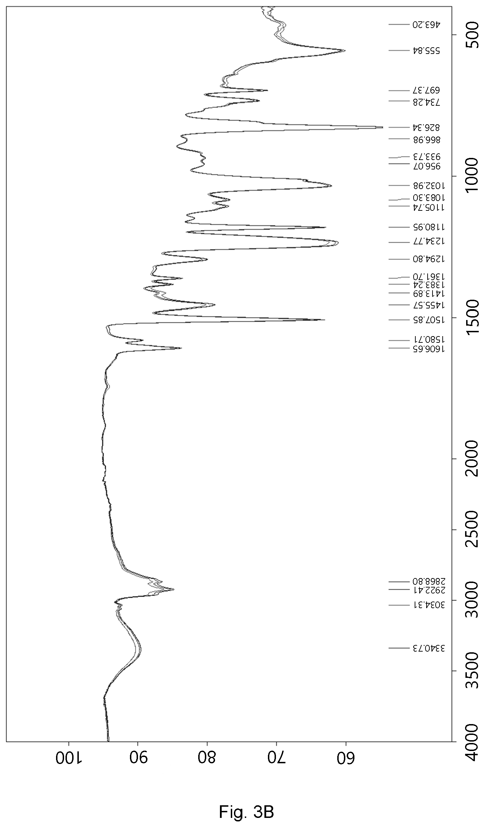

Fig. 3 depicts the FTIR spectra of the samples. In Fig. 3A, the spectra of Sample 7, Sample 8, and Sample 9 are shown, respectively. In Fig. 3B, the superposition of said spectra (transmittance in % in the Y-axis and wavenumber in cm$^{-1}$ in the X-axis) is shown.

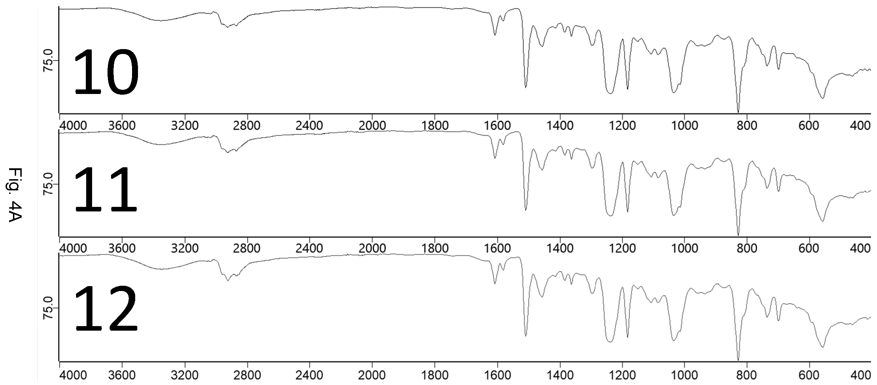

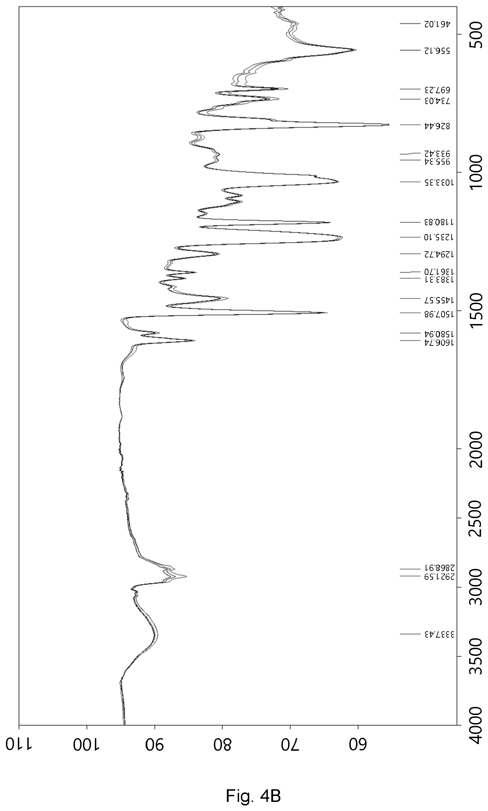

Fig. 4 depicts the FTIR spectra of the samples. In Fig. 4A, the spectra of Sample 10, Sample 11, and Sample 12 are shown, respectively. In Fig. 4B, the superposition of said spectra (transmittance in % in the Y-axis and wavenumber in cm$^{-1}$ in the X-axis) is shown.

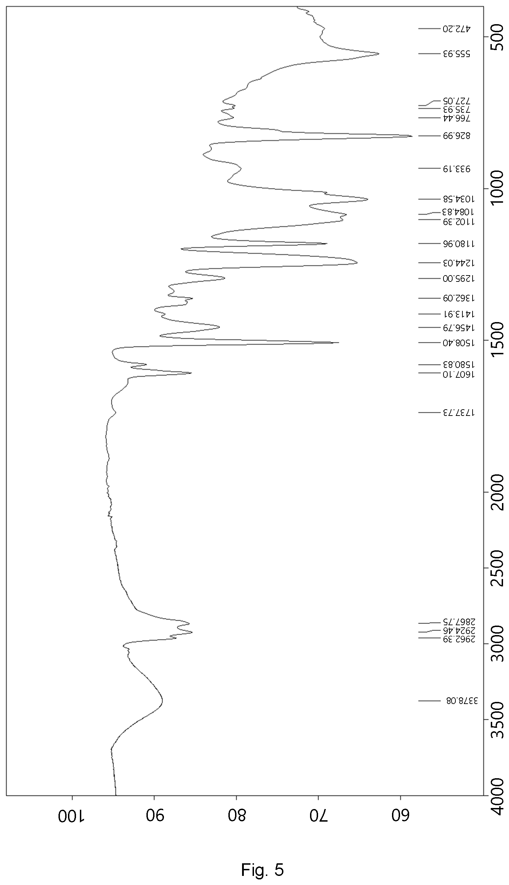

Fig. 5 depicts the FTIR spectrum of the Lacktherm 1314 resin sample (transmittance in % in the Y-axis and wavenumber in cm$^{-1}$ in the X-axis).

**Example 5** - **Thermogravimetric analysis**

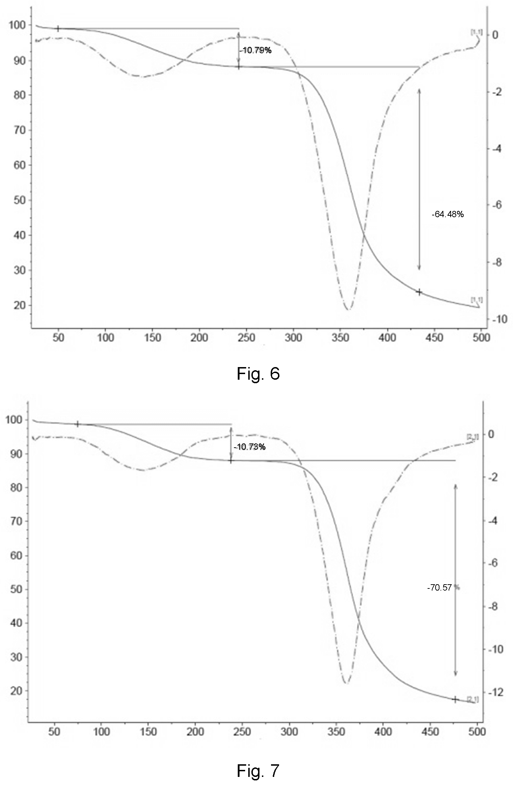

The premixes prepared according to examples 1, 2, and 3 were cured and analyzed by thermogravimetry. The results are shown in Figs. 6-19.

Fig. 6 depicts a thermogravimetric analysis: the mass loss profile as a function of temperature and first derivative of Sample 1 (in the Y-axis, on the left, the & of the TG; in the Y-axis on the right, the DTF (%/min); and temperature in degrees Celsius in the X-axis).

Fig. 7 depicts a thermogravimetric analysis: the mass loss profile as a function of temperature and first derivative of Sample 2 (in the Y-axis, on the left, the & of the TG; in the Y-axis on the right, the DTF (%/min); and temperature in degrees Celsius in the X-axis).

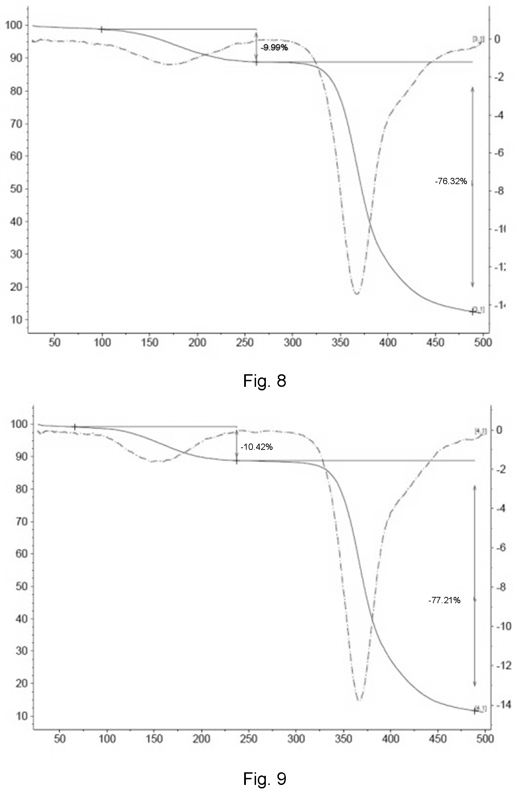

Fig. 8 depicts a thermogravimetric analysis: the mass loss profile as a function of temperature and first derivative of the sample 3 (in the Y-axis, on the left, the & of the TG; in the Y-axis on the right, the DTF (%/min); and temperature in degrees Celsius in the X-axis).

Fig. 9 depicts a thermogravimetric analysis: the mass loss profile as a function of temperature and first derivative of Sample 4 (in the Y-axis, on the left, the & of the TG; in the Y-axis on the right, the DTF (%/min); and temperature in degrees Celsius in the X-axis).

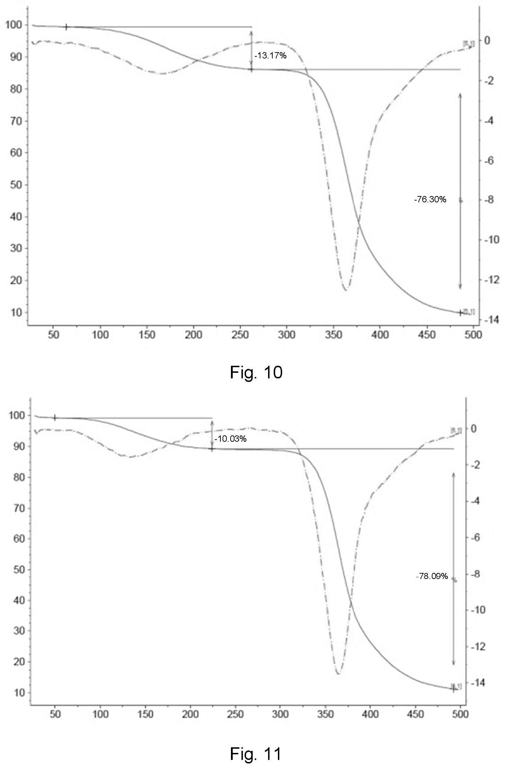

Fig. 10 depicts a thermogravimetric analysis: the mass loss profile as a function of temperature and first derivative of Sample 5 (in the Y-axis, on the left, the & of the TG; in the Y-axis on the right, the DTF (%/min); and temperature in degrees Celsius in the X-axis).

Fig. 11 depicts a thermogravimetric analysis: the mass loss profile as a function of temperature and first derivative of Sample 6 (in the Y-axis, on the left, the & of the TG; in the Y-axis on the right, the DTF (%/min); and temperature in degrees Celsius in the X-axis).

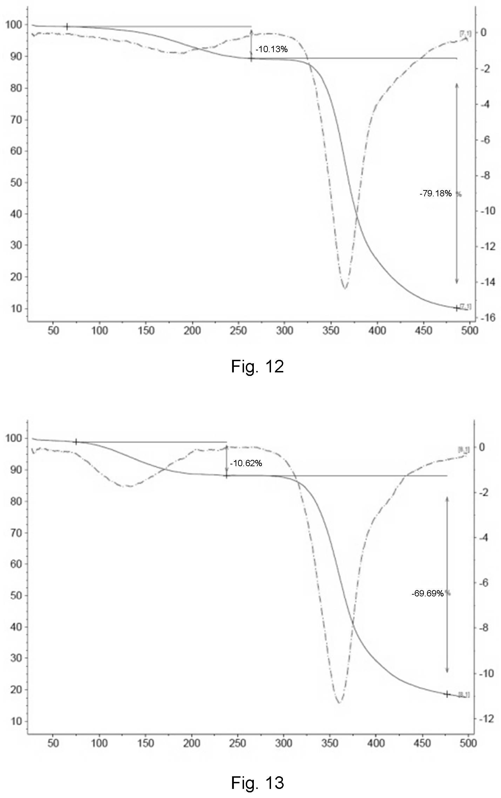

Fig. 12 depicts a thermogravimetric analysis: the mass loss profile as a function of temperature and first derivative of Sample 7 (in the Y-axis, on the left, the & of the TG; in the Y-axis on the right, the DTF (%/min); and temperature in degrees Celsius in the X-axis).

Fig. 13 depicts a thermogravimetric analysis: the mass loss profile as a function of temperature and first derivative of Sample 8 (in the Y-axis, on the left, the & of the TG; in the Y-axis on the right, the DTF (%/min); and temperature in degrees Celsius in the X-axis).

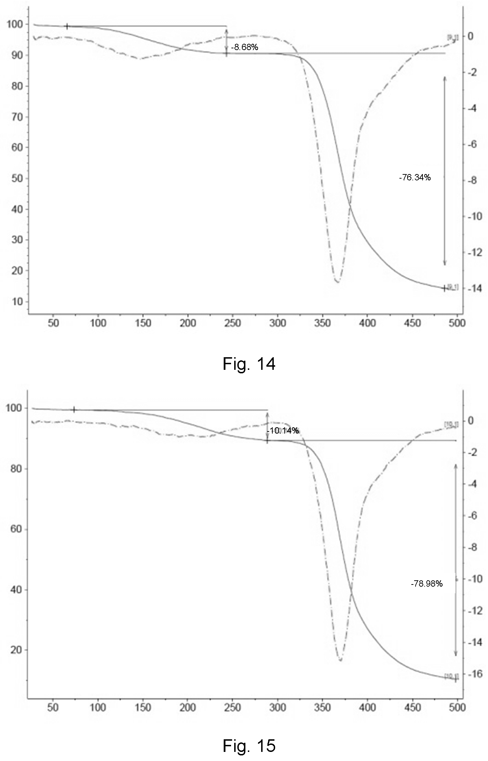

Fig. 14 depicts a thermogravimetric analysis: the mass loss profile as a function of temperature and first derivative of Sample 9 (in the Y-axis, on the left, the & of the TG; in the Y-axis on the right, the DTF (%/min); and temperature in degrees Celsius in the X-axis).

Fig. 15 depicts a thermogravimetric analysis: the mass loss profile as a function of temperature and first derivative of Sample 10 (in the Y-axis, on the left, the & of the TG; in the Y-axis on the right, the DTF (%/min); and temperature in degrees Celsius in the X-axis).

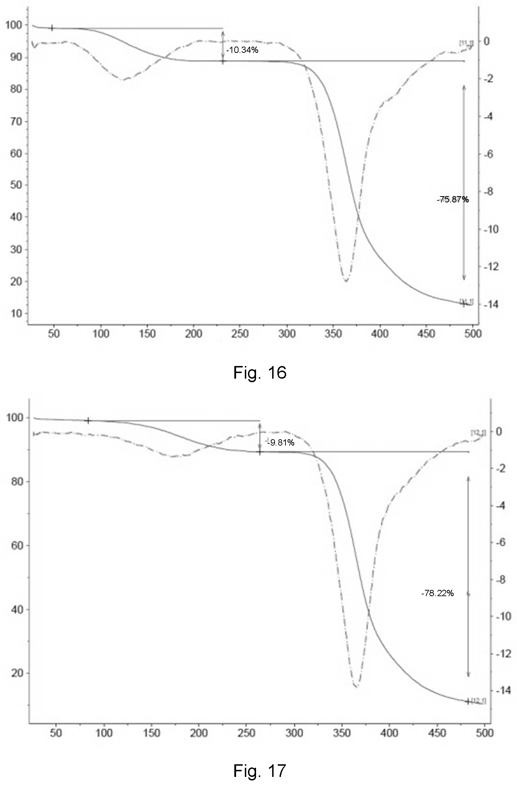

Fig. 16 depicts a thermogravimetric analysis: the mass loss profile as a function of temperature and first derivative of Sample 11 (in the Y-axis, on the left, the & of the TG; in the Y-axis on the right, the DTF (%/min); and temperature in degrees Celsius in the X-axis).

Fig. 17 depicts a thermogravimetric analysis: the mass loss profile as a function of temperature and first derivative of Sample 11 (in the Y-axis, on the left, the & of the TG; in the Y-axis on the right, the DTF (%/min); and temperature in degrees Celsius in the X-axis).

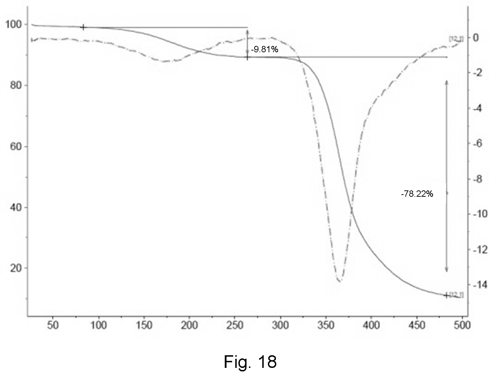

Fig. 18 depicts a thermogravimetric analysis: the mass loss profile as a function of temperature and first derivative of Sample 12 (in the Y-axis, on the left, the & of the TG; in the Y-axis on the right, the DTF (%/min); and temperature in degrees Celsius in the X-axis).

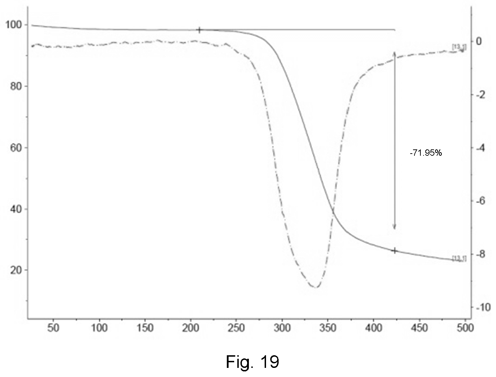

Fig. 19 depicts a thermogravimetric analysis: the mass loss profile as a function of temperature and first derivative of the Lacktherm 1314-1 resin sample (in the Y-axis, on the left, the & of the TG; in the Y-axis on the right, the DTF (%/min); and temperature in degrees Celsius in the X-axis).

## Example 6 - Scanning Electron Microscopy Analysis

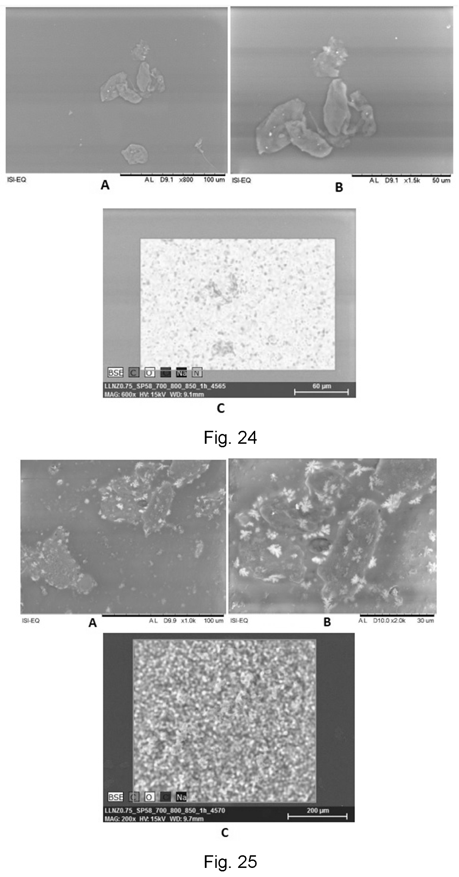

The analysis of the premixes prepared according to examples 1, 2, and 3 and cured was performed by scanning electron microscopy (SEM) and EDS (indicate meaning). The results are shown in Figs. 24-35.

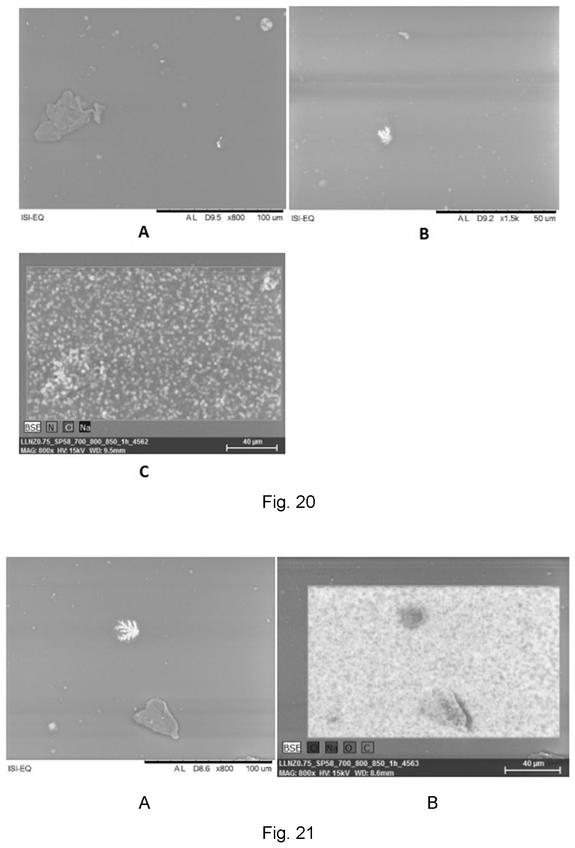

Fig. 20 depicts MEV images and EDS results for sample 1. In A) and B) scanning electron microscopy images are shown; in C) the EDS analysis image is shown.

Fig. 21 depicts MEV images and EDS results for sample 2. In A) a scanning electron microscopy image is shown; in B) the EDS analysis image is shown.

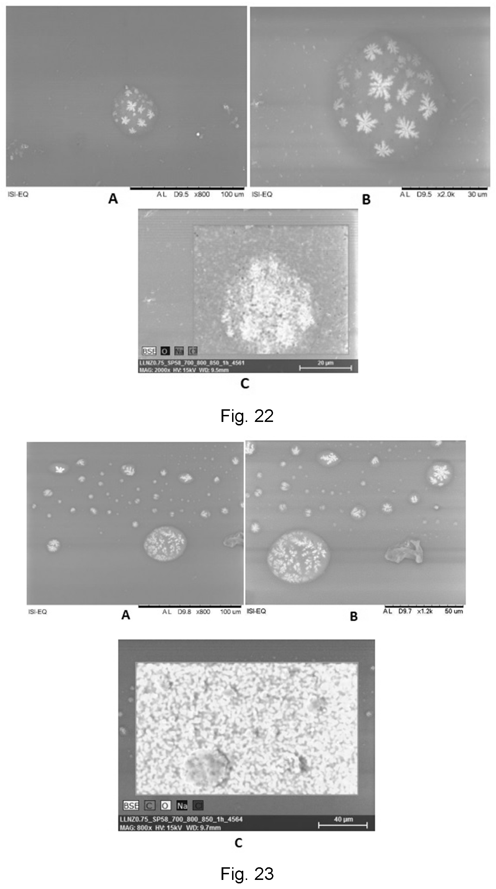

Fig. 22 depicts MEV images and EDS results for sample 3. In A) and B) scanning electron microscopy images are shown; in C) the EDS analysis image is shown.

Fig. 23 depicts MEV images and EDS results for sample 4. In A) and B) scanning electron microscopy images are shown; in C) the EDS analysis image is shown.

Fig. 24 depicts MEV images and EDS results for sample 5. In A) and B) scanning electron microscopy images are shown; in C) the EDS analysis image is shown.

Fig. 25 depicts MEV images and EDS results for sample 6. In A) and B) scanning electron microscopy images are shown; in C) the EDS analysis image is shown.

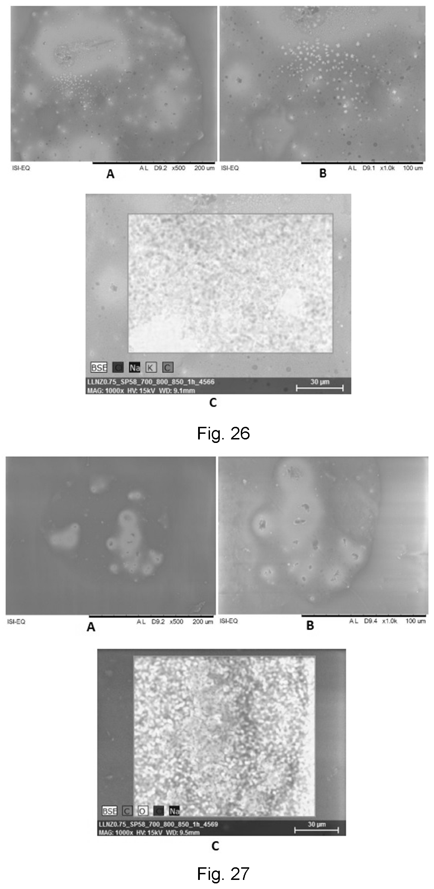

Fig. 26 depicts MEV images and EDS results for sample 7. In A) and B) scanning electron microscopy images are shown; in C) the EDS analysis image is shown.

Fig. 27 depicts MEV images and EDS results for sample 8. In A) and B) scanning electron microscopy images are shown; in C) the EDS analysis image is shown.

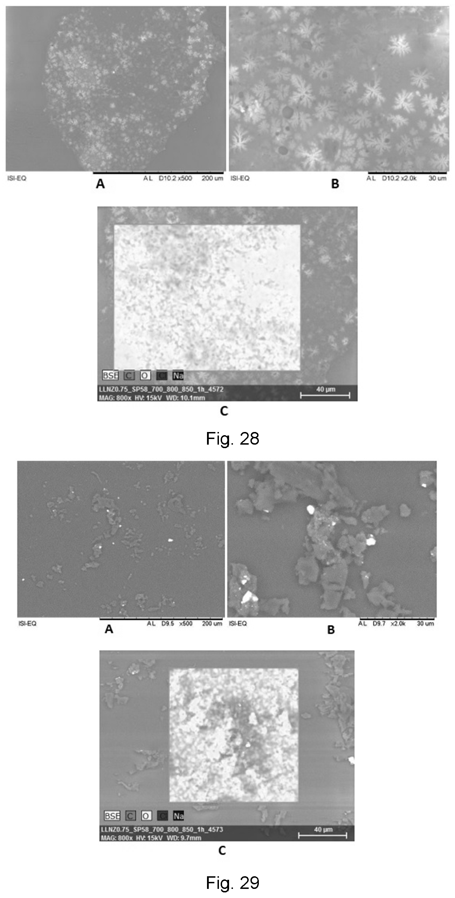

Fig. 28 depicts MEV images and EDS results for sample 9. In A) and B) scanning electron microscopy images are shown; in C) the EDS analysis image is shown.

Fig. 29 depicts MEV images and EDS results for sample 10. In A) and B) scanning electron microscopy images are shown; in C) the EDS analysis image is shown.

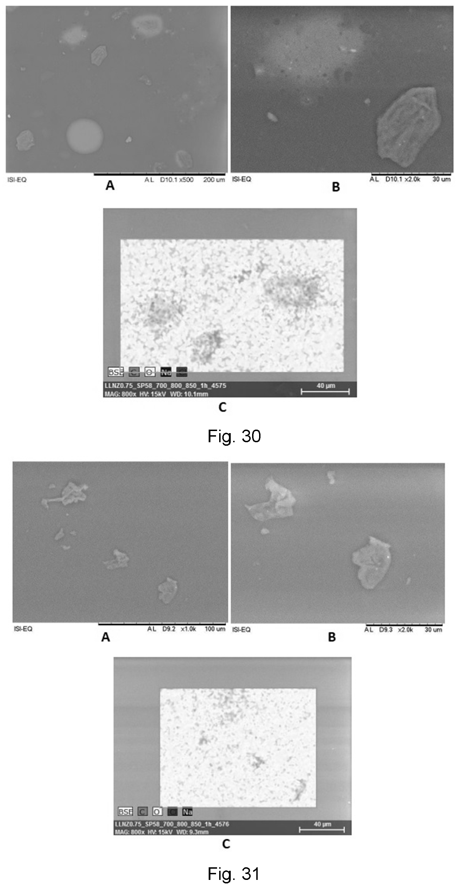

Fig. 30 depicts MEV images and EDS results for sample 11. In A) and B) scanning electron microscopy images are shown; in C) the EDS analysis image is shown.

Fig. 31 depicts MEV images and EDS results for sample 12. In A) and B) scanning electron microscopy images are shown; in C) the EDS analysis image is shown.

## Example 7 - Epoxy resin premix containing $Nb_2O_5$ nanoparticles - analysis of tangent Delta storage modulus with temperature change

For the assays, triplicates of samples 1000/0; 1010/1; 1020/1 were considered, since the other samples are only surplus test specimens and did not show considerable variability for the tests.

Polymer samples comprising titanium dioxide and niobium pentoxide microparticles were not tested as they show catastrophic failures, such as cracks, deformations and geometry irregularities.

In contrast, the premixes containing nanoparticles were properly obtained, that is, the nanoparticles were incorporated into the resin at the tested concentrations. The respective premixes, before curing, are particularly useful for the subsequent preparation of resins with lower concentrations of nanoparticles, using said premixes as premixtures, that is, if it is desired to prepare an epoxy resin with 50 ppm of any of the nanoparticles described in the examples above (graphene oxide, niobium pentoxide, titanium dioxide), a 1:10 mixture of the respective premix with the resin is used, by homogenizing until the product with said concentration is obtained. Other final concentrations can be obtained by adjusting concentrations.

Table 4 shows the codes of tested samples:

| SAMPLES CODES | | | |
|---|---|---|---|
| | SAMPLE | NUMBER OF PARTICLES | TEST |
| baseline | IHRR1000/0 | 0 | PDEL 20023/3-1 |
| Nb nano | IHRR1010/1 | 50 | 8 |
| | IHRR1010/2 | 100 | 7 |
| | IHRR1010/3 | 250 | 6 |
| | IHRR1010/4 | 500 | 5 |
| Ti nano | IHRR1020/1 | 50 | 12 |
| | IHRR1020/2 | 100 | 11 |
| | IHRR1020/3 | 250 | 10 |
| | IHRR1020/4 | 500 | 9 |

| Nb micro | IHRR1030/4 | 500 | PDEL 20023/1-1 |
|---|---|---|---|
| Ti micro | IHRR1040/4 | 500 | PDEL 20023/2-1 |

Table 5 shows the results of activation energy (mean value) for said resins.

| RESULTS | |
| --- | --- |
| Sample | EA kJ/mol |
| 1000/0 | 323.454 |
| 1010/1 | 360.227 |
| 1020/1 | 376.132 |

Table 6 shows the results of storage modulus (mean value) for said resins.

| RESULTS | |
| --- | --- |
| Sample | E' Mpa |
| 1000/0 | 492.16 |
| 1010/1 | 543.71 |
| 1020/1 | 638.84 |

Table 7 shows the results of tangent delta (mean value) for said resins.

| RESULTS | |
| --- | --- |
| Sample | Tan. D |
| 1000/0 | 1.47 |
| 1010/1 | 0.59 |
| 1020/1 | 0.61 |

Table 8 shows the results of glass transition temperature TG (mean value) for said resins.

| RESULTS | |
| --- | --- |
| Sample | Tan. D |
| 1000/0 | 73.4 |
| 1010/1 | 95.6 |
| 1020/1 | 93.9 |

Table 9 shows the raw data for the storage modulus of resin 1020/1 according to the temperature, indicating the damping effect.

Table 9 - Storage modulus data.

| ##Temp. °C | E' (1 kHz)/MPa | E' (1 kHz)/Mpa | E' (1 kHz)/MPa | DE' (1 kHz)/MPa | Mean Deviation |
| --- | --- | --- | --- | --- | --- |
| 35 | 521.24084 | 587.02326 | 808.26576 | 638.8432867 | 112.9483156 |
| 36 | 519.59285 | 585.25724 | 805.7915 | 636.88053 | 112.6073133 |
| 37 | 517.94764 | 583.36901 | 803.18434 | 634.8336633 | 112.2337844 |
| 38 | 516.21911 | 581.49083 | 800.51115 | 632.7403633 | 111.8471911 |
| 39 | 514.32236 | 579.63043 | 797.68265 | 630.5451467 | 111.4250022 |
| 40 | 512.17207 | 577.7202 | 794.55728 | 628.14985 | 110.9382867 |
| 41 | 509.93587 | 575.70403 | 791.18714 | 625.6090133 | 110.3854178 |
| 42 | 507.87889 | 573.52914 | 787.67052 | 623.0261833 | 109.7628911 |
| 43 | 505.9128 | 571.21286 | 784.04279 | 620.3894833 | 109.1022044 |
| 44 | 503.83362 | 568.83381 | 780.31633 | 617.6612533 | 108.4367178 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 45 | 501.65703 | 566.4658 | 776.59583 | 614.90622 | 107.7930733 |
| 46 | 499.47967 | 564.18704 | 773.01907 | 612.2285933 | 107.1936511 |
| 47 | 497.31454 | 561.92632 | 769.47976 | 609.57354 | 106.6041467 |
| 48 | 495.13199 | 559.42766 | 765.74096 | 606.76687 | 105.9827267 |
| 49 | 492.8708 | 556.62495 | 761.74906 | 603.74827 | 105.33386 |
| 50 | 490.45399 | 553.7575 | 757.51021 | 600.5739 | 104.6242067 |
| 51 | 487.94848 | 550.9582 | 753.01422 | 597.3069667 | 103.8048356 |
| 52 | 485.49763 | 548.18753 | 748.24605 | 593.97707 | 102.8459867 |
| 53 | 483.08505 | 545.36609 | 743.39824 | 590.61646 | 101.85452 |
| 54 | 480.56022 | 542.3467 | 738.78868 | 587.2318667 | 101.0378756 |
| 55 | 477.87232 | 539.05243 | 734.26328 | 583.7293433 | 100.3559578 |
| 56 | 475.05273 | 535.5816 | 729.35513 | 579.9964867 | 99.57242889 |
| 57 | 472.10871 | 532.00424 | 724.12755 | 576.0801667 | 98.69825556 |
| 58 | 469.02922 | 528.3278 | 718.98806 | 572.1150267 | 97.91535556 |
| 59 | 465.82793 | 524.48683 | 713.7733 | 568.0293533 | 97.16263111 |
| 60 | 462.51981 | 520.27207 | 708.00444 | 563.5987733 | 96.27044444 |
| 61 | 459.06468 | 515.56293 | 701.70412 | 558.7772433 | 95.28458444 |
| 62 | 455.38681 | 510.55465 | 695.10783 | 553.6830967 | 94.28315556 |
| 63 | 451.37512 | 505.36024 | 688.26613 | 548.33383 | 93.2882 |
| 64 | 446.79964 | 499.89627 | 681.1215 | 542.6058033 | 92.34379778 |
| 65 | 441.58778 | 493.9736 | 673.53351 | 536.3649633 | 91.44569778 |
| 66 | 435.95283 | 487.21497 | 665.26465 | 529.4774833 | 90.52477778 |
| 67 | 429.97954 | 479.5341 | 656.36159 | 521.95841 | 89.60212 |
| 68 | 423.56183 | 471.56001 | 646.98538 | 514.03574 | 88.63309333 |
| 69 | 416.46198 | 463.21585 | 637.18605 | 505.6212933 | 87.70983778 |
| 70 | 408.31993 | 453.64222 | 626.93221 | 496.29812 | 87.08939333 |
| 71 | 399.01029 | 442.77438 | 616.23771 | 486.00746 | 86.82016667 |
| 72 | 388.5876 | 431.36759 | 605.13015 | 475.0284467 | 86.73446889 |
| 73 | 377.01687 | 419.5047 | 593.82807 | 463.44988 | 86.91879333 |
| 74 | 364.1372 | 406.69332 | 582.12854 | 450.9863533 | 87.42812444 |
| 75 | 349.58757 | 392.59848 | 568.44067 | 436.8755733 | 87.71006444 |
| 76 | 333.12037 | 376.79665 | 550.82711 | 420.2480433 | 87.05271111 |
| 77 | 314.49818 | 358.42099 | 527.49651 | 400.13856 | 84.9053 |
| 78 | 293.49587 | 336.28798 | 496.78053 | 375.52146 | 80.83938 |
| 79 | 270.18425 | 311.05044 | 459.21478 | 346.81649 | 74.93219333 |
| 80 | 245.14834 | 284.1788 | 416.20554 | 315.17756 | 67.35198667 |
| 81 | 219.42614 | 257.00514 | 371.13842 | 282.5232333 | 59.07679111 |
| 82 | 194.04103 | 230.71841 | 326.82022 | 250.5265533 | 50.86244444 |
| 83 | 170.10024 | 205.03487 | 285.12181 | 220.08564 | 43.35744667 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 84 | 147.8736 | 179.40105 | 246.98719 | 191.4206133 | 37.04438444 |
| 85 | 127.39577 | 155.10434 | 211.56364 | 164.6879167 | 31.25048222 |
| 86 | 108.4893 | 133.53969 | 178.64823 | 140.22574 | 25.61499333 |
| 87 | 91.14093 | 114.00126 | 149.26849 | 118.1368933 | 20.75439778 |
| 88 | 75.87212 | 95.91387 | 124.26088 | 98.68229 | 17.05239333 |
| 89 | 63.23679 | 79.8221 | 103.22316 | 82.09401667 | 14.08609556 |
| 90 | 52.92434 | 66.58727 | 86.00449 | 68.50536667 | 11.66608222 |
| 91 | 44.58909 | 55.77916 | 72.07713 | 57.48179333 | 9.730224444 |
| 92 | 37.62861 | 46.79013 | 61.03464 | 48.48446 | 8.366786667 |
| 93 | 31.76544 | 39.37557 | 52.09481 | 41.07860667 | 7.344135556 |
| 94 | 26.98661 | 33.43942 | 44.73216 | 35.05273 | 6.452953333 |
| 95 | 23.19936 | 28.69449 | 38.7173 | 30.20371667 | 5.675722222 |
| 96 | 20.09615 | 24.79245 | 33.89214 | 26.26024667 | 5.087928889 |
| 97 | 17.48194 | 21.53405 | 29.93244 | 22.98281 | 4.633086667 |
| 98 | 15.26031 | 18.82288 | 26.59092 | 20.22470333 | 4.244144444 |
| 99 | 13.41755 | 16.5793 | 23.72932 | 17.90872333 | 3.880397778 |
| 100 | 11.96278 | 14.70281 | 21.28828 | 15.98462333 | 3.535771111 |
| 101 | 10.76814 | 13.11667 | 19.18899 | 14.35793333 | 3.220704444 |
| 102 | 9.66971 | 11.7518 | 17.341 | 12.92083667 | 2.946775556 |
| 103 | 8.66232 | 10.58146 | 15.71644 | 11.65340667 | 2.708688889 |
| 104 | 7.82817 | 9.59424 | 14.32 | 10.58080333 | 2.492797778 |
| 105 | 7.15485 | 8.76579 | 13.13135 | 9.683996667 | 2.298235556 |
| 106 | 6.59712 | 8.0706 | 12.12796 | 8.931893333 | 2.130711111 |
| 107 | 6.09042 | 7.49123 | 11.28246 | 8.288036667 | 1.996282222 |
| 108 | 5.59187 | 6.97931 | 10.54235 | 7.70451 | 1.891893333 |
| 109 | 5.15546 | 6.49965 | 9.88257 | 7.179226667 | 1.802228889 |
| 110 | 4.828 | 6.04224 | 9.3031 | 6.724446667 | 1.719102222 |
| 111 | 4.53195 | 5.61487 | 8.80767 | 6.318163333 | 1.659671111 |
| 112 | 4.21949 | 5.26252 | 8.39863 | 5.960213333 | 1.625611111 |
| 113 | 3.93344 | 5.00681 | 8.0695 | 5.669916667 | 1.599722222 |
| 114 | 3.70068 | 4.78304 | 7.78974 | 5.424486667 | 1.576835556 |
| 115 | 3.50697 | 4.53569 | 7.53699 | 5.193216667 | 1.562515556 |
| 116 | 3.34122 | 4.28937 | 7.29346 | 4.974683333 | 1.545851111 |
| 117 | 3.19749 | 4.08255 | 7.05246 | 4.7775 | 1.51664 |

Table 10 shows the raw data for the storage modulus of resin 1010/1 according to the temperature, indicating the damping effect.

Table 10 - Storage modulus data.

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 35 | 583.83602 | 676.89969 | 370.40178 | 543.7124967 | 115.5404778 |
| 36 | 581.53055 | 673.77482 | 369.11344 | 541.4729367 | 114.9063311 |
| 37 | 579.05048 | 670.69211 | 367.76416 | 539.1689167 | 114.2698378 |
| 38 | 576.64599 | 667.57055 | 366.39489 | 536.8704767 | 113.6503911 |
| 39 | 574.50493 | 664.35349 | 365.02311 | 534.6271767 | 113.0693778 |
| 40 | 572.44998 | 661.07865 | 363.61399 | 532.3808733 | 112.5112556 |
| 41 | 570.2918 | 657.70992 | 362.15697 | 530.0528967 | 111.9306178 |
| 42 | 567.89636 | 654.107 | 360.72108 | 527.5748133 | 111.2358222 |
| 43 | 565.21234 | 650.3047 | 359.33649 | 524.9511767 | 110.4097911 |
| 44 | 562.44147 | 646.55164 | 357.91908 | 522.3040633 | 109.5899889 |
| 45 | 559.74612 | 642.90757 | 356.41267 | 519.6887867 | 108.8507444 |
| 46 | 557.14424 | 639.20367 | 354.86344 | 517.07045 | 108.1380067 |
| 47 | 554.58318 | 635.38817 | 353.31338 | 514.4282433 | 107.4099089 |
| 48 | 551.81601 | 631.54381 | 351.77918 | 511.713 | 106.6225467 |
| 49 | 548.75691 | 627.63053 | 350.25257 | 508.8800033 | 105.7516222 |
| 50 | 545.76785 | 623.46546 | 348.66919 | 505.9675 | 104.86554 |
| 51 | 543.05972 | 619.02179 | 346.97047 | 503.0173267 | 104.0312378 |
| 52 | 540.34132 | 614.48741 | 345.09103 | 499.9732533 | 103.2548156 |
| 53 | 537.40622 | 609.9521 | 343.04423 | 496.80085 | 102.5044133 |
| 54 | 534.44712 | 605.37539 | 341.12071 | 493.64774 | 101.6846867 |
| 55 | 531.59206 | 600.72515 | 339.35572 | 490.5576433 | 100.8012822 |
| 56 | 528.68946 | 595.99089 | 337.38207 | 487.35414 | 99.98138 |
| 57 | 525.60271 | 591.16727 | 335.0765 | 483.9488267 | 99.24821778 |
| 58 | 522.32373 | 586.25274 | 332.73314 | 480.4365367 | 98.46893111 |
| 59 | 518.90437 | 581.18877 | 330.391 | 476.8280467 | 97.62469778 |
| 60 | 515.58548 | 575.85334 | 327.74245 | 473.0604233 | 96.87864889 |
| 61 | 512.4592 | 570.18763 | 324.65998 | 469.10227 | 96.29486 |
| 62 | 509.01796 | 564.18061 | 321.37223 | 464.8569333 | 95.65646889 |
| 63 | 504.92489 | 557.92169 | 317.93568 | 460.2607533 | 94.88338222 |
| 64 | 500.49214 | 551.58682 | 314.10328 | 455.39408 | 94.19386667 |
| 65 | 495.91881 | 545.09458 | 309.69105 | 450.2348133 | 93.69584222 |
| 66 | 491.08273 | 538.1168 | 304.81363 | 444.6710533 | 93.23828222 |
| 67 | 485.79111 | 530.60353 | 299.48671 | 438.6271167 | 92.76027111 |
| 68 | 479.75388 | 522.70449 | 293.48403 | 431.9808 | 92.33118 |
| 69 | 472.80362 | 514.39446 | 286.74036 | 424.6461467 | 91.93719111 |
| 70 | 465.42331 | 505.48844 | 279.46521 | 416.79232 | 91.55140667 |
| 71 | 457.72558 | 495.98519 | 271.56295 | 408.4245733 | 91.24108222 |
| 72 | 448.90293 | 485.99395 | 262.53014 | 399.14234 | 91.0748 |
| 73 | 438.19308 | 475.28949 | 252.58553 | 388.6893667 | 90.73589111 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 74 | 425.87656 | 463.26465 | 242.73081 | 377.2906733 | 89.70657556 |
| 75 | 412.08263 | 448.75342 | 232.0771 | 364.3043833 | 88.15152222 |
| 76 | 396.20506 | 430.06736 | 218.37027 | 348.21423 | 86.56264 |
| 77 | 377.52187 | 406.0139 | 201.20642 | 328.2473967 | 84.69398444 |
| 78 | 355.30685 | 375.70435 | 181.76132 | 304.2575067 | 81.66412444 |
| 79 | 329.32816 | 342.13139 | 161.71353 | 277.72436 | 77.34055333 |
| 80 | 300.93104 | 308.3178 | 143.15128 | 250.80004 | 71.76584 |
| 81 | 271.44189 | 274.7058 | 126.39486 | 224.18085 | 65.19066 |
| 82 | 242.40455 | 241.60391 | 110.52119 | 198.17655 | 58.43690667 |
| 83 | 214.90929 | 210.38393 | 95.54983 | 173.61435 | 52.04301333 |
| 84 | 189.24383 | 182.08801 | 82.55493 | 151.29559 | 45.82710667 |
| 85 | 165.3929 | 156.13384 | 71.54308 | 131.0232733 | 39.65346222 |
| 86 | 142.80169 | 132.44944 | 61.56859 | 112.27324 | 33.8031 |
| 87 | 121.41768 | 111.82645 | 52.32847 | 95.19086667 | 28.57493111 |
| 88 | 101.98795 | 94.43958 | 44.29458 | 80.24070333 | 23.96408222 |
| 89 | 85.06523 | 79.5103 | 37.68259 | 67.41937333 | 19.82452222 |
| 90 | 70.64358 | 66.95548 | 32.02128 | 56.54011333 | 16.34588889 |
| 91 | 58.62088 | 56.94849 | 27.08166 | 47.55034333 | 13.64578889 |
| 92 | 48.6999 | 48.90547 | 22.98671 | 40.19736 | 11.47376667 |
| 93 | 40.80923 | 41.97429 | 19.75854 | 34.18068667 | 9.614764444 |
| 94 | 34.80113 | 36.01179 | 17.05955 | 29.29082333 | 8.154182222 |
| 95 | 30.04043 | 31.25458 | 14.67988 | 25.32496333 | 7.096722222 |
| 96 | 25.93128 | 27.43604 | 12.66675 | 22.01135667 | 6.229737778 |
| 97 | 22.40307 | 24.14104 | 11.05814 | 19.20075 | 5.428406667 |
| 98 | 19.57349 | 21.23955 | 9.70202 | 16.83835333 | 4.757555556 |
| 99 | 17.2893 | 18.74131 | 8.49373 | 14.84144667 | 4.231811111 |
| 100 | 15.40501 | 16.59962 | 7.43308 | 13.14590333 | 3.808548889 |
| 101 | 13.84219 | 14.75778 | 6.55085 | 11.71694 | 3.44406 |
| 102 | 12.52316 | 13.15362 | 5.81527 | 10.49735 | 3.121386667 |
| 103 | 11.3458 | 11.74743 | 5.187 | 9.426743333 | 2.826495556 |
| 104 | 10.26392 | 10.53783 | 4.65035 | 8.484033333 | 2.555788889 |
| 105 | 9.28485 | 9.53087 | 4.2017 | 7.672473333 | 2.313848889 |
| 106 | 8.4294 | 8.66722 | 3.82396 | 6.973526667 | 2.099711111 |
| 107 | 7.74654 | 7.90109 | 3.49071 | 6.379446667 | 1.925824444 |
| 108 | 7.23992 | 7.23688 | 3.1938 | 5.8902 | 1.7976 |
| 109 | 6.75582 | 6.68671 | 2.94164 | 5.46139 | 1.679833333 |
| 110 | 6.23465 | 6.20026 | 2.73138 | 5.05543 | 1.549366667 |
| 111 | 5.76548 | 5.74217 | 2.53794 | 4.681863333 | 1.429282222 |
| 112 | 5.4001 | 5.32451 | 2.35854 | 4.36105 | 1.335006667 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 113 | 5.11529 | 4.9631 | 2.23096 | 4.103116667 | 1.248104444 |
| 114 | 4.88497 | 4.67007 | 2.16787 | 3.907636667 | 1.159844444 |
| 115 | 4.68402 | 4.44063 | 2.14398 | 3.75621 | 1.07482 |
| 116 | 4.49761 | 4.2365 | 2.143 | 3.625703333 | 0.988468889 |
| 117 | 4.35685 | 4.03416 | 2.15233 | 3.514446667 | 0.908077778 |

Table 11 shows the raw data for the storage modulus of resin 1000/0 according to the temperature, indicating the damping effect.

Table 11 - Storage modulus data.

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 35 | 495.3179 | 612.7456 | 368.41062 | 492.15804 | 82.49828 |
| 36 | 489.55309 | 605.72011 | 365.61268 | 486.96196 | 80.89952 |
| 37 | 483.38573 | 597.96191 | 362.27518 | 481.2076067 | 79.28828444 |
| 38 | 476.79718 | 589.71837 | 358.49016 | 475.0019033 | 77.67449556 |
| 39 | 469.79988 | 581.16589 | 354.27274 | 468.4128367 | 76.09339778 |
| 40 | 462.38706 | 571.95781 | 349.54877 | 461.29788 | 74.49940667 |
| 41 | 454.48599 | 561.73232 | 344.27707 | 453.49846 | 72.81426 |
| 42 | 445.94948 | 550.46945 | 338.43896 | 444.95263 | 71.00911333 |
| 43 | 436.66987 | 538.08877 | 332.00442 | 435.5876867 | 69.05551111 |
| 44 | 426.6383 | 524.71237 | 324.92535 | 425.42534 | 66.99999333 |
| 45 | 415.81137 | 510.4636 | 317.11697 | 414.46398 | 64.89800667 |
| 46 | 404.08929 | 495.42168 | 308.61595 | 402.7089733 | 62.72868222 |
| 47 | 391.33414 | 479.50897 | 299.41865 | 390.0872533 | 60.44573556 |
| 48 | 377.52535 | 462.40202 | 289.48081 | 376.4693933 | 57.99238889 |
| 49 | 362.59824 | 443.63494 | 278.68099 | 361.6380567 | 55.30471111 |
| 50 | 346.49599 | 423.44559 | 266.94372 | 345.6284333 | 52.45647556 |
| 51 | 329.04928 | 402.21013 | 254.36834 | 328.5425833 | 49.44949556 |
| 52 | 310.26272 | 379.92095 | 240.97594 | 310.3865367 | 46.35627556 |
| 53 | 290.05662 | 356.2928 | 226.73484 | 291.0280867 | 43.50980889 |
| 54 | 268.27979 | 330.96334 | 211.51013 | 270.2510867 | 40.47483556 |
| 55 | 244.59552 | 303.32198 | 195.12696 | 247.6814867 | 37.09366222 |
| 56 | 219.1843 | 273.03298 | 177.33804 | 223.1851067 | 33.23191556 |
| 57 | 192.50664 | 240.30588 | 157.90535 | 196.9059567 | 28.93328222 |
| 58 | 165.03898 | 205.87509 | 137.54288 | 169.48565 | 24.25962667 |
| 59 | 137.26688 | 171.35833 | 117.20467 | 141.9432933 | 19.61002444 |
| 60 | 110.18491 | 138.29886 | 97.4537 | 115.31249 | 15.32424667 |
| 61 | 85.48843 | 108.43167 | 78.70334 | 90.87448 | 11.70479333 |
| 62 | 64.41225 | 83.25889 | 61.6043 | 69.75848 | 9.000273333 |
| 63 | 47.71178 | 63.07344 | 47.0269 | 52.60404 | 6.9796 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 64 | 35.17075 | 47.77685 | 35.70258 | 39.55006 | 5.484526667 |
| 65 | 25.79539 | 35.98016 | 27.06452 | 29.61335667 | 4.244535556 |
| 66 | 18.92911 | 26.86917 | 20.50314 | 22.10047333 | 3.179131111 |
| 67 | 13.94751 | 20.06141 | 15.59859 | 16.53583667 | 2.350382222 |
| 68 | 10.38752 | 15.21116 | 11.86514 | 12.48794 | 1.81548 |
| 69 | 7.79714 | 11.71227 | 9.00223 | 9.50388 | 1.47226 |
| 70 | 5.90836 | 9.12757 | 6.90589 | 7.31394 | 1.209086667 |
| 71 | 4.57123 | 7.19463 | 5.45651 | 5.74079 | 0.969226667 |
| 72 | 3.65211 | 5.77314 | 4.4044 | 4.609883333 | 0.775504444 |
| 73 | 2.97269 | 4.73162 | 3.57571 | 3.760006667 | 0.647742222 |
| 74 | 2.42034 | 3.94209 | 2.91718 | 3.093203333 | 0.565924444 |
| 75 | 1.97866 | 3.32317 | 2.42184 | 2.574556667 | 0.499075556 |
| 76 | 1.64756 | 2.84171 | 2.05291 | 2.180726667 | 0.440655556 |
| 77 | 1.39593 | 2.48146 | 1.76169 | 1.879693333 | 0.401177778 |
| 78 | 1.20025 | 2.20939 | 1.52345 | 1.644363333 | 0.376684444 |
| 79 | 1.05052 | 1.98318 | 1.33312 | 1.455606667 | 0.351715556 |
| 80 | 0.94303 | 1.77247 | 1.19147 | 1.302323333 | 0.313431111 |
| 81 | 0.85718 | 1.58137 | 1.08376 | 1.174103333 | 0.271511111 |
| 82 | 0.76074 | 1.44901 | 0.99254 | 1.06743 | 0.254386667 |
| 83 | 0.66224 | 1.35769 | 0.9133 | 0.977743333 | 0.253297778 |
| 84 | 0.59723 | 1.27919 | 0.84921 | 0.908543333 | 0.247097778 |
| 85 | 0.5628 | 1.20547 | 0.79676 | 0.85501 | 0.23364 |
| 86 | 0.53295 | 1.14456 | 0.74157 | 0.80636 | 0.225466667 |
| 87 | 0.4953 | 1.10056 | 0.686 | 0.76062 | 0.226626667 |
| 88 | 0.44737 | 1.07258 | 0.65167 | 0.723873333 | 0.232471111 |
| 89 | 0.40084 | 1.05987 | 0.63961 | 0.700106667 | 0.239842222 |
| 90 | 0.38205 | 1.04164 | 0.62077 | 0.681486667 | 0.240102222 |
| 91 | 0.38859 | 1.00283 | 0.58015 | 0.65719 | 0.230426667 |
| 92 | 0.37656 | 0.96384 | 0.54201 | 0.62747 | 0.224246667 |
| 93 | 0.33366 | 0.94277 | 0.53004 | 0.602156667 | 0.227075556 |
| 94 | 0.29952 | 0.93752 | 0.52974 | 0.588926667 | 0.232395556 |
| 95 | 0.29411 | 0.94347 | 0.51989 | 0.585823333 | 0.238431111 |
| 96 | 0.3082 | 0.95321 | 0.50492 | 0.588776667 | 0.242955556 |
| 97 | 0.3306 | 0.95768 | 0.49676 | 0.595013333 | 0.241777778 |
| 98 | 0.33353 | 0.9447 | 0.49407 | 0.590766667 | 0.235955556 |
| 99 | 0.30549 | 0.90552 | 0.48876 | 0.56659 | 0.225953333 |
| 100 | 0.2804 | 0.86373 | 0.48545 | 0.543193333 | 0.213691111 |
| 101 | 0.28963 | 0.85044 | 0.50243 | 0.5475 | 0.20196 |
| 102 | 0.32197 | 0.85245 | 0.53619 | 0.570203333 | 0.188164444 |

(continued)

| ##Temp. °C | E' (1 kHz)/MPa | E' (1 kHz)/Mpa | E' (1 kHz)/MPa | DE' (1 kHz)/MPa | Mean Deviation |
|---|---|---|---|---|---|
| 103 | 0.35304 | 0.841 | 0.5485 | 0.580846667 | 0.173435556 |
| 104 | 0.36373 | 0.81855 | 0.52535 | 0.56921 | 0.166226667 |
| 105 | 0.34045 | 0.79504 | 0.4978 | 0.54443 | 0.167073333 |
| 106 | 0.31039 | 0.77608 | 0.48744 | 0.524636667 | 0.167628889 |
| 107 | 0.31119 | 0.7655 | 0.49318 | 0.52329 | 0.161473333 |
| 108 | 0.3308 | 0.75982 | 0.5085 | 0.53304 | 0.151186667 |
| 109 | 0.33817 | 0.75038 | 0.50628 | 0.53161 | 0.145846667 |
| 110 | 0.33582 | 0.73613 | 0.46922 | 0.513723333 | 0.148271111 |
| 111 | 0.33937 | 0.72116 | 0.43671 | 0.49908 | 0.148053333 |
| 112 | 0.34146 | 0.70799 | 0.44872 | 0.49939 | 0.139066667 |
| 113 | 0.32042 | 0.69774 | 0.47658 | 0.498246667 | 0.132995556 |
| 114 | 0.28793 | 0.69236 | 0.47094 | 0.483743333 | 0.139077778 |
| 115 | 0.28768 | 0.69642 | 0.44226 | 0.475453333 | 0.147311111 |
| 116 | 0.31755 | 0.71145 | 0.42941 | 0.486136667 | 0.150208889 |
| 117 | 0.3269 | 0.72732 | 0.43464 | 0.496286667 | 0.154022222 |

Table 12 shows the means data for the storage modulus of resins 1020/1, 1010/1 and 1000/0 according to the temperature.

Table 12 - Means of the storage modulus measurements.

| ##Temp. °C | DE' 1020/1/MPa | DE' 1010/1/MPa | DE' 1000/0/MPa |
|---|---|---|---|
| 35 | 638.8432867 | 543.7124967 | 492.15804 |
| 36 | 636.88053 | 541.4729367 | 486.96196 |
| 37 | 634.8336633 | 539.1689167 | 481.2076067 |
| 38 | 632.7403633 | 536.8704767 | 475.0019033 |
| 39 | 630.5451467 | 534.6271767 | 468.4128367 |
| 40 | 628.14985 | 532.3808733 | 461.29788 |
| 41 | 625.6090133 | 530.0528967 | 453.49846 |
| 42 | 623.0261833 | 527.5748133 | 444.95263 |
| 43 | 620.3894833 | 524.9511767 | 435.5876867 |
| 44 | 617.6612533 | 522.3040633 | 425.42534 |
| 45 | 614.90622 | 519.6887867 | 414.46398 |
| 46 | 612.2285933 | 517.07045 | 402.7089733 |
| 47 | 609.57354 | 514.4282433 | 390.0872533 |
| 48 | 606.76687 | 511.713 | 376.4693933 |
| 49 | 603.74827 | 508.8800033 | 361.6380567 |
| 50 | 600.5739 | 505.9675 | 345.6284333 |
| 51 | 597.3069667 | 503.0173267 | 328.5425833 |
| 52 | 593.97707 | 499.9732533 | 310.3865367 |
| 53 | 590.61646 | 496.80085 | 291.0280867 |

(continued)

| ##Temp. °C | DE' 1020/1/MPa | DE' 1010/1/MPa | DE' 1000/0/MPa |
|---|---|---|---|
| 54 | 587.2318667 | 493.64774 | 270.2510867 |
| 55 | 583.7293433 | 490.5576433 | 247.6814867 |
| 56 | 579.9964867 | 487.35414 | 223.1851067 |
| 57 | 576.0801667 | 483.9488267 | 196.9059567 |
| 58 | 572.1150267 | 480.4365367 | 169.48565 |
| 59 | 568.0293533 | 476.8280467 | 141.9432933 |
| 60 | 563.5987733 | 473.0604233 | 115.31249 |
| 61 | 558.7772433 | 469.10227 | 90.87448 |
| 62 | 553.6830967 | 464.8569333 | 69.75848 |
| 63 | 548.33383 | 460.2607533 | 52.60404 |
| 64 | 542.6058033 | 455.39408 | 39.55006 |
| 65 | 536.3649633 | 450.2348133 | 29.61335667 |
| 66 | 529.4774833 | 444.6710533 | 22.10047333 |
| 67 | 521.95841 | 438.6271167 | 16.53583667 |
| 68 | 514.03574 | 431.9808 | 12.48794 |
| 69 | 505.6212933 | 424.6461467 | 9.50388 |
| 70 | 496.29812 | 416.79232 | 7.31394 |
| 71 | 486.00746 | 408.4245733 | 5.74079 |
| 72 | 475.0284467 | 399.14234 | 4.609883333 |
| 73 | 463.44988 | 388.6893667 | 3.760006667 |
| 74 | 450.9863533 | 377.2906733 | 3.093203333 |
| 75 | 436.8755733 | 364.3043833 | 2.574556667 |
| 76 | 420.2480433 | 348.21423 | 2.180726667 |
| 77 | 400.13856 | 328.2473967 | 1.879693333 |
| 78 | 375.52146 | 304.2575067 | 1.644363333 |
| 79 | 346.81649 | 277.72436 | 1.455606667 |
| 80 | 315.17756 | 250.80004 | 1.302323333 |
| 81 | 282.5232333 | 224.18085 | 1.174103333 |
| 82 | 250.5265533 | 198.17655 | 1.06743 |
| 83 | 220.08564 | 173.61435 | 0.977743333 |
| 84 | 191.4206133 | 151.29559 | 0.908543333 |
| 85 | 164.6879167 | 131.0232733 | 0.85501 |
| 86 | 140.22574 | 112.27324 | 0.80636 |
| 87 | 118.1368933 | 95.19086667 | 0.76062 |
| 88 | 98.68229 | 80.24070333 | 0.723873333 |
| 89 | 82.09401667 | 67.41937333 | 0.700106667 |
| 90 | 68.50536667 | 56.54011333 | 0.681486667 |
| 91 | 57.48179333 | 47.55034333 | 0.65719 |
| 92 | 48.48446 | 40.19736 | 0.62747 |

(continued)

| ##Temp. °C | DE' 1020/1/MPa | DE' 1010/1/MPa | DE' 1000/0/MPa |
|---|---|---|---|
| 93 | 41.07860667 | 34.18068667 | 0.602156667 |
| 94 | 35.05273 | 29.29082333 | 0.588926667 |
| 95 | 30.20371667 | 25.32496333 | 0.585823333 |
| 96 | 26.26024667 | 22.01135667 | 0.588776667 |
| 97 | 22.98281 | 19.20075 | 0.595013333 |
| 98 | 20.22470333 | 16.83835333 | 0.590766667 |
| 99 | 17.90872333 | 14.84144667 | 0.56659 |
| 100 | 15.98462333 | 13.14590333 | 0.543193333 |
| 101 | 14.35793333 | 11.71694 | 0.5475 |
| 102 | 12.92083667 | 10.49735 | 0.570203333 |
| 103 | 11.65340667 | 9.426743333 | 0.580846667 |
| 104 | 10.58080333 | 8.484033333 | 0.56921 |
| 105 | 9.683996667 | 7.672473333 | 0.54443 |
| 106 | 8.931893333 | 6.973526667 | 0.524636667 |
| 107 | 8.288036667 | 6.379446667 | 0.52329 |
| 108 | 7.70451 | 5.8902 | 0.53304 |
| 109 | 7.179226667 | 5.46139 | 0.53161 |
| 110 | 6.724446667 | 5.05543 | 0.513723333 |
| 111 | 6.318163333 | 4.681863333 | 0.49908 |
| 112 | 5.960213333 | 4.36105 | 0.49939 |
| 113 | 5.669916667 | 4.103116667 | 0.498246667 |
| 114 | 5.424486667 | 3.907636667 | 0.483743333 |
| 115 | 5.193216667 | 3.75621 | 0.475453333 |
| 116 | 4.974683333 | 3.625703333 | 0.486136667 |
| 117 | 4.7775 | 3.514446667 | 0.496286667 |

Table 13 shows the tangent delta data of resin 1020/1 according to the temperature.

**Table 13** - Tangent delta data of resin 1020/1.

| ##Temp. °C | tan d (1 kHz) | tan d (1 kHz) | tan d (1 kHz) | DE' (1 kHz)/MPa | Mean Deviation |
|---|---|---|---|---|---|
| 35 | 3.47E-02 | 3.29E-02 | 3.80E-02 | | 0.001875207 |
| 36 | 3.47E-02 | 3.29E-02 | 3.79E-02 | 0.03516686 | 0.00185278 |
| 37 | 3.46E-02 | 3.29E-02 | 3.79E-02 | 0.03513004 | 0.001833707 |
| 38 | 3.46E-02 | 3.29E-02 | 3.78E-02 | 0.035102807 | 0.001818562 |
| 39 | 3.45E-02 | 3.29E-02 | 3.78E-02 | 0.03508427 | 0.001807947 |
| 40 | 3.45E-02 | 3.29E-02 | 3.78E-02 | 0.035074657 | 0.001802529 |
| 41 | 3.45E-02 | 3.30E-02 | 3.78E-02 | 0.035074937 | 0.001801429 |
| 42 | 3.45E-02 | 3.30E-02 | 3.78E-02 | 0.0350873 | 0.001803607 |
| 43 | 3.45E-02 | 3.30E-02 | 3.78E-02 | 0.03511356 | 0.001807447 |
| 44 | 3.45E-02 | 3.31E-02 | 3.79E-02 | 0.035156763 | 0.001810911 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 45 | 3.46E-02 | 3.32E-02 | 3.79E-02 | 0.03521879 | 0.00181352 |
| 46 | 3.46E-02 | 3.33E-02 | 3.80E-02 | 0.035302123 | 0.001816178 |
| 47 | 3.47E-02 | 3.34E-02 | 3.81E-02 | 0.035407773 | 0.001818944 |
| 48 | 3.48E-02 | 3.35E-02 | 3.83E-02 | 0.035536933 | 0.001820858 |
| 49 | 3.49E-02 | 3.37E-02 | 3.84E-02 | 0.03569178 | 0.001820587 |
| 50 | 3.51E-02 | 3.39E-02 | 3.86E-02 | 0.035874497 | 0.001818709 |
| 51 | 3.53E-02 | 3.42E-02 | 3.88E-02 | 0.03608455 | 0.001815207 |
| 52 | 3.55E-02 | 3.45E-02 | 3.90E-02 | 0.036320833 | 0.001809591 |
| 53 | 3.57E-02 | 3.47E-02 | 3.93E-02 | 0.03658352 | 0.001800827 |
| 54 | 3.60E-02 | 3.50E-02 | 3.96E-02 | 0.03687522 | 0.00178734 |
| 55 | 3.64E-02 | 3.54E-02 | 3.99E-02 | 0.037199413 | 0.001767858 |
| 56 | 3.68E-02 | 3.57E-02 | 4.02E-02 | 0.037560657 | 0.001742022 |
| 57 | 3.72E-02 | 3.62E-02 | 4.05E-02 | 0.037962897 | 0.001709469 |
| 58 | 3.77E-02 | 3.66E-02 | 4.09E-02 | 0.038408117 | 0.001671909 |
| 59 | 3.82E-02 | 3.72E-02 | 4.13E-02 | 0.03890459 | 0.001627747 |
| 60 | 3.88E-02 | 3.78E-02 | 4.18E-02 | 0.03947115 | 0.001571633 |
| 61 | 3.95E-02 | 3.85E-02 | 4.24E-02 | 0.04012843 | 0.001505367 |
| 62 | 4.02E-02 | 3.94E-02 | 4.31E-02 | 0.040894123 | 0.001445991 |
| 63 | 4.11E-02 | 4.04E-02 | 4.39E-02 | 0.04179799 | 0.00139726 |
| 64 | 4.21E-02 | 4.16E-02 | 4.49E-02 | 0.042896567 | 0.001342909 |
| 65 | 4.35E-02 | 4.31E-02 | 4.62E-02 | 0.044259943 | 0.001277524 |
| 66 | 4.51E-02 | 4.50E-02 | 4.78E-02 | 0.045971297 | 0.001228536 |
| 67 | 4.70E-02 | 4.75E-02 | 4.99E-02 | 0.048125073 | 0.001206838 |
| 68 | 4.94E-02 | 5.04E-02 | 5.27E-02 | 0.050818007 | 0.001234289 |
| 69 | 5.25E-02 | 5.38E-02 | 5.62E-02 | 0.054177717 | 0.001328702 |
| 70 | 5.65E-02 | 5.81E-02 | 6.07E-02 | 0.058436197 | 0.001503402 |
| 71 | 6.16E-02 | 6.34E-02 | 6.65E-02 | 0.06383193 | 0.001759467 |
| 72 | 6.81E-02 | 7.00E-02 | 7.38E-02 | 0.070659203 | 0.002120224 |
| 73 | 7.63E-02 | 7.83E-02 | 8.29E-02 | 0.079163697 | 0.002517376 |
| 74 | 8.64E-02 | 8.83E-02 | 9.40E-02 | 0.08955242 | 0.002952953 |
| 75 | 9.86E-02 | 0.10023 | 0.10736 | 0.102073157 | 0.003524562 |
| 76 | 0.11325 | 0.11456 | 0.12371 | 0.117173333 | 0.004357778 |
| 77 | 0.13081 | 0.1315 | 0.1434 | 0.135236667 | 0.005442222 |
| 78 | 0.1517 | 0.15128 | 0.1668 | 0.156593333 | 0.006804444 |
| 79 | 0.17574 | 0.17412 | 0.19353 | 0.18113 | 0.008266667 |
| 80 | 0.20296 | 0.20051 | 0.22339 | 0.208953333 | 0.009624444 |
| 81 | 0.23394 | 0.23005 | 0.25689 | 0.240293333 | 0.011064444 |
| 82 | 0.26841 | 0.26194 | 0.29461 | 0.274986667 | 0.013082222 |
| 83 | 0.30508 | 0.29641 | 0.33517 | 0.31222 | 0.0153 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 84 | 0.343 | 0.33431 | 0.37722 | 0.35151 | 0.01714 |
| 85 | 0.38147 | 0.37331 | 0.42011 | 0.39163 | 0.018986667 |
| 86 | 0.42002 | 0.41046 | 0.46301 | 0.431163333 | 0.021231111 |
| 87 | 0.45799 | 0.44626 | 0.50385 | 0.469366667 | 0.022988889 |
| 88 | 0.49333 | 0.48155 | 0.54076 | 0.505213333 | 0.023697778 |
| 89 | 0.52374 | 0.51462 | 0.57289 | 0.537083333 | 0.023871111 |
| 90 | 0.54863 | 0.5426 | 0.59913 | 0.563453333 | 0.023784444 |
| 91 | 0.56764 | 0.56512 | 0.61888 | 0.58388 | 0.023333333 |
| 92 | 0.58133 | 0.5821 | 0.63144 | 0.59829 | 0.0221 |
| 93 | 0.58941 | 0.59332 | 0.63731 | 0.60668 | 0.02042 |
| 94 | 0.59189 | 0.5986 | 0.63635 | 0.608946667 | 0.018268889 |
| 95 | 0.58914 | 0.59842 | 0.62925 | 0.605603333 | 0.015764444 |
| 96 | 0.58218 | 0.59338 | 0.617 | 0.59752 | 0.012986667 |
| 97 | 0.57175 | 0.58407 | 0.60094 | 0.585586667 | 0.010235556 |
| 98 | 0.55847 | 0.57113 | 0.58196 | 0.57052 | 0.008033333 |
| 99 | 0.54308 | 0.55507 | 0.56076 | 0.55297 | 0.006593333 |
| 100 | 0.52662 | 0.53656 | 0.53784 | 0.533673333 | 0.004702222 |
| 101 | 0.50935 | 0.51603 | 0.51355 | 0.512976667 | 0.002417778 |
| 102 | 0.49093 | 0.49375 | 0.48816 | 0.490946667 | 0.001868889 |
| 103 | 0.47159 | 0.47028 | 0.46231 | 0.46806 | 0.003833333 |
| 104 | 0.45203 | 0.44687 | 0.43704 | 0.445313333 | 0.005515556 |
| 105 | 0.43258 | 0.42405 | 0.41268 | 0.423103333 | 0.006948889 |
| 106 | 0.41338 | 0.40149 | 0.38903 | 0.4013 | 0.00818 |
| 107 | 0.39462 | 0.379 | 0.366 | 0.379873333 | 0.009831111 |
| 108 | 0.37642 | 0.35658 | 0.34352 | 0.35884 | 0.01172 |
| 109 | 0.3583 | 0.33439 | 0.32173 | 0.33814 | 0.01344 |
| 110 | 0.34004 | 0.31288 | 0.30095 | 0.317956667 | 0.014722222 |
| 111 | 0.32256 | 0.2925 | 0.28143 | 0.29883 | 0.01582 |
| 112 | 0.30632 | 0.27351 | 0.2633 | 0.281043333 | 0.016851111 |
| 113 | 0.29083 | 0.25604 | 0.24656 | 0.264476667 | 0.017568889 |
| 114 | 0.27589 | 0.23975 | 0.23093 | 0.248856667 | 0.018022222 |
| 115 | 0.2617 | 0.22453 | 0.21626 | 0.234163333 | 0.018357778 |
| 116 | 0.24846 | 0.2106 | 0.20229 | 0.22045 | 0.018673333 |
| 117 | 0.23638 | 0.1982 | 0.18906 | 0.20788 | 0.019 |

Table 14 shows the tangent delta data of resin 1010/1 according to the temperature.

**Table 14** - Tangent delta data of resin 1010/1

| ##Temp. °C | tan d (1 kHz) | tan d (1 kHz) | tan d (1 kHz) | DE' (1 kHz)/MPa | Mean Deviation |
|---|---|---|---|---|---|
| 35 | 3.02E-02 | 3.35E-02 | 3.58E-02 | 0.033146893 | 0.001965782 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 36 | 3.02E-02 | 3.35E-02 | 3.58E-02 | 0.03315214 | 0.001960887 |
| 37 | 3.02E-02 | 3.35E-02 | 3.58E-02 | 0.033167227 | 0.001958318 |
| 38 | 3.03E-02 | 3.35E-02 | 3.58E-02 | 0.033188343 | 0.001957749 |
| 39 | 3.03E-02 | 3.35E-02 | 3.58E-02 | 0.03321377 | 0.00195924 |
| 40 | 3.03E-02 | 3.36E-02 | 3.59E-02 | 0.03324508 | 0.00196242 |
| 41 | 3.03E-02 | 3.36E-02 | 3.59E-02 | 0.03328419 | 0.00196698 |
| 42 | 3.04E-02 | 3.37E-02 | 3.60E-02 | 0.033332107 | 0.001973284 |
| 43 | 3.04E-02 | 3.37E-02 | 3.60E-02 | 0.033389967 | 0.001981631 |
| 44 | 3.05E-02 | 3.38E-02 | 3.61E-02 | 0.033458443 | 0.001992189 |
| 45 | 3.05E-02 | 3.39E-02 | 3.62E-02 | 0.033539103 | 0.002005096 |
| 46 | 3.06E-02 | 3.40E-02 | 3.63E-02 | 0.03363508 | 0.002020433 |
| 47 | 3.07E-02 | 3.42E-02 | 3.64E-02 | 0.033749817 | 0.002037691 |
| 48 | 3.08E-02 | 3.43E-02 | 3.65E-02 | 0.033885617 | 0.002057004 |
| 49 | 3.09E-02 | 3.45E-02 | 3.67E-02 | 0.034045107 | 0.002078591 |
| 50 | 3.11E-02 | 3.47E-02 | 3.69E-02 | 0.034228043 | 0.002100549 |
| 51 | 3.13E-02 | 3.49E-02 | 3.72E-02 | 0.034436353 | 0.002120822 |
| 52 | 3.15E-02 | 3.51E-02 | 3.74E-02 | 0.034676237 | 0.002140178 |
| 53 | 3.17E-02 | 3.54E-02 | 3.78E-02 | 0.034955393 | 0.002159922 |
| 54 | 3.20E-02 | 3.57E-02 | 3.82E-02 | 0.035272057 | 0.002178358 |
| 55 | 3.23E-02 | 3.60E-02 | 3.85E-02 | 0.03562812 | 0.00219462 |
| 56 | 3.27E-02 | 3.64E-02 | 3.90E-02 | 0.036033047 | 0.002213538 |
| 57 | 3.31E-02 | 3.69E-02 | 3.95E-02 | 0.036494503 | 0.002237536 |
| 58 | 3.36E-02 | 3.74E-02 | 4.00E-02 | 0.037011967 | 0.002266398 |
| 59 | 3.41E-02 | 3.80E-02 | 4.07E-02 | 0.037590627 | 0.002300398 |
| 60 | 3.47E-02 | 3.86E-02 | 4.14E-02 | 0.038245097 | 0.002345871 |
| 61 | 3.54E-02 | 3.93E-02 | 4.23E-02 | 0.038991097 | 0.002405484 |
| 62 | 3.61E-02 | 4.01E-02 | 4.33E-02 | 0.03983274 | 0.00246988 |
| 63 | 3.70E-02 | 4.10E-02 | 4.44E-02 | 0.040791737 | 0.002535784 |
| 64 | 3.80E-02 | 4.20E-02 | 4.58E-02 | 0.041928403 | 0.002617989 |
| 65 | 3.92E-02 | 4.33E-02 | 4.74E-02 | 0.043309597 | 0.002725344 |
| 66 | 4.07E-02 | 4.49E-02 | 4.93E-02 | 0.044969213 | 0.002885091 |
| 67 | 4.25E-02 | 4.69E-02 | 5.15E-02 | 0.046959797 | 0.003008169 |
| 68 | 4.47E-02 | 4.95E-02 | 5.40E-02 | 0.04939397 | 0.00313044 |
| 69 | 4.75E-02 | 5.28E-02 | 5.70E-02 | 0.052406867 | 0.003263291 |
| 70 | 5.10E-02 | 5.70E-02 | 6.04E-02 | 0.056124843 | 0.003430462 |
| 71 | 5.52E-02 | 6.24E-02 | 6.45E-02 | 0.06070763 | 0.003658433 |
| 72 | 6.06E-02 | 6.93E-02 | 6.95E-02 | 0.066469503 | 0.003884249 |
| 73 | 6.78E-02 | 7.80E-02 | 7.54E-02 | 0.073739277 | 0.003951164 |
| 74 | 7.68E-02 | 8.88E-02 | 8.23E-02 | 0.08266724 | 0.004108747 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 75 | 8.77E-02 | 0.10225 | 9.03E-02 | 0.093428647 | 0.005880902 |
| 76 | 0.10089 | 0.11867 | 9.99E-02 | 0.106478153 | 0.008127898 |
| 77 | 0.11673 | 0.1384 | 0.11152 | 0.122216667 | 0.010788889 |
| 78 | 0.13564 | 0.16183 | 0.12554 | 0.141003333 | 0.013884444 |
| 79 | 0.15809 | 0.1881 | 0.14195 | 0.162713333 | 0.016924444 |
| 80 | 0.18427 | 0.2165 | 0.16049 | 0.187086667 | 0.019608889 |
| 81 | 0.21443 | 0.24799 | 0.18132 | 0.21458 | 0.022273333 |
| 82 | 0.24846 | 0.28403 | 0.20544 | 0.245976667 | 0.027024444 |
| 83 | 0.28611 | 0.32299 | 0.23315 | 0.28075 | 0.031733333 |
| 84 | 0.32641 | 0.36282 | 0.2625 | 0.317243333 | 0.036495556 |
| 85 | 0.36854 | 0.40312 | 0.29251 | 0.354723333 | 0.041475556 |
| 86 | 0.41171 | 0.44324 | 0.32387 | 0.39294 | 0.046046667 |
| 87 | 0.45497 | 0.48093 | 0.35668 | 0.43086 | 0.049453333 |
| 88 | 0.49649 | 0.51481 | 0.38898 | 0.46676 | 0.051853333 |
| 89 | 0.53454 | 0.54488 | 0.41933 | 0.499583333 | 0.053502222 |
| 90 | 0.56756 | 0.56997 | 0.44782 | 0.52845 | 0.053753333 |
| 91 | 0.59432 | 0.58841 | 0.47393 | 0.55222 | 0.052193333 |
| 92 | 0.614 | 0.60069 | 0.49613 | 0.570273333 | 0.049428889 |
| 93 | 0.62585 | 0.60776 | 0.5136 | 0.582403333 | 0.045868889 |
| 94 | 0.63013 | 0.6095 | 0.5277 | 0.58911 | 0.04094 |
| 95 | 0.62829 | 0.60642 | 0.53896 | 0.591223333 | 0.034842222 |
| 96 | 0.62082 | 0.59972 | 0.54694 | 0.58916 | 0.028146667 |
| 97 | 0.60817 | 0.59023 | 0.55166 | 0.583353333 | 0.021128889 |
| 98 | 0.59179 | 0.57861 | 0.55413 | 0.574843333 | 0.013808889 |
| 99 | 0.57279 | 0.56552 | 0.55474 | 0.56435 | 0.006406667 |
| 100 | 0.55174 | 0.55147 | 0.55356 | 0.552256667 | 0.000868889 |
| 101 | 0.52999 | 0.53681 | 0.55082 | 0.539206667 | 0.007742222 |
| 102 | 0.50857 | 0.52171 | 0.54677 | 0.525683333 | 0.014057778 |
| 103 | 0.48695 | 0.50618 | 0.54145 | 0.511526667 | 0.019948889 |
| 104 | 0.4648 | 0.49035 | 0.53485 | 0.496666667 | 0.025455556 |
| 105 | 0.44295 | 0.4744 | 0.52691 | 0.48142 | 0.030326667 |
| 106 | 0.4219 | 0.45856 | 0.51771 | 0.466056667 | 0.034435556 |
| 107 | 0.40117 | 0.44287 | 0.50739 | 0.450476667 | 0.037942222 |
| 108 | 0.38061 | 0.42677 | 0.49579 | 0.43439 | 0.040933333 |
| 109 | 0.36065 | 0.40981 | 0.48232 | 0.417593333 | 0.043151111 |
| 110 | 0.34149 | 0.39235 | 0.46655 | 0.40013 | 0.04428 |
| 111 | 0.32286 | 0.37474 | 0.44833 | 0.381976667 | 0.044235556 |
| 112 | 0.30473 | 0.35719 | 0.42766 | 0.363193333 | 0.042977778 |
| 113 | 0.28737 | 0.33979 | 0.40533 | 0.344163333 | 0.040777778 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 114 | 0.2707 | 0.32245 | 0.38172 | 0.324956667 | 0.037842222 |
| 115 | 0.25401 | 0.30509 | 0.35636 | 0.305153333 | 0.034137778 |
| 116 | 0.2368 | 0.28755 | 0.32875 | 0.284366667 | 0.031711111 |
| 117 | 0.22316 | 0.26977 | 0.30198 | 0.26497 | 0.027873333 |

Table 15 shows the tangent delta data of resin 1000/0 according to the temperature.

**Table 15** - Tangent delta data of resin 1000/0.

| ##Temp. °C | tan d (1 kHz) | tan d (1 kHz) | tan d (1 kHz) | DE' (1 kHz)/MPa | Mean Deviation |
|---|---|---|---|---|---|
| 35 | 7.23E-02 | 7.25E-02 | 9.99E-02 | 0.08158324 | 0.01223078 |
| 36 | 7.45E-02 | 7.47E-02 | 0.1012 | 0.083457087 | 0.011828609 |
| 37 | 7.68E-02 | 7.72E-02 | 0.10269 | 0.085560643 | 0.011419571 |
| 38 | 7.94E-02 | 7.99E-02 | 0.10437 | 0.087888897 | 0.010987402 |
| 39 | 8.21E-02 | 8.30E-02 | 0.10627 | 0.090470587 | 0.010532942 |
| 40 | 8.52E-02 | 8.64E-02 | 0.10843 | 0.093335747 | 0.010062836 |
| 41 | 8.86E-02 | 9.01E-02 | 0.11088 | 0.096515837 | 0.009576109 |
| 42 | 9.23E-02 | 9.42E-02 | 0.1136 | 0.10003975 | 0.009040167 |
| 43 | 9.65E-02 | 9.88E-02 | 0.11659 | 0.10394947 | 0.00842702 |
| 44 | 0.101 | 0.10381 | 0.1199 | 0.108236667 | 0.007775556 |
| 45 | 0.10595 | 0.10918 | 0.12358 | 0.112903333 | 0.007117778 |
| 46 | 0.11146 | 0.11493 | 0.1277 | 0.11803 | 0.006446667 |
| 47 | 0.11766 | 0.12115 | 0.13236 | 0.123723333 | 0.005757778 |
| 48 | 0.12466 | 0.12805 | 0.13768 | 0.13013 | 0.005033333 |
| 49 | 0.13264 | 0.13594 | 0.14388 | 0.137486667 | 0.004262222 |
| 50 | 0.14191 | 0.14504 | 0.15123 | 0.14606 | 0.003446667 |
| 51 | 0.15297 | 0.15558 | 0.16005 | 0.1562 | 0.002566667 |
| 52 | 0.16633 | 0.16799 | 0.1708 | 0.168373333 | 0.001617778 |
| 53 | 0.18277 | 0.18301 | 0.18396 | 0.183246667 | 0.000475556 |
| 54 | 0.20319 | 0.20152 | 0.20026 | 0.201656667 | 0.001022222 |
| 55 | 0.22913 | 0.2249 | 0.22054 | 0.224856667 | 0.002877778 |
| 56 | 0.26168 | 0.25451 | 0.24587 | 0.25402 | 0.005433333 |
| 57 | 0.30188 | 0.29148 | 0.27781 | 0.29039 | 0.008386667 |
| 58 | 0.35053 | 0.33674 | 0.31675 | 0.334673333 | 0.011948889 |
| 59 | 0.40908 | 0.39101 | 0.36303 | 0.387706667 | 0.016451111 |
| 60 | 0.47853 | 0.45507 | 0.417 | 0.4502 | 0.022133333 |
| 61 | 0.56004 | 0.5293 | 0.48017 | 0.52317 | 0.028666667 |
| 62 | 0.65324 | 0.61392 | 0.55397 | 0.607043333 | 0.035382222 |
| 63 | 0.75534 | 0.70609 | 0.63569 | 0.69904 | 0.042233333 |
| 64 | 0.86374 | 0.80361 | 0.72226 | 0.796536667 | 0.049517778 |
| 65 | 0.97604 | 0.906 | 0.81204 | 0.898026667 | 0.057324444 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 66 | 1.08926 | 1.01289 | 0.90433 | 1.00216 | 0.06522 |
| 67 | 1.19863 | 1.11831 | 0.9977 | 1.10488 | 0.071453333 |
| 68 | 1.3001 | 1.21524 | 1.0891 | 1.20148 | 0.07492 |
| 69 | 1.39076 | 1.30039 | 1.17414 | 1.28843 | 0.076193333 |
| 70 | 1.46635 | 1.37044 | 1.24643 | 1.361073333 | 0.076428889 |
| 71 | 1.52274 | 1.42394 | 1.30153 | 1.41607 | 0.07636 |
| 72 | 1.55762 | 1.45783 | 1.34137 | 1.452273333 | 0.073935556 |
| 73 | 1.5736 | 1.47096 | 1.36509 | 1.469883333 | 0.069862222 |
| 74 | 1.56953 | 1.46278 | 1.37042 | 1.467576667 | 0.067968889 |
| 75 | 1.54593 | 1.4351 | 1.35694 | 1.44599 | 0.066626667 |
| 76 | 1.5054 | 1.38821 | 1.32695 | 1.406853333 | 0.065697778 |
| 77 | 1.4514 | 1.32656 | 1.28261 | 1.353523333 | 0.065251111 |
| 78 | 1.38512 | 1.25993 | 1.22394 | 1.289663333 | 0.063637778 |
| 79 | 1.30902 | 1.18912 | 1.15286 | 1.217 | 0.061346667 |
| 80 | 1.22602 | 1.10569 | 1.07143 | 1.13438 | 0.061093333 |
| 81 | 1.13923 | 1.00683 | 0.98698 | 1.044346667 | 0.063255556 |
| 82 | 1.05214 | 0.91628 | 0.90617 | 0.958196667 | 0.062628889 |
| 83 | 0.96628 | 0.83715 | 0.82727 | 0.8769 | 0.059586667 |
| 84 | 0.88198 | 0.76086 | 0.74667 | 0.796503333 | 0.056984444 |
| 85 | 0.79995 | 0.68548 | 0.66481 | 0.716746667 | 0.055468889 |
| 86 | 0.72151 | 0.61595 | 0.58658 | 0.641346667 | 0.053442222 |
| 87 | 0.64857 | 0.55385 | 0.51477 | 0.572396667 | 0.050782222 |
| 88 | 0.58352 | 0.49513 | 0.44997 | 0.50954 | 0.04932 |
| 89 | 0.5263 | 0.43769 | 0.39213 | 0.45204 | 0.049506667 |
| 90 | 0.47508 | 0.38519 | 0.34017 | 0.400146667 | 0.049955556 |
| 91 | 0.42869 | 0.34078 | 0.29349 | 0.35432 | 0.04958 |
| 92 | 0.38585 | 0.30283 | 0.25101 | 0.31323 | 0.048413333 |
| 93 | 0.34609 | 0.27002 | 0.21244 | 0.276183333 | 0.046604444 |
| 94 | 0.30956 | 0.24057 | 0.17892 | 0.243016667 | 0.044362222 |
| 95 | 0.27549 | 0.2133 | 0.15191 | 0.213566667 | 0.041282222 |
| 96 | 0.24161 | 0.18828 | 0.13106 | 0.186983333 | 0.037282222 |
| 97 | 0.20747 | 0.16595 | 0.11598 | 0.163133333 | 0.031435556 |
| 98 | 0.17865 | 0.14617 | 0.10561 | 0.143476667 | 0.025244444 |
| 99 | 0.15858 | 0.12862 | 9.87E-02 | 0.128631603 | 0.019965598 |
| 100 | 0.14413 | 0.1121 | 9.43E-02 | 0.116837373 | 0.018195084 |
| 101 | 0.13323 | 9.54E-02 | 9.13E-02 | 0.106660497 | 0.017713002 |
| 102 | 0.12481 | 7.89E-02 | 8.92E-02 | 0.097628357 | 0.018121096 |
| 103 | 0.11803 | 6.34E-02 | 8.73E-02 | 0.08957721 | 0.018968527 |
| 104 | 0.11253 | 4.87E-02 | 8.53E-02 | 0.08220359 | 0.022309853 |

(continued)

| ##Temp. °C | tan d (1 kHz) | tan d (1 kHz) | tan d (1 kHz) | DE' (1 kHz)/MPa | Mean Deviation |
|---|---|---|---|---|---|
| 105 | 0.10804 | 3.44E-02 | 8.34E-02 | 0.075285947 | 0.027241204 |
| 106 | 0.10252 | 2.08E-02 | 8.13E-02 | 0.06821389 | 0.03158184 |
| 107 | 9.32E-02 | 8.78E-03 | 7.85E-02 | 0.060170327 | 0.03426107 |
| 108 | 7.93E-02 | -1.71E-03 | 7.44E-02 | 0.050681178 | 0.034924543 |
| 109 | 6.07E-02 | -1.10E-02 | 6.86E-02 | 0.039433603 | 0.033632162 |
| 110 | 3.95E-02 | -1.96E-02 | 6.05E-02 | 0.02679033 | 0.03090424 |
| 111 | 1.81E-02 | -2.78E-02 | 5.00E-02 | 0.013413443 | 0.027459302 |
| 112 | -2.66E-03 | -3.54E-02 | 3.67E-02 | | 0.024775472 |
| 113 | -2.28E-02 | -4.15E-02 | 2.16E-02 | | 0.023909362 |
| 114 | -4.27E-02 | -4.67E-02 | 5.70E-03 | | 0.022391416 |
| 115 | -6.29E-02 | -5.18E-02 | -1.06E-02 | | 0.020802038 |
| 116 | -8.35E-02 | -5.73E-02 | -2.70E-02 | | 0.019302127 |
| 117 | -0.10374 | -6.24E-02 | -4.35E-02 | | 0.022576662 |

Table 16 shows the tangent delta comparative data of resins 1020/1, 1010/1 and 1000/0, according to the temperature.

Table 16 - Comparison among tangent delta means

| ##Temp. °C | DE' 1020/1/MPa | DE' 1010/1/MPa | DE' 1000/0/MPa |
|---|---|---|---|
| 35 | 3.52E-02 | 3.31E-02 | 0.08158324 |
| 36 | 0.03516686 | 0.03315214 | 0.083457087 |
| 37 | 0.03513004 | 0.033167227 | 0.085560643 |
| 38 | 0.035102807 | 0.033188343 | 0.087888897 |
| 39 | 0.03508427 | 0.03321377 | 0.090470587 |
| 40 | 0.035074657 | 0.03324508 | 0.093335747 |
| 41 | 0.035074937 | 0.03328419 | 0.096515837 |
| 42 | 0.0350873 | 0.033332107 | 0.10003975 |
| 43 | 0.03511356 | 0.033389967 | 0.10394947 |
| 44 | 0.035156763 | 0.033458443 | 0.108236667 |
| 45 | 0.03521879 | 0.033539103 | 0.112903333 |
| 46 | 0.035302123 | 0.03363508 | 0.11803 |
| 47 | 0.035407773 | 0.033749817 | 0.123723333 |
| 48 | 0.035536933 | 0.033885617 | 0.13013 |
| 49 | 0.03569178 | 0.034045107 | 0.137486667 |
| 50 | 0.035874497 | 0.034228043 | 0.14606 |
| 51 | 0.03608455 | 0.034436353 | 0.1562 |
| 52 | 0.036320833 | 0.034676237 | 0.168373333 |
| 53 | 0.03658352 | 0.034955393 | 0.183246667 |
| 54 | 0.03687522 | 0.035272057 | 0.201656667 |
| 55 | 0.037199413 | 0.03562812 | 0.224856667 |

(continued)

| ##Temp. °C | DE' 1020/1/MPa | DE' 1010/1/MPa | DE' 1000/0/MPa |
|---|---|---|---|
| 56 | 0.037560657 | 0.036033047 | 0.25402 |
| 57 | 0.037962897 | 0.036494503 | 0.29039 |
| 58 | 0.038408117 | 0.037011967 | 0.334673333 |
| 59 | 0.03890459 | 0.037590627 | 0.387706667 |
| 60 | 0.03947115 | 0.038245097 | 0.4502 |
| 61 | 0.04012843 | 0.038991097 | 0.52317 |
| 62 | 0.040894123 | 0.03983274 | 0.607043333 |
| 63 | 0.04179799 | 0.040791737 | 0.69904 |
| 64 | 0.042896567 | 0.041928403 | 0.796536667 |
| 65 | 0.044259943 | 0.043309597 | 0.898026667 |
| 66 | 0.045971297 | 0.044969213 | 1.00216 |
| 67 | 0.048125073 | 0.046959797 | 1.10488 |
| 68 | 0.050818007 | 0.04939397 | 1.20148 |
| 69 | 0.054177717 | 0.052406867 | 1.28843 |
| 70 | 0.058436197 | 0.056124843 | 1.361073333 |
| 71 | 0.06383193 | 0.06070763 | 1.41607 |
| 72 | 0.070659203 | 0.066469503 | 1.452273333 |
| 73 | 0.079163697 | 0.073739277 | 1.469883333 |
| 74 | 0.08955242 | 0.08266724 | 1.467576667 |
| 75 | 0.102073157 | 0.093428647 | 1.44599 |
| 76 | 0.117173333 | 0.106478153 | 1.406853333 |
| 77 | 0.135236667 | 0.122216667 | 1.353523333 |
| 78 | 0.156593333 | 0.141003333 | 1.289663333 |
| 79 | 0.18113 | 0.162713333 | 1.217 |
| 80 | 0.208953333 | 0.187086667 | 1.13438 |
| 81 | 0.240293333 | 0.21458 | 1.044346667 |
| 82 | 0.274986667 | 0.245976667 | 0.958196667 |
| 83 | 0.31222 | 0.28075 | 0.8769 |
| 84 | 0.35151 | 0.317243333 | 0.796503333 |
| 85 | 0.39163 | 0.354723333 | 0.716746667 |
| 86 | 0.431163333 | 0.39294 | 0.641346667 |
| 87 | 0.469366667 | 0.43086 | 0.572396667 |
| 88 | 0.505213333 | 0.46676 | 0.50954 |
| 89 | 0.537083333 | 0.499583333 | 0.45204 |
| 90 | 0.563453333 | 0.52845 | 0.400146667 |
| 91 | 0.58388 | 0.55222 | 0.35432 |
| 92 | 0.59829 | 0.570273333 | 0.31323 |
| 93 | 0.60668 | 0.582403333 | 0.276183333 |
| 94 | 0.608946667 | 0.58911 | 0.243016667 |

(continued)

| ##Temp. °C | DE' 1020/1/MPa | DE' 1010/1/MPa | DE' 1000/0/MPa |
|---|---|---|---|
| 95 | 0.605603333 | 0.591223333 | 0.213566667 |
| 96 | 0.59752 | 0.58916 | 0.186983333 |
| 97 | 0.585586667 | 0.583353333 | 0.163133333 |
| 98 | 0.57052 | 0.574843333 | 0.143476667 |
| 99 | 0.55297 | 0.56435 | 0.128631603 |
| 100 | 0.533673333 | 0.552256667 | 0.116837373 |
| 101 | 0.512976667 | 0.539206667 | 0.106660497 |
| 102 | 0.490946667 | 0.525683333 | 0.097628357 |
| 103 | 0.46806 | 0.511526667 | 0.08957721 |
| 104 | 0.445313333 | 0.496666667 | 0.08220359 |
| 105 | 0.423103333 | 0.48142 | 0.075285947 |
| 106 | 0.4013 | 0.466056667 | 0.06821389 |
| 107 | 0.379873333 | 0.450476667 | 0.060170327 |
| 108 | 0.35884 | 0.43439 | 0.050681178 |
| 109 | 0.33814 | 0.417593333 | 0.039433603 |
| 110 | 0.317956667 | 0.40013 | 0.02679033 |
| 111 | 0.29883 | 0.381976667 | 0.013413443 |
| 112 | 0.281043333 | 0.363193333 | |
| 113 | 0.264476667 | 0.344163333 | |
| 114 | 0.248856667 | 0.324956667 | |
| 115 | 0.234163333 | 0.305153333 | |
| 116 | 0.22045 | 0.284366667 | |
| 117 | 0.20788 | 0.26497 | |

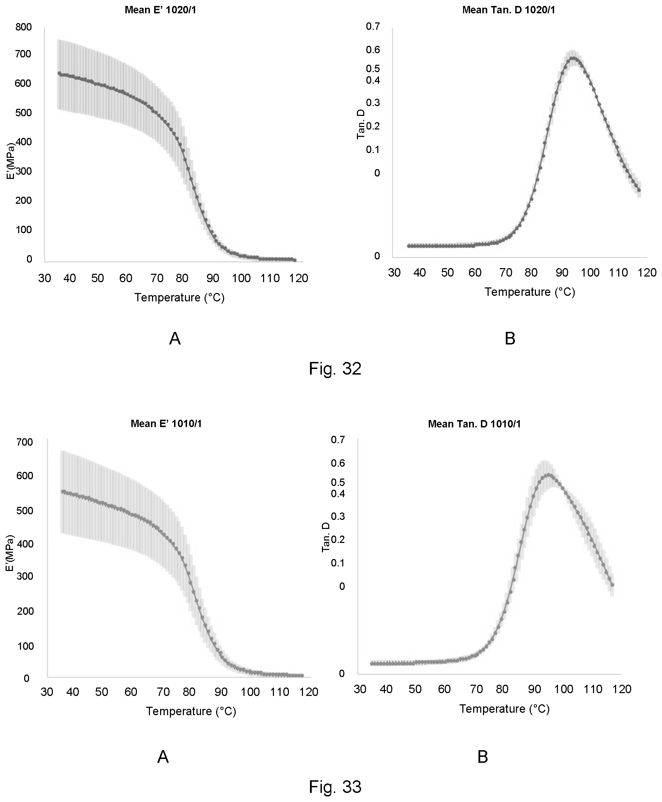

Data in Tables 8-16 can be viewed in graphical form, as illustrated in Figs. 32-36.

Fig. 32 depicts a graph of the modification of the storage modulus (damping effect) of the 1020/1 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. The graphs show the means and deviations, in accordance with the data in Tables 9 and 13.

Fig. 33 depicts a graph of the modification of the storage modulus (damping effect) of the 1010/1 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. The graphs show the means and deviations, in accordance with the data in Tables 10 and 14.

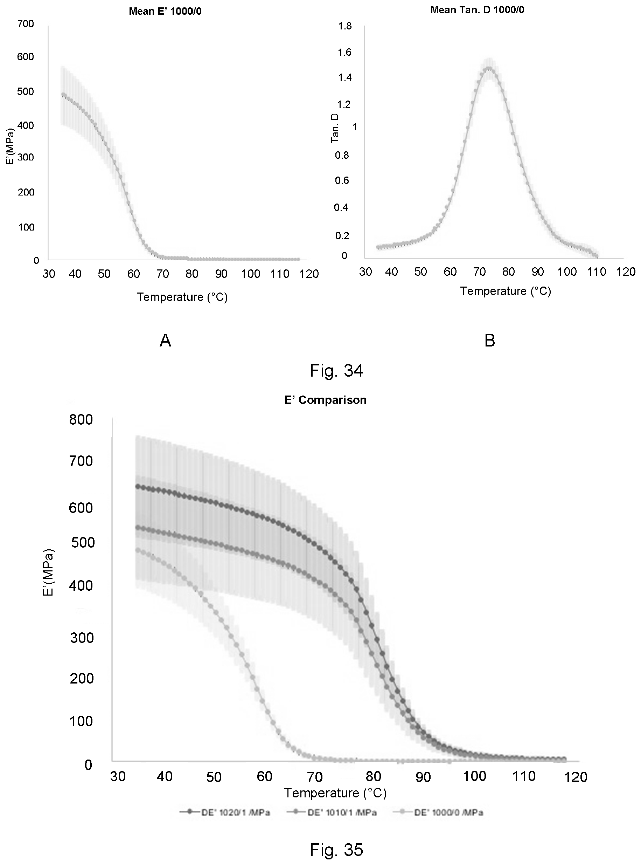

Fig. 34 depicts a graph of the modification of the storage modulus (damping effect) of the 1000/0 resin with the temperature increase. In A) the storage modulus is shown in E'(1.000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. The graphs show the means and deviations, in accordance with the data in Tables 11 and 15.

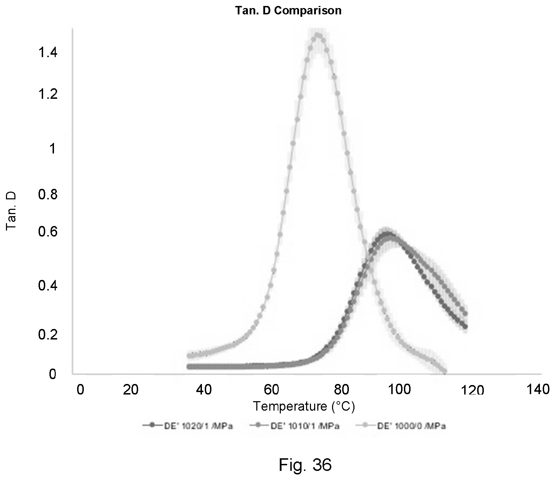

Fig. 35 shows a comparative graph of the storage moduli of resins 1020/1, 1010/1 and 1000/0, as shown in the graphs in Figs. 36A, 37A, and 38A.

Fig. 36 shows a comparative graph of the Tangent Delta data of resins 1020/1, 1010/1 and 1000/0, as per graphs in Figs. 36B, 37B, and 38B.

Taken together, the results shown in Tables 8-16 and Figs. 32-36 indicate that incorporation of nanoparticles at a low concentration (ppm range) was able to substantially modify the mechanical properties of the polymer, as can be seen from the tangent delta results. Tan delta can be understood as the energy dissipation potential of a material. The higher the tan delta, the more dissipative the material is. On the other hand, the lower the tan delta, the more elastic the material acts when a filler is applied, thus having more potential to store filler. Thus, modifying the tan delta (either increasing or decreasing) can modulate a material to become more suitable for different applications, e.g., for structural applications a lower tan delta may be preferred.

**Example 8 - Samples description**

Table 17 provides a description of the tested samples in the following examples:

| IDENTIFICATION | | | | |
|---|---|---|---|---|
| | | **CODE** | **ISI CODE** | **NUMBER OF PARTICLES (ppm)** |
| **PDEL 20023/3-1** | baseline | IHRR1000/0 | Baseline | **0** |
| **8** | Nb nano | IHRR1010/1 | B2-X | **50** |
| **7** | | IHRR1010/2 | B2-Y | **100** |
| **6** | | IHRR1010/3 | B2-Z | **250** |
| **5** | | IHRR1010/4 | B2-W | **500** |
| **12** | Ti nano | IHRR1020/1 | A2 - X | **50** |
| **11** | | IHRR1020/2 | A2 - Y | **100** |
| **10** | | IHRR1020/3 | A2 - Z | **250** |
| **9** | | IHRR1020/4 | A2 - W | **500** |

| PDEL 20023/1-1 | Nb micro | IHRR1030/4 | B1 - W | 500 |
|---|---|---|---|---|
| PDEL 20023/2-1 | Ti micro | IHRR1040/4 | A1 - W | 500 |

Polymer samples comprising titanium dioxide and niobium pentoxide microparticles were not tested as they show catastrophic failures, such as cracks, deformations and geometry irregularities. Similarly to what was described in the previous examples, the premixes containing nanoparticles were properly obtained, that is, the nanoparticles were incorporated into the resin at the tested concentrations. The respective premixes are particularly useful for the subsequent preparation of resins with lower concentrations of nanoparticles, using said premixes as premixtures, that is, if it is desired to prepare an epoxy resin with 50 ppm of any of the nanoparticles described in the examples above (graphene oxide, niobium pentoxide, titanium dioxide), a 1:10 mixture of the respective premix with the resin is used, by homogenizing until the product with said concentration is obtained. Other final concentrations can be obtained by adjusting concentrations.

**Example 9** - **Analysis of the storage modulus (E')**

Samples described in example 8 were analyzed in DMTA (Dynamic Mechanical Thermal Analysis) in triplicate and the results of the storage modulus (E') are shown below in Tables 18-26:

**Table 18** - Results of the storage modulus (E') for sample 1020/1 in triplicate

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 35 | 521.24084 | 587.02326 | 808.26576 | 638.8432867 | 112.9483156 |
| 36 | 519.59285 | 585.25724 | 805.7915 | 636.88053 | 112.6073133 |
| 37 | 517.94764 | 583.36901 | 803.18434 | 634.8336633 | 112.2337844 |
| 38 | 516.21911 | 581.49083 | 800.51115 | 632.7403633 | 111.8471911 |
| 39 | 514.32236 | 579.63043 | 797.68265 | 630.5451467 | 111.4250022 |
| 40 | 512.17207 | 577.7202 | 794.55728 | 628.14985 | 110.9382867 |
| 41 | 509.93587 | 575.70403 | 791.18714 | 625.6090133 | 110.3854178 |
| 42 | 507.87889 | 573.52914 | 787.67052 | 623.0261833 | 109.7628911 |
| 43 | 505.9128 | 571.21286 | 784.04279 | 620.3894833 | 109.1022044 |
| 44 | 503.83362 | 568.83381 | 780.31633 | 617.6612533 | 108.4367178 |
| 45 | 501.65703 | 566.4658 | 776.59583 | 614.90622 | 107.7930733 |
| 46 | 499.47967 | 564.18704 | 773.01907 | 612.2285933 | 107.1936511 |
| 47 | 497.31454 | 561.92632 | 769.47976 | 609.57354 | 106.6041467 |
| 48 | 495.13199 | 559.42766 | 765.74096 | 606.76687 | 105.9827267 |
| 49 | 492.8708 | 556.62495 | 761.74906 | 603.74827 | 105.33386 |
| 50 | 490.45399 | 553.7575 | 757.51021 | 600.5739 | 104.6242067 |
| 51 | 487.94848 | 550.9582 | 753.01422 | 597.3069667 | 103.8048356 |
| 52 | 485.49763 | 548.18753 | 748.24605 | 593.97707 | 102.8459867 |
| 53 | 483.08505 | 545.36609 | 743.39824 | 590.61646 | 101.85452 |
| 54 | 480.56022 | 542.3467 | 738.78868 | 587.2318667 | 101.0378756 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 55 | 477.87232 | 539.05243 | 734.26328 | 583.7293433 | 100.3559578 |
| 56 | 475.05273 | 535.5816 | 729.35513 | 579.9964867 | 99.57242889 |
| 57 | 472.10871 | 532.00424 | 724.12755 | 576.0801667 | 98.69825556 |
| 58 | 469.02922 | 528.3278 | 718.98806 | 572.1150267 | 97.91535556 |
| 59 | 465.82793 | 524.48683 | 713.7733 | 568.0293533 | 97.16263111 |
| 60 | 462.51981 | 520.27207 | 708.00444 | 563.5987733 | 96.27044444 |
| 61 | 459.06468 | 515.56293 | 701.70412 | 558.7772433 | 95.28458444 |
| 62 | 455.38681 | 510.55465 | 695.10783 | 553.6830967 | 94.28315556 |
| 63 | 451.37512 | 505.36024 | 688.26613 | 548.33383 | 93.2882 |
| 64 | 446.79964 | 499.89627 | 681.1215 | 542.6058033 | 92.34379778 |
| 65 | 441.58778 | 493.9736 | 673.53351 | 536.3649633 | 91.44569778 |
| 66 | 435.95283 | 487.21497 | 665.26465 | 529.4774833 | 90.52477778 |
| 67 | 429.97954 | 479.5341 | 656.36159 | 521.95841 | 89.60212 |
| 68 | 423.56183 | 471.56001 | 646.98538 | 514.03574 | 88.63309333 |
| 69 | 416.46198 | 463.21585 | 637.18605 | 505.6212933 | 87.70983778 |
| 70 | 408.31993 | 453.64222 | 626.93221 | 496.29812 | 87.08939333 |
| 71 | 399.01029 | 442.77438 | 616.23771 | 486.00746 | 86.82016667 |
| 72 | 388.5876 | 431.36759 | 605.13015 | 475.0284467 | 86.73446889 |
| 73 | 377.01687 | 419.5047 | 593.82807 | 463.44988 | 86.91879333 |
| 74 | 364.1372 | 406.69332 | 582.12854 | 450.9863533 | 87.42812444 |
| 75 | 349.58757 | 392.59848 | 568.44067 | 436.8755733 | 87.71006444 |
| 76 | 333.12037 | 376.79665 | 550.82711 | 420.2480433 | 87.05271111 |
| 77 | 314.49818 | 358.42099 | 527.49651 | 400.13856 | 84.9053 |
| 78 | 293.49587 | 336.28798 | 496.78053 | 375.52146 | 80.83938 |
| 79 | 270.18425 | 311.05044 | 459.21478 | 346.81649 | 74.93219333 |
| 80 | 245.14834 | 284.1788 | 416.20554 | 315.17756 | 67.35198667 |
| 81 | 219.42614 | 257.00514 | 371.13842 | 282.5232333 | 59.07679111 |
| 82 | 194.04103 | 230.71841 | 326.82022 | 250.5265533 | 50.86244444 |
| 83 | 170.10024 | 205.03487 | 285.12181 | 220.08564 | 43.35744667 |
| 84 | 147.8736 | 179.40105 | 246.98719 | 191.4206133 | 37.04438444 |
| 85 | 127.39577 | 155.10434 | 211.56364 | 164.6879167 | 31.25048222 |
| 86 | 108.4893 | 133.53969 | 178.64823 | 140.22574 | 25.61499333 |
| 87 | 91.14093 | 114.00126 | 149.26849 | 118.1368933 | 20.75439778 |
| 88 | 75.87212 | 95.91387 | 124.26088 | 98.68229 | 17.05239333 |
| 89 | 63.23679 | 79.8221 | 103.22316 | 82.09401667 | 14.08609556 |
| 90 | 52.92434 | 66.58727 | 86.00449 | 68.50536667 | 11.66608222 |
| 91 | 44.58909 | 55.77916 | 72.07713 | 57.48179333 | 9.730224444 |
| 92 | 37.62861 | 46.79013 | 61.03464 | 48.48446 | 8.366786667 |
| 93 | 31.76544 | 39.37557 | 52.09481 | 41.07860667 | 7.344135556 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 94 | 26.98661 | 33.43942 | 44.73216 | 35.05273 | 6.452953333 |
| 95 | 23.19936 | 28.69449 | 38.7173 | 30.20371667 | 5.675722222 |
| 96 | 20.09615 | 24.79245 | 33.89214 | 26.26024667 | 5.087928889 |
| 97 | 17.48194 | 21.53405 | 29.93244 | 22.98281 | 4.633086667 |
| 98 | 15.26031 | 18.82288 | 26.59092 | 20.22470333 | 4.244144444 |
| 99 | 13.41755 | 16.5793 | 23.72932 | 17.90872333 | 3.880397778 |
| 100 | 11.96278 | 14.70281 | 21.28828 | 15.98462333 | 3.535771111 |
| 101 | 10.76814 | 13.11667 | 19.18899 | 14.35793333 | 3.220704444 |
| 102 | 9.66971 | 11.7518 | 17.341 | 12.92083667 | 2.946775556 |
| 103 | 8.66232 | 10.58146 | 15.71644 | 11.65340667 | 2.708688889 |
| 104 | 7.82817 | 9.59424 | 14.32 | 10.58080333 | 2.492797778 |
| 105 | 7.15485 | 8.76579 | 13.13135 | 9.683996667 | 2.298235556 |
| 106 | 6.59712 | 8.0706 | 12.12796 | 8.931893333 | 2.130711111 |
| 107 | 6.09042 | 7.49123 | 11.28246 | 8.288036667 | 1.996282222 |
| 108 | 5.59187 | 6.97931 | 10.54235 | 7.70451 | 1.891893333 |
| 109 | 5.15546 | 6.49965 | 9.88257 | 7.179226667 | 1.802228889 |
| 110 | 4.828 | 6.04224 | 9.3031 | 6.724446667 | 1.719102222 |
| 111 | 4.53195 | 5.61487 | 8.80767 | 6.318163333 | 1.659671111 |
| 112 | 4.21949 | 5.26252 | 8.39863 | 5.960213333 | 1.625611111 |
| 113 | 3.93344 | 5.00681 | 8.0695 | 5.669916667 | 1.599722222 |
| 114 | 3.70068 | 4.78304 | 7.78974 | 5.424486667 | 1.576835556 |
| 115 | 3.50697 | 4.53569 | 7.53699 | 5.193216667 | 1.562515556 |
| 116 | 3.34122 | 4.28937 | 7.29346 | 4.974683333 | 1.545851111 |
| 117 | 3.19749 | 4.08255 | 7.05246 | 4.7775 | 1.51664 |

**Table 19** - Results of the storage modulus (E') for sample 1010/1 in quintuplicate

| ##Temp./>C | E' (1.000 Hz)/MPa | E' (1.000 Hz)/MPa | E' (1.000 Hz)/Mpa | E' (1.000 Hz)/MPa | E' (1.000 Hz)/MPa | DE' (1.000 Hz)/MPa | Mean Deviation |
|---|---|---|---|---|---|---|---|
| 35 | 583.83602 | 676.89969 | 370.40178 | 504.27455 | 525.76617 | 532.235642 | 78.5057704 |
| 36 | 581.53055 | 673.77482 | 369.11344 | 502.68782 | 523.98176 | 530.217678 | 77.9480056 |
| 37 | 579.05048 | 670.69211 | 367.76416 | 501.13552 | 522.22005 | 528.172464 | 77.3590648 |
| 38 | 576.64599 | 667.57055 | 366.39489 | 499.57909 | 520.45861 | 526.129826 | 76.7827552 |
| 39 | 574.50493 | 664.35349 | 365.02311 | 498.00698 | 518.68224 | 524.11415 | 76.252048 |
| 40 | 572.44998 | 661.07865 | 363.61399 | 496.39851 | 516.88015 | 522.084256 | 75.7440472 |
| 41 | 570.2918 | 657.70992 | 362.15697 | 494.68311 | 515.00689 | 519.969738 | 75.2248976 |
| 42 | 567.89636 | 654.107 | 360.72108 | 492.78506 | 512.97442 | 517.696784 | 74.6439168 |
| 43 | 565.21234 | 650.3047 | 359.33649 | 490.693 | 510.74161 | 515.257628 | 74.0007136 |
| 44 | 562.44147 | 646.55164 | 357.91908 | 488.39866 | 508.32687 | 512.727544 | 73.4152088 |
| 45 | 559.74612 | 642.90757 | 356.41267 | 485.94505 | 505.75238 | 510.152758 | 72.9392696 |

(continued)

| ##Temp./>C | E' (1.000 Hz)/MPa | E' (1.000 Hz)/MPa | E' (1.000 Hz)/Mpa | E' (1.000 Hz)/MPa | E' (1.000 Hz)/MPa | DE' (1.000 Hz)/MPa | Mean Deviation |
|---|---|---|---|---|---|---|---|
| 46 | 557.14424 | 639.20367 | 354.86344 | 483.37328 | 503.05428 | 507.527782 | 72.5169384 |
| 47 | 554.58318 | 635.38817 | 353.31338 | 480.68758 | 500.24798 | 504.844058 | 72.1132936 |
| 48 | 551.81601 | 631.54381 | 351.77918 | 477.87062 | 497.32481 | 502.066886 | 71.6904192 |
| 49 | 548.75691 | 627.63053 | 350.25257 | 474.93152 | 494.27569 | 499.169444 | 71.2194208 |
| 50 | 545.76785 | 623.46546 | 348.66919 | 471.88135 | 491.11624 | 496.180018 | 70.7493096 |
| 51 | 543.05972 | 619.02179 | 346.97047 | 468.73881 | 487.85472 | 493.129102 | 70.3293224 |
| 52 | 540.34132 | 614.48741 | 345.09103 | 465.51819 | 484.49743 | 489.987076 | 69.9418312 |
| 53 | 537.40622 | 609.9521 | 343.04423 | 462.19626 | 481.03554 | 486.72687 | 69.561832 |
| 54 | 534.44712 | 605.37539 | 341.12071 | 458.72055 | 477.44227 | 483.421208 | 69.1920376 |
| 55 | 531.59206 | 600.72515 | 339.35572 | 455.09556 | 473.70111 | 480.09392 | 68.851748 |
| 56 | 528.68946 | 595.99089 | 337.38207 | 451.35214 | 469.85537 | 476.653986 | 68.5489512 |
| 57 | 525.60271 | 591.16727 | 335.0765 | 447.48506 | 465.9297 | 473.052248 | 68.2661936 |
| 58 | 522.32373 | 586.25274 | 332.73314 | 443.46028 | 461.91025 | 469.336028 | 67.9617656 |
| 59 | 518.90437 | 581.18877 | 330.391 | 439.25409 | 457.7744 | 465.502526 | 67.6352352 |
| 60 | 515.58548 | 575.85334 | 327.74245 | 434.83353 | 453.49825 | 461.50261 | 67.37344 |
| 61 | 512.4592 | 570.18763 | 324.65998 | 430.19972 | 449.05987 | 457.31328 | 67.208108 |
| 62 | 509.01796 | 564.18061 | 321.37223 | 425.34818 | 444.44918 | 452.873632 | 66.9805224 |
| 63 | 504.92489 | 557.92169 | 317.93568 | 420.25653 | 439.65917 | 448.139592 | 66.6269584 |
| 64 | 500.49214 | 551.58682 | 314.10328 | 414.87606 | 434.69514 | 443.150688 | 66.3110336 |
| 65 | 495.91881 | 545.09458 | 309.69105 | 409.18182 | 429.54281 | 437.885814 | 66.0967048 |
| 66 | 491.08273 | 538.1168 | 304.81363 | 403.137 | 424.15718 | 432.261468 | 65.8706376 |
| 67 | 485.79111 | 530.60353 | 299.48671 | 396.82517 | 418.53954 | 426.249212 | 65.5584864 |
| 68 | 479.75388 | 522.70449 | 293.48403 | 390.33107 | 412.78261 | 419.811216 | 65.1343752 |
| 69 | 472.80362 | 514.39446 | 286.74036 | 383.6571 | 406.95765 | 412.910638 | 64.5507216 |
| 70 | 465.42331 | 505.48844 | 279.46521 | 376.77633 | 401.11614 | 405.653886 | 63.8415912 |
| 71 | 457.72558 | 495.98519 | 271.56295 | 369.70844 | 395.29841 | 398.056114 | 63.0394168 |
| 72 | 448.90293 | 485.99395 | 262.53014 | 362.42337 | 389.53483 | 389.877044 | 62.0571168 |
| 73 | 438.19308 | 475.28949 | 252.58553 | 354.74558 | 383.71895 | 380.906526 | 61.7927768 |
| 74 | 425.87656 | 463.26465 | 242.73081 | 346.44087 | 377.61866 | 371.18631 | 61.280376 |
| 75 | 412.08263 | 448.75342 | 232.0771 | 337.29156 | 370.93756 | 360.228454 | 60.4352992 |
| 76 | 396.20506 | 430.06736 | 218.37027 | 326.94225 | 363.2937 | 346.975728 | 59.4555744 |
| 77 | 377.52187 | 406.0139 | 201.20642 | 314.6492 | 354.15269 | 330.708816 | 58.2248048 |
| 78 | 355.30685 | 375.70435 | 181.76132 | 299.78417 | 342.68614 | 311.048566 | 56.2206568 |
| 79 | 329.32816 | 342.13139 | 161.71353 | 282.40315 | 328.94754 | 288.904754 | 53.4771312 |
| 80 | 300.93104 | 308.3178 | 143.15128 | 262.81952 | 313.44102 | 265.732132 | 50.1973856 |
| 81 | 271.44189 | 274.7058 | 126.39486 | 241.57417 | 296.47434 | 242.118212 | 46.5069576 |
| 82 | 242.40455 | 241.60391 | 110.52119 | 219.20397 | 278.14062 | 218.374848 | 43.1414632 |
| 83 | 214.90929 | 210.38393 | 95.54983 | 196.37915 | 259.34245 | 195.31293 | 39.90524 |
| 84 | 189.24383 | 182.08801 | 82.55493 | 173.74972 | 240.94784 | 173.716866 | 36.4647744 |

(continued)

| ##Temp./>C | E' (1.000 Hz)/MPa | E' (1.000 Hz)/MPa | E' (1.000 Hz)/Mpa | E' (1.000 Hz)/MPa | E' (1.000 Hz)/MPa | DE' (1.000 Hz)/MPa | Mean Deviation |
|---|---|---|---|---|---|---|---|
| 85 | 165.3929 | 156.13384 | 71.54308 | 152.04913 | 223.02729 | 153.629248 | 33.4665144 |
| 86 | 142.80169 | 132.44944 | 61.56859 | 131.61871 | 205.60316 | 134.808318 | 31.5152856 |
| 87 | 121.41768 | 111.82645 | 52.32847 | 112.63127 | 188.76439 | 117.393652 | 30.1579064 |
| 88 | 101.98795 | 94.43958 | 44.29458 | 95.35261 | 172.61726 | 101.738396 | 28.4513672 |
| 89 | 85.06523 | 79.5103 | 37.68259 | 80.1333 | 157.11217 | 87.900718 | 27.6845808 |
| 90 | 70.64358 | 66.95548 | 32.02128 | 66.98575 | 142.25218 | 75.771654 | 26.5922104 |
| 91 | 58.62088 | 56.94849 | 27.08166 | 55.76876 | 128.08244 | 65.300446 | 25.1127976 |
| 92 | 48.6999 | 48.90547 | 22.98671 | 46.42502 | 114.68576 | 56.340572 | 23.3380752 |
| 93 | 40.80923 | 41.97429 | 19.75854 | 38.8669 | 102.02725 | 48.687242 | 21.3360032 |
| 94 | 34.80113 | 36.01179 | 17.05955 | 32.85258 | 90.14235 | 42.17348 | 19.187548 |
| 95 | 30.04043 | 31.25458 | 14.67988 | 28.01207 | 79.12297 | 36.621986 | 17.0003936 |
| 96 | 25.93128 | 27.43604 | 12.66675 | 24.12563 | 69.12651 | 31.857242 | 14.9077072 |
| 97 | 22.40307 | 24.14104 | 11.05814 | 20.98351 | 60.10297 | 27.737746 | 12.9460896 |
| 98 | 19.57349 | 21.23955 | 9.70202 | 18.43213 | 52.01755 | 24.192948 | 11.1298408 |
| 99 | 17.2893 | 18.74131 | 8.49373 | 16.31003 | 44.91355 | 21.149584 | 9.5055864 |
| 100 | 15.40501 | 16.59962 | 7.43308 | 14.52223 | 38.86663 | 18.565314 | 8.1205264 |
| 101 | 13.84219 | 14.75778 | 6.55085 | 13.0044 | 33.73553 | 16.37815 | 6.942952 |
| 102 | 12.52316 | 13.15362 | 5.81527 | 11.71516 | 29.31989 | 14.50542 | 5.925788 |
| 103 | 11.3458 | 11.74743 | 5.187 | 10.60207 | 25.54061 | 12.884582 | 5.0624112 |
| 104 | 10.26392 | 10.53783 | 4.65035 | 9.63784 | 22.35806 | 11.4896 | 4.347384 |
| 105 | 9.28485 | 9.53087 | 4.2017 | 8.80885 | 19.71756 | 10.308766 | 3.7635176 |
| 106 | 8.4294 | 8.66722 | 3.82396 | 8.10766 | 17.5364 | 9.312928 | 3.2893888 |
| 107 | 7.74654 | 7.90109 | 3.49071 | 7.50883 | 15.73307 | 8.476048 | 2.9028088 |
| 108 | 7.23992 | 7.23688 | 3.1938 | 6.99603 | 14.21649 | 7.776624 | 2.5759464 |
| 109 | 6.75582 | 6.68671 | 2.94164 | 6.55582 | 12.93267 | 7.174532 | 2.3032552 |
| 110 | 6.23465 | 6.20026 | 2.73138 | 6.18201 | 11.83688 | 6.637036 | 2.0799376 |
| 111 | 5.76548 | 5.74217 | 2.53794 | 5.86435 | 10.90398 | 6.162784 | 1.8964784 |
| 112 | 5.4001 | 5.32451 | 2.35854 | 5.59552 | 10.11131 | 5.757996 | 1.7413256 |
| 113 | 5.11529 | 4.9631 | 2.23096 | 5.36694 | 9.43958 | 5.423174 | 1.6065624 |
| 114 | 4.88497 | 4.67007 | 2.16787 | 5.17163 | 8.85934 | 5.150776 | 1.4917672 |
| 115 | 4.68402 | 4.44063 | 2.14398 | 5.00311 | 8.35479 | 4.925306 | 1.4029152 |
| 116 | 4.49761 | 4.2365 | 2.143 | 4.85738 | 7.91342 | 4.729582 | 1.3246544 |
| 117 | 4.35685 | 4.03416 | 2.15233 | 4.73171 | 7.52935 | 4.56088 | 1.25572 |

**Table 20** - Results of the storage modulus (E') for sample 1000/0 in quadruplicate.

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 35 | 495.3179 | 612.7456 | 368.41062 | 413.31395 | 472.4470175 | 81.5847325 |
| 36 | 489.55309 | 605.72011 | 365.61268 | 410.00268 | 467.72214 | 79.91446 |

(continued)

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 37 | 483.38573 | 597.96191 | 362.27518 | 406.50321 | 462.5315075 | 78.1423125 |
| 38 | 476.79718 | 589.71837 | 358.49016 | 402.83554 | 456.9603125 | 76.2974625 |
| 39 | 469.79988 | 581.16589 | 354.27274 | 398.9768 | 451.0538275 | 74.4290575 |
| 40 | 462.38706 | 571.95781 | 349.54877 | 394.88846 | 444.695525 | 72.47691 |
| 41 | 454.48599 | 561.73232 | 344.27707 | 390.53596 | 437.757835 | 70.35132 |
| 42 | 445.94948 | 550.46945 | 338.43896 | 386.03091 | 430.2222 | 67.987265 |
| 43 | 436.66987 | 538.08877 | 332.00442 | 381.43465 | 422.0494275 | 65.3298925 |
| 44 | 426.6383 | 524.71237 | 324.92535 | 376.5784 | 413.213605 | 62.46173 |
| 45 | 415.81137 | 510.4636 | 317.11697 | 371.24603 | 403.6594925 | 59.4779925 |
| 46 | 404.08929 | 495.42168 | 308.61595 | 365.32036 | 393.36182 | 56.393665 |
| 47 | 391.33414 | 479.50897 | 299.41865 | 358.75747 | 382.2548075 | 53.1667475 |
| 48 | 377.52535 | 462.40202 | 289.48081 | 351.83253 | 370.3101775 | 49.6535075 |
| 49 | 362.59824 | 443.63494 | 278.68099 | 344.65346 | 357.3919075 | 45.7246825 |
| 50 | 346.49599 | 423.44559 | 266.94372 | 336.68975 | 343.3937625 | 41.5770275 |
| 51 | 329.04928 | 402.21013 | 254.36834 | 327.45236 | 328.2700275 | 37.3596775 |
| 52 | 310.26272 | 379.92095 | 240.97594 | 317.20095 | 312.09014 | 36.47081 |
| 53 | 290.05662 | 356.2928 | 226.73484 | 306.07882 | 294.79077 | 36.39504 |
| 54 | 268.27979 | 330.96334 | 211.51013 | 293.6407 | 276.09849 | 36.20353 |
| 55 | 244.59552 | 303.32198 | 195.12696 | 279.20471 | 255.5622925 | 35.7010525 |
| 56 | 219.1843 | 273.03298 | 177.33804 | 262.47589 | 233.0078025 | 34.7466325 |
| 57 | 192.50664 | 240.30588 | 157.90535 | 243.11358 | 208.4578625 | 33.2518675 |
| 58 | 165.03898 | 205.87509 | 137.54288 | 221.50757 | 182.49113 | 31.2002 |
| 59 | 137.26688 | 171.35833 | 117.20467 | 198.2712 | 156.02527 | 28.789495 |
| 60 | 110.18491 | 138.29886 | 97.4537 | 173.35422 | 129.8229225 | 26.0036175 |
| 61 | 85.48843 | 108.43167 | 78.70334 | 146.20208 | 104.70638 | 22.610495 |
| 62 | 64.41225 | 83.25889 | 61.6043 | 117.79009 | 81.7663825 | 18.7581075 |
| 63 | 47.71178 | 63.07344 | 47.0269 | 90.61152 | 62.10591 | 14.73657 |
| 64 | 35.17075 | 47.77685 | 35.70258 | 66.73944 | 46.347405 | 10.91074 |
| 65 | 25.79539 | 35.98016 | 27.06452 | 47.96923 | 34.202325 | 7.77237 |
| 66 | 18.92911 | 26.86917 | 20.50314 | 34.56687 | 25.2170725 | 5.5009475 |
| 67 | 13.94751 | 20.06141 | 15.59859 | 25.04639 | 18.663475 | 3.890425 |
| 68 | 10.38752 | 15.21116 | 11.86514 | 18.39957 | 13.9658475 | 2.8395175 |
| 69 | 7.79714 | 11.71227 | 9.00223 | 13.67234 | 10.545995 | 2.14631 |
| 70 | 5.90836 | 9.12757 | 6.90589 | 10.22296 | 8.041195 | 1.63407 |
| 71 | 4.57123 | 7.19463 | 5.45651 | 7.69097 | 6.228335 | 1.214465 |
| 72 | 3.65211 | 5.77314 | 4.4044 | 5.86768 | 4.9243325 | 0.8960775 |
| 73 | 2.97269 | 4.73162 | 3.57571 | 4.5634 | 3.960855 | 0.686655 |
| 74 | 2.42034 | 3.94209 | 2.91718 | 3.63342 | 3.2282575 | 0.5594975 |
| 75 | 1.97866 | 3.32317 | 2.42184 | 2.95204 | 2.6689275 | 0.4686775 |

(continued)

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 76 | 1.64756 | 2.84171 | 2.05291 | 2.45094 | 2.24828 | 0.398045 |
| 77 | 1.39593 | 2.48146 | 1.76169 | 2.08739 | 1.9316175 | 0.3528075 |
| 78 | 1.20025 | 2.20939 | 1.52345 | 1.81599 | 1.68727 | 0.32542 |
| 79 | 1.05052 | 1.98318 | 1.33312 | 1.58663 | 1.4883625 | 0.2965425 |
| 80 | 0.94303 | 1.77247 | 1.19147 | 1.37662 | 1.3208975 | 0.2536475 |
| 81 | 0.85718 | 1.58137 | 1.08376 | 1.21496 | 1.1843175 | 0.2138475 |
| 82 | 0.76074 | 1.44901 | 0.99254 | 1.1233 | 1.0813975 | 0.2047575 |
| 83 | 0.66224 | 1.35769 | 0.9133 | 1.04868 | 0.9954775 | 0.2077075 |
| 84 | 0.59723 | 1.27919 | 0.84921 | 0.95643 | 0.920515 | 0.197295 |
| 85 | 0.5628 | 1.20547 | 0.79676 | 0.88359 | 0.862155 | 0.182375 |
| 86 | 0.53295 | 1.14456 | 0.74157 | 0.84248 | 0.81539 | 0.17813 |
| 87 | 0.4953 | 1.10056 | 0.686 | 0.79513 | 0.7692475 | 0.1785975 |
| 88 | 0.44737 | 1.07258 | 0.65167 | 0.73312 | 0.726185 | 0.176665 |
| 89 | 0.40084 | 1.05987 | 0.63961 | 0.69055 | 0.6977175 | 0.18107625 |
| 90 | 0.38205 | 1.04164 | 0.62077 | 0.66312 | 0.676895 | 0.1823725 |
| 91 | 0.38859 | 1.00283 | 0.58015 | 0.6148 | 0.6465925 | 0.17811875 |
| 92 | 0.37656 | 0.96384 | 0.54201 | 0.55253 | 0.608735 | 0.1775525 |
| 93 | 0.33366 | 0.94277 | 0.53004 | 0.50833 | 0.5787 | 0.182035 |
| 94 | 0.29952 | 0.93752 | 0.52974 | 0.48691 | 0.5634225 | 0.18704875 |
| 95 | 0.29411 | 0.94347 | 0.51989 | 0.48083 | 0.559575 | 0.1919475 |
| 96 | 0.3082 | 0.95321 | 0.50492 | 0.47815 | 0.56112 | 0.196045 |
| 97 | 0.3306 | 0.95768 | 0.49676 | 0.46717 | 0.5630525 | 0.19731375 |
| 98 | 0.33353 | 0.9447 | 0.49407 | 0.44858 | 0.55522 | 0.19474 |
| 99 | 0.30549 | 0.90552 | 0.48876 | 0.42874 | 0.5321275 | 0.18669625 |
| 100 | 0.2804 | 0.86373 | 0.48545 | 0.4226 | 0.513045 | 0.1753425 |
| 101 | 0.28963 | 0.85044 | 0.50243 | 0.43959 | 0.5205225 | 0.16495875 |
| 102 | 0.32197 | 0.85245 | 0.53619 | 0.45297 | 0.540895 | 0.1557775 |
| 103 | 0.35304 | 0.841 | 0.5485 | 0.43278 | 0.54383 | 0.15092 |
| 104 | 0.36373 | 0.81855 | 0.52535 | 0.39862 | 0.5265625 | 0.14599375 |
| 105 | 0.34045 | 0.79504 | 0.4978 | 0.38317 | 0.504115 | 0.1454625 |
| 106 | 0.31039 | 0.77608 | 0.48744 | 0.391 | 0.4912275 | 0.14242625 |
| 107 | 0.31119 | 0.7655 | 0.49318 | 0.41682 | 0.4966725 | 0.13441375 |
| 108 | 0.3308 | 0.75982 | 0.5085 | 0.42626 | 0.506345 | 0.127815 |
| 109 | 0.33817 | 0.75038 | 0.50628 | 0.38294 | 0.4944425 | 0.1338875 |
| 110 | 0.33582 | 0.73613 | 0.46922 | 0.341 | 0.4705425 | 0.13279375 |
| 111 | 0.33937 | 0.72116 | 0.43671 | 0.37306 | 0.467575 | 0.1267925 |
| 112 | 0.34146 | 0.70799 | 0.44872 | 0.4395 | 0.4844175 | 0.11178625 |
| 113 | 0.32042 | 0.69774 | 0.47658 | 0.46383 | 0.4896425 | 0.10404875 |
| 114 | 0.28793 | 0.69236 | 0.47094 | 0.4537 | 0.4762325 | 0.10806375 |

(continued)

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 115 | 0.28768 | 0.69642 | 0.44226 | 0.45098 | 0.469335 | 0.1135425 |
| 116 | 0.31755 | 0.71145 | 0.42941 | 0.45401 | 0.478105 | 0.1166725 |
| 117 | 0.3269 | 0.72732 | 0.43464 | 0.43855 | 0.4818525 | 0.12273375 |

**Table 21** - Results of the storage modulus (E') for sample 1020/4 in triplicate

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 35 | 810.28926 | 483.75458 | 973.50735 | 755.8503967 | 181.3972111 |
| 36 | 808.03307 | 481.69053 | 969.99695 | 753.2401833 | 181.0331022 |
| 37 | 805.71856 | 479.82266 | 966.70214 | 750.7477867 | 180.6167511 |
| 38 | 803.55162 | 478.01937 | 962.49378 | 748.02159 | 180.00148 |
| 39 | 801.18467 | 476.04756 | 958.73931 | 745.3238467 | 179.5175244 |
| 40 | 798.42309 | 473.92983 | 955.57178 | 742.6415667 | 179.1411578 |
| 41 | 795.52932 | 471.95631 | 951.92547 | 739.8037 | 178.5649267 |
| 42 | 792.65321 | 470.02027 | 947.87461 | 736.8493633 | 177.8860622 |
| 43 | 789.607 | 467.75591 | 943.59376 | 733.6522233 | 177.2642089 |
| 44 | 786.21703 | 465.33099 | 939.14955 | 730.2325233 | 176.6010222 |
| 45 | 782.45387 | 463.04359 | 934.66777 | 726.7217433 | 175.7854356 |
| 46 | 778.36679 | 460.77907 | 930.18211 | 723.1093233 | 174.8868356 |
| 47 | 774.2785 | 458.36065 | 925.64898 | 719.4293767 | 174.0458178 |
| 48 | 770.37382 | 455.66291 | 921.03952 | 715.6920833 | 173.3527822 |
| 49 | 766.3944 | 452.6847 | 916.46377 | 711.8476233 | 172.7752822 |
| 50 | 762.12955 | 449.82847 | 911.70445 | 707.88749 | 172.0393467 |
| 51 | 757.63425 | 447.18406 | 905.64596 | 703.48809 | 170.8693533 |
| 52 | 752.97279 | 444.4619 | 899.88075 | 699.1051467 | 169.7621644 |
| 53 | 748.21095 | 441.54777 | 895.61084 | 695.1231867 | 169.0502778 |
| 54 | 743.37935 | 438.42954 | 890.37021 | 690.7263667 | 168.1978844 |
| 55 | 738.43058 | 435.18656 | 884.62985 | 686.08233 | 167.2638467 |
| 56 | 733.26674 | 431.9046 | 879.24195 | 681.4710967 | 166.3776644 |
| 57 | 727.71119 | 428.5176 | 873.56384 | 676.5975433 | 165.3866289 |
| 58 | 721.68957 | 424.93607 | 867.62353 | 671.41639 | 164.3202133 |
| 59 | 715.54891 | 421.15395 | 861.36979 | 666.0242167 | 163.2468444 |
| 60 | 709.54196 | 417.11648 | 854.69646 | 660.4516333 | 162.2234356 |
| 61 | 703.44842 | 412.62362 | 848.17149 | 654.7478433 | 161.4161489 |
| 62 | 696.99892 | 407.46321 | 841.41887 | 648.627 | 160.77586 |
| 63 | 690.06339 | 401.52126 | 833.79146 | 641.7920367 | 160.1805178 |
| 64 | 682.566 | 394.77051 | 825.88066 | 634.4057233 | 159.7568089 |
| 65 | 674.6566 | 387.31101 | 817.70787 | 626.5584933 | 159.4983222 |
| 66 | 666.36159 | 379.17534 | 809.07092 | 618.2026167 | 159.3515178 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 67 | 657.38188 | 370.3632 | 799.92418 | 609.2230867 | 159.2399244 |
| 68 | 647.44726 | 360.91407 | 789.73577 | 599.3657 | 158.9677533 |
| 69 | 636.56821 | 350.94368 | 778.12956 | 588.54715 | 158.4023133 |
| 70 | 624.54856 | 340.36352 | 764.98073 | 576.6309367 | 157.5116111 |
| 71 | 610.78339 | 328.84111 | 750.35859 | 563.3276967 | 156.3243911 |
| 72 | 594.7863 | 315.89559 | 733.57979 | 548.0872267 | 154.7944244 |
| 73 | 576.65225 | 300.64869 | 713.29653 | 530.1991567 | 153.0336444 |
| 74 | 556.66879 | 282.63292 | 689.49554 | 509.5990833 | 151.3107756 |
| 75 | 535.36056 | 262.45868 | 663.01376 | 486.9443333 | 149.6571022 |
| 76 | 512.31206 | 240.87284 | 633.74945 | 462.31145 | 147.62574 |
| 77 | 485.9819 | 219.08532 | 599.48726 | 434.8514933 | 143.8441156 |
| 78 | 455.1516 | 197.76496 | 559.06324 | 403.9932667 | 137.4855378 |
| 79 | 418.84107 | 176.94805 | 511.30188 | 369.0303333 | 128.0548556 |
| 80 | 378.44207 | 156.74373 | 453.91744 | 329.70108 | 115.3049 |
| 81 | 336.99765 | 137.4831 | 393.07224 | 289.18433 | 101.1341533 |
| 82 | 296.48921 | 119.7464 | 338.40499 | 251.5468667 | 87.86697778 |
| 83 | 258.51708 | 103.9232 | 291.8927 | 218.1109933 | 76.12519556 |
| 84 | 223.52119 | 90.01639 | 252.06942 | 188.5356667 | 65.67951778 |
| 85 | 191.47221 | 77.42542 | 216.05162 | 161.64975 | 56.14955333 |
| 86 | 162.31 | 65.9059 | 182.37253 | 136.86281 | 47.30460667 |
| 87 | 136.37948 | 55.87662 | 151.84316 | 114.6997533 | 39.21542222 |
| 88 | 114.01222 | 47.82395 | 126.46854 | 96.10157 | 32.18508 |
| 89 | 95.46667 | 41.35817 | 105.18864 | 80.67116 | 26.20866 |
| 90 | 80.05523 | 36.01815 | 87.52487 | 67.86608333 | 21.23195556 |
| 91 | 67.37123 | 31.54653 | 73.46245 | 57.46007 | 17.27569333 |
| 92 | 57.06975 | 27.72303 | 62.05587 | 48.94955 | 14.15101333 |
| 93 | 48.82148 | 24.41378 | 52.73322 | 41.98949333 | 11.71714222 |
| 94 | 42.15297 | 21.55627 | 45.31733 | 36.34219 | 9.85728 |
| 95 | 36.77357 | 19.09141 | 39.38858 | 31.75118667 | 8.439851111 |
| 96 | 32.35782 | 16.82457 | 34.49973 | 27.89404 | 7.379646667 |
| 97 | 28.66017 | 14.63515 | 30.34462 | 24.54664667 | 6.607664444 |
| 98 | 25.51156 | 12.66192 | 26.85143 | 21.67497 | 6.0087 |
| 99 | 22.8046 | 11.00079 | 24.0262 | 19.27719667 | 5.517604444 |
| 100 | 20.45845 | 9.63532 | 21.56888 | 17.22088333 | 5.057042222 |
| 101 | 18.41943 | 8.55118 | 19.37334 | 15.44798333 | 4.597868889 |
| 102 | 16.64953 | 7.64632 | 17.53712 | 13.94432333 | 4.198668889 |
| 103 | 15.11523 | 6.8517 | 16.02103 | 12.66265333 | 3.873968889 |
| 104 | 13.79103 | 6.16256 | 14.72696 | 11.56018333 | 3.598415556 |
| 105 | 12.64883 | 5.58281 | 13.51154 | 10.58106 | 3.332166667 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 106 | 11.66579 | 5.088 | 12.47103 | 9.741606667 | 3.102404444 |
| 107 | 10.81935 | 4.66166 | 11.66172 | 9.047576667 | 2.923944444 |
| 108 | 10.08147 | 4.29266 | 10.94829 | 8.440806667 | 2.765431111 |
| 109 | 9.43469 | 3.975 | 10.28972 | 7.899803333 | 2.616535556 |
| 110 | 8.86497 | 3.7007 | 9.69623 | 7.420633333 | 2.479955556 |
| 111 | 8.36862 | 3.46442 | 9.18907 | 7.00737 | 2.361966667 |
| 112 | 7.9511 | 3.25793 | 8.76338 | 6.65747 | 2.26636 |
| 113 | 7.61027 | 3.07208 | 8.39006 | 6.35747 | 2.19026 |
| 114 | 7.32356 | 2.90363 | 8.07722 | 6.10147 | 2.131893333 |
| 115 | 7.07767 | 2.75473 | 7.82017 | 5.88419 | 2.086306667 |
| 116 | 6.8663 | 2.6289 | 7.5848 | 5.693333333 | 2.042955556 |
| 117 | 6.681 | 2.53002 | 7.35924 | 5.52342 | 1.9956 |

Table 22 - Results of the storage modulus (E') for sample 1010/3 in triplicate

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 35 | 492.2412 | 579.87325 | 453.6139 | 508.5761167 | 47.53142222 |
| 36 | 491.03198 | 578.49792 | 451.87842 | 507.1361067 | 47.57454222 |
| 37 | 489.6792 | 576.98364 | 450.07325 | 505.5786967 | 47.60329556 |
| 38 | 488.19302 | 575.33233 | 448.20441 | 503.90992 | 47.61494 |
| 39 | 486.57296 | 573.53188 | 446.27859 | 502.12781 | 47.60271333 |
| 40 | 484.81589 | 571.59825 | 444.29936 | 500.2378333 | 47.57361111 |
| 41 | 482.90692 | 569.54134 | 442.27817 | 498.2421433 | 47.53279778 |
| 42 | 480.85837 | 567.36649 | 440.22962 | 496.1514933 | 47.47666444 |
| 43 | 478.67915 | 565.0681 | 438.14697 | 493.96474 | 47.40224 |
| 44 | 476.38823 | 562.65522 | 436.00741 | 491.68362 | 47.3144 |
| 45 | 473.99826 | 560.13894 | 433.81695 | 489.31805 | 47.21392667 |
| 46 | 471.52918 | 557.53442 | 431.6046 | 486.8894 | 47.09668 |
| 47 | 468.99872 | 554.86124 | 429.37242 | 484.4107933 | 46.96696444 |
| 48 | 466.41501 | 552.13633 | 427.09819 | 481.8831767 | 46.83543556 |
| 49 | 463.77787 | 549.37987 | 424.77959 | 479.3124433 | 46.71161778 |
| 50 | 461.08771 | 546.60849 | 422.44121 | 476.71247 | 46.59734667 |
| 51 | 458.34881 | 543.83976 | 420.08606 | 474.0915433 | 46.49881111 |
| 52 | 455.56027 | 541.09123 | 417.68898 | 471.4468267 | 46.42960222 |
| 53 | 452.71563 | 538.38041 | 415.24611 | 468.7807167 | 46.39979556 |
| 54 | 449.80409 | 535.72635 | 412.78303 | 466.10449 | 46.41457333 |
| 55 | 446.82961 | 533.12487 | 410.29719 | 463.4172233 | 46.47176444 |
| 56 | 443.79303 | 530.56678 | 407.74797 | 460.7025933 | 46.57612444 |
| 57 | 440.68399 | 528.05433 | 405.11682 | 457.9517133 | 46.73507778 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 58 | 437.47912 | 525.59842 | 402.41367 | 455.1637367 | 46.95645556 |
| 59 | 434.17262 | 523.17211 | 399.63165 | 452.32546 | 47.2311 |
| 60 | 430.77161 | 520.70062 | 396.74174 | 449.4046567 | 47.53064222 |
| 61 | 427.24935 | 518.1163 | 393.73221 | 446.3659533 | 47.83356444 |
| 62 | 423.53378 | 515.37002 | 390.60862 | 443.1708067 | 48.13280889 |
| 63 | 419.5765 | 512.40222 | 387.34399 | 439.7742367 | 48.41865556 |
| 64 | 415.37898 | 509.14932 | 383.87172 | 436.13334 | 48.67732 |
| 65 | 410.92262 | 505.50642 | 380.14665 | 432.1918967 | 48.87634889 |
| 66 | 406.15452 | 501.33567 | 376.14022 | 427.8768033 | 48.97257778 |
| 67 | 401.01449 | 496.43353 | 371.83061 | 423.0928767 | 48.89376889 |
| 68 | 395.45947 | 490.55538 | 367.19724 | 417.7373633 | 48.54534444 |
| 69 | 389.43676 | 483.31076 | 362.17851 | 411.64201 | 47.77916667 |
| 70 | 382.93002 | 474.32825 | 356.6431 | 404.63379 | 46.46297333 |
| 71 | 375.84144 | 463.09488 | 350.48643 | 396.47425 | 44.41375333 |
| 72 | 367.92025 | 449.30017 | 343.59892 | 386.93978 | 41.57359333 |
| 73 | 358.86375 | 432.67394 | 335.8505 | 375.7960633 | 37.91858444 |
| 74 | 348.47394 | 412.99358 | 327.03234 | 362.8332867 | 33.44019556 |
| 75 | 336.44886 | 389.69681 | 316.91444 | 347.6867033 | 28.00673778 |
| 76 | 322.18431 | 362.79511 | 305.15203 | 330.0438167 | 21.83419556 |
| 77 | 304.98965 | 332.63726 | 291.39436 | 309.6737567 | 15.30900222 |
| 78 | 284.88524 | 300.34803 | 275.09571 | 286.7763267 | 9.047802222 |
| 79 | 261.94972 | 267.83761 | 256.24826 | 262.0118633 | 3.883831111 |
| 80 | 237.09595 | 236.1493 | 235.00619 | 236.0838133 | 0.718415556 |
| 81 | 211.26199 | 205.74533 | 212.20643 | 209.7379167 | 2.661724444 |
| 82 | 185.28495 | 177.26 | 188.90409 | 183.8163467 | 4.370897778 |
| 83 | 160.02264 | 151.50965 | 166.00688 | 159.1797233 | 5.113382222 |
| 84 | 136.31425 | 128.88032 | 144.31045 | 136.5016733 | 5.205851111 |
| 85 | 115.06669 | 109.22788 | 123.98248 | 116.09235 | 5.260086667 |
| 86 | 96.46615 | 92.40924 | 105.25011 | 98.04183333 | 4.805517778 |
| 87 | 80.44265 | 78.06508 | 88.57077 | 82.3595 | 4.140846667 |
| 88 | 66.87022 | 66.04375 | 74.32886 | 69.08094333 | 3.498611111 |
| 89 | 55.57819 | 56.08427 | 62.24396 | 57.96880667 | 2.850102222 |
| 90 | 46.37544 | 47.982 | 52.16139 | 48.83961 | 2.21452 |
| 91 | 39.03799 | 41.35088 | 43.83597 | 41.40828 | 1.61846 |
| 92 | 33.17892 | 35.94714 | 37.10719 | 35.41108333 | 1.488108889 |
| 93 | 28.45565 | 31.51945 | 31.72747 | 30.56752333 | 1.407915556 |
| 94 | 24.64434 | 27.86921 | 27.46334 | 26.65896333 | 1.343082222 |
| 95 | 21.57243 | 24.77953 | 24.04872 | 23.46689333 | 1.262975556 |
| 96 | 19.04139 | 22.12648 | 21.27862 | 20.81549667 | 1.182737778 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 97 | 16.91016 | 19.83279 | 18.96263 | 18.56852667 | 1.105577778 |
| 98 | 15.08506 | 17.85155 | 17.00121 | 16.64594 | 1.040586667 |
| 99 | 13.51053 | 16.14373 | 15.33482 | 14.99636 | 0.990553333 |
| 100 | 12.13744 | 14.66052 | 13.91301 | 13.57032333 | 0.955255556 |
| 101 | 10.93911 | 13.34923 | 12.67983 | 12.32272333 | 0.922408889 |
| 102 | 9.89021 | 12.19239 | 11.60084 | 11.22781333 | 0.891735556 |
| 103 | 8.97715 | 11.18801 | 10.64541 | 10.27019 | 0.862026667 |
| 104 | 8.17613 | 10.306 | 9.80092 | 9.427683333 | 0.834368889 |
| 105 | 7.47668 | 9.51388 | 9.06351 | 8.68469 | 0.80534 |
| 106 | 6.87227 | 8.81055 | 8.42681 | 8.036543333 | 0.776182222 |
| 107 | 6.35091 | 8.20566 | 7.86488 | 7.473816667 | 0.748604444 |
| 108 | 5.88822 | 7.6839 | 7.36519 | 6.979103333 | 0.727255556 |
| 109 | 5.47479 | 7.232 | 6.92447 | 6.543753333 | 0.712642222 |
| 110 | 5.11096 | 6.83737 | 6.54189 | 6.163406667 | 0.701631111 |
| 111 | 4.79554 | 6.49267 | 6.20629 | 5.8315 | 0.69064 |
| 112 | 4.52509 | 6.19117 | 5.91025 | 5.54217 | 0.678053333 |
| 113 | 4.29276 | 5.92773 | 5.64627 | 5.28892 | 0.664106667 |
| 114 | 4.08984 | 5.69528 | 5.40951 | 5.064876667 | 0.650024444 |
| 115 | 3.91085 | 5.4897 | 5.1972 | 4.865916667 | 0.636711111 |
| 116 | 3.75191 | 5.30533 | 5.00954 | 4.688926667 | 0.624677778 |
| 117 | 3.60972 | 5.13999 | 4.84356 | 4.53109 | 0.614246667 |

**Table 23** - Results of the storage modulus (E') for sample 1010/4 in triplicate

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 35 | 432.36235 | 472.85563 | 442.206 | 449.1413267 | 15.80953556 |
| 36 | 430.3663 | 471.03692 | 440.42834 | 447.2771867 | 15.83982222 |
| 37 | 428.28615 | 469.15549 | 438.55888 | 445.3335067 | 15.88132222 |
| 38 | 426.13668 | 467.22969 | 436.60155 | 443.32264 | 15.93803333 |
| 39 | 423.93359 | 465.26713 | 434.55608 | 441.2522667 | 16.00990889 |
| 40 | 421.69162 | 463.26685 | 432.41428 | 439.12425 | 16.09506667 |
| 41 | 419.40785 | 461.2236 | 430.18027 | 436.93724 | 16.19090667 |
| 42 | 417.06392 | 459.12513 | 427.85613 | 434.6817267 | 16.29560222 |
| 43 | 414.65554 | 456.9743 | 425.44524 | 432.35836 | 16.41062667 |
| 44 | 412.18986 | 454.80186 | 422.9442 | 429.97864 | 16.54881333 |
| 45 | 409.6809 | 452.61705 | 420.37103 | 427.5563267 | 16.70714889 |
| 46 | 407.15017 | 450.39676 | 417.74816 | 425.0983633 | 16.86559778 |
| 47 | 404.58807 | 448.12083 | 415.07999 | 422.5962967 | 17.01635556 |
| 48 | 401.95079 | 445.78041 | 412.3601 | 420.0304333 | 17.16665111 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 49 | 399.21025 | 443.36783 | 409.59729 | 417.39179 | 17.31736 |
| 50 | 396.3584 | 440.88541 | 406.80168 | 414.68183 | 17.46905333 |
| 51 | 393.42612 | 438.32778 | 403.93543 | 411.8964433 | 17.62089111 |
| 52 | 390.48753 | 435.6815 | 400.92729 | 409.0321067 | 17.76626222 |
| 53 | 387.50334 | 432.93701 | 397.77576 | 406.0720367 | 17.90998222 |
| 54 | 384.32326 | 430.12454 | 394.519 | 402.9889333 | 18.09040444 |
| 55 | 380.93248 | 427.24912 | 391.14826 | 399.77662 | 18.315 |
| 56 | 377.50771 | 424.2338 | 387.62549 | 396.4556667 | 18.51875556 |
| 57 | 374.08068 | 420.99592 | 383.97991 | 393.0188367 | 18.65138889 |
| 58 | 370.55547 | 417.54261 | 380.25463 | 389.4509033 | 18.72780444 |
| 59 | 366.86972 | 413.87364 | 376.39185 | 385.7117367 | 18.77460222 |
| 60 | 362.97209 | 409.94676 | 372.27274 | 381.73053 | 18.81082 |
| 61 | 358.83287 | 405.68969 | 367.93497 | 377.4858433 | 18.80256444 |
| 62 | 354.43536 | 401.03719 | 363.48506 | 372.98587 | 18.70088 |
| 63 | 349.70799 | 395.87339 | 358.82659 | 368.13599 | 18.4916 |
| 64 | 344.50105 | 390.04327 | 353.77499 | 362.7731033 | 18.18011111 |
| 65 | 338.63434 | 383.31103 | 348.37317 | 356.7728467 | 17.69212222 |
| 66 | 331.84894 | 375.38473 | 342.67398 | 349.9692167 | 16.94367556 |
| 67 | 323.70126 | 365.85408 | 336.43837 | 341.9979033 | 15.90411778 |
| 68 | 313.40361 | 354.20404 | 329.26395 | 332.2905333 | 14.60900444 |
| 69 | 300.59883 | 339.7628 | 320.72539 | 320.36234 | 13.17567333 |
| 70 | 285.39661 | 322.18495 | 310.27622 | 305.9525933 | 13.70398889 |
| 71 | 267.73293 | 301.21583 | 296.92182 | 288.6235267 | 13.92706444 |
| 72 | 246.77947 | 277.34523 | 279.4442 | 267.8563 | 14.05122 |
| 73 | 222.79657 | 251.09606 | 258.18989 | 244.0275067 | 14.15395778 |
| 74 | 198.20797 | 223.84982 | 233.88068 | 218.6461567 | 13.62545778 |
| 75 | 174.29981 | 196.91444 | 207.6427 | 192.9523167 | 12.43500444 |
| 76 | 151.13435 | 171.06708 | 180.49071 | 167.5640467 | 10.95313111 |
| 77 | 129.22677 | 147.08038 | 154.18279 | 143.4966467 | 9.513251111 |
| 78 | 109.68244 | 125.47595 | 130.46612 | 121.8748367 | 8.128264444 |
| 79 | 92.82533 | 106.70814 | 109.49146 | 103.00831 | 6.788653333 |
| 80 | 78.12721 | 90.58319 | 91.35288 | 86.68776 | 5.707033333 |
| 81 | 65.54277 | 76.94866 | 76.02589 | 72.83910667 | 4.864224444 |
| 82 | 55.2197 | 65.32154 | 63.50447 | 61.34857 | 4.085913333 |
| 83 | 46.97256 | 55.44755 | 53.50337 | 51.97449333 | 3.334622222 |
| 84 | 40.20048 | 47.16142 | 45.65921 | 44.34037 | 2.759926667 |
| 85 | 34.63221 | 40.37812 | 39.40394 | 38.13809 | 2.337253333 |
| 86 | 30.12296 | 34.86834 | 34.30373 | 33.09834333 | 1.983588889 |
| 87 | 26.4499 | 30.42862 | 30.07459 | 28.98437 | 1.689646667 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 88 | 23.34064 | 26.7826 | 26.53054 | 25.55126 | 1.473746667 |
| 89 | 20.69616 | 23.71935 | 23.5527 | 22.65607 | 1.306606667 |
| 90 | 18.48659 | 21.11557 | 21.05206 | 20.21807333 | 1.154322222 |
| 91 | 16.59315 | 18.88294 | 18.88818 | 18.12142333 | 1.018848889 |
| 92 | 14.89778 | 16.91589 | 16.96532 | 16.25966333 | 0.907922222 |
| 93 | 13.35685 | 15.11776 | 15.2318 | 14.56880333 | 0.807968889 |
| 94 | 11.96956 | 13.49291 | 13.66809 | 13.04352 | 0.715973333 |
| 95 | 10.77677 | 12.09966 | 12.27344 | 11.71662333 | 0.626568889 |
| 96 | 9.77487 | 10.89334 | 11.04125 | 10.56982 | 0.529966667 |
| 97 | 8.84059 | 9.79795 | 9.93894 | 9.525826667 | 0.456824444 |
| 98 | 7.89243 | 8.78954 | 8.95267 | 8.54488 | 0.434966667 |
| 99 | 7.05827 | 7.87674 | 8.07794 | 7.670983333 | 0.408475556 |
| 100 | 6.38744 | 7.07141 | 7.30815 | 6.922333333 | 0.356595556 |
| 101 | 5.78829 | 6.38023 | 6.62773 | 6.265416667 | 0.318084444 |
| 102 | 5.2362 | 5.78768 | 6.02622 | 5.683366667 | 0.298111111 |
| 103 | 4.76077 | 5.2543 | 5.49645 | 5.170506667 | 0.273157778 |
| 104 | 4.3521 | 4.7656 | 5.0274 | 4.715033333 | 0.241955556 |
| 105 | 3.97646 | 4.336 | 4.60834 | 4.306933333 | 0.220315556 |
| 106 | 3.63184 | 3.97582 | 4.23452 | 3.947393333 | 0.210368889 |
| 107 | 3.33453 | 3.67762 | 3.90583 | 3.639326667 | 0.203197778 |
| 108 | 3.06987 | 3.43414 | 3.61737 | 3.373793333 | 0.202615556 |
| 109 | 2.81522 | 3.22672 | 3.36544 | 3.135793333 | 0.213715556 |
| 110 | 2.59057 | 3.04509 | 3.14704 | 2.927566667 | 0.224664444 |
| 111 | 2.41669 | 2.89314 | 2.96206 | 2.757296667 | 0.227071111 |
| 112 | 2.26745 | 2.77439 | 2.80561 | 2.615816667 | 0.232244444 |
| 113 | 2.12505 | 2.68077 | 2.67224 | 2.492686667 | 0.245091111 |
| 114 | 1.99057 | 2.60772 | 2.55232 | 2.383536667 | 0.261977778 |
| 115 | 1.87047 | 2.55289 | 2.43941 | 2.28759 | 0.27808 |
| 116 | 1.76423 | 2.51351 | 2.3304 | 2.202713333 | 0.292322222 |
| 117 | 1.67009 | 2.48405 | 2.22326 | 2.1258 | 0.303806667 |

**Table 24** - Results of the storage modulus (E') for sample 1010/2 in quintuplicate

| ##Temp./>C | E'(1.000 Hz)/MPa | E'(1.000 Hz)/Mpa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|---|
| 35 | 501.54592 | 487.14031 | 509.24566 | 485.07094 | 492.88396 | 495.177358 | 8.1747456 |
| 36 | 500.44752 | 485.16056 | 507.17224 | 483.13478 | 491.43784 | 493.470588 | 8.2714336 |
| 37 | 499.3686 | 483.01941 | 504.86522 | 481.23753 | 489.91754 | 491.68166 | 8.3482 |
| 38 | 497.98852 | 480.74 | 502.45585 | 479.36444 | 488.31998 | 489.773758 | 8.3587416 |
| 39 | 496.30512 | 478.35196 | 500.06951 | 477.47433 | 486.64453 | 487.76909 | 8.33458 |

(continued)

| ##Temp./>C | E'(1.000 Hz)/MPa | E'(1.000 Hz)/Mpa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|---|
| 40 | 494.46401 | 475.90718 | 497.64035 | 475.53586 | 484.90145 | 485.68977 | 8.289928 |
| 41 | 492.49638 | 473.46248 | 495.11023 | 473.55264 | 483.09656 | 483.543658 | 8.2077176 |
| 42 | 490.37306 | 471.09032 | 492.564 | 471.53361 | 481.23187 | 481.358572 | 8.0879664 |
| 43 | 488.07956 | 468.74195 | 490.05255 | 469.47782 | 479.30836 | 479.132048 | 8.0177304 |
| 44 | 485.60843 | 466.23605 | 487.49796 | 467.37218 | 477.32188 | 476.8073 | 8.002548 |
| 45 | 483.03942 | 463.57115 | 484.82975 | 465.20006 | 475.2677 | 474.381616 | 7.9968088 |
| 46 | 480.44976 | 460.88126 | 482.03564 | 462.96792 | 473.15624 | 471.898164 | 7.9788592 |
| 47 | 477.71802 | 458.20274 | 479.14555 | 460.69505 | 470.99843 | 469.351958 | 7.9224504 |
| 48 | 474.70254 | 455.50029 | 476.27341 | 458.39692 | 468.80073 | 466.734778 | 7.8289384 |
| 49 | 471.64398 | 452.7355 | 473.43778 | 456.08946 | 466.5653 | 464.094404 | 7.7455392 |
| 50 | 468.80407 | 449.86499 | 470.49099 | 453.78876 | 464.29147 | 461.448056 | 7.6969448 |
| 51 | 465.92735 | 446.88466 | 467.39827 | 451.50009 | 461.97655 | 458.737384 | 7.6360072 |
| 52 | 462.68512 | 443.80122 | 464.29961 | 449.19833 | 459.61964 | 455.920784 | 7.5368072 |
| 53 | 459.19921 | 440.6352 | 461.23165 | 446.85172 | 457.21792 | 453.02714 | 7.426944 |
| 54 | 455.66238 | 437.40694 | 458.08256 | 444.43688 | 454.76472 | 450.070696 | 7.3190288 |
| 55 | 452.08467 | 434.08752 | 454.76703 | 441.96638 | 452.25692 | 447.032504 | 7.2044432 |
| 56 | 448.41719 | 430.62896 | 451.22993 | 439.45756 | 449.69139 | 443.885006 | 7.0733968 |
| 57 | 444.58608 | 427.01162 | 447.53546 | 436.91902 | 447.06115 | 440.622666 | 6.9258768 |
| 58 | 440.51293 | 423.23149 | 443.89947 | 434.34069 | 444.36378 | 437.269672 | 6.7868656 |
| 59 | 436.21005 | 419.40335 | 440.28668 | 431.70531 | 441.59691 | 433.84046 | 6.628904 |
| 60 | 431.69876 | 415.6051 | 436.40186 | 428.99709 | 438.75287 | 430.291136 | 6.3920328 |
| 61 | 427.03505 | 411.6224 | 432.10438 | 426.21657 | 435.82932 | 426.561544 | 6.1136472 |
| 62 | 422.22334 | 407.22387 | 427.38371 | 423.36271 | 432.8254 | 422.603806 | 6.3041608 |
| 63 | 417.10193 | 402.5159 | 422.3262 | 420.43039 | 429.73363 | 418.42161 | 6.890156 |
| 64 | 411.49844 | 397.61017 | 417.05065 | 417.416 | 426.54496 | 414.024044 | 7.5757912 |
| 65 | 405.41909 | 392.44246 | 411.45574 | 414.3103 | 423.24781 | 409.37508 | 8.355444 |
| 66 | 398.84735 | 386.88487 | 405.29233 | 411.10151 | 419.82168 | 404.389548 | 9.2187504 |
| 67 | 391.74263 | 380.80446 | 398.5168 | 407.78519 | 416.24943 | 399.019702 | 10.3980864 |
| 68 | 384.00224 | 374.08941 | 391.12123 | 404.34958 | 412.51959 | 393.21641 | 12.17454 |
| 69 | 375.48091 | 366.88527 | 382.94758 | 400.77571 | 408.60885 | 386.939664 | 14.2020928 |
| 70 | 366.12871 | 359.25582 | 373.72325 | 397.04339 | 404.50034 | 380.130302 | 16.5132504 |
| 71 | 356.32331 | 351.01848 | 363.47817 | 393.11491 | 400.18566 | 372.824106 | 19.0609432 |
| 72 | 345.64096 | 341.8242 | 352.25608 | 388.94707 | 395.63825 | 364.861312 | 21.9450784 |
| 73 | 331.99281 | 331.12292 | 340.03098 | 384.58273 | 390.8497 | 355.715828 | 25.6003096 |
| 74 | 314.40221 | 318.52811 | 326.50044 | 380.09592 | 385.83294 | 345.071924 | 30.3140048 |
| 75 | 294.36549 | 304.08117 | 310.79007 | 375.51268 | 380.5812 | 333.066122 | 35.9846544 |
| 76 | 272.65714 | 287.6576 | 292.20462 | 370.66826 | 375.02706 | 319.642936 | 42.5637792 |
| 77 | 248.64579 | 269.07173 | 271.40405 | 365.29386 | 369.0288 | 304.688846 | 49.9779872 |
| 78 | 222.17787 | 248.22351 | 248.97479 | 359.01892 | 362.39563 | 288.158144 | 58.0393048 |

(continued)

| ##Temp./>C | E'(1.000 Hz)/MPa | E'(1.000 Hz)/Mpa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|---|
| 79 | 195.48198 | 225.93363 | 225.47435 | 351.59791 | 354.86562 | 270.670698 | 66.0488536 |
| 80 | 170.66004 | 203.05976 | 201.51035 | 342.93276 | 346.08204 | 252.84899 | 73.326728 |
| 81 | 148.26041 | 180.66502 | 178.27756 | 332.9897 | 335.59854 | 235.158246 | 79.3086992 |
| 82 | 128.56029 | 159.71694 | 156.99111 | 321.49499 | 323.08683 | 217.970032 | 83.4567024 |
| 83 | 111.15846 | 140.31003 | 137.68657 | 307.89751 | 308.41899 | 201.094312 | 85.6511504 |
| 84 | 95.77228 | 122.46237 | 120.187 | 291.46635 | 291.2945 | 184.2365 | 85.71514 |
| 85 | 82.10466 | 106.0063 | 104.19747 | 272.28242 | 271.55825 | 167.22982 | 83.752412 |
| 86 | 70.01589 | 90.92454 | 89.56958 | 250.92622 | 249.87968 | 150.263182 | 80.1118144 |
| 87 | 59.43968 | 77.44475 | 76.4306 | 227.89185 | 226.98505 | 133.638386 | 75.0400512 |
| 88 | 50.44791 | 65.84184 | 65.04144 | 203.86626 | 203.50846 | 117.741182 | 68.7569424 |
| 89 | 42.97231 | 55.99477 | 55.22988 | 179.77952 | 180.09749 | 102.814794 | 61.6989688 |
| 90 | 36.93199 | 47.80202 | 46.90698 | 156.56325 | 157.43966 | 89.12878 | 54.29814 |
| 91 | 31.97586 | 40.91486 | 40.03627 | 134.8978 | 136.15628 | 76.796214 | 46.9846608 |
| 92 | 27.88277 | 35.13979 | 34.56257 | 115.00201 | 116.49047 | 65.815522 | 39.9445744 |
| 93 | 24.49116 | 30.38065 | 30.104 | 97.17157 | 98.71031 | 56.171538 | 33.4155216 |
| 94 | 21.66156 | 26.49885 | 26.39391 | 81.68828 | 83.1613 | 47.88078 | 27.635208 |
| 95 | 19.20416 | 23.1959 | 23.28254 | 68.39408 | 69.78834 | 40.773004 | 22.6545648 |
| 96 | 17.02788 | 20.33618 | 20.68889 | 57.15952 | 58.47055 | 34.736604 | 18.4627448 |
| 97 | 15.13032 | 17.93076 | 18.48052 | 47.95115 | 49.19331 | 29.737212 | 15.0680144 |
| 98 | 13.49645 | 15.92092 | 16.56317 | 40.47605 | 41.65878 | 25.623074 | 12.3554728 |
| 99 | 12.07799 | 14.18013 | 14.88104 | 34.42133 | 35.50176 | 22.21245 | 10.199276 |
| 100 | 10.83745 | 12.64673 | 13.40404 | 29.58615 | 30.48702 | 19.392278 | 8.5154456 |
| 101 | 9.72516 | 11.30351 | 12.10967 | 25.74019 | 26.40678 | 17.057062 | 7.2131384 |
| 102 | 8.74333 | 10.13988 | 10.99081 | 22.64164 | 23.05407 | 15.113946 | 6.1871272 |
| 103 | 7.93727 | 9.15623 | 10.01136 | 20.11152 | 20.26896 | 13.497068 | 5.3545376 |
| 104 | 7.27916 | 8.32627 | 9.13132 | 18.0175 | 17.92717 | 12.136284 | 4.6688408 |
| 105 | 6.70784 | 7.62371 | 8.34536 | 16.25229 | 15.92904 | 10.971648 | 4.0952136 |
| 106 | 6.20078 | 7.02484 | 7.66887 | 14.73432 | 14.20651 | 9.967064 | 3.6026808 |
| 107 | 5.7567 | 6.51675 | 7.08502 | 13.40788 | 12.71129 | 9.095528 | 3.1712456 |
| 108 | 5.37616 | 6.08172 | 6.55613 | 12.23658 | 11.40242 | 8.330602 | 2.7911184 |
| 109 | 5.06309 | 5.70334 | 6.08026 | 11.19768 | 10.25431 | 7.659736 | 2.4530072 |
| 110 | 4.80509 | 5.36198 | 5.6902 | 10.27618 | 9.25135 | 7.07696 | 2.149444 |
| 111 | 4.58855 | 5.0514 | 5.38365 | 9.45814 | 8.3762 | 6.571588 | 1.8764656 |
| 112 | 4.3922 | 4.78839 | 5.10697 | 8.737 | 7.61841 | 6.128594 | 1.6392888 |
| 113 | 4.20599 | 4.57693 | 4.83765 | 8.10904 | 6.97038 | 5.739998 | 1.4397696 |
| 114 | 4.04912 | 4.38527 | 4.6031 | 7.56336 | 6.41224 | 5.402618 | 1.2681456 |
| 115 | 3.92974 | 4.20499 | 4.41967 | 7.09276 | 5.92763 | 5.114958 | 1.1161896 |
| 116 | 3.81859 | 4.05687 | 4.26404 | 6.69234 | 5.50646 | 4.86766 | 0.985392 |

(continued)

| ##Temp./>C | E'(1.000 Hz)/MPa | E'(1.000 Hz)/Mpa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|---|
| 117 | 3.70401 | 3.93963 | 4.11945 | 6.3484 | 5.13764 | 4.649826 | 0.8745552 |

**Table 25** - Results of the storage modulus (E') for sample 1020/3 in triplicate

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 35 | 383.09746 | 328.23402 | 480.60944 | 397.31364 | 55.53053333 |
| 36 | 382.75595 | 327.30852 | 479.04452 | 396.3696633 | 55.11657111 |
| 37 | 382.3248 | 326.31857 | 477.39711 | 395.3468267 | 54.70018889 |
| 38 | 381.80641 | 325.28461 | 475.6715 | 394.2541733 | 54.27821778 |
| 39 | 381.20761 | 324.2235 | 473.87142 | 393.1008433 | 53.84705111 |
| 40 | 380.5306 | 323.13595 | 472.0035 | 391.8900167 | 53.40898889 |
| 41 | 379.77949 | 322.01212 | 470.06985 | 390.6204867 | 52.96624222 |
| 42 | 378.95596 | 320.84123 | 468.07526 | 389.2908167 | 52.52296222 |
| 43 | 378.05542 | 319.6308 | 466.0263 | 387.9041733 | 52.08141778 |
| 44 | 377.07701 | 318.39507 | 463.92401 | 386.4653633 | 51.63909778 |
| 45 | 376.0281 | 317.14314 | 461.77196 | 384.9810667 | 51.19392889 |
| 46 | 374.91163 | 315.87326 | 459.58096 | 383.4552833 | 50.75045111 |
| 47 | 373.72677 | 314.57949 | 457.35973 | 381.8886633 | 50.31404444 |
| 48 | 372.47785 | 313.2574 | 455.11059 | 380.2819467 | 49.88576222 |
| 49 | 371.16922 | 311.91259 | 452.82637 | 378.63606 | 49.46020667 |
| 50 | 369.80141 | 310.55131 | 450.49568 | 376.9494667 | 49.03080889 |
| 51 | 368.37362 | 309.17767 | 448.10711 | 375.2194667 | 48.59176222 |
| 52 | 366.88567 | 307.79229 | 445.65751 | 373.4451567 | 48.14156889 |
| 53 | 365.33359 | 306.39379 | 443.14148 | 371.6229533 | 47.67901778 |
| 54 | 363.7105 | 304.98254 | 440.55103 | 369.7480233 | 47.20200444 |
| 55 | 362.01746 | 303.57164 | 437.88808 | 367.8257267 | 46.70823556 |
| 56 | 360.25806 | 302.17854 | 435.1543 | 365.8636333 | 46.19377778 |
| 57 | 358.4315 | 300.81518 | 432.34735 | 363.8646767 | 45.65511556 |
| 58 | 356.53434 | 299.46818 | 429.47802 | 361.8268467 | 45.10078222 |
| 59 | 354.56656 | 298.11839 | 426.5627 | 359.7492167 | 44.54232222 |
| 60 | 352.52577 | 296.74323 | 423.61341 | 357.62747 | 43.99062667 |
| 61 | 350.40518 | 295.2999 | 420.63067 | 355.44525 | 43.45694667 |
| 62 | 348.20255 | 293.73303 | 417.60581 | 353.1804633 | 42.95023111 |
| 63 | 345.92343 | 291.99584 | 414.52607 | 350.8151133 | 42.47397111 |
| 64 | 343.56951 | 290.08973 | 411.37057 | 348.34327 | 42.0182 |
| 65 | 341.13815 | 288.01329 | 408.10826 | 345.7532333 | 41.57001778 |
| 66 | 338.62525 | 285.75879 | 404.69988 | 343.0279733 | 41.11460444 |
| 67 | 336.02233 | 283.34197 | 401.12155 | 340.16195 | 40.63973333 |
| 68 | 333.31482 | 280.7735 | 397.36143 | 337.1499167 | 40.14100889 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 69 | 330.48687 | 278.05147 | 393.39312 | 333.9771533 | 39.61064444 |
| 70 | 327.52451 | 275.16409 | 389.18941 | 330.6260033 | 39.04227111 |
| 71 | 324.40462 | 272.08425 | 384.72135 | 327.0700733 | 38.43418444 |
| 72 | 321.09781 | 268.77916 | 379.93769 | 323.2715533 | 37.77742444 |
| 73 | 317.59307 | 265.25543 | 374.80212 | 319.2168733 | 37.05683111 |
| 74 | 313.87696 | 261.51823 | 369.30913 | 314.90144 | 36.27179333 |
| 75 | 309.92119 | 257.56025 | 363.42932 | 310.3035867 | 35.41715556 |
| 76 | 305.70005 | 253.38021 | 357.11819 | 305.3994833 | 34.67951556 |
| 77 | 301.19001 | 248.9627 | 350.32083 | 300.1578467 | 34.13009778 |
| 78 | 296.34642 | 244.26418 | 342.93936 | 294.5166533 | 33.50164889 |
| 79 | 291.10854 | 239.17825 | 334.83938 | 288.37539 | 32.79809333 |
| 80 | 285.41281 | 233.54482 | 325.87772 | 281.6117833 | 32.04464222 |
| 81 | 279.16491 | 227.16173 | 315.85408 | 274.06024 | 31.26567333 |
| 82 | 272.23673 | 219.79664 | 304.52211 | 265.5184933 | 30.48123556 |
| 83 | 264.47615 | 211.13081 | 291.71916 | 255.7753733 | 29.76304222 |
| 84 | 255.65715 | 200.89622 | 277.22735 | 244.5935733 | 29.13156889 |
| 85 | 245.47048 | 189.18067 | 260.72751 | 231.7928867 | 28.40814444 |
| 86 | 233.79124 | 176.01316 | 242.37185 | 217.3920833 | 27.58594889 |
| 87 | 220.59944 | 161.48911 | 222.64481 | 201.5777867 | 26.72578444 |
| 88 | 205.78113 | 146.16368 | 201.94171 | 184.62884 | 25.64344 |
| 89 | 189.47363 | 130.63423 | 180.73695 | 166.94827 | 24.20936 |
| 90 | 172.19249 | 115.39203 | 159.67634 | 149.0869533 | 22.46328222 |
| 91 | 154.42343 | 100.73623 | 139.43099 | 131.5302167 | 20.52932444 |
| 92 | 136.60697 | 86.99188 | 120.50662 | 114.7018233 | 18.47329556 |
| 93 | 119.1932 | 74.46063 | 103.06587 | 98.90656667 | 16.29729111 |
| 94 | 102.68681 | 63.2006 | 87.34674 | 84.41138333 | 14.14052222 |
| 95 | 87.56418 | 53.30926 | 73.5969 | 71.49011333 | 12.12056889 |
| 96 | 73.94371 | 44.887 | 61.71145 | 60.18072 | 10.19581333 |
| 97 | 61.93214 | 37.77509 | 51.60719 | 50.43814 | 8.442033333 |
| 98 | 51.70656 | 31.85163 | 43.28429 | 42.28082667 | 6.952797778 |
| 99 | 43.13356 | 27.02876 | 36.50431 | 35.55554333 | 5.684522222 |
| 100 | 35.99485 | 23.09202 | 30.99317 | 30.02668 | 4.623106667 |
| 101 | 30.17537 | 19.87785 | 26.5741 | 25.54244 | 3.776393333 |
| 102 | 25.52172 | 17.27142 | 23.04287 | 21.94533667 | 3.115944444 |
| 103 | 21.78642 | 15.1378 | 20.18782 | 19.03734667 | 2.599697778 |
| 104 | 18.77683 | 13.37141 | 17.85494 | 16.66772667 | 2.197544444 |
| 105 | 16.35081 | 11.89412 | 15.92642 | 14.72378333 | 1.886442222 |
| 106 | 14.37622 | 10.63758 | 14.3052 | 13.10633333 | 1.645835556 |
| 107 | 12.74238 | 9.55274 | 12.91962 | 11.73824667 | 1.457004444 |

(continued)

| ##Temp./>C | E'(1.000 Hz)/MPa | E'(1.000 Hz)/MPa | E'(1.000 Hz)/MPa | DE'(1.000 Hz)/MPa | Mean Deviation |
|---|---|---|---|---|---|
| 108 | 11.36596 | 8.60534 | 11.71911 | 10.56347 | 1.30542 |
| 109 | 10.18743 | 7.76898 | 10.66649 | 9.540966667 | 1.181324444 |
| 110 | 9.16258 | 7.02827 | 9.73642 | 8.642423333 | 1.076102222 |
| 111 | 8.2598 | 6.37172 | 8.91224 | 7.84792 | 0.984133333 |
| 112 | 7.45763 | 5.78769 | 8.18043 | 7.141916667 | 0.902817778 |
| 113 | 6.74124 | 5.27023 | 7.5341 | 6.51519 | 0.829973333 |
| 114 | 6.10191 | 4.81172 | 6.96849 | 5.960706667 | 0.765991111 |
| 115 | 5.53335 | 4.40398 | 6.47213 | 5.46982 | 0.71056 |
| 116 | 5.02785 | 4.0436 | 6.03742 | 5.03629 | 0.66742 |
| 117 | 4.58181 | 3.72551 | 5.66066 | 4.655993333 | 0.669777778 |

Table 26 - Results of the storage modulus (E') for sample 1020/2 in quadruplicate

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 35 | 735.39139 | 397.596 | 513.09004 | 504.12764 | 537.5512675 | 98.92006125 |
| 36 | 732.39802 | 396.35868 | 511.39117 | 502.36095 | 535.627205 | 98.3854075 |
| 37 | 729.3855 | 395.04298 | 509.57014 | 500.7355 | 533.68353 | 97.850985 |
| 38 | 726.38653 | 393.64023 | 507.63654 | 499.41407 | 531.7693425 | 97.30859375 |
| 39 | 723.37846 | 392.14923 | 505.59095 | 498.14451 | 529.8157875 | 96.78133625 |
| 40 | 720.29879 | 390.5769 | 503.4222 | 496.66386 | 527.7404375 | 96.27917625 |
| 41 | 717.10948 | 388.94761 | 501.15918 | 494.94927 | 525.541385 | 95.7840475 |
| 42 | 713.78279 | 387.29481 | 498.83724 | 492.98609 | 523.2252325 | 95.27877875 |
| 43 | 710.30895 | 385.60966 | 496.47804 | 490.78938 | 520.7965075 | 94.75622125 |
| 44 | 706.68567 | 383.85395 | 494.09484 | 488.37607 | 518.2526325 | 94.21651875 |
| 45 | 702.93322 | 382.02779 | 491.69925 | 485.86459 | 515.6312125 | 93.65100375 |
| 46 | 699.08072 | 380.15985 | 489.2927 | 483.35871 | 512.972995 | 93.0538625 |
| 47 | 695.12998 | 378.25346 | 486.83127 | 480.75553 | 510.24256 | 92.44371 |
| 48 | 691.05933 | 376.2939 | 484.25726 | 477.90674 | 507.3793075 | 91.84001125 |
| 49 | 686.87177 | 374.2893 | 481.59508 | 474.87608 | 504.4080575 | 91.23185625 |
| 50 | 682.58879 | 372.26001 | 478.89879 | 471.79316 | 501.3851875 | 90.60180125 |
| 51 | 678.20634 | 370.19411 | 476.16359 | 468.66549 | 498.3073825 | 89.94947875 |
| 52 | 673.69425 | 368.06091 | 473.35057 | 465.44397 | 495.137425 | 89.2784125 |
| 53 | 669.02496 | 365.8623 | 470.44584 | 462.12362 | 491.86418 | 88.58039 |
| 54 | 664.16168 | 363.61026 | 467.45174 | 458.70631 | 488.4824975 | 87.83959125 |
| 55 | 659.06235 | 361.31975 | 464.3728 | 455.14955 | 484.9761125 | 87.04311875 |
| 56 | 653.66229 | 358.99943 | 461.21644 | 451.39029 | 481.3171125 | 86.17258875 |
| 57 | 647.96135 | 356.62163 | 457.98093 | 447.46008 | 477.5059975 | 85.22767625 |
| 58 | 641.98223 | 354.13995 | 454.65319 | 443.40582 | 473.5452975 | 84.21846625 |
| 59 | 635.72 | 351.53836 | 451.21517 | 439.20057 | 469.418525 | 83.1507375 |

(continued)

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 60 | 629.13295 | 348.8031 | 447.6416 | 434.78401 | 465.090415 | 82.0212675 |
| 61 | 622.21257 | 345.90945 | 443.89689 | 430.18931 | 460.552055 | 80.8302575 |
| 62 | 614.94381 | 342.82298 | 439.92294 | 425.44939 | 455.78478 | 79.579515 |
| 63 | 607.36232 | 339.58997 | 435.69616 | 420.47073 | 450.779795 | 78.2912625 |
| 64 | 599.50153 | 336.24942 | 431.2416 | 415.11491 | 445.526865 | 76.9873325 |
| 65 | 591.37648 | 332.72336 | 426.53571 | 409.33772 | 439.9933175 | 75.69158125 |
| 66 | 582.98308 | 328.90071 | 421.48901 | 403.113 | 434.12145 | 74.430815 |
| 67 | 574.46365 | 324.79528 | 416.06825 | 396.6629 | 427.99752 | 73.233065 |
| 68 | 566.0112 | 320.42783 | 410.2747 | 390.19218 | 421.7264775 | 72.14236125 |
| 69 | 557.63119 | 315.783 | 404.05942 | 383.54148 | 415.2537725 | 71.18870875 |
| 70 | 549.26406 | 310.82458 | 397.30386 | 376.50425 | 408.4741875 | 70.39493625 |
| 71 | 540.8985 | 305.59017 | 390.02627 | 369.11575 | 401.4076725 | 69.74541375 |
| 72 | 532.51956 | 300.08701 | 382.31453 | 361.44453 | 394.0914075 | 69.21407625 |
| 73 | 523.94963 | 294.24606 | 374.16148 | 353.59193 | 386.487275 | 68.7311775 |
| 74 | 514.92666 | 287.96541 | 365.47759 | 345.53635 | 378.4765025 | 68.22507875 |
| 75 | 505.27724 | 281.18299 | 356.2515 | 337.00286 | 369.9286475 | 67.67429625 |
| 76 | 494.78384 | 273.74949 | 346.42362 | 327.58193 | 360.63472 | 67.07456 |
| 77 | 482.99871 | 265.32085 | 335.75294 | 316.53679 | 350.1523225 | 66.42319375 |
| 78 | 469.25251 | 255.53737 | 323.95797 | 302.88183 | 337.90742 | 65.672545 |
| 79 | 453.30559 | 244.26901 | 311.04184 | 285.53562 | 323.538015 | 64.8837875 |
| 80 | 434.978 | 231.41954 | 296.89069 | 264.63016 | 306.9795975 | 63.99920125 |
| 81 | 414.05794 | 216.97977 | 281.03658 | 241.78533 | 288.464905 | 62.7965175 |
| 82 | 390.13595 | 200.97662 | 263.05796 | 218.20448 | 268.0937525 | 61.02109875 |
| 83 | 363.78595 | 183.97492 | 243.75475 | 194.89727 | 246.6032225 | 58.59136375 |
| 84 | 335.6724 | 166.42871 | 223.75475 | 172.43869 | 224.5736375 | 55.54938125 |
| 85 | 306.46962 | 148.56157 | 202.91377 | 151.15571 | 202.2751675 | 52.4165275 |
| 86 | 276.74847 | 130.75879 | 181.33723 | 131.09454 | 179.9847575 | 49.0580925 |
| 87 | 247.18507 | 114.21179 | 160.3032 | 112.1884 | 158.472115 | 45.27202 |
| 88 | 218.40041 | 99.64463 | 140.63022 | 94.73743 | 138.3531725 | 41.1621425 |
| 89 | 190.99802 | 86.48775 | 122.29526 | 79.37778 | 119.7897025 | 36.8569375 |
| 90 | 165.48644 | 74.40786 | 105.3688 | 66.23501 | 102.8745275 | 32.5530925 |
| 91 | 142.29018 | 63.31776 | 89.99215 | 55.14921 | 87.687325 | 28.45384 |
| 92 | 121.71487 | 53.358 | 76.32314 | 46.0242 | 74.3550525 | 24.6639525 |
| 93 | 103.95374 | 44.84467 | 64.44755 | 38.70774 | 62.988425 | 21.21222 |
| 94 | 88.95181 | 37.78842 | 54.34355 | 32.91285 | 53.4991575 | 18.1485225 |
| 95 | 76.51501 | 31.789 | 45.80251 | 28.2368 | 45.58583 | 15.57293 |
| 96 | 66.31491 | 26.68806 | 38.69912 | 24.44186 | 39.0359875 | 13.63946125 |
| 97 | 57.96528 | 22.42998 | 32.85022 | 21.32637 | 33.6429625 | 12.16115875 |
| 98 | 51.1174 | 19.00259 | 28.09387 | 18.74705 | 29.2402275 | 10.93858625 |

(continued)

| ##Temp./>C | E'(1.000 Hz)/MPa | E'(1.000 Hz)/MPa | E'(1.000 Hz)/MPa | E'(1.000 Hz)/MPa | DE'(1.000 Hz)/MPa | Mean Deviation |
|---|---|---|---|---|---|---|
| 99 | 45.43507 | 16.32828 | 24.17924 | 16.56362 | 25.6265525 | 9.90425875 |
| 100 | 40.64339 | 14.24109 | 20.98328 | 14.70041 | 22.6420425 | 9.00067375 |
| 101 | 36.5157 | 12.50059 | 18.41684 | 13.11765 | 20.137695 | 8.1890025 |
| 102 | 32.90599 | 11.00243 | 16.36868 | 11.79032 | 18.016855 | 7.4445675 |
| 103 | 29.71991 | 9.74167 | 14.66481 | 10.65294 | 16.1948325 | 6.76253875 |
| 104 | 26.9042 | 8.70014 | 13.21241 | 9.6666 | 14.6208375 | 6.14168125 |
| 105 | 24.43094 | 7.82142 | 11.97081 | 8.82713 | 13.262575 | 5.5841825 |
| 106 | 22.23284 | 7.07277 | 10.91411 | 8.13562 | 12.088835 | 5.0720025 |
| 107 | 20.24144 | 6.43027 | 10.00552 | 7.54443 | 11.055415 | 4.5930125 |
| 108 | 18.42953 | 5.88309 | 9.22369 | 7.01528 | 10.1378975 | 4.14581625 |
| 109 | 16.7916 | 5.41655 | 8.54386 | 6.55153 | 9.325885 | 3.7328575 |
| 110 | 15.32413 | 5.02145 | 7.9505 | 6.1708 | 8.61672 | 3.353705 |
| 111 | 14.02424 | 4.68422 | 7.42675 | 5.86239 | 7.9994 | 3.01242 |
| 112 | 12.87605 | 4.3944 | 6.96409 | 5.61057 | 7.4612775 | 2.70738625 |
| 113 | 11.85497 | 4.13778 | 6.55897 | 5.39285 | 6.9861425 | 2.43441375 |
| 114 | 10.94424 | 3.90637 | 6.20886 | 5.18709 | 6.56164 | 2.1913 |
| 115 | 10.12587 | 3.69968 | 5.90264 | 5.00016 | 6.1820875 | 1.97189125 |
| 116 | 9.39173 | 3.5186 | 5.63321 | 4.85632 | 5.849965 | 1.7708825 |
| 117 | 8.73844 | 3.36008 | 5.39333 | 4.74684 | 5.5596725 | 1.58938375 |

**Example 10** - **Analysis of tangent delta (tan d)**

Samples described in example 8 were analyzed in DMTA (Dynamic Mechanical Thermal Analysis) in triplicate and the results of the storage modulus (E') are shown below in Tables 27-35:

**Table 27** - Results da tangent delta (tan d) for sample 1020/1 in triplicate:

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 35 | 3.47E-02 | 3.29E-02 | 3.80E-02 | | 0.001875207 |
| 36 | 3.47E-02 | 3.29E-02 | 3.79E-02 | 0.03516686 | 0.00185278 |
| 37 | 3.46E-02 | 3.29E-02 | 3.79E-02 | 0.03513004 | 0.001833707 |
| 38 | 3.46E-02 | 3.29E-02 | 3.78E-02 | 0.035102807 | 0.001818562 |
| 39 | 3.45E-02 | 3.29E-02 | 3.78E-02 | 0.03508427 | 0.001807947 |
| 40 | 3.45E-02 | 3.29E-02 | 3.78E-02 | 0.035074657 | 0.001802529 |
| 41 | 3.45E-02 | 3.30E-02 | 3.78E-02 | 0.035074937 | 0.001801429 |
| 42 | 3.45E-02 | 3.30E-02 | 3.78E-02 | 0.0350873 | 0.001803607 |
| 43 | 3.45E-02 | 3.30E-02 | 3.78E-02 | 0.03511356 | 0.001807447 |
| 44 | 3.45E-02 | 3.31E-02 | 3.79E-02 | 0.035156763 | 0.001810911 |
| 45 | 3.46E-02 | 3.32E-02 | 3.79E-02 | 0.03521879 | 0.00181352 |
| 46 | 3.46E-02 | 3.33E-02 | 3.80E-02 | 0.035302123 | 0.001816178 |
| 47 | 3.47E-02 | 3.34E-02 | 3.81E-02 | 0.035407773 | 0.001818944 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 48 | 3.48E-02 | 3.35E-02 | 3.83E-02 | 0.035536933 | 0.001820858 |
| 49 | 3.49E-02 | 3.37E-02 | 3.84E-02 | 0.03569178 | 0.001820587 |
| 50 | 3.51E-02 | 3.39E-02 | 3.86E-02 | 0.035874497 | 0.001818709 |
| 51 | 3.53E-02 | 3.42E-02 | 3.88E-02 | 0.03608455 | 0.001815207 |
| 52 | 3.55E-02 | 3.45E-02 | 3.90E-02 | 0.036320833 | 0.001809591 |
| 53 | 3.57E-02 | 3.47E-02 | 3.93E-02 | 0.03658352 | 0.001800827 |
| 54 | 3.60E-02 | 3.50E-02 | 3.96E-02 | 0.03687522 | 0.00178734 |
| 55 | 3.64E-02 | 3.54E-02 | 3.99E-02 | 0.037199413 | 0.001767858 |
| 56 | 3.68E-02 | 3.57E-02 | 4.02E-02 | 0.037560657 | 0.001742022 |
| 57 | 3.72E-02 | 3.62E-02 | 4.05E-02 | 0.037962897 | 0.001709469 |
| 58 | 3.77E-02 | 3.66E-02 | 4.09E-02 | 0.038408117 | 0.001671909 |
| 59 | 3.82E-02 | 3.72E-02 | 4.13E-02 | 0.03890459 | 0.001627747 |
| 60 | 3.88E-02 | 3.78E-02 | 4.18E-02 | 0.03947115 | 0.001571633 |
| 61 | 3.95E-02 | 3.85E-02 | 4.24E-02 | 0.04012843 | 0.001505367 |
| 62 | 4.02E-02 | 3.94E-02 | 4.31E-02 | 0.040894123 | 0.001445991 |
| 63 | 4.11E-02 | 4.04E-02 | 4.39E-02 | 0.04179799 | 0.00139726 |
| 64 | 4.21E-02 | 4.16E-02 | 4.49E-02 | 0.042896567 | 0.001342909 |
| 65 | 4.35E-02 | 4.31E-02 | 4.62E-02 | 0.044259943 | 0.001277524 |
| 66 | 4.51E-02 | 4.50E-02 | 4.78E-02 | 0.045971297 | 0.001228536 |
| 67 | 4.70E-02 | 4.75E-02 | 4.99E-02 | 0.048125073 | 0.001206838 |
| 68 | 4.94E-02 | 5.04E-02 | 5.27E-02 | 0.050818007 | 0.001234289 |
| 69 | 5.25E-02 | 5.38E-02 | 5.62E-02 | 0.054177717 | 0.001328702 |
| 70 | 5.65E-02 | 5.81E-02 | 6.07E-02 | 0.058436197 | 0.001503402 |
| 71 | 6.16E-02 | 6.34E-02 | 6.65E-02 | 0.06383193 | 0.001759467 |
| 72 | 6.81E-02 | 7.00E-02 | 7.38E-02 | 0.070659203 | 0.002120224 |
| 73 | 7.63E-02 | 7.83E-02 | 8.29E-02 | 0.079163697 | 0.002517376 |
| 74 | 8.64E-02 | 8.83E-02 | 9.40E-02 | 0.08955242 | 0.002952953 |
| 75 | 9.86E-02 | 0.10023 | 0.10736 | 0.102073157 | 0.003524562 |
| 76 | 0.11325 | 0.11456 | 0.12371 | 0.117173333 | 0.004357778 |
| 77 | 0.13081 | 0.1315 | 0.1434 | 0.135236667 | 0.005442222 |
| 78 | 0.1517 | 0.15128 | 0.1668 | 0.156593333 | 0.006804444 |
| 79 | 0.17574 | 0.17412 | 0.19353 | 0.18113 | 0.008266667 |
| 80 | 0.20296 | 0.20051 | 0.22339 | 0.208953333 | 0.009624444 |
| 81 | 0.23394 | 0.23005 | 0.25689 | 0.240293333 | 0.011064444 |
| 82 | 0.26841 | 0.26194 | 0.29461 | 0.274986667 | 0.013082222 |
| 83 | 0.30508 | 0.29641 | 0.33517 | 0.31222 | 0.0153 |
| 84 | 0.343 | 0.33431 | 0.37722 | 0.35151 | 0.01714 |
| 85 | 0.38147 | 0.37331 | 0.42011 | 0.39163 | 0.018986667 |
| 86 | 0.42002 | 0.41046 | 0.46301 | 0.431163333 | 0.021231111 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 87 | 0.45799 | 0.44626 | 0.50385 | 0.469366667 | 0.022988889 |
| 88 | 0.49333 | 0.48155 | 0.54076 | 0.505213333 | 0.023697778 |
| 89 | 0.52374 | 0.51462 | 0.57289 | 0.537083333 | 0.023871111 |
| 90 | 0.54863 | 0.5426 | 0.59913 | 0.563453333 | 0.023784444 |
| 91 | 0.56764 | 0.56512 | 0.61888 | 0.58388 | 0.023333333 |
| 92 | 0.58133 | 0.5821 | 0.63144 | 0.59829 | 0.0221 |
| 93 | 0.58941 | 0.59332 | 0.63731 | 0.60668 | 0.02042 |
| 94 | 0.59189 | 0.5986 | 0.63635 | 0.608946667 | 0.018268889 |
| 95 | 0.58914 | 0.59842 | 0.62925 | 0.605603333 | 0.015764444 |
| 96 | 0.58218 | 0.59338 | 0.617 | 0.59752 | 0.012986667 |
| 97 | 0.57175 | 0.58407 | 0.60094 | 0.585586667 | 0.010235556 |
| 98 | 0.55847 | 0.57113 | 0.58196 | 0.57052 | 0.008033333 |
| 99 | 0.54308 | 0.55507 | 0.56076 | 0.55297 | 0.006593333 |
| 100 | 0.52662 | 0.53656 | 0.53784 | 0.533673333 | 0.004702222 |
| 101 | 0.50935 | 0.51603 | 0.51355 | 0.512976667 | 0.002417778 |
| 102 | 0.49093 | 0.49375 | 0.48816 | 0.490946667 | 0.001868889 |
| 103 | 0.47159 | 0.47028 | 0.46231 | 0.46806 | 0.003833333 |
| 104 | 0.45203 | 0.44687 | 0.43704 | 0.445313333 | 0.005515556 |
| 105 | 0.43258 | 0.42405 | 0.41268 | 0.423103333 | 0.006948889 |
| 106 | 0.41338 | 0.40149 | 0.38903 | 0.4013 | 0.00818 |
| 107 | 0.39462 | 0.379 | 0.366 | 0.379873333 | 0.009831111 |
| 108 | 0.37642 | 0.35658 | 0.34352 | 0.35884 | 0.01172 |
| 109 | 0.3583 | 0.33439 | 0.32173 | 0.33814 | 0.01344 |
| 110 | 0.34004 | 0.31288 | 0.30095 | 0.317956667 | 0.014722222 |
| 111 | 0.32256 | 0.2925 | 0.28143 | 0.29883 | 0.01582 |
| 112 | 0.30632 | 0.27351 | 0.2633 | 0.281043333 | 0.016851111 |
| 113 | 0.29083 | 0.25604 | 0.24656 | 0.264476667 | 0.017568889 |
| 114 | 0.27589 | 0.23975 | 0.23093 | 0.248856667 | 0.018022222 |
| 115 | 0.2617 | 0.22453 | 0.21626 | 0.234163333 | 0.018357778 |
| 116 | 0.24846 | 0.2106 | 0.20229 | 0.22045 | 0.018673333 |
| 117 | 0.23638 | 0.1982 | 0.18906 | 0.20788 | 0.019 |

Table 28 - Results da tangent delta (tan d) for sample 1010/1 in quintuplicate:

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 35 | 3.02E-02 | 3.35E-02 | 3.58E-02 | 3.55E-02 | 3.40E-02 | 3.38E-02 | 0.001564062 |
| 36 | 3.02E-02 | 3.35E-02 | 3.58E-02 | 3.54E-02 | 3.39E-02 | 3.38E-02 | 0.001531928 |
| 37 | 3.02E-02 | 3.35E-02 | 3.58E-02 | 3.53E-02 | 3.39E-02 | 3.37E-02 | 0.001498739 |
| 38 | 3.03E-02 | 3.35E-02 | 3.58E-02 | 3.52E-02 | 3.38E-02 | 3.37E-02 | 0.001468582 |

(continued)

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 39 | 3.03E-02 | 3.35E-02 | 3.58E-02 | 3.51E-02 | 3.37E-02 | 3.37E-02 | 0.001445034 |
| 40 | 3.03E-02 | 3.36E-02 | 3.59E-02 | 3.51E-02 | 3.37E-02 | 3.37E-02 | 0.001428135 |
| 41 | 3.03E-02 | 3.36E-02 | 3.59E-02 | 3.51E-02 | 3.37E-02 | 3.37E-02 | 0.001418234 |
| 42 | 3.04E-02 | 3.37E-02 | 3.60E-02 | 3.51E-02 | 3.38E-02 | 3.38E-02 | 0.00142045 |
| 43 | 3.04E-02 | 3.37E-02 | 3.60E-02 | 3.52E-02 | 3.38E-02 | 3.38E-02 | 0.00142773 |
| 44 | 3.05E-02 | 3.38E-02 | 3.61E-02 | 3.53E-02 | 3.38E-02 | 3.39E-02 | 0.001439753 |
| 45 | 3.05E-02 | 3.39E-02 | 3.62E-02 | 3.54E-02 | 3.39E-02 | 3.40E-02 | 0.001455514 |
| 46 | 3.06E-02 | 3.40E-02 | 3.63E-02 | 3.56E-02 | 3.40E-02 | 3.41E-02 | 0.001474693 |
| 47 | 3.07E-02 | 3.42E-02 | 3.64E-02 | 3.58E-02 | 3.40E-02 | 3.42E-02 | 0.001497088 |
| 48 | 3.08E-02 | 3.43E-02 | 3.65E-02 | 3.60E-02 | 3.41E-02 | 3.44E-02 | 0.001524678 |
| 49 | 3.09E-02 | 3.45E-02 | 3.67E-02 | 3.62E-02 | 3.42E-02 | 3.45E-02 | 0.001558417 |
| 50 | 3.11E-02 | 3.47E-02 | 3.69E-02 | 3.65E-02 | 3.43E-02 | 3.47E-02 | 0.001597101 |
| 51 | 3.13E-02 | 3.49E-02 | 3.72E-02 | 3.68E-02 | 3.45E-02 | 3.49E-02 | 0.001639545 |
| 52 | 3.15E-02 | 3.51E-02 | 3.74E-02 | 3.71E-02 | 3.46E-02 | 3.51E-02 | 0.00168708 |
| 53 | 3.17E-02 | 3.54E-02 | 3.78E-02 | 3.74E-02 | 3.48E-02 | 3.54E-02 | 0.001740553 |
| 54 | 3.20E-02 | 3.57E-02 | 3.82E-02 | 3.78E-02 | 3.50E-02 | 3.57E-02 | 0.001794458 |
| 55 | 3.23E-02 | 3.60E-02 | 3.85E-02 | 3.82E-02 | 3.52E-02 | 3.61E-02 | 0.001843557 |
| 56 | 3.27E-02 | 3.64E-02 | 3.90E-02 | 3.86E-02 | 3.55E-02 | 3.64E-02 | 0.001889236 |
| 57 | 3.31E-02 | 3.69E-02 | 3.95E-02 | 3.91E-02 | 3.58E-02 | 3.69E-02 | 0.001933416 |
| 58 | 3.36E-02 | 3.74E-02 | 4.00E-02 | 3.96E-02 | 3.62E-02 | 3.74E-02 | 0.001988338 |
| 59 | 3.41E-02 | 3.80E-02 | 4.07E-02 | 4.03E-02 | 3.66E-02 | 3.79E-02 | 0.002053846 |
| 60 | 3.47E-02 | 3.86E-02 | 4.14E-02 | 4.09E-02 | 3.70E-02 | 3.85E-02 | 0.002131624 |
| 61 | 3.54E-02 | 3.93E-02 | 4.23E-02 | 4.17E-02 | 3.76E-02 | 3.92E-02 | 0.002223385 |
| 62 | 3.61E-02 | 4.01E-02 | 4.33E-02 | 4.26E-02 | 3.81E-02 | 4.00E-02 | 0.00232385 |
| 63 | 3.70E-02 | 4.10E-02 | 4.44E-02 | 4.35E-02 | 3.88E-02 | 4.09E-02 | 0.002432794 |
| 64 | 3.80E-02 | 4.20E-02 | 4.58E-02 | 4.46E-02 | 3.95E-02 | 4.20E-02 | 0.002568756 |
| 65 | 3.92E-02 | 4.33E-02 | 4.74E-02 | 4.58E-02 | 4.04E-02 | 4.32E-02 | 0.002747171 |
| 66 | 4.07E-02 | 4.49E-02 | 4.93E-02 | 4.73E-02 | 4.13E-02 | 4.47E-02 | 0.002971114 |
| 67 | 4.25E-02 | 4.69E-02 | 5.15E-02 | 4.90E-02 | 4.23E-02 | 4.64E-02 | 0.003239064 |
| 68 | 4.47E-02 | 4.95E-02 | 5.40E-02 | 5.11E-02 | 4.35E-02 | 4.86E-02 | 0.003565855 |
| 69 | 4.75E-02 | 5.28E-02 | 5.70E-02 | 5.37E-02 | 4.49E-02 | 5.12E-02 | 0.00396489 |
| 70 | 5.10E-02 | 5.70E-02 | 6.04E-02 | 5.69E-02 | 4.66E-02 | 5.44E-02 | 0.004486575 |
| 71 | 5.52E-02 | 6.24E-02 | 6.45E-02 | 6.10E-02 | 4.85E-02 | 5.83E-02 | 0.005164157 |
| 72 | 6.06E-02 | 6.93E-02 | 6.95E-02 | 6.61E-02 | 5.09E-02 | 6.33E-02 | 0.00600005 |
| 73 | 6.78E-02 | 7.80E-02 | 7.54E-02 | 7.26E-02 | 5.39E-02 | 6.95E-02 | 0.006943024 |
| 74 | 7.68E-02 | 8.88E-02 | 8.23E-02 | 8.07E-02 | 5.75E-02 | 7.73E-02 | 0.008052553 |
| 75 | 8.77E-02 | 0.10225 | 9.03E-02 | 9.07E-02 | 6.20E-02 | 8.66E-02 | 0.009832555 |
| 76 | 0.10089 | 0.11867 | 9.99E-02 | 1.03E-01 | 6.75E-02 | 9.79E-02 | 0.012152869 |

(continued)

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 77 | 0.11673 | 0.1384 | 0.11152 | 0.11721 | 0.0744148 | 1.12E-01 | 0.014950048 |
| 78 | 0.13564 | 0.16183 | 0.12554 | 0.13492 | 0.08287504 | 1.28E-01 | 0.01916279 |
| 79 | 0.15809 | 0.1881 | 0.14195 | 0.15578 | 0.09316616 | 1.47E-01 | 0.023887322 |
| 80 | 0.18427 | 0.2165 | 0.16049 | 0.17974 | 0.10546 | 1.69E-01 | 0.0290536 |
| 81 | 0.21443 | 0.24799 | 0.18132 | 0.20695 | 0.12004 | 1.94E-01 | 0.0347728 |
| 82 | 0.24846 | 0.28403 | 0.20544 | 0.23751 | 0.13745 | 2.23E-01 | 0.0409064 |
| 83 | 0.28611 | 0.32299 | 0.23315 | 0.27144 | 0.15793 | 2.54E-01 | 0.0470272 |
| 84 | 0.32641 | 0.36282 | 0.2625 | 0.30831 | 0.18138 | 2.88E-01 | 0.0530752 |
| 85 | 0.36854 | 0.40312 | 0.29251 | 0.3472 | 0.20777 | 3.24E-01 | 0.0589504 |
| 86 | 0.41171 | 0.44324 | 0.32387 | 0.38726 | 0.23747 | 3.61E-01 | 0.064032 |
| 87 | 0.45497 | 0.48093 | 0.35668 | 0.42763 | 0.27043 | 3.98E-01 | 0.0676584 |
| 88 | 0.49649 | 0.51481 | 0.38898 | 0.46705 | 0.30636 | 4.35E-01 | 0.0696544 |
| 89 | 0.53454 | 0.54488 | 0.41933 | 0.50375 | 0.34481 | 4.69E-01 | 0.0699136 |
| 90 | 0.56756 | 0.56997 | 0.44782 | 0.53664 | 0.38526 | 5.01E-01 | 0.067928 |
| 91 | 0.59432 | 0.58841 | 0.47393 | 0.56487 | 0.42692 | 5.30E-01 | 0.063412 |
| 92 | 0.614 | 0.60069 | 0.49613 | 0.58755 | 0.46874 | 5.53E-01 | 0.0567896 |
| 93 | 0.62585 | 0.60776 | 0.5136 | 0.60387 | 0.50968 | 5.72E-01 | 0.0484096 |
| 94 | 0.63013 | 0.6095 | 0.5277 | 0.61383 | 0.54856 | 5.86E-01 | 0.0382512 |
| 95 | 0.62829 | 0.60642 | 0.53896 | 0.61794 | 0.58436 | 5.95E-01 | 0.0268272 |
| 96 | 0.62082 | 0.59972 | 0.54694 | 0.61644 | 0.61614 | 6.00E-01 | 0.0213456 |
| 97 | 0.60817 | 0.59023 | 0.55166 | 0.61008 | 0.64323 | 6.01E-01 | 0.0237832 |
| 98 | 0.59179 | 0.57861 | 0.55413 | 0.5994 | 0.66557 | 5.98E-01 | 0.027668 |
| 99 | 0.57279 | 0.56552 | 0.55474 | 0.58518 | 0.68258 | 5.92E-01 | 0.0361672 |
| 100 | 0.55174 | 0.55147 | 0.55356 | 0.5679 | 0.69395 | 5.84E-01 | 0.0440904 |
| 101 | 0.52999 | 0.53681 | 0.55082 | 0.54833 | 0.69937 | 5.73E-01 | 0.0505224 |
| 102 | 0.50857 | 0.52171 | 0.54677 | 0.52704 | 0.69937 | 5.61E-01 | 0.0554712 |
| 103 | 0.48695 | 0.50618 | 0.54145 | 0.50441 | 0.69416 | 5.47E-01 | 0.059012 |
| 104 | 0.4648 | 0.49035 | 0.53485 | 0.48071 | 0.68441 | 5.31E-01 | 0.0628848 |
| 105 | 0.44295 | 0.4744 | 0.52691 | 0.45663 | 0.67047 | 5.14E-01 | 0.0675344 |
| 106 | 0.4219 | 0.45856 | 0.51771 | 0.43287 | 0.65328 | 4.97E-01 | 0.0709048 |
| 107 | 0.40117 | 0.44287 | 0.50739 | 0.40964 | 0.63367 | 4.79E-01 | 0.0732656 |
| 108 | 0.38061 | 0.42677 | 0.49579 | 0.38713 | 0.61231 | 4.61E-01 | 0.0748224 |
| 109 | 0.36065 | 0.40981 | 0.48232 | 0.36544 | 0.58958 | 4.42E-01 | 0.075512 |
| 110 | 0.34149 | 0.39235 | 0.46655 | 0.34471 | 0.56589 | 4.22E-01 | 0.0752176 |
| 111 | 0.32286 | 0.37474 | 0.44833 | 0.32504 | 0.54161 | 4.03E-01 | 0.0739632 |
| 112 | 0.30473 | 0.35719 | 0.42766 | 0.30654 | 0.51725 | 3.83E-01 | 0.0718248 |
| 113 | 0.28737 | 0.33979 | 0.40533 | 0.28934 | 0.4934 | 3.63E-01 | 0.0690552 |
| 114 | 0.2707 | 0.32245 | 0.38172 | 0.27358 | 0.47011 | 3.44E-01 | 0.0657624 |

(continued)

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 115 | 0.25401 | 0.30509 | 0.35636 | 0.25915 | 0.4473 | 3.24E-01 | 0.0619584 |
| 116 | 0.2368 | 0.28755 | 0.32875 | 0.2459 | 0.42511 | 3.05E-01 | 0.0576864 |
| 117 | 0.22316 | 0.26977 | 0.30198 | 0.23378 | 0.40389 | 2.87E-01 | 0.0531352 |

Table 29 - Results da tangent delta (tan d) for sample 1000/0 in quadruplicate:

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 35 | 7.23E-02 | 7.25E-02 | 9.99E-02 | 5.55E-02 | 0.0750669100 | 0.01243125 |
| 36 | 7.45E-02 | 7.47E-02 | 0.1012 | 0.05675111 | 0.0767805925 | 0.012209704 |
| 37 | 7.68E-02 | 7.72E-02 | 0.10269 | 0.05811027 | 0.0786980500 | 0.011995975 |
| 38 | 7.94E-02 | 7.99E-02 | 0.10437 | 0.05961279 | 0.0808198700 | 0.011775065 |
| 39 | 8.21E-02 | 8.30E-02 | 0.10627 | 0.0612868 | 0.0831746400 | 0.01154768 |
| 40 | 8.52E-02 | 8.64E-02 | 0.10843 | 0.06312453 | 0.0857829425 | 0.011618368 |
| 41 | 8.86E-02 | 9.01E-02 | 0.11088 | 0.06513503 | 0.0886706350 | 0.011807155 |
| 42 | 9.23E-02 | 9.42E-02 | 0.1136 | 0.06735747 | 0.0918691800 | 0.012255855 |
| 43 | 9.65E-02 | 9.88E-02 | 0.11659 | 0.06983865 | 0.0954217650 | 0.012791558 |
| 44 | 0.101 | 0.10381 | 0.1199 | 0.07259303 | 0.0993257575 | 0.013366364 |
| 45 | 0.10595 | 0.10918 | 0.12358 | 0.0756638 | 0.1035934500 | 0.013964825 |
| 46 | 0.11146 | 0.11493 | 0.1277 | 0.0790726 | 0.1082906500 | 0.014609025 |
| 47 | 0.11766 | 0.12115 | 0.13236 | 0.0828693 | 0.1135098250 | 0.015320263 |
| 48 | 0.12466 | 0.12805 | 0.13768 | 0.08715472 | 0.1193861800 | 0.01611573 |
| 49 | 0.13264 | 0.13594 | 0.14388 | 0.09209019 | 0.1261375475 | 0.017023679 |
| 50 | 0.14191 | 0.14504 | 0.15123 | 0.09778315 | 0.1339907875 | 0.018103819 |
| 51 | 0.15297 | 0.15558 | 0.16005 | 0.10435 | 0.1432375000 | 0.01944375 |
| 52 | 0.16633 | 0.16799 | 0.1708 | 0.11182 | 0.1542350000 | 0.0212075 |
| 53 | 0.18277 | 0.18301 | 0.18396 | 0.12034 | 0.1675200000 | 0.02359 |
| 54 | 0.20319 | 0.20152 | 0.20026 | 0.13 | 0.1837425000 | 0.02687125 |
| 55 | 0.22913 | 0.2249 | 0.22054 | 0.14102 | 0.2038975000 | 0.03143875 |
| 56 | 0.26168 | 0.25451 | 0.24587 | 0.15372 | 0.2289450000 | 0.0376125 |
| 57 | 0.30188 | 0.29148 | 0.27781 | 0.1687 | 0.2599675000 | 0.04563375 |
| 58 | 0.35053 | 0.33674 | 0.31675 | 0.18701 | 0.2977575000 | 0.05537375 |
| 59 | 0.40908 | 0.39101 | 0.36303 | 0.21014 | 0.3433150000 | 0.0665875 |
| 60 | 0.47853 | 0.45507 | 0.417 | 0.24043 | 0.3977575000 | 0.07866375 |
| 61 | 0.56004 | 0.5293 | 0.48017 | 0.28184 | 0.4628375000 | 0.09049875 |
| 62 | 0.65324 | 0.61392 | 0.55397 | 0.33751 | 0.5396600000 | 0.101075 |
| 63 | 0.75534 | 0.70609 | 0.63569 | 0.41039 | 0.6268775000 | 0.10824375 |
| 64 | 0.86374 | 0.80361 | 0.72226 | 0.50065 | 0.7225650000 | 0.11111 |
| 65 | 0.97604 | 0.906 | 0.81204 | 0.60513 | 0.8248025000 | 0.1162175 |

(continued)

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 66 | 1.08926 | 1.01289 | 0.90433 | 0.72075 | 0.9318075000 | 0.1192675 |
| 67 | 1.19863 | 1.11831 | 0.9977 | 0.84428 | 1.0397300000 | 0.11874 |
| 68 | 1.3001 | 1.21524 | 1.0891 | 0.97202 | 1.1441150000 | 0.113555 |
| 69 | 1.39076 | 1.30039 | 1.17414 | 1.09702 | 1.2405775000 | 0.1049975 |
| 70 | 1.46635 | 1.37044 | 1.24643 | 1.2124 | 1.3239050000 | 0.09449 |
| 71 | 1.52274 | 1.42394 | 1.30153 | 1.31143 | 1.3899100000 | 0.08343 |
| 72 | 1.55762 | 1.45783 | 1.34137 | 1.38661 | 1.4358575000 | 0.0718675 |
| 73 | 1.5736 | 1.47096 | 1.36509 | 1.43316 | 1.4607025000 | 0.0615775 |
| 74 | 1.56953 | 1.46278 | 1.37042 | 1.44755 | 1.4625700000 | 0.053585 |
| 75 | 1.54593 | 1.4351 | 1.35694 | 1.43462 | 1.4431475000 | 0.05139125 |
| 76 | 1.5054 | 1.38821 | 1.32695 | 1.39782 | 1.4045950000 | 0.0504025 |
| 77 | 1.4514 | 1.32656 | 1.28261 | 1.34891 | 1.3523700000 | 0.049515 |
| 78 | 1.38512 | 1.25993 | 1.22394 | 1.29781 | 1.2917000000 | 0.049765 |
| 79 | 1.30902 | 1.18912 | 1.15286 | 1.24429 | 1.2238225000 | 0.0528325 |
| 80 | 1.22602 | 1.10569 | 1.07143 | 1.18534 | 1.1471200000 | 0.05856 |
| 81 | 1.13923 | 1.00683 | 0.98698 | 1.11445 | 1.0618725000 | 0.0649675 |
| 82 | 1.05214 | 0.91628 | 0.90617 | 1.02801 | 0.9756500000 | 0.064425 |
| 83 | 0.96628 | 0.83715 | 0.82727 | 0.93849 | 0.8922975000 | 0.0600875 |
| 84 | 0.88198 | 0.76086 | 0.74667 | 0.85626 | 0.8114425000 | 0.0576775 |
| 85 | 0.79995 | 0.68548 | 0.66481 | 0.78039 | 0.7326575000 | 0.0575125 |
| 86 | 0.72151 | 0.61595 | 0.58658 | 0.70994 | 0.6584950000 | 0.05723 |
| 87 | 0.64857 | 0.55385 | 0.51477 | 0.64639 | 0.5908950000 | 0.056585 |
| 88 | 0.58352 | 0.49513 | 0.44997 | 0.58931 | 0.5294825000 | 0.0569325 |
| 89 | 0.5263 | 0.43769 | 0.39213 | 0.53444 | 0.4726400000 | 0.05773 |
| 90 | 0.47508 | 0.38519 | 0.34017 | 0.48604 | 0.4216200000 | 0.05894 |
| 91 | 0.42869 | 0.34078 | 0.29349 | 0.45554 | 0.3796250000 | 0.06249 |
| 92 | 0.38585 | 0.30283 | 0.25101 | 0.43697 | 0.3441650000 | 0.067245 |
| 93 | 0.34609 | 0.27002 | 0.21244 | 0.41432 | 0.3107175000 | 0.0694875 |
| 94 | 0.30956 | 0.24057 | 0.17892 | 0.38411 | 0.2782900000 | 0.068545 |
| 95 | 0.27549 | 0.2133 | 0.15191 | 0.349 | 0.2474250000 | 0.06482 |
| 96 | 0.24161 | 0.18828 | 0.13106 | 0.3172 | 0.2195375000 | 0.0598675 |
| 97 | 0.20747 | 0.16595 | 0.11598 | 0.29677 | 0.1965425000 | 0.0555775 |
| 98 | 0.17865 | 0.14617 | 0.10561 | 0.27927 | 0.1774250000 | 0.051535 |
| 99 | 0.15858 | 0.12862 | 9.87E-02 | 2.55E-01 | 0.1602787025 | 0.047470649 |
| 100 | 0.14413 | 0.1121 | 9.43E-02 | 2.26E-01 | 0.1440955300 | 0.04090447 |
| 101 | 0.13323 | 9.54E-02 | 9.13E-02 | 1.96E-01 | 0.1288978725 | 0.035522128 |
| 102 | 0.12481 | 7.89E-02 | 8.92E-02 | 1.80E-01 | 0.1181687675 | 0.034131233 |
| 103 | 0.11803 | 6.34E-02 | 8.73E-02 | 1.95E-01 | 0.1158104075 | 0.040459593 |
| 104 | 0.11253 | 4.87E-02 | 8.53E-02 | 2.25E-01 | 0.1179001925 | 0.053544904 |

(continued)

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 105 | 0.10804 | 3.44E-02 | 8.34E-02 | 2.49E-01 | 0.1186019600 | 0.06497402 |
| 106 | 0.10252 | 2.08E-02 | 8.13E-02 | 2.61E-01 | 0.1162904175 | 0.072114791 |
| 107 | 9.32E-02 | 8.78E-03 | 7.85E-02 | 2.61E-01 | 0.1103702455 | 0.075299877 |
| 108 | 7.93E-02 | -1.71E-03 | 7.44E-02 | 2.53E-01 | 0.1013733833 | 0.076038308 |
| 109 | 6.07E-02 | -1.10E-02 | 6.86E-02 | 2.43E-01 | 0.0903602025 | 0.076389899 |
| 110 | 3.95E-02 | -1.96E-02 | 6.05E-02 | 2.34E-01 | 0.0786777475 | 0.077831126 |
| 111 | 1.81E-02 | -2.78E-02 | 5.00E-02 | 2.31E-01 | 0.0677450825 | 0.081497459 |
| 112 | -2.66E-03 | -3.54E-02 | 3.67E-02 | 2.31E-01 | 0.0574788265 | 0.086855587 |
| 113 | -2.28E-02 | -4.15E-02 | 2.16E-02 | 2.33E-01 | 0.0475964925 | 0.092741754 |
| 114 | -4.27E-02 | -4.67E-02 | 5.70E-03 | 2.36E-01 | 0.0381858990 | 0.099107051 |
| 115 | -6.29E-02 | -5.18E-02 | -1.06E-02 | 2.43E-01 | 0.0292883900 | 0.106605805 |
| 116 | -8.35E-02 | -5.73E-02 | -2.70E-02 | 2.52E-01 | 0.0211054900 | 0.115602255 |
| 117 | -0.10374 | -6.24E-02 | -4.35E-02 | 2.66E-01 | 0.0141637450 | 0.126058128 |

Table 30 - Results da tangent delta (tan d) for sample 1010/4 in triplicate:

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 35 | 3.84E-02 | 3.09E-02 | 4.42E-02 | 3.78E-02 | 0.004610276 |
| 36 | 3.84E-02 | 3.09E-02 | 4.42E-02 | 3.78E-02 | 0.004620931 |
| 37 | 3.84E-02 | 3.09E-02 | 4.42E-02 | 3.78E-02 | 0.004629889 |
| 38 | 3.85E-02 | 3.09E-02 | 4.42E-02 | 3.79E-02 | 0.004639389 |
| 39 | 3.86E-02 | 3.09E-02 | 4.42E-02 | 3.79E-02 | 0.004650587 |
| 40 | 3.87E-02 | 3.10E-02 | 4.43E-02 | 3.80E-02 | 0.004664471 |
| 41 | 3.88E-02 | 3.10E-02 | 4.43E-02 | 3.81E-02 | 0.004681878 |
| 42 | 3.90E-02 | 3.11E-02 | 4.44E-02 | 3.81E-02 | 0.00470404 |
| 43 | 3.91E-02 | 3.11E-02 | 4.44E-02 | 3.82E-02 | 0.004731351 |
| 44 | 3.93E-02 | 3.12E-02 | 4.45E-02 | 3.84E-02 | 0.004764484 |
| 45 | 3.95E-02 | 3.13E-02 | 4.46E-02 | 3.85E-02 | 0.004803811 |
| 46 | 3.97E-02 | 3.13E-02 | 4.48E-02 | 3.86E-02 | 0.004849476 |
| 47 | 4.00E-02 | 3.14E-02 | 4.49E-02 | 3.88E-02 | 0.004901871 |
| 48 | 4.02E-02 | 3.15E-02 | 4.51E-02 | 3.89E-02 | 0.004962478 |
| 49 | 4.04E-02 | 3.15E-02 | 4.53E-02 | 3.91E-02 | 0.005031769 |
| 50 | 4.06E-02 | 3.16E-02 | 4.56E-02 | 3.92E-02 | 0.005110269 |
| 51 | 4.07E-02 | 3.16E-02 | 4.59E-02 | 3.94E-02 | 0.005198518 |
| 52 | 4.09E-02 | 3.16E-02 | 4.62E-02 | 3.95E-02 | 0.005297933 |
| 53 | 4.10E-02 | 3.15E-02 | 4.65E-02 | 3.97E-02 | 0.005411273 |
| 54 | 4.10E-02 | 3.15E-02 | 4.68E-02 | 3.98E-02 | 0.005537051 |
| 55 | 4.11E-02 | 3.13E-02 | 4.71E-02 | 3.98E-02 | 0.005674967 |
| 56 | 4.11E-02 | 3.12E-02 | 4.74E-02 | 3.99E-02 | 0.005823898 |
| 57 | 4.12E-02 | 3.10E-02 | 4.77E-02 | 4.00E-02 | 0.005983893 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 58 | 4.14E-02 | 3.09E-02 | 4.81E-02 | 4.01E-02 | 0.006146596 |
| 59 | 4.18E-02 | 3.09E-02 | 4.85E-02 | 4.04E-02 | 0.006305284 |
| 60 | 4.24E-02 | 3.11E-02 | 4.89E-02 | 4.08E-02 | 0.00645492 |
| 61 | 4.34E-02 | 3.17E-02 | 4.95E-02 | 4.16E-02 | 0.006585442 |
| 62 | 4.51E-02 | 3.27E-02 | 5.04E-02 | 4.27E-02 | 0.006682227 |
| 63 | 4.75E-02 | 3.45E-02 | 5.16E-02 | 4.45E-02 | 0.006719636 |
| 64 | 5.10E-02 | 3.71E-02 | 5.34E-02 | 4.72E-02 | 0.006706416 |
| 65 | 5.59E-02 | 4.11E-02 | 5.61E-02 | 5.10E-02 | 0.006608996 |
| 66 | 6.24E-02 | 4.66E-02 | 5.98E-02 | 5.62E-02 | 0.006430609 |
| 67 | 7.08E-02 | 5.39E-02 | 6.48E-02 | 6.32E-02 | 0.006162649 |
| 68 | 8.19E-02 | 6.35E-02 | 7.17E-02 | 7.24E-02 | 0.006359769 |
| 69 | 9.57E-02 | 7.57E-02 | 8.06E-02 | 8.40E-02 | 0.007787062 |
| 70 | 0.11171 | 9.07E-02 | 9.19E-02 | 9.81E-02 | 0.009078649 |
| 71 | 0.13005 | 0.10865 | 0.10589 | 1.15E-01 | 0.010124444 |
| 72 | 0.15175 | 0.12954 | 0.12335 | 1.35E-01 | 0.011246667 |
| 73 | 0.17704 | 0.15337 | 0.14406 | 1.58E-01 | 0.012588889 |
| 74 | 0.20434 | 0.17966 | 0.16765 | 1.84E-01 | 0.013637778 |
| 75 | 0.2328 | 0.20807 | 0.19399 | 2.12E-01 | 0.01412 |
| 76 | 0.2627 | 0.23812 | 0.22324 | 2.41E-01 | 0.014231111 |
| 77 | 0.29366 | 0.26943 | 0.25434 | 2.72E-01 | 0.014122222 |
| 78 | 0.32374 | 0.3009 | 0.28604 | 3.04E-01 | 0.013453333 |
| 79 | 0.35187 | 0.33132 | 0.31775 | 3.34E-01 | 0.012148889 |
| 80 | 0.3781 | 0.35973 | 0.34897 | 3.62E-01 | 0.010555556 |
| 81 | 0.40183 | 0.38526 | 0.37855 | 3.89E-01 | 0.008855556 |
| 82 | 0.4217 | 0.40768 | 0.40488 | 4.11E-01 | 0.006853333 |
| 83 | 0.43718 | 0.42645 | 0.42683 | 4.30E-01 | 0.004684444 |
| 84 | 0.44871 | 0.44113 | 0.44349 | 4.44E-01 | 0.002844444 |
| 85 | 0.45627 | 0.45118 | 0.45525 | 4.54E-01 | 0.002035556 |
| 86 | 0.46004 | 0.45692 | 0.46239 | 4.60E-01 | 0.001908889 |
| 87 | 0.46055 | 0.45875 | 0.46541 | 4.62E-01 | 0.00256 |
| 88 | 0.45842 | 0.45744 | 0.46473 | 4.60E-01 | 0.003022222 |
| 89 | 0.4542 | 0.45357 | 0.46115 | 4.56E-01 | 0.003228889 |
| 90 | 0.44874 | 0.44778 | 0.45558 | 4.51E-01 | 0.003253333 |
| 91 | 0.4426 | 0.44082 | 0.44882 | 4.44E-01 | 0.00316 |
| 92 | 0.43606 | 0.43314 | 0.44142 | 4.37E-01 | 0.003031111 |
| 93 | 0.42939 | 0.42496 | 0.4339 | 4.29E-01 | 0.002988889 |
| 94 | 0.42292 | 0.41672 | 0.42667 | 4.22E-01 | 0.003588889 |
| 95 | 0.41706 | 0.40905 | 0.41998 | 4.15E-01 | 0.004208889 |
| 96 | 0.41192 | 0.40191 | 0.4139 | 4.09E-01 | 0.004888889 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 97 | 0.40687 | 0.39487 | 0.4082 | 4.03E-01 | 0.005628889 |
| 98 | 0.4013 | 0.38769 | 0.40269 | 3.97E-01 | 0.006357778 |
| 99 | 0.39574 | 0.38031 | 0.39718 | 3.91E-01 | 0.007177778 |
| 100 | 0.39049 | 0.37271 | 0.39152 | 3.85E-01 | 0.008131111 |
| 101 | 0.38488 | 0.36499 | 0.38558 | 3.78E-01 | 0.008995556 |
| 102 | 0.37854 | 0.35706 | 0.37927 | 3.72E-01 | 0.009708889 |
| 103 | 0.37185 | 0.34848 | 0.37252 | 3.64E-01 | 0.010535556 |
| 104 | 0.36485 | 0.33885 | 0.36533 | 3.56E-01 | 0.011662222 |
| 105 | 0.35707 | 0.32847 | 0.35773 | 3.48E-01 | 0.012857778 |
| 106 | 0.34846 | 0.31769 | 0.3498 | 3.39E-01 | 0.013973333 |
| 107 | 0.3396 | 0.30667 | 0.34163 | 3.29E-01 | 0.015086667 |
| 108 | 0.33035 | 0.29543 | 0.33338 | 3.20E-01 | 0.016193333 |
| 109 | 0.31991 | 0.28364 | 0.32519 | 3.10E-01 | 0.017293333 |
| 110 | 0.30905 | 0.27088 | 0.31697 | 2.99E-01 | 0.018724444 |
| 111 | 0.29918 | 0.25772 | 0.30864 | 2.89E-01 | 0.020528889 |
| 112 | 0.28957 | 0.24494 | 0.30024 | 2.78E-01 | 0.022206667 |
| 113 | 0.27933 | 0.23238 | 0.29177 | 2.68E-01 | 0.023631111 |
| 114 | 0.2687 | 0.21974 | 0.28316 | 2.57E-01 | 0.024973333 |
| 115 | 0.25842 | 0.20738 | 0.27437 | 2.47E-01 | 0.026228889 |
| 116 | 0.24867 | 0.19595 | 0.26548 | 2.37E-01 | 0.027166667 |
| 117 | 0.23954 | 0.18547 | 0.25656 | 2.27E-01 | 0.027813333 |

**Table 31** - Results da tangent delta (tan d) for sample 1010/3 in triplicate:

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 35 | 3.09E-02 | 3.26E-02 | 3.39E-02 | 3.24E-02 | 0.001025551 |
| 36 | 3.10E-02 | 3.26E-02 | 3.38E-02 | 3.24E-02 | 0.000982851 |
| 37 | 3.10E-02 | 3.26E-02 | 3.37E-02 | 3.24E-02 | 0.0009438 |
| 38 | 3.11E-02 | 3.26E-02 | 3.37E-02 | 3.24E-02 | 0.000920164 |
| 39 | 3.10E-02 | 3.26E-02 | 3.36E-02 | 3.24E-02 | 0.000915013 |
| 40 | 3.10E-02 | 3.27E-02 | 3.35E-02 | 3.24E-02 | 0.000916584 |
| 41 | 3.10E-02 | 3.27E-02 | 3.34E-02 | 3.24E-02 | 0.000919244 |
| 42 | 3.10E-02 | 3.28E-02 | 3.34E-02 | 3.24E-02 | 0.0009296 |
| 43 | 3.10E-02 | 3.29E-02 | 3.34E-02 | 3.24E-02 | 0.000951244 |
| 44 | 3.10E-02 | 3.30E-02 | 3.35E-02 | 3.25E-02 | 0.000981498 |
| 45 | 3.11E-02 | 3.31E-02 | 3.36E-02 | 3.26E-02 | 0.00101226 |
| 46 | 3.12E-02 | 3.33E-02 | 3.38E-02 | 3.27E-02 | 0.0010343 |
| 47 | 3.13E-02 | 3.34E-02 | 3.39E-02 | 3.29E-02 | 0.001041207 |
| 48 | 3.15E-02 | 3.36E-02 | 3.41E-02 | 3.30E-02 | 0.00103946 |
| 49 | 3.16E-02 | 3.38E-02 | 3.42E-02 | 3.32E-02 | 0.001047887 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 50 | 3.18E-02 | 3.40E-02 | 3.45E-02 | 3.34E-02 | 0.001077442 |
| 51 | 3.20E-02 | 3.43E-02 | 3.48E-02 | 3.37E-02 | 0.001115731 |
| 52 | 3.23E-02 | 3.46E-02 | 3.51E-02 | 3.40E-02 | 0.001146511 |
| 53 | 3.25E-02 | 3.49E-02 | 3.54E-02 | 3.43E-02 | 0.001165153 |
| 54 | 3.29E-02 | 3.53E-02 | 3.57E-02 | 3.46E-02 | 0.001165898 |
| 55 | 3.32E-02 | 3.57E-02 | 3.59E-02 | 3.50E-02 | 0.001158313 |
| 56 | 3.36E-02 | 3.62E-02 | 3.63E-02 | 3.54E-02 | 0.001171367 |
| 57 | 3.40E-02 | 3.68E-02 | 3.67E-02 | 3.59E-02 | 0.001218604 |
| 58 | 3.45E-02 | 3.75E-02 | 3.73E-02 | 3.64E-02 | 0.001295849 |
| 59 | 3.50E-02 | 3.82E-02 | 3.80E-02 | 3.71E-02 | 0.001393793 |
| 60 | 3.55E-02 | 3.90E-02 | 3.88E-02 | 3.78E-02 | 0.001497664 |
| 61 | 3.61E-02 | 4.00E-02 | 3.96E-02 | 3.86E-02 | 0.00160826 |
| 62 | 3.68E-02 | 4.10E-02 | 4.05E-02 | 3.94E-02 | 0.001738138 |
| 63 | 3.76E-02 | 4.21E-02 | 4.15E-02 | 4.04E-02 | 0.001884562 |
| 64 | 3.85E-02 | 4.34E-02 | 4.27E-02 | 4.16E-02 | 0.002025553 |
| 65 | 3.97E-02 | 4.48E-02 | 4.42E-02 | 4.29E-02 | 0.002157109 |
| 66 | 4.10E-02 | 4.65E-02 | 4.58E-02 | 4.44E-02 | 0.002296858 |
| 67 | 4.26E-02 | 4.85E-02 | 4.77E-02 | 4.62E-02 | 0.002453647 |
| 68 | 4.44E-02 | 5.08E-02 | 4.98E-02 | 4.83E-02 | 0.002627236 |
| 69 | 4.66E-02 | 5.38E-02 | 5.22E-02 | 5.09E-02 | 0.002831716 |
| 70 | 4.93E-02 | 5.75E-02 | 5.51E-02 | 5.40E-02 | 0.003102662 |
| 71 | 5.27E-02 | 6.26E-02 | 5.86E-02 | 5.80E-02 | 0.003487051 |
| 72 | 5.71E-02 | 6.92E-02 | 6.28E-02 | 6.30E-02 | 0.004128591 |
| 73 | 6.26E-02 | 7.79E-02 | 6.81E-02 | 6.96E-02 | 0.005571107 |
| 74 | 6.98E-02 | 8.90E-02 | 7.48E-02 | 7.79E-02 | 0.007432487 |
| 75 | 7.89E-02 | 0.10321 | 8.33E-02 | 8.84E-02 | 0.009843562 |
| 76 | 9.05E-02 | 0.12096 | 9.40E-02 | 1.02E-01 | 0.012743567 |
| 77 | 0.10573 | 0.14278 | 0.10759 | 1.19E-01 | 0.016053333 |
| 78 | 0.125 | 0.16879 | 0.12466 | 1.39E-01 | 0.019537778 |
| 79 | 0.14908 | 0.19874 | 0.14559 | 1.64E-01 | 0.022846667 |
| 80 | 0.17785 | 0.23251 | 0.17079 | 1.94E-01 | 0.025862222 |
| 81 | 0.21138 | 0.27041 | 0.20011 | 2.27E-01 | 0.02874 |
| 82 | 0.24929 | 0.31197 | 0.23337 | 2.65E-01 | 0.031395556 |
| 83 | 0.2914 | 0.35509 | 0.26988 | 3.05E-01 | 0.033088889 |
| 84 | 0.33629 | 0.39771 | 0.30897 | 3.48E-01 | 0.033368889 |
| 85 | 0.38156 | 0.43759 | 0.34986 | 3.90E-01 | 0.031946667 |
| 86 | 0.42517 | 0.47277 | 0.39157 | 4.30E-01 | 0.028622222 |
| 87 | 0.46488 | 0.50141 | 0.43153 | 4.66E-01 | 0.023646667 |
| 88 | 0.49871 | 0.52175 | 0.46701 | 4.96E-01 | 0.019208889 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 89 | 0.52437 | 0.53333 | 0.49637 | 5.18E-01 | 0.014435556 |
| 90 | 0.54079 | 0.536 | 0.51789 | 5.32E-01 | 0.009113333 |
| 91 | 0.54765 | 0.53141 | 0.53074 | 5.37E-01 | 0.007366667 |
| 92 | 0.54632 | 0.52098 | 0.53455 | 5.34E-01 | 0.008646667 |
| 93 | 0.53832 | 0.50701 | 0.53086 | 5.25E-01 | 0.012257778 |
| 94 | 0.52583 | 0.49127 | 0.52152 | 5.13E-01 | 0.014402222 |
| 95 | 0.51133 | 0.47504 | 0.50893 | 4.98E-01 | 0.015595556 |
| 96 | 0.49629 | 0.45914 | 0.49462 | 4.83E-01 | 0.01614 |
| 97 | 0.48168 | 0.44404 | 0.4794 | 4.68E-01 | 0.016222222 |
| 98 | 0.46783 | 0.42994 | 0.46392 | 4.54E-01 | 0.015971111 |
| 99 | 0.45491 | 0.41675 | 0.44888 | 4.40E-01 | 0.01562 |
| 100 | 0.44294 | 0.40414 | 0.43471 | 4.27E-01 | 0.015415556 |
| 101 | 0.43181 | 0.39156 | 0.42148 | 4.15E-01 | 0.015593333 |
| 102 | 0.42094 | 0.37889 | 0.40919 | 4.03E-01 | 0.016077778 |
| 103 | 0.40976 | 0.36638 | 0.39759 | 3.91E-01 | 0.016575556 |
| 104 | 0.39785 | 0.35392 | 0.38639 | 3.79E-01 | 0.016977778 |
| 105 | 0.38501 | 0.34117 | 0.37492 | 3.67E-01 | 0.017242222 |
| 106 | 0.37165 | 0.32803 | 0.36266 | 3.54E-01 | 0.017388889 |
| 107 | 0.35815 | 0.31448 | 0.34921 | 3.41E-01 | 0.017422222 |
| 108 | 0.34469 | 0.3003 | 0.33429 | 3.26E-01 | 0.017417778 |
| 109 | 0.33121 | 0.28521 | 0.31866 | 3.12E-01 | 0.017655556 |
| 110 | 0.31729 | 0.26973 | 0.30314 | 2.97E-01 | 0.017993333 |
| 111 | 0.30277 | 0.25461 | 0.28809 | 2.82E-01 | 0.018142222 |
| 112 | 0.28786 | 0.24025 | 0.27372 | 2.67E-01 | 0.018017778 |
| 113 | 0.27303 | 0.22686 | 0.26013 | 2.53E-01 | 0.017653333 |
| 114 | 0.25905 | 0.21416 | 0.2474 | 2.40E-01 | 0.017362222 |
| 115 | 0.24657 | 0.20194 | 0.23566 | 2.28E-01 | 0.017411111 |
| 116 | 0.23623 | 0.19012 | 0.22514 | 2.17E-01 | 0.018028889 |
| 117 | 0.22812 | 0.17898 | 0.21582 | 2.08E-01 | 0.019106667 |

**Table 32** - Results da tangent delta (tan d) for sample 1020/4 in triplicate:

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 35 | 3.54E-02 | 3.33E-02 | 2.91E-02 | 3.26E-02 | 0.002318938 |
| 36 | 3.54E-02 | 3.34E-02 | 2.92E-02 | 3.27E-02 | 0.002285356 |
| 37 | 3.54E-02 | 3.34E-02 | 2.93E-02 | 3.27E-02 | 0.002267153 |
| 38 | 3.54E-02 | 3.33E-02 | 2.93E-02 | 3.27E-02 | 0.002236387 |
| 39 | 3.54E-02 | 3.32E-02 | 2.94E-02 | 3.27E-02 | 0.002202211 |
| 40 | 3.55E-02 | 3.32E-02 | 2.94E-02 | 3.27E-02 | 0.002172947 |
| 41 | 3.55E-02 | 3.33E-02 | 2.95E-02 | 3.28E-02 | 0.002151793 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 42 | 3.55E-02 | 3.34E-02 | 2.96E-02 | 3.28E-02 | 0.002153278 |
| 43 | 3.55E-02 | 3.37E-02 | 2.97E-02 | 3.30E-02 | 0.00217802 |
| 44 | 3.56E-02 | 3.40E-02 | 2.98E-02 | 3.31E-02 | 0.002213496 |
| 45 | 3.57E-02 | 3.43E-02 | 2.99E-02 | 3.33E-02 | 0.00226808 |
| 46 | 3.59E-02 | 3.46E-02 | 2.99E-02 | 3.35E-02 | 0.002356604 |
| 47 | 3.60E-02 | 3.49E-02 | 2.99E-02 | 3.36E-02 | 0.002472078 |
| 48 | 3.61E-02 | 3.53E-02 | 3.00E-02 | 3.38E-02 | 0.002564373 |
| 49 | 3.63E-02 | 3.57E-02 | 3.01E-02 | 3.40E-02 | 0.002611127 |
| 50 | 3.64E-02 | 3.61E-02 | 3.04E-02 | 3.43E-02 | 0.00261826 |
| 51 | 3.65E-02 | 3.66E-02 | 3.06E-02 | 3.46E-02 | 0.002641111 |
| 52 | 3.67E-02 | 3.71E-02 | 3.08E-02 | 3.49E-02 | 0.002710304 |
| 53 | 3.69E-02 | 3.77E-02 | 3.10E-02 | 3.52E-02 | 0.002821876 |
| 54 | 3.72E-02 | 3.84E-02 | 3.12E-02 | 3.56E-02 | 0.002951729 |
| 55 | 3.76E-02 | 3.92E-02 | 3.14E-02 | 3.61E-02 | 0.003083838 |
| 56 | 3.79E-02 | 4.01E-02 | 3.18E-02 | 3.66E-02 | 0.003222807 |
| 57 | 3.83E-02 | 4.12E-02 | 3.21E-02 | 3.72E-02 | 0.003390127 |
| 58 | 3.88E-02 | 4.23E-02 | 3.25E-02 | 3.79E-02 | 0.003575024 |
| 59 | 3.94E-02 | 4.37E-02 | 3.31E-02 | 3.87E-02 | 0.003766093 |
| 60 | 4.00E-02 | 4.52E-02 | 3.36E-02 | 3.96E-02 | 0.003978269 |
| 61 | 4.06E-02 | 4.71E-02 | 3.43E-02 | 4.07E-02 | 0.004299369 |
| 62 | 4.13E-02 | 4.95E-02 | 3.50E-02 | 4.19E-02 | 0.005025024 |
| 63 | 4.22E-02 | 5.24E-02 | 3.58E-02 | 4.35E-02 | 0.0059185 |
| 64 | 4.34E-02 | 5.58E-02 | 3.68E-02 | 4.53E-02 | 0.00697914 |
| 65 | 4.47E-02 | 5.98E-02 | 3.79E-02 | 4.75E-02 | 0.008211362 |
| 66 | 4.63E-02 | 6.44E-02 | 3.93E-02 | 5.00E-02 | 0.009613756 |
| 67 | 4.83E-02 | 6.97E-02 | 4.09E-02 | 5.30E-02 | 0.011154998 |
| 68 | 5.07E-02 | 7.57E-02 | 4.30E-02 | 5.65E-02 | 0.012812656 |
| 69 | 5.38E-02 | 8.26E-02 | 4.57E-02 | 6.07E-02 | 0.014588873 |
| 70 | 5.77E-02 | 9.05E-02 | 4.92E-02 | 6.58E-02 | 0.016454413 |
| 71 | 6.28E-02 | 9.93E-02 | 5.35E-02 | 7.19E-02 | 0.018286484 |
| 72 | 6.94E-02 | 0.10914 | 5.90E-02 | 7.92E-02 | 0.019967933 |
| 73 | 7.77E-02 | 0.12038 | 6.63E-02 | 8.81E-02 | 0.021506833 |
| 74 | 8.79E-02 | 0.13364 | 7.58E-02 | 9.91E-02 | 0.023020196 |
| 75 | 0.10068 | 0.14959 | 8.77E-02 | 1.13E-01 | 0.024618798 |
| 76 | 0.11645 | 0.16885 | 0.10268 | 1.29E-01 | 0.026348889 |
| 77 | 0.13564 | 0.19135 | 0.12144 | 1.49E-01 | 0.027915556 |
| 78 | 0.15859 | 0.2169 | 0.14443 | 1.73E-01 | 0.029062222 |
| 79 | 0.18564 | 0.24558 | 0.17216 | 2.01 E-01 | 0.029635556 |
| 80 | 0.21694 | 0.27774 | 0.20584 | 2.34E-01 | 0.029488889 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 81 | 0.25268 | 0.31398 | 0.24513 | 2.71E-01 | 0.028922222 |
| 82 | 0.29295 | 0.3552 | 0.28853 | 3.12E-01 | 0.028648889 |
| 83 | 0.33803 | 0.39869 | 0.3358 | 3.58E-01 | 0.027455556 |
| 84 | 0.38667 | 0.44157 | 0.38665 | 4.05E-01 | 0.024404444 |
| 85 | 0.43695 | 0.48449 | 0.44046 | 4.54E-01 | 0.020348889 |
| 86 | 0.48753 | 0.52873 | 0.49564 | 5.04E-01 | 0.016508889 |
| 87 | 0.53699 | 0.5718 | 0.54906 | 5.53E-01 | 0.012788889 |
| 88 | 0.58275 | 0.60938 | 0.59692 | 5.96E-01 | 0.009066667 |
| 89 | 0.62207 | 0.64087 | 0.63902 | 6.34E-01 | 0.007944444 |
| 90 | 0.6532 | 0.66632 | 0.67322 | 6.64E-01 | 0.007364444 |
| 91 | 0.67408 | 0.68529 | 0.6957 | 6.85E-01 | 0.007295556 |
| 92 | 0.68402 | 0.69713 | 0.70675 | 6.96E-01 | 0.007964444 |
| 93 | 0.68318 | 0.70144 | 0.70646 | 6.97E-01 | 0.009231111 |
| 94 | 0.67349 | 0.69834 | 0.69624 | 6.89E-01 | 0.010577778 |
| 95 | 0.65663 | 0.68783 | 0.67875 | 6.74E-01 | 0.011848889 |
| 96 | 0.6356 | 0.67119 | 0.65664 | 6.54E-01 | 0.012584444 |
| 97 | 0.61264 | 0.64966 | 0.63213 | 6.31E-01 | 0.012557778 |
| 98 | 0.58933 | 0.62693 | 0.60697 | 6.08E-01 | 0.012791111 |
| 99 | 0.56641 | 0.60566 | 0.58237 | 5.85E-01 | 0.013897778 |
| 100 | 0.54406 | 0.58549 | 0.5584 | 5.63E-01 | 0.015226667 |
| 101 | 0.52245 | 0.56602 | 0.5352 | 5.41E-01 | 0.016531111 |
| 102 | 0.50175 | 0.54689 | 0.51299 | 5.21E-01 | 0.017564444 |
| 103 | 0.48169 | 0.52788 | 0.49085 | 5.00E-01 | 0.018493333 |
| 104 | 0.4617 | 0.50891 | 0.46816 | 4.80E-01 | 0.019546667 |
| 105 | 0.44147 | 0.48999 | 0.44511 | 4.59E-01 | 0.020755556 |
| 106 | 0.4208 | 0.47117 | 0.42184 | 4.38E-01 | 0.022155556 |
| 107 | 0.39976 | 0.45253 | 0.39835 | 4.17E-01 | 0.023766667 |
| 108 | 0.37865 | 0.43418 | 0.37455 | 3.96E-01 | 0.025591111 |
| 109 | 0.35771 | 0.41625 | 0.35148 | 3.75E-01 | 0.027402222 |
| 110 | 0.33716 | 0.39892 | 0.33013 | 3.55E-01 | 0.029011111 |
| 111 | 0.31721 | 0.38247 | 0.30976 | 3.36E-01 | 0.03066 |
| 112 | 0.29814 | 0.36669 | 0.29051 | 3.18E-01 | 0.032162222 |
| 113 | 0.28001 | 0.3512 | 0.27292 | 3.01E-01 | 0.033215556 |
| 114 | 0.26257 | 0.33608 | 0.25637 | 2.85E-01 | 0.034048889 |
| 115 | 0.24589 | 0.32186 | 0.24078 | 2.70E-01 | 0.0349 |
| 116 | 0.23085 | 0.30895 | 0.2267 | 2.56E-01 | 0.035633333 |
| 117 | 0.21806 | 0.29773 | 0.21383 | 2.43E-01 | 0.036348889 |

**Table 33** - Results da tangent delta (tan d) for sample 1010/2 in quintuplicate:

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 35 | 3.59E-02 | 3.37E-02 | 4.54E-02 | 0.03350212 | 0.03321867 | 3.63E-02 | 0.003621379 |
| 36 | 3.58E-02 | 3.36E-02 | 4.54E-02 | 0.03347609 | 0.03312285 | 3.63E-02 | 0.003643339 |
| 37 | 3.57E-02 | 3.36E-02 | 4.54E-02 | 0.03345334 | 0.03303134 | 3.63E-02 | 0.00366878 |
| 38 | 3.56E-02 | 3.37E-02 | 4.55E-02 | 0.03343299 | 0.03294545 | 3.62E-02 | 0.003696732 |
| 39 | 3.55E-02 | 3.37E-02 | 4.55E-02 | 0.03341461 | 0.03286629 | 3.62E-02 | 0.003726332 |
| 40 | 3.54E-02 | 3.37E-02 | 4.56E-02 | 0.0333988 | 0.03279444 | 3.62E-02 | 0.00375733 |
| 41 | 3.54E-02 | 3.37E-02 | 4.57E-02 | 0.03338872 | 0.03273096 | 3.62E-02 | 0.003789814 |
| 42 | 3.53E-02 | 3.38E-02 | 4.57E-02 | 0.03338824 | 0.03267645 | 3.62E-02 | 0.00382278 |
| 43 | 3.53E-02 | 3.38E-02 | 4.58E-02 | 0.03339957 | 0.0326296 | 3.62E-02 | 0.003855645 |
| 44 | 3.53E-02 | 3.39E-02 | 4.60E-02 | 0.03342405 | 0.03258945 | 3.62E-02 | 0.003887706 |
| 45 | 3.54E-02 | 3.39E-02 | 4.61E-02 | 0.03346451 | 0.03255546 | 3.63E-02 | 0.003919033 |
| 46 | 3.54E-02 | 3.40E-02 | 4.62E-02 | 0.03352452 | 0.03252672 | 3.63E-02 | 0.003949656 |
| 47 | 3.55E-02 | 3.41E-02 | 4.64E-02 | 0.03360918 | 0.03250252 | 3.64E-02 | 0.003979972 |
| 48 | 3.57E-02 | 3.42E-02 | 4.66E-02 | 0.03372449 | 0.03248259 | 3.65E-02 | 0.004010618 |
| 49 | 3.58E-02 | 3.44E-02 | 4.68E-02 | 0.03386977 | 0.03246712 | 3.67E-02 | 0.004042598 |
| 50 | 3.60E-02 | 3.46E-02 | 4.70E-02 | 0.0340431 | 0.03245663 | 3.68E-02 | 0.004075626 |
| 51 | 3.63E-02 | 3.48E-02 | 4.73E-02 | 0.03424307 | 0.03245202 | 3.70E-02 | 0.00411023 |
| 52 | 3.65E-02 | 3.50E-02 | 4.76E-02 | 0.03446582 | 0.0324549 | 3.72E-02 | 0.004146925 |
| 53 | 3.68E-02 | 3.53E-02 | 4.79E-02 | 0.03470963 | 0.03246783 | 3.74E-02 | 0.004186155 |
| 54 | 3.71E-02 | 3.56E-02 | 4.83E-02 | 0.03497331 | 0.03249389 | 3.77E-02 | 0.004227142 |
| 55 | 3.75E-02 | 3.60E-02 | 4.87E-02 | 0.03524997 | 0.03253172 | 3.80E-02 | 0.004271494 |
| 56 | 3.79E-02 | 3.64E-02 | 4.91E-02 | 0.03553198 | 0.03257774 | 3.83E-02 | 0.004322474 |
| 57 | 3.83E-02 | 3.68E-02 | 4.96E-02 | 0.03581402 | 0.03262884 | 3.86E-02 | 0.004381873 |
| 58 | 3.87E-02 | 3.73E-02 | 5.01E-02 | 0.03609562 | 0.03268038 | 3.90E-02 | 0.004448851 |
| 59 | 3.92E-02 | 3.78E-02 | 5.07E-02 | 0.03637711 | 0.03272635 | 3.94E-02 | 0.004525422 |
| 60 | 3.97E-02 | 3.84E-02 | 5.13E-02 | 0.03665853 | 0.0327606 | 3.98E-02 | 0.00461681 |
| 61 | 4.03E-02 | 3.90E-02 | 5.20E-02 | 0.03693886 | 0.03278059 | 4.02E-02 | 0.004760768 |
| 62 | 4.10E-02 | 3.98E-02 | 5.29E-02 | 0.03721679 | 0.03278558 | 4.07E-02 | 0.004954424 |
| 63 | 4.18E-02 | 4.07E-02 | 5.38E-02 | 0.03749213 | 0.03277407 | 4.13E-02 | 0.005190666 |
| 64 | 4.28E-02 | 4.18E-02 | 5.49E-02 | 0.03776963 | 0.03275495 | 4.20E-02 | 0.005483403 |
| 65 | 4.41E-02 | 4.31E-02 | 5.62E-02 | 0.03805556 | 0.03274937 | 4.28E-02 | 0.005949588 |
| 66 | 4.58E-02 | 4.48E-02 | 5.78E-02 | 0.03835992 | 0.03278074 | 4.39E-02 | 0.006655434 |
| 67 | 4.80E-02 | 4.69E-02 | 5.97E-02 | 0.03870523 | 0.03288211 | 4.52E-02 | 0.007544064 |
| 68 | 5.09E-02 | 4.96E-02 | 6.20E-02 | 0.03912051 | 0.03310342 | 4.69E-02 | 0.008665846 |
| 69 | 5.47E-02 | 5.30E-02 | 6.49E-02 | 0.03964478 | 0.03350566 | 4.92E-02 | 0.010073328 |
| 70 | 5.98E-02 | 5.73E-02 | 6.87E-02 | 0.04034407 | 0.03416005 | 5.21E-02 | 0.011844248 |
| 71 | 6.63E-02 | 6.28E-02 | 7.34E-02 | 0.04131393 | 0.03516075 | 5.58E-02 | 0.01404355 |
| 72 | 7.47E-02 | 6.97E-02 | 7.93E-02 | 0.04268333 | 0.03663635 | 6.06E-02 | 0.016747014 |

(continued)

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 73 | 8.51E-02 | 7.82E-02 | 8.66E-02 | 0.04458982 | 0.03871829 | 6.67E-02 | 0.01999837 |
| 74 | 9.80E-02 | 8.86E-02 | 9.57E-02 | 0.04718397 | 0.04155439 | 7.42E-02 | 0.023866939 |
| 75 | 0.11353 | 0.10106 | 0.10682 | 0.05062131 | 0.045352 | 8.35E-02 | 0.028392006 |
| 76 | 0.13217 | 0.11604 | 0.12021 | 0.0551308 | 0.05029157 | 9.48E-02 | 0.033645831 |
| 77 | 0.15394 | 0.1336 | 0.13614 | 0.06115127 | 0.05656556 | 1.08E-01 | 0.039536761 |
| 78 | 0.17897 | 0.15395 | 0.15496 | 0.06938271 | 0.06448905 | 1.24E-01 | 0.045931578 |
| 79 | 0.20708 | 0.17707 | 0.1765 | 0.08014104 | 0.07427791 | 1.43E-01 | 0.052643452 |
| 80 | 0.23821 | 0.20308 | 0.20063 | 0.09334293 | 0.08606129 | 1.64E-01 | 0.059650187 |
| 81 | 0.27161 | 0.23155 | 0.22708 | 0.10875 | 0.1001 | 1.88E-01 | 0.0667144 |
| 82 | 0.30653 | 0.26206 | 0.25573 | 0.12635 | 0.11657 | 2.13E-01 | 0.0735904 |
| 83 | 0.34205 | 0.29398 | 0.28592 | 0.14651 | 0.13546 | 2.41E-01 | 0.0798392 |
| 84 | 0.37727 | 0.32675 | 0.31689 | 0.16987 | 0.15697 | 2.70E-01 | 0.084904 |
| 85 | 0.41096 | 0.35959 | 0.3479 | 0.1964 | 0.18124 | 2.99E-01 | 0.0883184 |
| 86 | 0.44184 | 0.39161 | 0.37814 | 0.22564 | 0.20796 | 3.29E-01 | 0.0897904 |
| 87 | 0.46912 | 0.42175 | 0.40663 | 0.25722 | 0.23682 | 3.58E-01 | 0.0890304 |
| 88 | 0.49188 | 0.44895 | 0.43229 | 0.29064 | 0.26759 | 3.86E-01 | 0.085724 |
| 89 | 0.50967 | 0.47262 | 0.45465 | 0.32523 | 0.29965 | 4.12E-01 | 0.0799392 |
| 90 | 0.5221 | 0.49215 | 0.47304 | 0.36041 | 0.33236 | 4.36E-01 | 0.0717016 |
| 91 | 0.52964 | 0.50743 | 0.48715 | 0.39554 | 0.36513 | 4.57E-01 | 0.0613144 |
| 92 | 0.53248 | 0.51815 | 0.49678 | 0.42967 | 0.39723 | 4.75E-01 | 0.0491296 |
| 93 | 0.53137 | 0.52446 | 0.50259 | 0.4617 | 0.42784 | 4.90E-01 | 0.0358576 |
| 94 | 0.52698 | 0.52661 | 0.50495 | 0.4906 | 0.45606 | 5.01E-01 | 0.022168 |
| 95 | 0.52008 | 0.52523 | 0.50456 | 0.51584 | 0.48137 | 5.09E-01 | 0.0131608 |
| 96 | 0.51115 | 0.52077 | 0.50195 | 0.53675 | 0.50316 | 5.15E-01 | 0.0112032 |
| 97 | 0.50088 | 0.51381 | 0.49766 | 0.55255 | 0.52075 | 5.17E-01 | 0.015616 |
| 98 | 0.48973 | 0.50479 | 0.49202 | 0.56342 | 0.53421 | 5.17E-01 | 0.0255848 |
| 99 | 0.47778 | 0.49406 | 0.48536 | 0.56963 | 0.54376 | 5.14E-01 | 0.0340616 |
| 100 | 0.46505 | 0.48192 | 0.47794 | 0.57112 | 0.54932 | 5.09E-01 | 0.04092 |
| 101 | 0.4516 | 0.46858 | 0.46993 | 0.5684 | 0.55116 | 5.02E-01 | 0.0462768 |
| 102 | 0.43747 | 0.45424 | 0.46135 | 0.56222 | 0.54981 | 4.93E-01 | 0.0503976 |
| 103 | 0.42268 | 0.43903 | 0.45214 | 0.55308 | 0.54561 | 4.83E-01 | 0.0534696 |
| 104 | 0.40731 | 0.42307 | 0.44203 | 0.54149 | 0.53895 | 4.71E-01 | 0.05572 |
| 105 | 0.39144 | 0.40645 | 0.43097 | 0.52811 | 0.53034 | 4.57E-01 | 0.0574104 |
| 106 | 0.37517 | 0.38925 | 0.41906 | 0.51347 | 0.52011 | 4.43E-01 | 0.0587024 |
| 107 | 0.35859 | 0.37156 | 0.40633 | 0.49797 | 0.5085 | 4.29E-01 | 0.059716 |
| 108 | 0.34187 | 0.35382 | 0.39262 | 0.48187 | 0.4958 | 4.13E-01 | 0.0605112 |
| 109 | 0.32522 | 0.33645 | 0.37802 | 0.46541 | 0.48221 | 3.97E-01 | 0.0610784 |
| 110 | 0.30881 | 0.31955 | 0.36297 | 0.44876 | 0.46786 | 3.82E-01 | 0.061376 |

(continued)

| ##Temp./>C | tan d(1.000 Hz) | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|---|
| 111 | 0.29287 | 0.3032 | 0.34779 | 0.43204 | 0.453 | 3.66E-01 | 0.061392 |
| 112 | 0.27761 | 0.28742 | 0.33277 | 0.41538 | 0.43783 | 3.50E-01 | 0.0611224 |
| 113 | 0.26322 | 0.27239 | 0.31808 | 0.39887 | 0.4225 | 3.35E-01 | 0.0605384 |
| 114 | 0.24973 | 0.25847 | 0.30386 | 0.38257 | 0.40715 | 3.20E-01 | 0.0596032 |
| 115 | 0.23724 | 0.24579 | 0.29026 | 0.36657 | 0.39184 | 3.06E-01 | 0.058292 |
| 116 | 0.22588 | 0.2342 | 0.27746 | 0.35093 | 0.3767 | 2.93E-01 | 0.0566248 |
| 117 | 0.2157 | 0.22367 | 0.26562 | 0.33566 | 0.36182 | 2.80E-01 | 0.0545968 |

Table 34 - Results da tangent delta (tan d) for sample 1020/3 in triplicate:

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 35 | 3.07E-02 | 2.91E-02 | 3.22E-02 | 3.07E-02 | 0.001048971 |
| 36 | 3.07E-02 | 2.91E-02 | 3.22E-02 | 3.06E-02 | 0.001055598 |
| 37 | 3.06E-02 | 2.90E-02 | 3.22E-02 | 3.06E-02 | 0.00105852 |
| 38 | 3.06E-02 | 2.90E-02 | 3.21E-02 | 3.06E-02 | 0.001057869 |
| 39 | 3.06E-02 | 2.90E-02 | 3.21E-02 | 3.06E-02 | 0.001057198 |
| 40 | 3.05E-02 | 2.90E-02 | 3.21E-02 | 3.05E-02 | 0.001069533 |
| 41 | 3.05E-02 | 2.90E-02 | 3.22E-02 | 3.05E-02 | 0.00108368 |
| 42 | 3.04E-02 | 2.90E-02 | 3.22E-02 | 3.05E-02 | 0.001101336 |
| 43 | 3.04E-02 | 2.90E-02 | 3.22E-02 | 3.05E-02 | 0.001123167 |
| 44 | 3.04E-02 | 2.90E-02 | 3.23E-02 | 3.05E-02 | 0.001150049 |
| 45 | 3.04E-02 | 2.89E-02 | 3.23E-02 | 3.06E-02 | 0.001182784 |
| 46 | 3.04E-02 | 2.89E-02 | 3.24E-02 | 3.06E-02 | 0.001220427 |
| 47 | 3.04E-02 | 2.90E-02 | 3.25E-02 | 3.06E-02 | 0.001261936 |
| 48 | 3.04E-02 | 2.90E-02 | 3.26E-02 | 3.07E-02 | 0.001306616 |
| 49 | 3.04E-02 | 2.90E-02 | 3.27E-02 | 3.07E-02 | 0.00135376 |
| 50 | 3.04E-02 | 2.90E-02 | 3.29E-02 | 3.08E-02 | 0.001402969 |
| 51 | 3.05E-02 | 2.91E-02 | 3.30E-02 | 3.09E-02 | 0.001454087 |
| 52 | 3.05E-02 | 2.91E-02 | 3.32E-02 | 3.09E-02 | 0.001506676 |
| 53 | 3.05E-02 | 2.92E-02 | 3.34E-02 | 3.10E-02 | 0.001560009 |
| 54 | 3.06E-02 | 2.93E-02 | 3.36E-02 | 3.11E-02 | 0.001613271 |
| 55 | 3.06E-02 | 2.94E-02 | 3.38E-02 | 3.13E-02 | 0.001665433 |
| 56 | 3.07E-02 | 2.95E-02 | 3.39E-02 | 3.14E-02 | 0.001715407 |
| 57 | 3.07E-02 | 2.97E-02 | 3.41E-02 | 3.15E-02 | 0.00176226 |
| 58 | 3.07E-02 | 2.98E-02 | 3.43E-02 | 3.16E-02 | 0.001806387 |
| 59 | 3.08E-02 | 3.00E-02 | 3.45E-02 | 3.18E-02 | 0.001848069 |
| 60 | 3.08E-02 | 3.02E-02 | 3.47E-02 | 3.19E-02 | 0.001887013 |
| 61 | 3.08E-02 | 3.04E-02 | 3.49E-02 | 3.20E-02 | 0.001922829 |
| 62 | 3.08E-02 | 3.07E-02 | 3.51E-02 | 3.22E-02 | 0.001954609 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 63 | 3.07E-02 | 3.09E-02 | 3.53E-02 | 3.23E-02 | 0.001980442 |
| 64 | 3.07E-02 | 3.12E-02 | 3.55E-02 | 3.25E-02 | 0.002000442 |
| 65 | 3.07E-02 | 3.15E-02 | 3.56E-02 | 3.26E-02 | 0.002017551 |
| 66 | 3.06E-02 | 3.18E-02 | 3.58E-02 | 3.27E-02 | 0.002032673 |
| 67 | 3.06E-02 | 3.22E-02 | 3.60E-02 | 3.29E-02 | 0.002046382 |
| 68 | 3.06E-02 | 3.26E-02 | 3.62E-02 | 3.31E-02 | 0.002063736 |
| 69 | 3.06E-02 | 3.31E-02 | 3.66E-02 | 3.34E-02 | 0.00209038 |
| 70 | 3.08E-02 | 3.38E-02 | 3.71E-02 | 3.39E-02 | 0.002130211 |
| 71 | 3.10E-02 | 3.47E-02 | 3.78E-02 | 3.45E-02 | 0.002298307 |
| 72 | 3.15E-02 | 3.58E-02 | 3.88E-02 | 3.54E-02 | 0.002575062 |
| 73 | 3.22E-02 | 3.73E-02 | 4.02E-02 | 3.66E-02 | 0.002912007 |
| 74 | 3.33E-02 | 3.93E-02 | 4.22E-02 | 3.83E-02 | 0.003321658 |
| 75 | 3.48E-02 | 4.19E-02 | 4.49E-02 | 4.05E-02 | 0.003821002 |
| 76 | 3.69E-02 | 4.52E-02 | 4.85E-02 | 4.35E-02 | 0.004425756 |
| 77 | 3.97E-02 | 4.94E-02 | 5.31E-02 | 4.74E-02 | 0.005157982 |
| 78 | 4.33E-02 | 5.48E-02 | 5.91E-02 | 5.24E-02 | 0.006048922 |
| 79 | 4.80E-02 | 6.14E-02 | 6.67E-02 | 5.87E-02 | 0.007117342 |
| 80 | 5.39E-02 | 6.95E-02 | 7.61E-02 | 6.65E-02 | 0.008396853 |
| 81 | 6.11E-02 | 7.94E-02 | 8.75E-02 | 7.60E-02 | 0.009937033 |
| 82 | 6.99E-02 | 9.14E-02 | 0.10134 | 8.75E-02 | 0.011740333 |
| 83 | 8.05E-02 | 0.10545 | 0.11766 | 1.01E-01 | 0.013814178 |
| 84 | 9.29E-02 | 0.12196 | 0.13655 | 1.17E-01 | 0.016178391 |
| 85 | 0.10737 | 0.14091 | 0.15829 | 1.36E-01 | 0.018768889 |
| 86 | 0.12418 | 0.16239 | 0.18292 | 1.56E-01 | 0.021544444 |
| 87 | 0.14318 | 0.1866 | 0.21011 | 1.80E-01 | 0.024522222 |
| 88 | 0.16439 | 0.21323 | 0.23969 | 2.06E-01 | 0.027586667 |
| 89 | 0.1878 | 0.2419 | 0.27141 | 2.34E-01 | 0.030602222 |
| 90 | 0.21306 | 0.27233 | 0.30461 | 2.63E-01 | 0.033515556 |
| 91 | 0.23991 | 0.30394 | 0.33871 | 2.94E-01 | 0.036184444 |
| 92 | 0.26815 | 0.33607 | 0.37312 | 3.26E-01 | 0.03842 |
| 93 | 0.29728 | 0.36808 | 0.40702 | 3.57E-01 | 0.04012 |
| 94 | 0.3267 | 0.39923 | 0.43945 | 3.88E-01 | 0.041173333 |
| 95 | 0.35583 | 0.4286 | 0.46938 | 4.18E-01 | 0.041404444 |
| 96 | 0.38413 | 0.45524 | 0.49617 | 4.45E-01 | 0.0407 |
| 97 | 0.41095 | 0.4787 | 0.51911 | 4.70E-01 | 0.039091111 |
| 98 | 0.4356 | 0.49849 | 0.53731 | 4.90E-01 | 0.036577778 |
| 99 | 0.45767 | 0.51403 | 0.55059 | 5.07E-01 | 0.033173333 |
| 100 | 0.477 | 0.52555 | 0.55919 | 5.21E-01 | 0.029053333 |
| 101 | 0.49319 | 0.53326 | 0.56301 | 5.30E-01 | 0.02442 |

(continued)

| ##Temp./>C | tan d(1.000 Hz) | tan d(1.000 Hz) | tan d(1.000 Hz) | DE'(1.000 Hz)/MPa | Mean Deviation |
|---|---|---|---|---|---|
| 102 | 0.50599 | 0.53717 | 0.56233 | 5.35E-01 | 0.019448889 |
| 103 | 0.51567 | 0.53784 | 0.55793 | 5.37E-01 | 0.014317778 |
| 104 | 0.52236 | 0.53581 | 0.55033 | 5.36E-01 | 0.009442222 |
| 105 | 0.52607 | 0.53145 | 0.54 | 5.33E-01 | 0.004995556 |
| 106 | 0.52711 | 0.52528 | 0.52764 | 5.27E-01 | 0.000931111 |
| 107 | 0.52586 | 0.51772 | 0.51378 | 5.19E-01 | 0.004493333 |
| 108 | 0.52252 | 0.50905 | 0.49882 | 5.10E-01 | 0.00826 |
| 109 | 0.51736 | 0.4995 | 0.4831 | 5.00E-01 | 0.011582222 |
| 110 | 0.51067 | 0.48921 | 0.46692 | 4.89E-01 | 0.014675556 |
| 111 | 0.50264 | 0.4783 | 0.45049 | 4.77E-01 | 0.017768889 |
| 112 | 0.49342 | 0.46694 | 0.43399 | 4.65E-01 | 0.020528889 |
| 113 | 0.48324 | 0.45526 | 0.41755 | 4.52E-01 | 0.022977778 |
| 114 | 0.47228 | 0.44335 | 0.40129 | 4.39E-01 | 0.025122222 |
| 115 | 0.4607 | 0.43126 | 0.38524 | 4.26E-01 | 0.026995556 |
| 116 | 0.44864 | 0.41902 | 0.36942 | 4.12E-01 | 0.028626667 |
| 117 | 0.43624 | 0.40669 | 0.35386 | 3.99E-01 | 0.030046667 |

**Table 35** - Results da tangent delta (tan d) for sample 1020/2 in quadruplicate:

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 35 | 0.04011458 | 0.04063032 | 0.03824666 | 0.03547816 | 0.03861743 | 0.00175502 |
| 36 | 0.0401323 | 0.04061272 | 0.03820045 | 0.03536364 | 0.038577278 | 0.001795233 |
| 37 | 0.04015087 | 0.04061335 | 0.03816642 | 0.03526623 | 0.038549218 | 0.001832893 |
| 38 | 0.04016968 | 0.04063183 | 0.03814367 | 0.03518635 | 0.038532883 | 0.001867873 |
| 39 | 0.04018934 | 0.04066722 | 0.03813227 | 0.03512975 | 0.038529645 | 0.001898635 |
| 40 | 0.04021158 | 0.04071786 | 0.03813384 | 0.03510091 | 0.038541048 | 0.001923673 |
| 41 | 0.04023962 | 0.04078157 | 0.03814827 | 0.03510075 | 0.038567553 | 0.001943043 |
| 42 | 0.04027821 | 0.04085613 | 0.03817508 | 0.03513337 | 0.038610698 | 0.001956473 |
| 43 | 0.04032826 | 0.04094024 | 0.03821199 | 0.03519825 | 0.038669685 | 0.001964565 |
| 44 | 0.04038848 | 0.04103433 | 0.03825772 | 0.03529666 | 0.038744298 | 0.001967108 |
| 45 | 0.04046006 | 0.04113997 | 0.03831212 | 0.0354264 | 0.038834638 | 0.001965378 |
| 46 | 0.04054692 | 0.0412594 | 0.03837624 | 0.03558599 | 0.038942138 | 0.001961023 |
| 47 | 0.04065419 | 0.04139459 | 0.03845203 | 0.03577259 | 0.03906835 | 0.00195604 |
| 48 | 0.04078947 | 0.04154885 | 0.03854322 | 0.03598605 | 0.039216898 | 0.001952263 |
| 49 | 0.04095949 | 0.04172426 | 0.03865171 | 0.03622381 | 0.039389818 | 0.001952058 |
| 50 | 0.04117139 | 0.0419231 | 0.03877959 | 0.03648415 | 0.039589558 | 0.001957688 |
| 51 | 0.04142988 | 0.04214776 | 0.03892974 | 0.0367652 | 0.039818145 | 0.001970675 |
| 52 | 0.04174184 | 0.04240251 | 0.03910805 | 0.03706679 | 0.040079798 | 0.001992378 |
| 53 | 0.04211522 | 0.04268678 | 0.03931886 | 0.03739406 | 0.04037873 | 0.00202227 |
| 54 | 0.04256221 | 0.04299985 | 0.03956687 | 0.03775802 | 0.040721738 | 0.002059293 |

(continued)

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 55 | 0.0430921 | 0.04334089 | 0.03985469 | 0.03816269 | 0.041112593 | 0.002103903 |
| 56 | 0.04371944 | 0.04371139 | 0.04018311 | 0.03860945 | 0.041555848 | 0.002159568 |
| 57 | 0.04444846 | 0.04411445 | 0.04055338 | 0.03910161 | 0.042054475 | 0.00222698 |
| 58 | 0.04528151 | 0.04455749 | 0.040968 | 0.03964841 | 0.042613853 | 0.002305648 |
| 59 | 0.04621945 | 0.04504348 | 0.04142889 | 0.04025809 | 0.043237478 | 0.002393988 |
| 60 | 0.04727161 | 0.04557632 | 0.04193707 | 0.04094363 | 0.043932158 | 0.002491808 |
| 61 | 0.04844 | 0.0461597 | 0.04249569 | 0.04170864 | 0.044701008 | 0.002598843 |
| 62 | 0.04973209 | 0.04680033 | 0.04311206 | 0.04256016 | 0.04555116 | 0.00271505 |
| 63 | 0.05114786 | 0.0474871 | 0.04378744 | 0.04351165 | 0.046483513 | 0.002833968 |
| 64 | 0.05269417 | 0.04821067 | 0.04451304 | 0.04459046 | 0.047502085 | 0.002950335 |
| 65 | 0.05438281 | 0.04898738 | 0.04529212 | 0.04583183 | 0.048623535 | 0.00306156 |
| 66 | 0.05624277 | 0.04984453 | 0.04614365 | 0.0472954 | 0.049881588 | 0.003180591 |
| 67 | 0.05828357 | 0.05078796 | 0.04708323 | 0.04903754 | 0.051298075 | 0.003492748 |
| 68 | 0.06051821 | 0.05182762 | 0.0481281 | 0.05114078 | 0.052903678 | 0.003807266 |
| 69 | 0.06300116 | 0.05299259 | 0.04931286 | 0.05371938 | 0.054756498 | 0.004122331 |
| 70 | 0.06583918 | 0.0543318 | 0.0507021 | 0.05694988 | 0.05695574 | 0.00444172 |
| 71 | 0.06910698 | 0.05589955 | 0.05235492 | 0.0610014 | 0.059590713 | 0.005463478 |
| 72 | 0.07289603 | 0.05777979 | 0.05434151 | 0.06611141 | 0.062782185 | 0.006721535 |
| 73 | 0.0773427 | 0.06010444 | 0.05676534 | 0.07256833 | 0.066695203 | 0.008260313 |
| 74 | 0.08268 | 0.0630537 | 0.05980028 | 0.08072366 | 0.07156441 | 0.01013742 |
| 75 | 0.08905676 | 0.06679214 | 0.06359634 | 0.09068824 | 0.07753337 | 0.01233913 |
| 76 | 0.09666101 | 0.07153145 | 0.06835135 | 0.10266 | 0.084800953 | 0.014859553 |
| 77 | 0.10574 | 0.0775836 | 0.07432171 | 0.11721 | 0.093713828 | 0.017761173 |
| 78 | 0.11672 | 0.08533987 | 0.08186726 | 0.13492 | 0.104711783 | 0.021108218 |
| 79 | 0.12968 | 0.09503668 | 0.09118502 | 0.15578 | 0.117920425 | 0.024809575 |
| 80 | 0.14468 | 0.10696 | 0.10257 | 0.17974 | 0.1334875 | 0.0287225 |
| 81 | 0.16194 | 0.12148 | 0.1166 | 0.20695 | 0.1517425 | 0.0327025 |
| 82 | 0.18193 | 0.13902 | 0.13395 | 0.23751 | 0.1731025 | 0.0366175 |
| 83 | 0.20447 | 0.15952 | 0.1541 | 0.27144 | 0.1973825 | 0.0405725 |
| 84 | 0.22932 | 0.18303 | 0.17663 | 0.30831 | 0.2243225 | 0.0444925 |
| 85 | 0.2561 | 0.20997 | 0.20213 | 0.3472 | 0.25385 | 0.0478 |
| 86 | 0.28445 | 0.24082 | 0.23113 | 0.38726 | 0.285915 | 0.0506725 |
| 87 | 0.3136 | 0.27385 | 0.26236 | 0.42763 | 0.31936 | 0.054135 |
| 88 | 0.34275 | 0.3075 | 0.29476 | 0.46705 | 0.353015 | 0.0570175 |
| 89 | 0.3709 | 0.34204 | 0.32806 | 0.50375 | 0.3861875 | 0.05878125 |
| 90 | 0.39714 | 0.37782 | 0.36185 | 0.53664 | 0.4183625 | 0.05913875 |
| 91 | 0.42053 | 0.41414 | 0.39521 | 0.56487 | 0.4486875 | 0.05809125 |
| 92 | 0.44024 | 0.44963 | 0.42714 | 0.58755 | 0.47614 | 0.055705 |
| 93 | 0.45555 | 0.48165 | 0.45642 | 0.60387 | 0.4993725 | 0.05224875 |

(continued)

| ##Temp./>C | tan d(1.000 Hz) | tan d(1.000 Hz) | tan d(1.000 Hz) | tan d(1.000 Hz) | DE'(1.000 Hz)/MPa | Mean Deviation |
|---|---|---|---|---|---|---|
| 94 | 0.46617 | 0.50878 | 0.48218 | 0.61383 | 0.51774 | 0.048045 |
| 95 | 0.47202 | 0.53134 | 0.50384 | 0.61794 | 0.531285 | 0.043355 |
| 96 | 0.47342 | 0.54888 | 0.52082 | 0.61644 | 0.53989 | 0.04277 |
| 97 | 0.47089 | 0.56076 | 0.5329 | 0.61008 | 0.5436575 | 0.0417625 |
| 98 | 0.46502 | 0.56645 | 0.53993 | 0.5994 | 0.5427 | 0.040225 |
| 99 | 0.45656 | 0.56653 | 0.5423 | 0.58518 | 0.5376425 | 0.04054125 |
| 100 | 0.44618 | 0.56191 | 0.54008 | 0.5679 | 0.5290175 | 0.04141875 |
| 101 | 0.43451 | 0.55328 | 0.53401 | 0.54833 | 0.5175325 | 0.04151125 |
| 102 | 0.42207 | 0.54055 | 0.52481 | 0.52704 | 0.5036175 | 0.04077375 |
| 103 | 0.40941 | 0.52474 | 0.51306 | 0.50441 | 0.487905 | 0.0392475 |
| 104 | 0.39694 | 0.50702 | 0.49895 | 0.48071 | 0.470905 | 0.0369825 |
| 105 | 0.38506 | 0.48802 | 0.48314 | 0.45663 | 0.4532125 | 0.03407625 |
| 106 | 0.37378 | 0.46812 | 0.46627 | 0.43287 | 0.43526 | 0.031935 |
| 107 | 0.36293 | 0.44762 | 0.44872 | 0.40964 | 0.4172275 | 0.0309425 |
| 108 | 0.35245 | 0.42683 | 0.43069 | 0.38713 | 0.399275 | 0.029485 |
| 109 | 0.34235 | 0.40614 | 0.4124 | 0.36544 | 0.3815825 | 0.0276875 |
| 110 | 0.33263 | 0.38595 | 0.394 | 0.34471 | 0.3643225 | 0.0256525 |
| 111 | 0.32325 | 0.3666 | 0.37547 | 0.32504 | 0.34759 | 0.023445 |
| 112 | 0.31413 | 0.34834 | 0.35681 | 0.30654 | 0.331455 | 0.02112 |
| 113 | 0.30511 | 0.3309 | 0.3385 | 0.28934 | 0.3159625 | 0.0187375 |
| 114 | 0.29612 | 0.31415 | 0.32107 | 0.27358 | 0.30123 | 0.01638 |
| 115 | 0.28717 | 0.29847 | 0.30443 | 0.25915 | 0.287305 | 0.014145 |
| 116 | 0.27827 | 0.28426 | 0.28836 | 0.2459 | 0.2741975 | 0.01414875 |
| 117 | 0.26948 | 0.27145 | 0.27281 | 0.23378 | 0.26188 | 0.01405 |

## Example 11 - Data comparison for tangent delta (tan d)

Tables 36 and 37 below show a comparison of tangent delta mean data for each sample described in example 8:

**Table 36** - Data comparison for the mean tangent delta (tan d):

| ##Temp./>C | DE' 1020/1/MPa | DE' 1020/2/MPa | DE' 1020/3/MPa | DE' 1020/4/MPa |
|---|---|---|---|---|
| 35 | 0.03521481 | 0.03861743 | 0.030674506667 | 0.032626477 |
| 36 | 0.03516686 | 0.038577278 | 0.030637126667 | 0.032659443 |
| 37 | 0.03513004 | 0.038549218 | 0.030604680000 | 0.03267393 |
| 38 | 0.035102807 | 0.038532883 | 0.030576933333 | 0.03268098 |
| 39 | 0.03508427 | 0.038529645 | 0.030554783333 | 0.032684487 |
| 40 | 0.035074657 | 0.038541048 | 0.030539020000 | 0.03270091 |
| 41 | 0.035074937 | 0.038567553 | 0.030529590000 | 0.03275241 |
| 42 | 0.0350873 | 0.038610698 | 0.030526106667 | 0.032836337 |
| 43 | 0.03511356 | 0.038669685 | 0.030528650000 | 0.03295802 |

(continued)

| ##Temp./>C | DE' 1020/1/MPa | DE' 1020/2/MPa | DE' 1020/3/MPa | DE' 1020/4/MPa |
|---|---|---|---|---|
| 44 | 0.035156763 | 0.038744298 | 0.030538096667 | 0.033118353 |
| 45 | 0.03521879 | 0.038834638 | 0.030555133333 | 0.0332908 |
| 46 | 0.035302123 | 0.038942138 | 0.030580280000 | 0.033461927 |
| 47 | 0.035407773 | 0.03906835 | 0.030614696667 | 0.033623067 |
| 48 | 0.035536933 | 0.039216898 | 0.030659476667 | 0.03380021 |
| 49 | 0.03569178 | 0.039389818 | 0.030714550000 | 0.0340185 |
| 50 | 0.035874497 | 0.039589558 | 0.030780206667 | 0.03428044 |
| 51 | 0.03608455 | 0.039818145 | 0.030857080000 | 0.034563467 |
| 52 | 0.036320833 | 0.040079798 | 0.030944026667 | 0.034869197 |
| 53 | 0.03658352 | 0.04037873 | 0.031039816667 | 0.035207783 |
| 54 | 0.03687522 | 0.040721738 | 0.031144083333 | 0.035604503 |
| 55 | 0.037199413 | 0.041112593 | 0.031256520000 | 0.036070427 |
| 56 | 0.037560657 | 0.041555848 | 0.031376810000 | 0.03660643 |
| 57 | 0.037962897 | 0.042054475 | 0.031504720000 | 0.03720936 |
| 58 | 0.038408117 | 0.042613853 | 0.031637980000 | 0.037904467 |
| 59 | 0.03890459 | 0.043237478 | 0.031774216667 | 0.03870148 |
| 60 | 0.03947115 | 0.043932158 | 0.031911820000 | 0.039610283 |
| 61 | 0.04012843 | 0.044701008 | 0.032049136667 | 0.040666057 |
| 62 | 0.040894123 | 0.04555116 | 0.032184686667 | 0.041932933 |
| 63 | 0.04179799 | 0.046483513 | 0.032317906667 | 0.04347384 |
| 64 | 0.042896567 | 0.047502085 | 0.032450326667 | 0.04532484 |
| 65 | 0.044259943 | 0.048623535 | 0.032586513333 | 0.047488897 |
| 66 | 0.045971297 | 0.049881588 | 0.032734780000 | 0.050006497 |
| 67 | 0.048125073 | 0.051298075 | 0.032910696667 | 0.052961593 |
| 68 | 0.050818007 | 0.052903678 | 0.033137556667 | 0.056467247 |
| 69 | 0.054177717 | 0.054756498 | 0.033444670000 | 0.06068151 |
| 70 | 0.058436197 | 0.05695574 | 0.033875363333 | 0.06580673 |
| 71 | 0.06383193 | 0.059590713 | 0.034490440000 | 0.071902943 |
| 72 | 0.070659203 | 0.062782185 | 0.035366903333 | 0.0791881 |
| 73 | 0.079163697 | 0.066695203 | 0.036590910000 | 0.08811975 |
| 74 | 0.08955242 | 0.07156441 | 0.038266716667 | 0.099109707 |
| 75 | 0.102073157 | 0.07753337 | 0.040532093333 | 0.112661803 |
| 76 | 0.117173333 | 0.084800953 | 0.043529933333 | 0.129326667 |
| 77 | 0.135236667 | 0.093713828 | 0.047408763333 | 0.149476667 |
| 78 | 0.156593333 | 0.104711783 | 0.052381533333 | 0.173306667 |
| 79 | 0.18113 | 0.117920425 | 0.058681083333 | 0.201126667 |
| 80 | 0.208953333 | 0.1334875 | 0.066484720000 | 0.233506667 |
| 81 | 0.240293333 | 0.1517425 | 0.076025680000 | 0.270596667 |
| 82 | 0.274986667 | 0.1731025 | 0.087547520000 | 0.312226667 |

(continued)

| ##Temp./>C | DE' 1020/1/MPa | DE' 1020/2/MPa | DE' 1020/3/MPa | DE' 1020/4/MPa |
|---|---|---|---|---|
| 83 | 0.31222 | 0.1973825 | 0.101194366667 | 0.357506667 |
| 84 | 0.35151 | 0.2243225 | 0.117121206667 | 0.404963333 |
| 85 | 0.39163 | 0.25385 | 0.135523333333 | 0.453966667 |
| 86 | 0.431163333 | 0.285915 | 0.156496666667 | 0.503966667 |
| 87 | 0.469366667 | 0.31936 | 0.179963333333 | 0.552616667 |
| 88 | 0.505213333 | 0.353015 | 0.205770000000 | 0.59635 |
| 89 | 0.537083333 | 0.3861875 | 0.233703333333 | 0.633986667 |
| 90 | 0.563453333 | 0.4183625 | 0.263333333333 | 0.664246667 |
| 91 | 0.58388 | 0.4486875 | 0.294186666667 | 0.685023333 |
| 92 | 0.59829 | 0.47614 | 0.325780000000 | 0.695966667 |
| 93 | 0.60668 | 0.4993725 | 0.357460000000 | 0.697026667 |
| 94 | 0.608946667 | 0.51774 | 0.388460000000 | 0.689356667 |
| 95 | 0.605603333 | 0.531285 | 0.417936666667 | 0.674403333 |
| 96 | 0.59752 | 0.53989 | 0.445180000000 | 0.654476667 |
| 97 | 0.585586667 | 0.5436575 | 0.469586666667 | 0.631476667 |
| 98 | 0.57052 | 0.5427 | 0.490466666667 | 0.607743333 |
| 99 | 0.55297 | 0.5376425 | 0.507430000000 | 0.584813333 |
| 100 | 0.533673333 | 0.5290175 | 0.520580000000 | 0.56265 |
| 101 | 0.512976667 | 0.5175325 | 0.529820000000 | 0.541223333 |
| 102 | 0.490946667 | 0.5036175 | 0.535163333333 | 0.520543333 |
| 103 | 0.46806 | 0.487905 | 0.537146666667 | 0.50014 |
| 104 | 0.445313333 | 0.470905 | 0.536166666667 | 0.47959 |
| 105 | 0.423103333 | 0.4532125 | 0.532506666667 | 0.458856667 |
| 106 | 0.4013 | 0.43526 | 0.526676666667 | 0.437936667 |
| 107 | 0.379873333 | 0.4172275 | 0.519120000000 | 0.41688 |
| 108 | 0.35884 | 0.399275 | 0.510130000000 | 0.395793333 |
| 109 | 0.33814 | 0.3815825 | 0.499986666667 | 0.375146667 |
| 110 | 0.317956667 | 0.3643225 | 0.488933333333 | 0.355403333 |
| 111 | 0.29883 | 0.34759 | 0.477143333333 | 0.33648 |
| 112 | 0.281043333 | 0.331455 | 0.464783333333 | 0.318446667 |
| 113 | 0.264476667 | 0.3159625 | 0.452016666667 | 0.301376667 |
| 114 | 0.248856667 | 0.30123 | 0.438973333333 | 0.285006667 |
| 115 | 0.234163333 | 0.287305 | 0.425733333333 | 0.26951 |
| 116 | 0.22045 | 0.2741975 | 0.412360000000 | 0.2555 |
| 117 | 0.20788 | 0.26188 | 0.398930000000 | 0.243206667 |

**Table 37** - Data comparison for the mean tangent delta (tan d):

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 35 | 0.033790118 | 0.036339042 | 0.032448387 | 0.037798843 | 0.08158324 |

(continued)

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 36 | 0.03375084 | 0.036297782 | 0.032447917 | 0.037809337 | 0.083457087 |
| 37 | 0.033723864 | 0.03626088 | 0.03244498 | 0.037831183 | 0.085560643 |
| 38 | 0.033707842 | 0.03622901 | 0.032434787 | 0.037865603 | 0.087888897 |
| 39 | 0.033703842 | 0.03620368 | 0.03241342 | 0.03791319 | 0.090470587 |
| 40 | 0.033713454 | 0.036186596 | 0.032390777 | 0.037974727 | 0.093335747 |
| 41 | 0.033737608 | 0.036179384 | 0.032382117 | 0.038050267 | 0.096515837 |
| 42 | 0.033776738 | 0.03618395 | 0.03239749 | 0.03814004 | 0.10003975 |
| 43 | 0.033830878 | 0.036201608 | 0.032439917 | 0.038243217 | 0.10394947 |
| 44 | 0.033900384 | 0.036233796 | 0.032511137 | 0.038358457 | 0.108236667 |
| 45 | 0.033985688 | 0.036281468 | 0.03260905 | 0.038484737 | 0.112903333 |
| 46 | 0.034088414 | 0.036346 | 0.0327289 | 0.038621483 | 0.11803 |
| 47 | 0.03421031 | 0.0364294 | 0.03287191 | 0.038767837 | 0.123723333 |
| 48 | 0.034352752 | 0.036535214 | 0.03303542 | 0.038922737 | 0.13013 |
| 49 | 0.034517034 | 0.036665374 | 0.03321811 | 0.039082773 | 0.137486667 |
| 50 | 0.034702524 | 0.036821466 | 0.033433013 | 0.039242963 | 0.14606 |
| 51 | 0.034909904 | 0.037003304 | 0.033687597 | 0.039396647 | 0.1562 |
| 52 | 0.03514341 | 0.037210888 | 0.033975057 | 0.03953642 | 0.168373333 |
| 53 | 0.035409884 | 0.037444302 | 0.03428513 | 0.03965691 | 0.183246667 |
| 54 | 0.035711548 | 0.037703536 | 0.034607877 | 0.039756037 | 0.201656667 |
| 55 | 0.036051734 | 0.037986396 | 0.03495291 | 0.03983637 | 0.224856667 |
| 56 | 0.03643738 | 0.038292196 | 0.03536139 | 0.039909537 | 0.25402 |
| 57 | 0.03687517 | 0.038621018 | 0.035854057 | 0.03999579 | 0.29039 |
| 58 | 0.037367032 | 0.038974012 | 0.036429713 | 0.040133713 | 0.334673333 |
| 59 | 0.037918442 | 0.039353024 | 0.0370798 | 0.040378947 | 0.387706667 |
| 60 | 0.03854119 | 0.039764506 | 0.037788527 | 0.04081614 | 0.4502 |
| 61 | 0.039246866 | 0.04021794 | 0.03856133 | 0.041553453 | 0.52317 |
| 62 | 0.040040278 | 0.0407272 | 0.039423127 | 0.0427306 | 0.607043333 |
| 63 | 0.040938938 | 0.041310648 | 0.040405213 | 0.044530463 | 0.69904 |
| 64 | 0.04198412 | 0.042000376 | 0.0415503 | 0.047205573 | 0.796536667 |
| 65 | 0.043223704 | 0.04283945 | 0.042890203 | 0.051016303 | 0.898026667 |
| 66 | 0.044694538 | 0.043889622 | 0.044438937 | 0.056228853 | 1.00216 |
| 67 | 0.04644734 | 0.04522375 | 0.04623072 | 0.063179853 | 1.10488 |
| 68 | 0.048569914 | 0.046944272 | 0.048330243 | 0.072352027 | 1.20148 |
| 69 | 0.051171942 | 0.04916688 | 0.050857243 | 0.084000437 | 1.28843 |
| 70 | 0.054376274 | 0.05205737 | 0.053989273 | 0.098092027 | 1.361073333 |
| 71 | 0.058331306 | 0.055791778 | 0.057962417 | 0.114863333 | 1.41607 |
| 72 | 0.063292222 | 0.060593608 | 0.063044733 | 0.13488 | 1.452273333 |
| 73 | 0.06953869 | 0.066652018 | 0.06956694 | 0.158156667 | 1.469883333 |
| 74 | 0.077254426 | 0.074202854 | 0.0778719 | 0.183883333 | 1.467576667 |

(continued)

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 75 | 0.086598198 | 0.083476662 | 0.088444657 | 0.21162 | 1.44599 |
| 76 | 0.097928072 | 0.094768474 | 0.10184465 | 0.241353333 | 1.406853333 |
| 77 | 0.11165496 | 0.108279366 | 0.1187 | 0.272476667 | 1.353523333 |
| 78 | 0.128161008 | 0.124350352 | 0.139483333 | 0.30356 | 1.289663333 |
| 79 | 0.147417232 | 0.14301379 | 0.16447 | 0.333646667 | 1.217 |
| 80 | 0.169292 | 0.164264844 | 0.193716667 | 0.362266667 | 1.13438 |
| 81 | 0.194146 | 0.187818 | 0.2273 | 0.388546667 | 1.044346667 |
| 82 | 0.222578 | 0.213448 | 0.264876667 | 0.41142 | 0.958196667 |
| 83 | 0.254324 | 0.240784 | 0.305456667 | 0.430153333 | 0.8769 |
| 84 | 0.288284 | 0.26955 | 0.347656667 | 0.444443333 | 0.796503333 |
| 85 | 0.323828 | 0.299218 | 0.38967 | 0.454233333 | 0.716746667 |
| 86 | 0.36071 | 0.329038 | 0.429836667 | 0.459783333 | 0.641346667 |
| 87 | 0.398128 | 0.358308 | 0.46594 | 0.46157 | 0.572396667 |
| 88 | 0.434738 | 0.38627 | 0.495823333 | 0.460196667 | 0.50954 |
| 89 | 0.469462 | 0.412364 | 0.518023333 | 0.456306667 | 0.45204 |
| 90 | 0.50145 | 0.436012 | 0.53156 | 0.4507 | 0.400146667 |
| 91 | 0.52969 | 0.456978 | 0.5366 | 0.44408 | 0.35432 |
| 92 | 0.553422 | 0.474862 | 0.53395 | 0.436873333 | 0.31323 |
| 93 | 0.572152 | 0.489592 | 0.525396667 | 0.429416667 | 0.276183333 |
| 94 | 0.585944 | 0.50104 | 0.512873333 | 0.422103333 | 0.243016667 |
| 95 | 0.595194 | 0.509416 | 0.498433333 | 0.415363333 | 0.213566667 |
| 96 | 0.600012 | 0.514756 | 0.48335 | 0.409243333 | 0.186983333 |
| 97 | 0.600674 | 0.51713 | 0.468373333 | 0.403313333 | 0.163133333 |
| 98 | 0.5979 | 0.516834 | 0.453896667 | 0.397226667 | 0.143476667 |
| 99 | 0.592162 | 0.514118 | 0.44018 | 0.391076667 | 0.128631603 |
| 100 | 0.583724 | 0.50907 | 0.427263333 | 0.384906667 | 0.116837373 |
| 101 | 0.573064 | 0.501934 | 0.41495 | 0.378483333 | 0.106660497 |
| 102 | 0.560692 | 0.493018 | 0.403006667 | 0.371623333 | 0.097628357 |
| 103 | 0.54663 | 0.482508 | 0.391243333 | 0.364283333 | 0.08957721 |
| 104 | 0.531024 | 0.47057 | 0.379386667 | 0.356343333 | 0.08220359 |
| 105 | 0.514272 | 0.457462 | 0.367033333 | 0.347756667 | 0.075285947 |
| 106 | 0.496864 | 0.443412 | 0.354113333 | 0.33865 | 0.06821389 |
| 107 | 0.478948 | 0.42859 | 0.340613333 | 0.3293 | 0.060170327 |
| 108 | 0.460522 | 0.413196 | 0.326426667 | 0.31972 | 0.050681178 |
| 109 | 0.44156 | 0.397462 | 0.311693333 | 0.30958 | 0.039433603 |
| 110 | 0.422198 | 0.38159 | 0.29672 | 0.298966667 | 0.02679033 |
| 111 | 0.402516 | 0.36578 | 0.281823333 | 0.288513333 | 0.013413443 |
| 112 | 0.382674 | 0.350202 | 0.267276667 | 0.27825 | |
| 113 | 0.363046 | 0.335012 | 0.25334 | 0.267826667 | |

(continued)

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 114 | 0.343712 | 0.320356 | 0.240203333 | 0.2572 | |
| 115 | 0.324382 | 0.30634 | 0.228056667 | 0.246723333 | |
| 116 | 0.304822 | 0.293034 | 0.217163333 | 0.2367 | |
| 117 | 0.286516 | 0.280494 | 0.20764 | 0.22719 | |

**Example 12 - Data comparison for the storage modulus (E')**

Tables 38 and 39 below show a data comparison for the mean storage modulus for each sample described in example 8:

**Table 38** - Data comparison for the mean storage modulus (E'):

| ##Temp./>C | DE' 1020/1/MPa | DE' 1020/2/MPa | DE' 1020/3/MPa | DE' 1020/4/MPa |
|---|---|---|---|---|
| 35 | 638.8432867 | 537.5512675 | 397.31364 | 755.8503967 |
| 36 | 636.88053 | 535.627205 | 396.3696633 | 753.2401833 |
| 37 | 634.8336633 | 533.68353 | 395.3468267 | 750.7477867 |
| 38 | 632.7403633 | 531.7693425 | 394.2541733 | 748.02159 |
| 39 | 630.5451467 | 529.8157875 | 393.1008433 | 745.3238467 |
| 40 | 628.14985 | 527.7404375 | 391.8900167 | 742.6415667 |
| 41 | 625.6090133 | 525.541385 | 390.6204867 | 739.8037 |
| 42 | 623.0261833 | 523.2252325 | 389.2908167 | 736.8493633 |
| 43 | 620.3894833 | 520.7965075 | 387.9041733 | 733.6522233 |
| 44 | 617.6612533 | 518.2526325 | 386.4653633 | 730.2325233 |
| 45 | 614.90622 | 515.6312125 | 384.9810667 | 726.7217433 |
| 46 | 612.2285933 | 512.972995 | 383.4552833 | 723.1093233 |
| 47 | 609.57354 | 510.24256 | 381.8886633 | 719.4293767 |
| 48 | 606.76687 | 507.3793075 | 380.2819467 | 715.6920833 |
| 49 | 603.74827 | 504.4080575 | 378.63606 | 711.8476233 |
| 50 | 600.5739 | 501.3851875 | 376.9494667 | 707.88749 |
| 51 | 597.3069667 | 498.3073825 | 375.2194667 | 703.48809 |
| 52 | 593.97707 | 495.137425 | 373.4451567 | 699.1051467 |
| 53 | 590.61646 | 491.86418 | 371.6229533 | 695.1231867 |
| 54 | 587.2318667 | 488.4824975 | 369.7480233 | 690.7263667 |
| 55 | 583.7293433 | 484.9761125 | 367.8257267 | 686.08233 |
| 56 | 579.9964867 | 481.3171125 | 365.8636333 | 681.4710967 |
| 57 | 576.0801667 | 477.5059975 | 363.8646767 | 676.5975433 |
| 58 | 572.1150267 | 473.5452975 | 361.8268467 | 671.41639 |
| 59 | 568.0293533 | 469.418525 | 359.7492167 | 666.0242167 |
| 60 | 563.5987733 | 465.090415 | 357.62747 | 660.4516333 |
| 61 | 558.7772433 | 460.552055 | 355.44525 | 654.7478433 |
| 62 | 553.6830967 | 455.78478 | 353.1804633 | 648.627 |
| 63 | 548.33383 | 450.779795 | 350.8151133 | 641.7920367 |

(continued)

| ##Temp./>C | DE' 1020/1/MPa | DE' 1020/2/MPa | DE' 1020/3/MPa | DE' 1020/4/MPa |
|---|---|---|---|---|
| 64 | 542.6058033 | 445.526865 | 348.34327 | 634.4057233 |
| 65 | 536.3649633 | 439.9933175 | 345.7532333 | 626.5584933 |
| 66 | 529.4774833 | 434.12145 | 343.0279733 | 618.2026167 |
| 67 | 521.95841 | 427.99752 | 340.16195 | 609.2230867 |
| 68 | 514.03574 | 421.7264775 | 337.1499167 | 599.3657 |
| 69 | 505.6212933 | 415.2537725 | 333.9771533 | 588.54715 |
| 70 | 496.29812 | 408.4741875 | 330.6260033 | 576.6309367 |
| 71 | 486.00746 | 401.4076725 | 327.0700733 | 563.3276967 |
| 72 | 475.0284467 | 394.0914075 | 323.2715533 | 548.0872267 |
| 73 | 463.44988 | 386.487275 | 319.2168733 | 530.1991567 |
| 74 | 450.9863533 | 378.4765025 | 314.90144 | 509.5990833 |
| 75 | 436.8755733 | 369.9286475 | 310.3035867 | 486.9443333 |
| 76 | 420.2480433 | 360.63472 | 305.3994833 | 462.31145 |
| 77 | 400.13856 | 350.1523225 | 300.1578467 | 434.8514933 |
| 78 | 375.52146 | 337.90742 | 294.5166533 | 403.9932667 |
| 79 | 346.81649 | 323.538015 | 288.37539 | 369.0303333 |
| 80 | 315.17756 | 306.9795975 | 281.6117833 | 329.70108 |
| 81 | 282.5232333 | 288.464905 | 274.06024 | 289.18433 |
| 82 | 250.5265533 | 268.0937525 | 265.5184933 | 251.5468667 |
| 83 | 220.08564 | 246.6032225 | 255.7753733 | 218.1109933 |
| 84 | 191.4206133 | 224.5736375 | 244.5935733 | 188.5356667 |
| 85 | 164.6879167 | 202.2751675 | 231.7928867 | 161.64975 |
| 86 | 140.22574 | 179.9847575 | 217.3920833 | 136.86281 |
| 87 | 118.1368933 | 158.472115 | 201.5777867 | 114.6997533 |
| 88 | 98.68229 | 138.3531725 | 184.62884 | 96.10157 |
| 89 | 82.09401667 | 119.7897025 | 166.94827 | 80.67116 |
| 90 | 68.50536667 | 102.8745275 | 149.0869533 | 67.86608333 |
| 91 | 57.48179333 | 87.687325 | 131.5302167 | 57.46007 |
| 92 | 48.48446 | 74.3550525 | 114.7018233 | 48.94955 |
| 93 | 41.07860667 | 62.988425 | 98.90656667 | 41.98949333 |
| 94 | 35.05273 | 53.4991575 | 84.41138333 | 36.34219 |
| 95 | 30.20371667 | 45.58583 | 71.49011333 | 31.75118667 |
| 96 | 26.26024667 | 39.0359875 | 60.18072 | 27.89404 |
| 97 | 22.98281 | 33.6429625 | 50.43814 | 24.54664667 |
| 98 | 20.22470333 | 29.2402275 | 42.28082667 | 21.67497 |
| 99 | 17.90872333 | 25.6265525 | 35.55554333 | 19.27719667 |
| 100 | 15.98462333 | 22.6420425 | 30.02668 | 17.22088333 |
| 101 | 14.35793333 | 20.137695 | 25.54244 | 15.44798333 |
| 102 | 12.92083667 | 18.016855 | 21.94533667 | 13.94432333 |

(continued)

| ##Temp./>C | DE' 1020/1/MPa | DE' 1020/2/MPa | DE' 1020/3/MPa | DE' 1020/4/MPa |
|---|---|---|---|---|
| 103 | 11.65340667 | 16.1948325 | 19.03734667 | 12.66265333 |
| 104 | 10.58080333 | 14.6208375 | 16.66772667 | 11.56018333 |
| 105 | 9.683996667 | 13.262575 | 14.72378333 | 10.58106 |
| 106 | 8.931893333 | 12.088835 | 13.10633333 | 9.741606667 |
| 107 | 8.288036667 | 11.055415 | 11.73824667 | 9.047576667 |
| 108 | 7.70451 | 10.1378975 | 10.56347 | 8.440806667 |
| 109 | 7.179226667 | 9.325885 | 9.540966667 | 7.899803333 |
| 110 | 6.724446667 | 8.61672 | 8.642423333 | 7.420633333 |
| 111 | 6.318163333 | 7.9994 | 7.84792 | 7.00737 |
| 112 | 5.960213333 | 7.4612775 | 7.141916667 | 6.65747 |
| 113 | 5.669916667 | 6.9861425 | 6.51519 | 6.35747 |
| 114 | 5.424486667 | 6.56164 | 5.960706667 | 6.10147 |
| 115 | 5.193216667 | 6.1820875 | 5.46982 | 5.88419 |
| 116 | 4.974683333 | 5.849965 | 5.03629 | 5.693333333 |
| 117 | 4.7775 | 5.5596725 | 4.655993333 | 5.52342 |

**Table 39** - Data comparison for the mean storage modulus (E'):

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 35 | 532.235642 | 495.177358 | 508.5761167 | 449.1413267 | 472.4470175 |
| 36 | 530.217678 | 493.470588 | 507.1361067 | 447.2771867 | 467.72214 |
| 37 | 528.172464 | 491.68166 | 505.5786967 | 445.3335067 | 462.5315075 |
| 38 | 526.129826 | 489.773758 | 503.90992 | 443.32264 | 456.9603125 |
| 39 | 524.11415 | 487.76909 | 502.12781 | 441.2522667 | 451.0538275 |
| 40 | 522.084256 | 485.68977 | 500.2378333 | 439.12425 | 444.695525 |
| 41 | 519.969738 | 483.543658 | 498.2421433 | 436.93724 | 437.757835 |
| 42 | 517.696784 | 481.358572 | 496.1514933 | 434.6817267 | 430.2222 |
| 43 | 515.257628 | 479.132048 | 493.96474 | 432.35836 | 422.0494275 |
| 44 | 512.727544 | 476.8073 | 491.68362 | 429.97864 | 413.213605 |
| 45 | 510.152758 | 474.381616 | 489.31805 | 427.5563267 | 403.6594925 |
| 46 | 507.527782 | 471.898164 | 486.8894 | 425.0983633 | 393.36182 |
| 47 | 504.844058 | 469.351958 | 484.4107933 | 422.5962967 | 382.2548075 |
| 48 | 502.066886 | 466.734778 | 481.8831767 | 420.0304333 | 370.3101775 |
| 49 | 499.169444 | 464.094404 | 479.3124433 | 417.39179 | 357.3919075 |
| 50 | 496.180018 | 461.448056 | 476.71247 | 414.68183 | 343.3937625 |
| 51 | 493.129102 | 458.737384 | 474.0915433 | 411.8964433 | 328.2700275 |
| 52 | 489.987076 | 455.920784 | 471.4468267 | 409.0321067 | 312.09014 |
| 53 | 486.72687 | 453.02714 | 468.7807167 | 406.0720367 | 294.79077 |
| 54 | 483.421208 | 450.070696 | 466.10449 | 402.9889333 | 276.09849 |
| 55 | 480.09392 | 447.032504 | 463.4172233 | 399.77662 | 255.5622925 |

(continued)

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 56 | 476.653986 | 443.885006 | 460.7025933 | 396.4556667 | 233.0078025 |
| 57 | 473.052248 | 440.622666 | 457.9517133 | 393.0188367 | 208.4578625 |
| 58 | 469.336028 | 437.269672 | 455.1637367 | 389.4509033 | 182.49113 |
| 59 | 465.502526 | 433.84046 | 452.32546 | 385.7117367 | 156.02527 |
| 60 | 461.50261 | 430.291136 | 449.4046567 | 381.73053 | 129.8229225 |
| 61 | 457.31328 | 426.561544 | 446.3659533 | 377.4858433 | 104.70638 |
| 62 | 452.873632 | 422.603806 | 443.1708067 | 372.98587 | 81.7663825 |
| 63 | 448.139592 | 418.42161 | 439.7742367 | 368.13599 | 62.10591 |
| 64 | 443.150688 | 414.024044 | 436.13334 | 362.7731033 | 46.347405 |
| 65 | 437.885814 | 409.37508 | 432.1918967 | 356.7728467 | 34.202325 |
| 66 | 432.261468 | 404.389548 | 427.8768033 | 349.9692167 | 25.2170725 |
| 67 | 426.249212 | 399.019702 | 423.0928767 | 341.9979033 | 18.663475 |
| 68 | 419.811216 | 393.21641 | 417.7373633 | 332.2905333 | 13.9658475 |
| 69 | 412.910638 | 386.939664 | 411.64201 | 320.36234 | 10.545995 |
| 70 | 405.653886 | 380.130302 | 404.63379 | 305.9525933 | 8.041195 |
| 71 | 398.056114 | 372.824106 | 396.47425 | 288.6235267 | 6.228335 |
| 72 | 389.877044 | 364.861312 | 386.93978 | 267.8563 | 4.9243325 |
| 73 | 380.906526 | 355.715828 | 375.7960633 | 244.0275067 | 3.960855 |
| 74 | 371.18631 | 345.071924 | 362.8332867 | 218.6461567 | 3.2282575 |
| 75 | 360.228454 | 333.066122 | 347.6867033 | 192.9523167 | 2.6689275 |
| 76 | 346.975728 | 319.642936 | 330.0438167 | 167.5640467 | 2.24828 |
| 77 | 330.708816 | 304.688846 | 309.6737567 | 143.4966467 | 1.9316175 |
| 78 | 311.048566 | 288.158144 | 286.7763267 | 121.8748367 | 1.68727 |
| 79 | 288.904754 | 270.670698 | 262.0118633 | 103.00831 | 1.4883625 |
| 80 | 265.732132 | 252.84899 | 236.0838133 | 86.68776 | 1.3208975 |
| 81 | 242.118212 | 235.158246 | 209.7379167 | 72.83910667 | 1.1843175 |
| 82 | 218.374848 | 217.970032 | 183.8163467 | 61.34857 | 1.0813975 |
| 83 | 195.31293 | 201.094312 | 159.1797233 | 51.97449333 | 0.9954775 |
| 84 | 173.716866 | 184.2365 | 136.5016733 | 44.34037 | 0.920515 |
| 85 | 153.629248 | 167.22982 | 116.09235 | 38.13809 | 0.862155 |
| 86 | 134.808318 | 150.263182 | 98.04183333 | 33.09834333 | 0.81539 |
| 87 | 117.393652 | 133.638386 | 82.3595 | 28.98437 | 0.7692475 |
| 88 | 101.738396 | 117.741182 | 69.08094333 | 25.55126 | 0.726185 |
| 89 | 87.900718 | 102.814794 | 57.96880667 | 22.65607 | 0.6977175 |
| 90 | 75.771654 | 89.12878 | 48.83961 | 20.21807333 | 0.676895 |
| 91 | 65.300446 | 76.796214 | 41.40828 | 18.12142333 | 0.6465925 |
| 92 | 56.340572 | 65.815522 | 35.41108333 | 16.25966333 | 0.608735 |
| 93 | 48.687242 | 56.171538 | 30.56752333 | 14.56880333 | 0.5787 |
| 94 | 42.17348 | 47.88078 | 26.65896333 | 13.04352 | 0.5634225 |

(continued)

| ##Temp./>C | DE' 1010/1/MPa | DE' 1010/2/MPa | DE' 1010/3/MPa | DE' 1010/4/MPa | DE' 1000/0/MPa |
|---|---|---|---|---|---|
| 95 | 36.621986 | 40.773004 | 23.46689333 | 11.71662333 | 0.559575 |
| 96 | 31.857242 | 34.736604 | 20.81549667 | 10.56982 | 0.56112 |
| 97 | 27.737746 | 29.737212 | 18.56852667 | 9.525826667 | 0.5630525 |
| 98 | 24.192948 | 25.623074 | 16.64594 | 8.54488 | 0.55522 |
| 99 | 21.149584 | 22.21245 | 14.99636 | 7.670983333 | 0.5321275 |
| 100 | 18.565314 | 19.392278 | 13.57032333 | 6.922333333 | 0.513045 |
| 101 | 16.37815 | 17.057062 | 12.32272333 | 6.265416667 | 0.5205225 |
| 102 | 14.50542 | 15.113946 | 11.22781333 | 5.683366667 | 0.540895 |
| 103 | 12.884582 | 13.497068 | 10.27019 | 5.170506667 | 0.54383 |
| 104 | 11.4896 | 12.136284 | 9.427683333 | 4.715033333 | 0.5265625 |
| 105 | 10.308766 | 10.971648 | 8.68469 | 4.306933333 | 0.504115 |
| 106 | 9.312928 | 9.967064 | 8.036543333 | 3.947393333 | 0.4912275 |
| 107 | 8.476048 | 9.095528 | 7.473816667 | 3.639326667 | 0.4966725 |
| 108 | 7.776624 | 8.330602 | 6.979103333 | 3.373793333 | 0.506345 |
| 109 | 7.174532 | 7.659736 | 6.543753333 | 3.135793333 | 0.4944425 |
| 110 | 6.637036 | 7.07696 | 6.163406667 | 2.927566667 | 0.4705425 |
| 111 | 6.162784 | 6.571588 | 5.8315 | 2.757296667 | 0.467575 |
| 112 | 5.757996 | 6.128594 | 5.54217 | 2.615816667 | 0.4844175 |
| 113 | 5.423174 | 5.739998 | 5.28892 | 2.492686667 | 0.4896425 |
| 114 | 5.150776 | 5.402618 | 5.064876667 | 2.383536667 | 0.4762325 |
| 115 | 4.925306 | 5.114958 | 4.865916667 | 2.28759 | 0.469335 |
| 116 | 4.729582 | 4.86766 | 4.688926667 | 2.202713333 | 0.478105 |
| 117 | 4.56088 | 4.649826 | 4.53109 | 2.1258 | 0.4818525 |

## Example 13 - Comparison the DMTA analysis results

Tables 40, 41, and 42 below respectively show a data comparison for the activation energy (EA), storage modulus (E') and tangent delta (tan d) for each sample described in example 8:

**Table 40** - Data comparison for the mean activation energy (EA) per sample:

| RESULTS | |
|---|---|
| **Sample** | **EA kJ/mol** |
| 1000/0 | 328.955 |
| 1010/1 | 372.883 |
| 1010/2 | 369.649 |
| 1010/3 | 364.563 |
| 1010/4 | 302.880 |
| 1020/1 | 376.132 |
| 1020/2 | 400.554 |
| 1020/3 | 389.925 |

(continued)

| RESULTS | |
| --- | --- |
| Sample | EA kJ/mol |
| 1020/4 | 344.850 |

**Table 41** - Data comparison for the mean storage modulus (E') per sample:

| RESULTS | |
| --- | --- |
| Sample | E' MPa |
| 1000/0 | 472.447 |
| 1010/1 | 532.236 |
| 1010/2 | 495.117 |
| 1010/3 | 508.660 |
| 1010/4 | 449.141 |
| 1020/1 | 638.843 |
| 1020/2 | 537.552 |
| 1020/3 | 397.314 |
| 1020/4 | 756.000 |

**Table 42** - Data comparison for the mean tangent delta (tan d) per sample:

| RESULTS | |
| --- | --- |
| Sample | Tan. D |
| 1000/0 | 1.436 |
| 1010/1 | 0.600 |
| 1010/2 | 0.536 |
| 1010/3 | 0.539 |
| 1010/4 | 0.462 |
| 1020/1 | 0.606 |
| 1020/2 | 0.543 |
| 1020/3 | 0.537 |
| 1020/4 | 0.698 |

**Table 43** - Data comparison for the mean glass transition temperature (Tg) per sample:

| RESULTS | |
| --- | --- |
| Sample | Tg °C |
| 1000/0 | 73.725 |
| 1010/1 | 96.700 |
| 1010/2 | 96.320 |
| 1010/3 | 91.033 |
| 1010/4 | 87.000 |
| 1020/1 | 93.900 |
| 1020/2 | 97.150 |
| 1020/3 | 103.300 |

(continued)

| RESULTS | |
| --- | --- |
| **Sample** | **Tg °C** |
| 1020/4 | 92.667 |

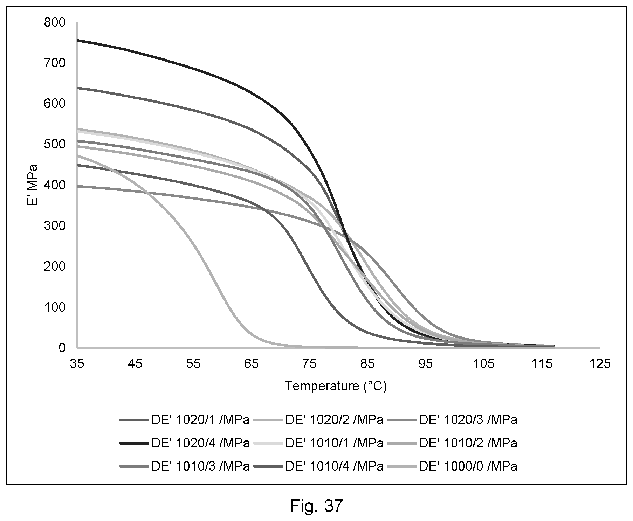

Fig. 37 illustrates comparative curves of the storage modulus (E') by temperature for each sample described in example 8.

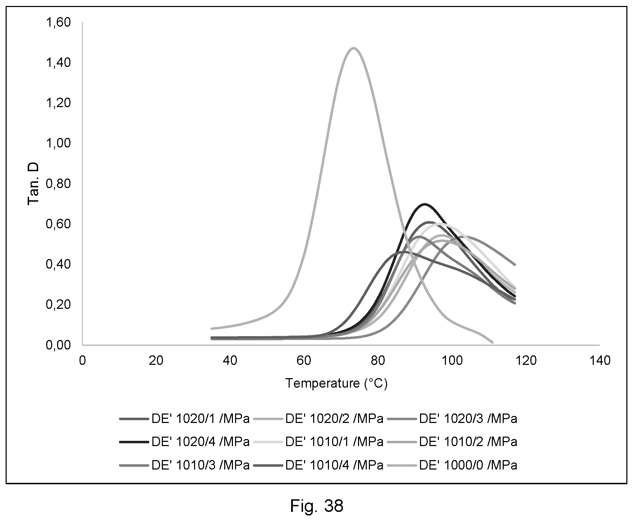

Fig. 38 illustrates comparative curves of tangent delta (tan d) by temperature for each sample described in example 8.

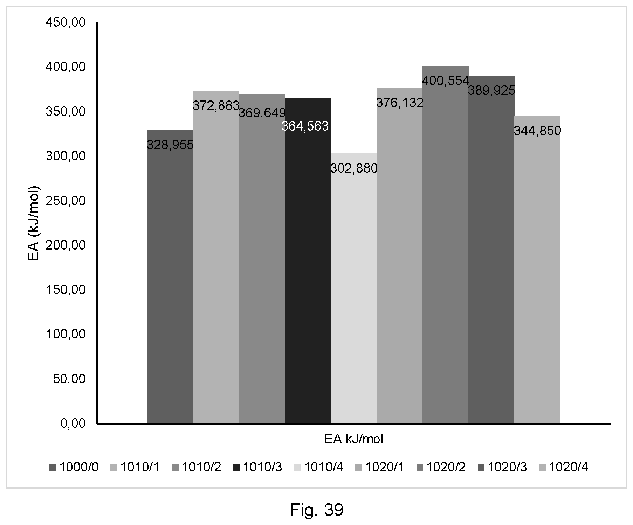

Alternatively, Figs. 39, 40, and 41 illustrate bar graph comparisons for the DMTA results of the samples described in example 8.

Fig. 39 shows a bar graph for mean activation energy (AE) for each sample described in example 8.

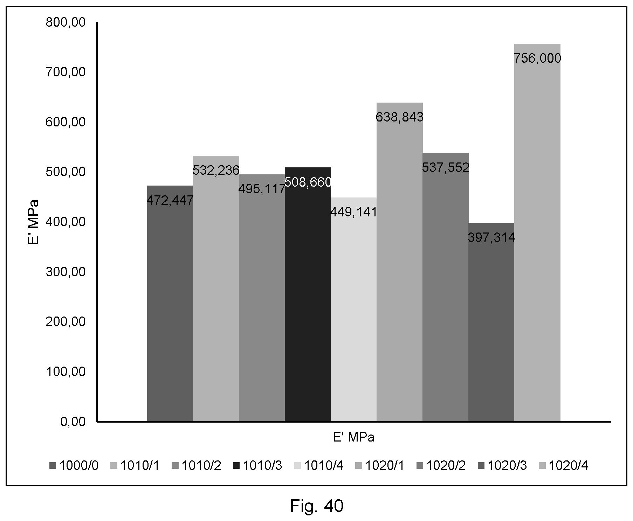

Fig. 40 shows a bar graph for mean storage modulus (E') for each sample described in example 8.

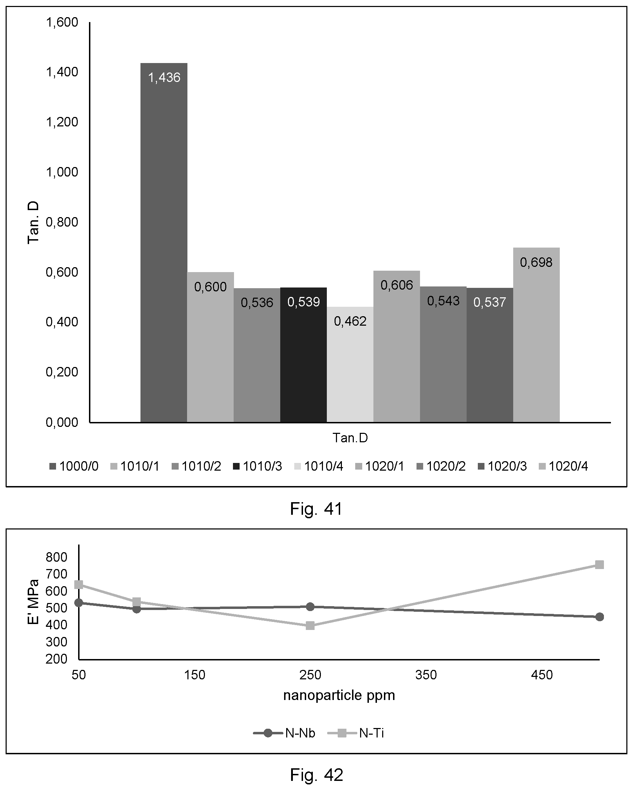

Fig. 41 shows a bar graph for mean tangent delta (tan d) for each sample described in example 8.

Additionally, Fig. 42 shows a line graph comparing the variation of storage modulus (E') by concentration and nanoparticle type.

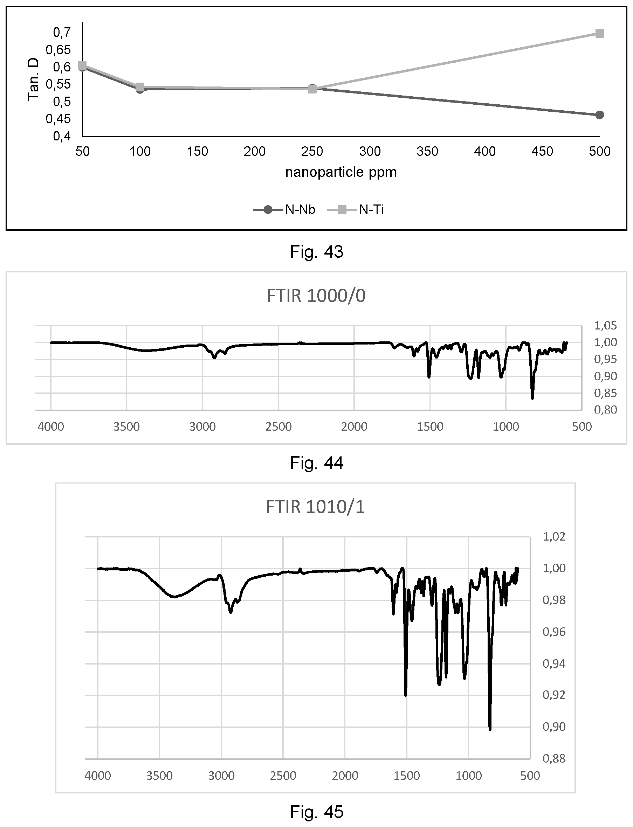

Additionally, Fig. 43 shows a line graph comparing the variation of tangent delta (tan d) by concentration and nanoparticle type.

From the DMTA analysis of the samples described in example 8, it is possible to conclude that the incorporation of nanoparticles at a low concentration (ppm range) was able to substantially modify the mechanical properties of the polymer, as can be seen from the tan delta results. Tan delta can be understood as the energy dissipation potential of a material. The higher the tan delta, the more dissipative the material is. On the other hand, the lower the tan delta, the more elastic the material acts when a filler is applied, thus having more potential to store filler. Thus, modifying the tan delta (either increasing or decreasing) can modulate a material to become more suitable for different applications, e.g., for structural applications a lower tan delta may be preferred.

**Example 14 - Fourier Transform Infrared Spectroscopy (FTIR) Analysis**

The results of Fourier Transform Infrared Spectroscopy analysis are shown in Figs. 44-55 for each sample as described in example 8.

Fig. 44 depicts the FTIR spectra of sample 1000/0 described in example 8 (transmittance in % in the Y-axis and wavenumber in $cm^{-1}$ in the X-axis).

Fig. 45 depicts the FTIR spectra of sample 1010/1 described in example 8 (transmittance in % in the Y-axis and wavenumber in $cm^{-1}$ in the X-axis).

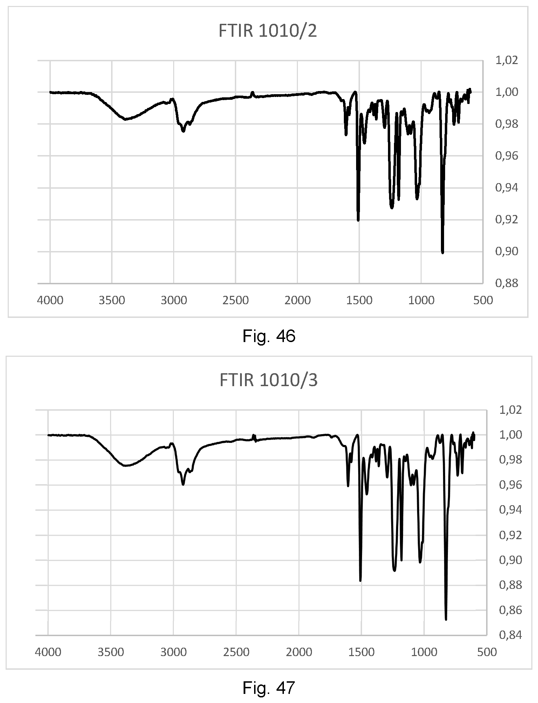

Fig. 46 depicts the FTIR spectra of sample 1010/2 described in example 8 (transmittance in % in the Y-axis and wavenumber in $cm^{-1}$ in the X-axis).

Fig. 47 depicts the FTIR spectra of sample 1010/3 described in example 8 (transmittance in % in the Y-axis and wavenumber in $cm^{-1}$ in the X-axis).

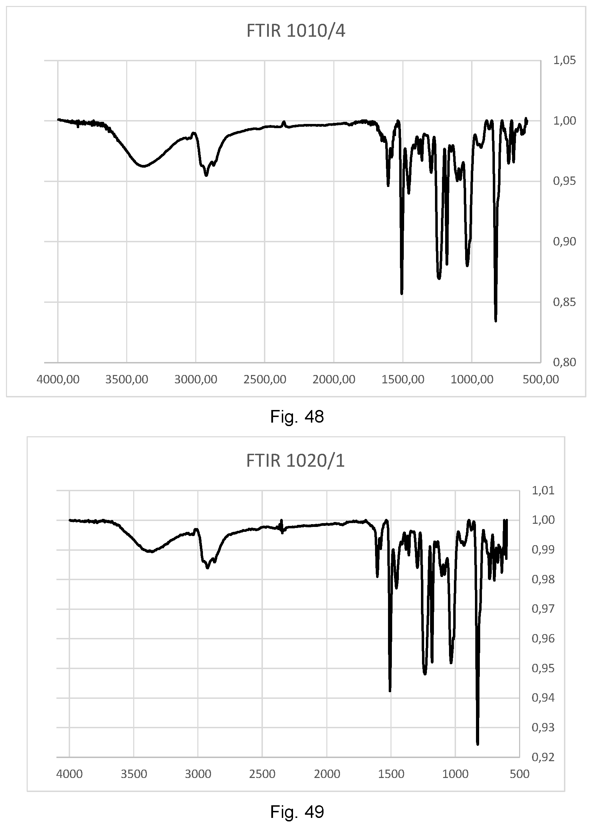

Fig. 48 depicts the FTIR spectra of sample 1010/4 described in example 8 (transmittance in % in the Y-axis and wavenumber in $cm^{-1}$ in the X-axis).

Fig. 49 depicts the FTIR spectra of sample 1020/1 described in example 8 (transmittance in % in the Y-axis and wavenumber in $cm^{-1}$ in the X-axis).

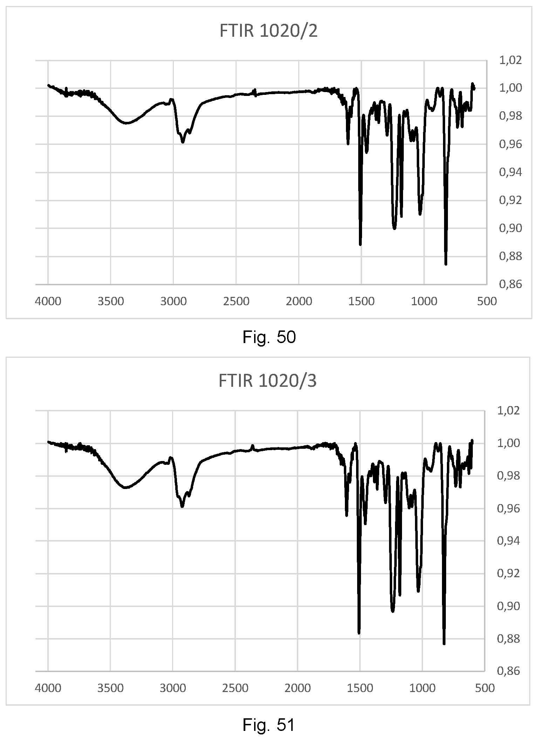

Fig. 50 depicts the FTIR spectra of sample 1020/2 described in example 8 (transmittance in % in the Y-axis and wavenumber in $cm^{-1}$ in the X-axis).

Fig. 51 depicts the FTIR spectra of sample 1020/3 described in example 8 (transmittance in % in the Y-axis and wavenumber in $cm^{-1}$ in the X-axis).

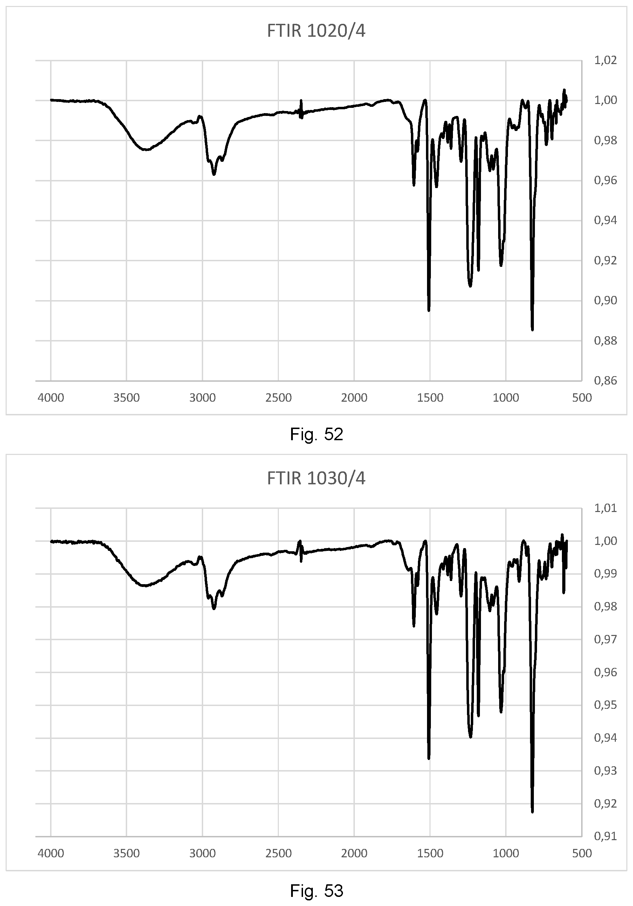

Fig. 52 depicts the FTIR spectra of sample 1020/4 described in example 8 (transmittance in % in the Y-axis and wavenumber in $cm^{-1}$ in the X-axis).

Fig. 53 depicts the FTIR spectra of sample 1030/4 described in example 8 (transmittance in % in the Y-axis and wavenumber in $cm^{-1}$ in the X-axis).

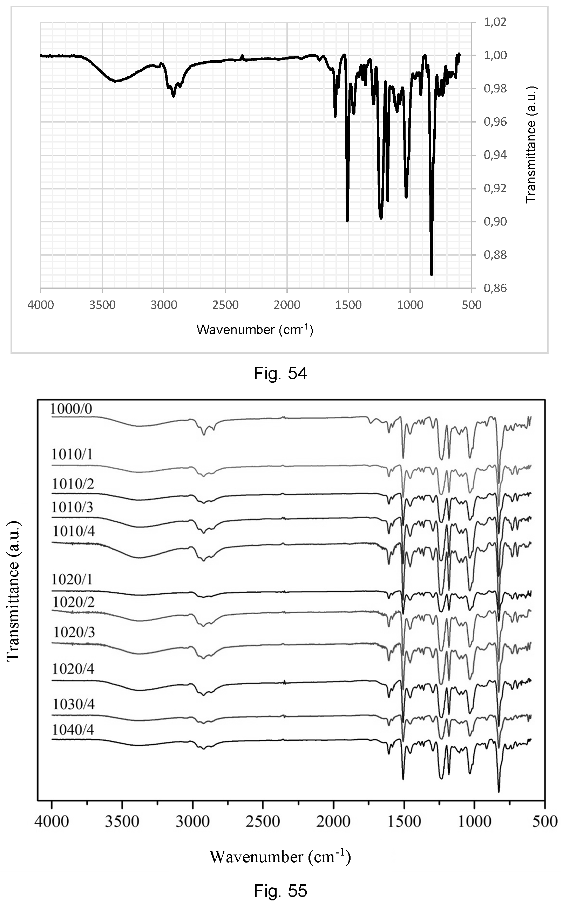

Fig. 54 depicts the FTIR spectra of sample 1040/4 described in example 8 (transmittance in % in the Y-axis and wavenumber in $cm^{-1}$ in the X-axis).

Fig. 55 depicts a comparison of the FTIR spectra of the samples described in example 8 (transmittance in % in the Y-axis and wavenumber in $cm^{-1}$ in the X-axis).

**Example 15 - DMTA analysis of samples containing niobium nanoparticles**

The samples described in example 8 as 1010/1 were analyzed in DMTA (Dynamic Mechanical Thermal Analysis) in quadruplicate and the results are shown below in Table 44:

**Table 44** - DMTA results for sample 1010/1 at 1 Hz frequency:

| Frequency (1Hz) | | | | | |
|---|---|---|---|---|---|
| Sample | E' (MPa) | E" (MPa) | Tan$\delta$ (a.u.) | Tg (Tan$\delta$) (°C) | Tg (E") (°C) |
| 1010_1_1 | 599.6 | 90.8 | 0.7591 | 90.5 | 81.7 |
| 1010_1_2 | 592.2 | 60.6 | 0.6899 | 90.9 | 80.2 |
| 1010_1_3 | 575.9 | 57.0 | 0.6870 | 92.1 | 81.3 |
| 1010_1_4 | 684.8 | 72.14 | 0.6941 | 91.2 | 79.4 |
| **Mean** | 613.14 | 70.14 | 0.71 | 91.17 | 80.65 |
| **Std. Dev.** | 48.78 | 15.19 | 0.03 | 0.65 | 1.05 |
| **CV** | 8% | 22% | 5% | 1% | 1% |

**Table 45 -** Activation energy results for sample 1010/1:

| | Activation energy (kJ/mol) |
|---|---|
| 1010_1_1 | 373.62 |
| 1010_1_2 | 371.30 |
| 1010_1_3 | 378.70 |
| 1010_1_4 | 371.31 |
| **Mean** | 373.73 |
| **Std. Dev.** | 3.49 |
| **CV** | 1% |

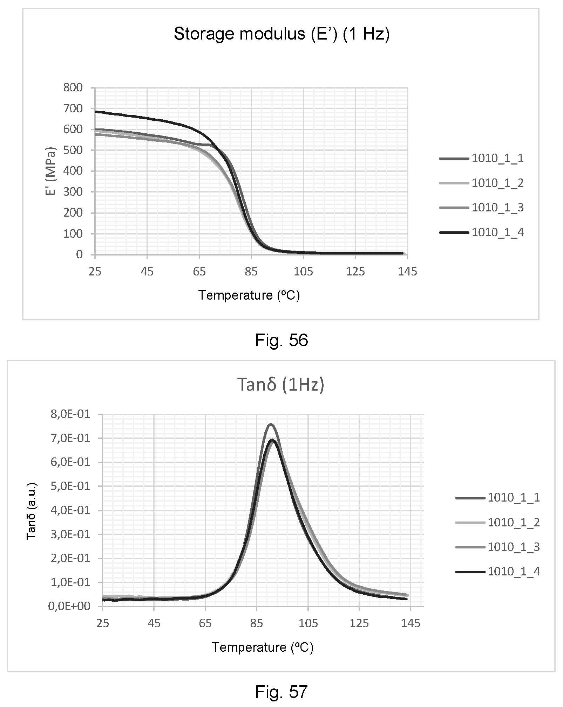

The results of sample 1010/1 are further illustrated in Figs. 56, 57 and 58.
Fig. 56 depicts the storage modulus (E') curve of sample 1010/1 as a function of temperature.
Fig. 57 depicts the tangent delta (tan d) curve of sample 1010/1 as a function of temperature.

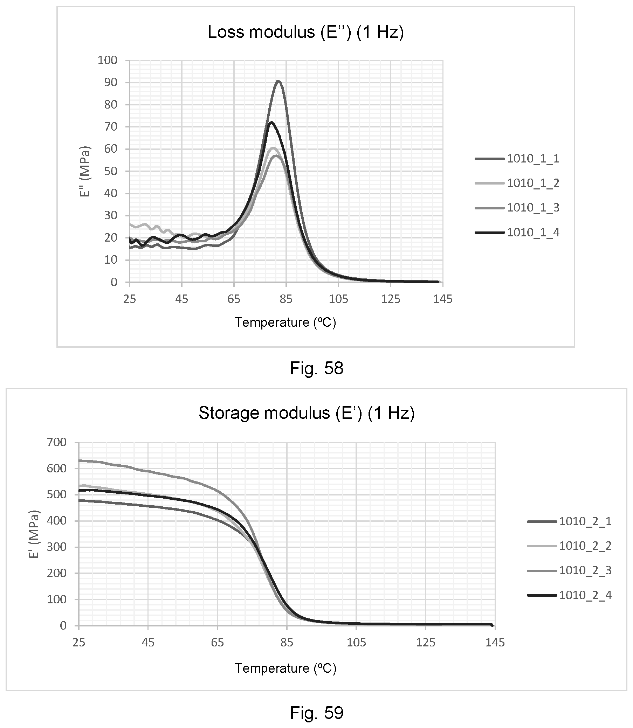

Fig. 58 depicts the loss modulus (E") curve of sample 1010/1 as a function of temperature.
The samples described in example 8 as 1010/2 were also analyzed in DMTA (Dynamic Mechanical Thermal Analysis) in quadruplicate and the results are shown below in Tables 43 and 44:

**Table 46** - DMTA results for sample 1010/2 at 1 Hz frequency:

| Frequency (1Hz) | | | | | |
|---|---|---|---|---|---|
| Sample | E' (MPa) | E" (MPa) | Tan$\delta$ (a.u.) | Tg (Tan$\delta$) (°C) | Tg (E") (°C) |
| 1010_2_1 | 477.8 | 58.3 | 0.7104 | 89.5 | 80.7 |
| 1010_2_2 | 535.6 | 53.9 | 0.6620 | 89.0 | 78.4 |
| 1010_2_3 | 631.4 | 72.2 | 0.6919 | 88.1 | 78.0 |
| 1010_2_4 | 517.5 | 56.73 | 0.7074 | 89.5 | 80.3 |
| **Mean** | 540.59 | 60.29 | 0.69 | 89.03 | 79.34 |
| **Std. Dev.** | 65.18 | 8.14 | 0.02 | 0.66 | 1.38 |
| **CV** | 12% | 14% | 3% | 1% | 2% |

**Table 47** - DMTA results for sample 1010/2 at 5 Hz frequency:

| Frequency (5Hz) | | | | | |
|---|---|---|---|---|---|
| Sample | E' (MPa) | E" (MPa) | Tanδ (a.u.) | Tg (Tanδ) (°C) | Tg (E") (°C) |
| 1010_2_1 | 488.3 | 55.1 | 0.7406 | 89.5 | 80.7 |
| 1010_2_2 | 546.1 | 47.3 | 0.6936 | 89.0 | 78.4 |
| 1010_2_3 | 644.9 | 64.6 | 0.7203 | 88.1 | 78.0 |
| 1010_2_4 | 527.7 | 53.1 | 0.7369 | 89.5 | 80.3 |
| **Mean** | 551.73 | 55.00 | 0.72 | 89.03 | 79.34 |
| **Std. Dev.** | 66.62 | 7.18 | 0.02 | 0.66 | 1.38 |
| **CV** | 12% | 13% | 3% | 1% | 2% |

**Table 48** - Activation energy results for sample 1010/2:

| | Activation energy (kJ/mol) |
|---|---|
| 1010_2_1 | 378.34 |
| 1010_2_2 | 367.09 |
| 1010_2_3 | 360.61 |
| 1010_2_4 | 394.00 |
| **Mean** | 375.01 |
| **Std. Dev.** | 14.62 |
| **CV** | 4% |

The results of sample 1010/2 are further illustrated in Figs. 59, 60 and 61.

Fig. 59 depicts the storage modulus (E') curve of sample 1010/2 as a function of temperature.

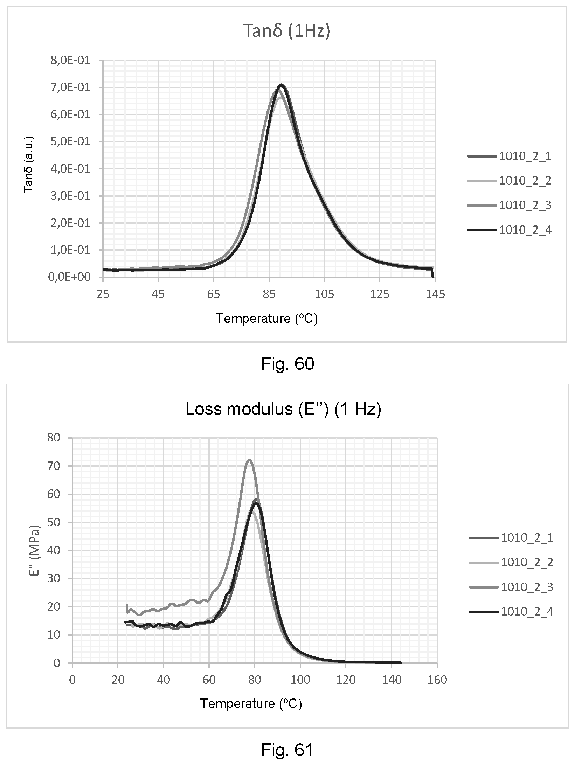

Fig. 60 depicts the tangent delta (tan d) curve of sample 1010/2 as a function of temperature.

Fig. 61 depicts the loss modulus (E") curve of sample 1010/2 as a function of temperature.

The samples described in example 8 as 1010/3 were analyzed in DMTA (Dynamic Mechanical Thermal Analysis) in quadruplicate and the results are shown below in Table 49:

**Table 49** - DMTA results for sample 1010/3 at 1 Hz frequency:

| Frequency (1Hz) | | | | | |
|---|---|---|---|---|---|
| Sample | E' (MPa) | E" (MPa) | Tanδ (a.u.) | Tg (°C, Tanδ) | Tg (°C, E") |
| 1010_3_1 | 569.00 | 63.11 | 0.67 | 85.54 | 75.76 |
| 1010_3_2 | 627.63 | 68.16 | 0.66 | 87.47 | 77.68 |
| 1010_3_3 | 576.71 | 58.56 | 0.65 | 87.55 | 75.81 |
| 1010_3_4 | 640.04 | 62.65 | 0.67 | 87.82 | 78.04 |
| Mean | 603.34 | 63.12 | 0.66 | 87.10 | 76.82 |
| Std. Dev. | 35.71 | 3.93 | 0.01 | 1.05 | 1.21 |
| CV(%) | 6% | 6% | 1% | 1% | 2% |

**Table 50** - Activation energy results for sample 1010/3:

| | Activation energy (kJ/mol) |
|---|---|
| 1010_3_1 | 370.378 |
| 1010_3_2 | 374.638 |
| 1010_3_3 | 394.617 |

(continued)

|  | Activation energy (kJ/mol) |
| --- | --- |
| 1010_3_4 | 386.174 |
| Mean | 381.45 |
| Std. Dev. | 11.03 |
| CV(%) | 3% |

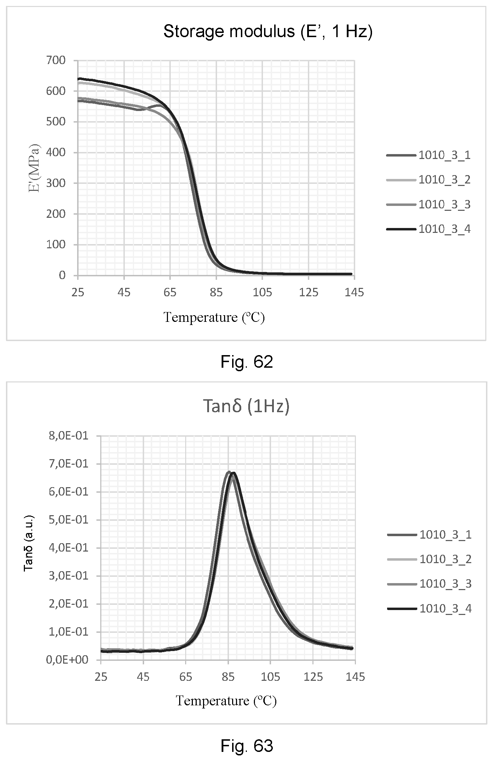

The results of sample 1010/3 are further illustrated in Figs. 62, 63 and 64.

Fig. 62 depicts the storage modulus (E') curve of sample 1010/3 as a function of temperature.

Fig. 63 depicts the tangent delta (tan d) curve of sample 1010/3 as a function of temperature.

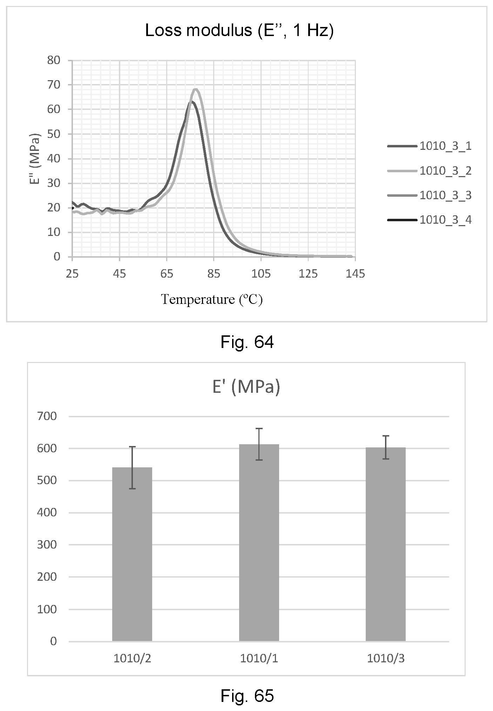

Fig. 64 depicts the loss modulus (E") curve of sample 1010/3 as a function of temperature.

**Example 16 - Comparison of DMTA analyses of samples containing niobium nanoparticles**

Based on the results shown in example 15, the means of the storage modulus (E'), loss modulus (E") and glass transition temperature ($T_g$) for each sample were found. The tables with the comparative data are illustrated below:

**Table 51** - storage modulus (E') values for each sample:

| Condition | E' (MPa) | Std. Dev. |
| --- | --- | --- |
| 1010/2 | 540.5891 | 65.17756 |
| 1010/1 | 613.1392 | 48.78371 |
| 1010/3 | 603.3448 | 35.70892 |

**Table 52** - loss modulus (E") values for each sample:

| Condition | E" (MPa) | Std. Dev. |
| --- | --- | --- |
| 1010/1 | 70.13892 | 15.18701 |
| 1010/2 | 60.28967 | 8.139677 |
| 1010/3 | 63.11976 | 3.932793 |

**Table 53** - glass transition temperature ($T_g$) values for each sample:

| Condition | Tg (°C) | Std. Dev. |
| --- | --- | --- |
| 1010/1 | 91.17177 | 0.647087 |
| 1010/2 | 89.02651 | 0.659468 |
| 1010/3 | 87.09611 | 1.04633 |

Fig. 65 shows a bar graph of the mean storage modulus (E') for each sample described in example 15.

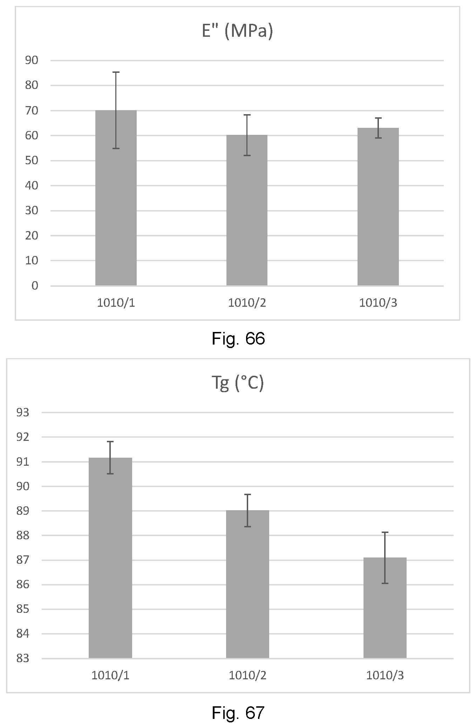

Fig. 66 shows a bar graph of the mean loss modulus (E") for each sample described in example 15.

Fig. 67 shows a bar graph of the mean glass transition temperature ($T_g$) for each sample described in example 15.

From the DMTA analysis of example 16, it is possible to conclude that the incorporation of nanoparticles at a low concentration (ppm range) was able to substantially modify the mechanical properties of the polymer, as can be seen from the tan delta results. Tan delta can be understood as the energy dissipation potential of a material. The higher the tan delta, the more dissipative the material is. On the other hand, the lower the tan delta, the more elastic the material acts when a filler is applied, thus having more potential to store filler. Thus, modifying the tan delta (either increasing or decreasing) can modulate a material to become more suitable for different applications, e.g., for structural applications a lower tan delta may be preferred.

**Example 17 - Preparation process of Niobium pentoxide nanoparticles**

In the present example, several embodiments of nanoparticle preparations of Niobium pentoxide were obtained, with purity greater than 99%. Commercial Niobium pentoxide, with the particle size distribution described in Table 54, was pre-comminuted in a high-energy mill containing Yttria-stabilized zirconia spheres with a diameter of 400 $\mu$m, in a liquid medium and the pH adjusted to 6.6. The mill rotation speed was 3500 rpm, and the particle milling was carried out at a temperature below 40°C. Table 4 shows the particle size distribution (PSD) of incoming (commercial product) and outgoing niobium pentoxide from a pre-comminution step.

Table 54 - Input PSD (commercial product) and output after pre-comminution.

| PSD for niobium pentoxide | | |
|---|---|---|
| cumulative % | diameter [$\mu$m] | |
| | Input | Output |
| 1.13 | 2.130 | 0.991 |
| 2.97 | 4.030 | 1.450 |
| 4.87 | 6.720 | 1.880 |
| 6.22 | 8.680 | 2.130 |
| 10.00 | 13.400 | 2.770 |
| 12.72 | 16.400 | 3.120 |
| 15.03 | 18.700 | 3.550 |
| 17.96 | 21.200 | 4.030 |
| 21.73 | 24.100 | 4.580 |
| 26.56 | 27.400 | 5.210 |
| 32.68 | 31.100 | 6.120 |
| 40.22 | 35.300 | 7.440 |
| 50.00 | 40.600 | 8.880 |
| 59.08 | 45.600 | 10.160 |
| 69.48 | 51.800 | 12.700 |
| 79.47 | 58.900 | 16.500 |
| 88.11 | 66.900 | 21.200 |
| 94.59 | 76.000 | 27.400 |
| 98.55 | 86.400 | 35.300 |
| 99.99 | 98.100 | 40.100 |

The mean specific surface area S ($m^2$/g) of the particles after the pre-comminution step was 0.32 $m^2$/g.

In one embodiment, the pre-comminuted particles were then fed to a high-energy mill, applying conditions like those described in example 5, but with Zr spheres of 200 $\mu$m and milling for different times, until each nanoparticle preparation was obtained. Three different nanoparticle preparations were obtained, each with a defined particle size distribution as described in Table 55.

Table 55 - Particle size distribution of three different preparations (C, D and E) of Niobium pentoxide nanoparticles.

| PSD for niobium pentoxide | | | |
|---|---|---|---|
| cumulative % | diameter [$\mu$m] | | |
| | C | D | E |
| 1.13 | 0.074 | 0.021 | 0.009 |
| 2.97 | 0.082 | 0.024 | 0.010 |

(continued)

| PSD for niobium pentoxide | | | |
|---|---|---|---|
| cumulative % | diameter [μm] | | |
| | C | D | E |
| 4.87 | 0.098 | 0.027 | 0.012 |
| 6.22 | 0.104 | 0.029 | 0.012 |
| 10.00 | 0.119 | 0.033 | 0.014 |
| 12.72 | 0.131 | 0.036 | 0.016 |
| 15.03 | 0.138 | 0.038 | 0.017 |
| 17.96 | 0.145 | 0.040 | 0.017 |
| 21.73 | 0.159 | 0.044 | 0.019 |
| 26.56 | 0.175 | 0.048 | 0.021 |
| 32.68 | 0.192 | 0.053 | 0.023 |
| 40.22 | 0.212 | 0.058 | 0.025 |
| 50.00 | 0.243 | 0.067 | 0.029 |
| 59.08 | 0.282 | 0.078 | 0.034 |
| 69.48 | 0.322 | 0.089 | 0.038 |
| 79.47 | 0.376 | 0.104 | 0.045 |
| 88.11 | 0.413 | 0.114 | 0.049 |
| 94.59 | 0.455 | 0.125 | 0.054 |
| 98.55 | 0.550 | 0.152 | 0.066 |
| 99.99 | 0.747 | 0.206 | 0.089 |

**Example 18 - Preparation process of nanoparticle preparation of Titanium dioxide**

In this embodiment, a batch of 1.125 kg of $TiO_2$ particles with particle size distribution of D90 1.320 μm, D50 0.6098 μm and D10 0.153 μm was fed to a high energy mill with 5 liters of water and containing 3.65kh/l 0.2-0.4mm zeta spheres. The milling parameters were Tmax 60°C, solids content 18.36%. Operating the high-energy mill for several cycles, from 1 to 8 cycles of 1 hour each, at a pressure of 1.1 to 1.2 bar, pump speed of 90 $min^{-1}$, flow rate of 51 kg slurry/h, agitator speed of 3700 $min^{-1}$, inlet material temperature varying between 21.3°C and 37.1°C and outlet material temperature varying between 22.4°C and 49.2°C in the respective cycles, the raw energy was 2.4 kW and the milling energy was from 1.8 to 14.4 kWh in the respective cycles. The particle size distribution profile obtained is described in Table 56 below:

Table 56 - particle size distribution profile obtained after multiple comminution cycles under the conditions indicated above.

| cycles | 0 | 1 | 2 | 3 | 4 | 5 |
|---|---|---|---|---|---|---|
| D10 (μm) | 0.253 | 0.189 | 0.160 | 0.157 | 0.162 | 0.148 |
| D50 (μm) | 0.608 | 0.485 | 0.315 | 0.292 | 0.298 | 0.239 |
| D90 (μm) | 1.320 | 0.970 | 0.747 | 0.693 | 0.562 | 0.402 |

For cooling, the parameters were inlet temperatures of 7.3°C and 11.4°C, respectively in the milling chamber, mechanical seal, circulation tank and chiller, each of these stages with a flow rate of 1000 liters per hour of cooling water, making up 4000 liters per hour.

**Example 19 - Testing the degree of crystallinity of Niobium pentoxide nanoparticles**

The inventors studied the characteristics of the nanoparticle preparation of Niobium pentoxide resulting from different milling times according to the process described in example 17.

The samples were analyzed by transmission microscopy techniques in order to obtain a particles diameter histogram and by X-ray diffraction technique to obtain a structural characterization. The analysis of samples by X-ray diffraction proved that there are significant changes in the structural characteristics such as degree of crystallinity (%) and crystallite size for the samples subjected to different milling times.

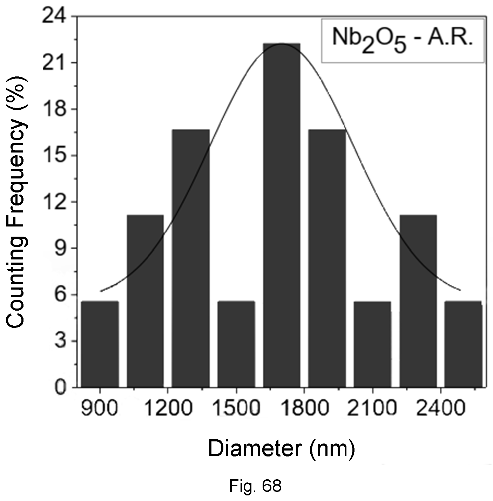

Fig. 68 illustrates the size histogram obtained from transmission microscopy analysis of the Niobium pentoxide particles sample as-received (termed A.R.).

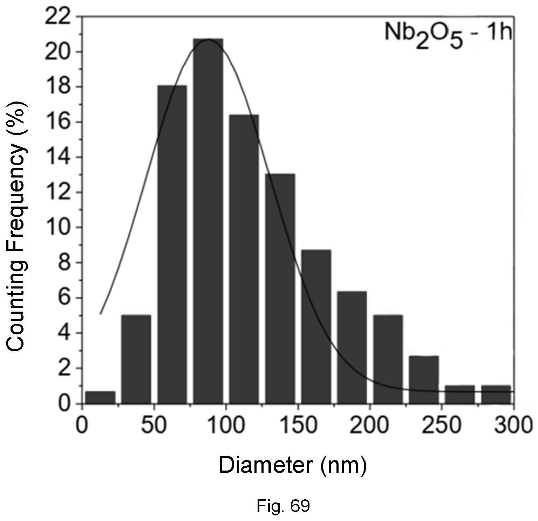

Fig. 69 illustrates the size histogram obtained from transmission microscopy analysis of the Niobium pentoxide particles sample subjected to milling for 1h.

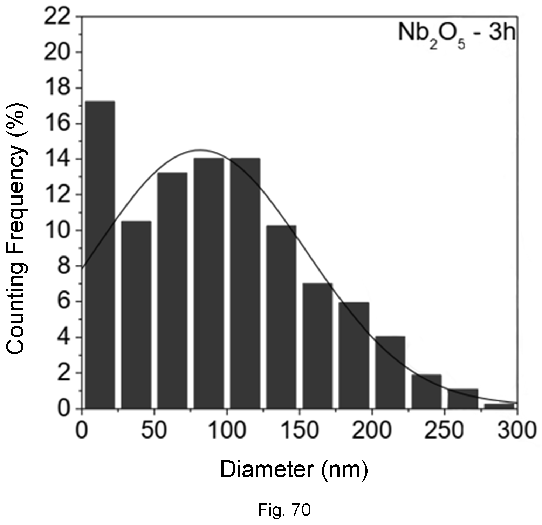

Fig. 70 illustrates the size histogram obtained from transmission microscopy analysis of the Niobium pentoxide particles sample subjected to milling for 3h.

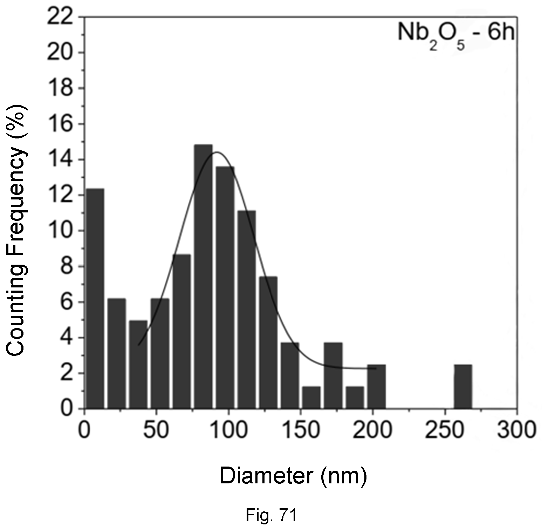

Fig. 71 illustrates the size histogram obtained from transmission microscopy analysis of the Niobium pentoxide particles sample subjected to milling for 6h.

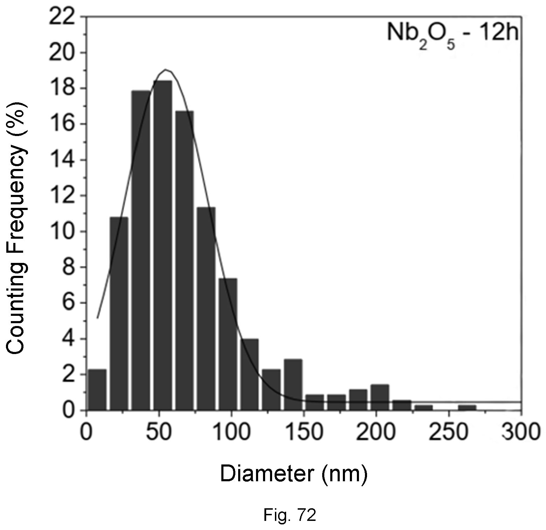

Fig. 72 illustrates the size histogram obtained from transmission microscopy analysis of the Niobium pentoxide particles sample subjected to milling for 12h.

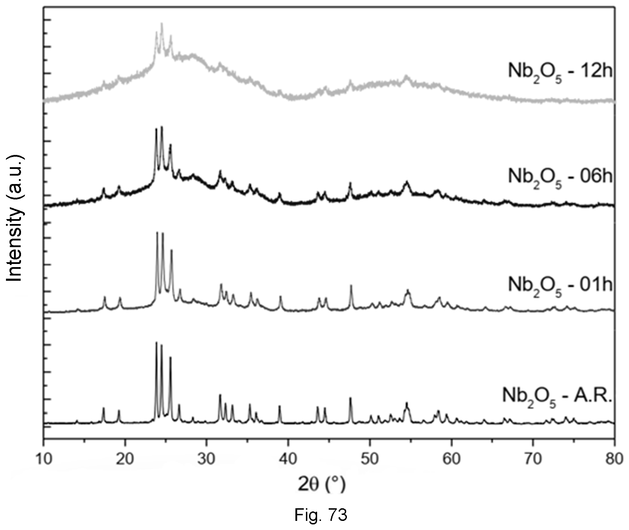

Fig. 73 illustrates a comparison of X-ray diffractograms that demonstrate significant changes in the crystalline phase for Niobium pentoxide particles samples subjected to different milling times (i.e., 1h, 3h, 6h, and 12h).

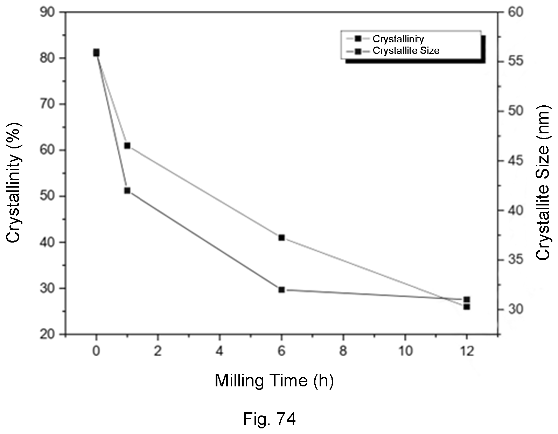

Fig. 74 shows a graph of crystallinity (%) and crystallite size (nm) and milling time (h).

The A.R. sample consisted of 81% monoclinic crystal phase. On the other hand, Fig. 74 shows that the crystallinity (%) and crystallite size (nm) decrease as the milling time increases. The data show an exponential decay of the crystallinity (%) and crystallite size (nm), with the crystallite size (nm) appearing to reach an apparent plateau after 6h of milling. The reduction in crystallinity shows a behavior similar to that of the crystallite size, however, it still shows a significant variation after the 6-hour milling period. Regarding crystallinity, 26% of monoclinic phase can be observed for the sample subjected to 12 hours of milling.

The samples with more amorphous characteristics (e.g., the 12h sample) showed an even more significant improvement in the enhancement of the polymer properties. Significant improvements were observed as the degree of amorphization increased, i.e., at least 19% degree of amorphization < at least 39% degree of amorphization < at least 55% degree of amorphization < at least 70% degree of amorphization. An even more significant modulation of the polymer properties was observed for a degree of amorphization of 74%.

**Example 20 - Preparation of epoxy resin samples with nanoparticles**

In order to prepare test specimens to be characterized, niobium pentoxide nanoparticles with 12h of milling were weighed to reach concentrations of 50 ppm, 100 ppm, 250 ppm and 500 ppm.

The nanoparticle preparations were added to methyl ethyl ketone (MEK), and the suspension was sonicated for 15 minutes.

While the MEK + nanoparticles colloidal suspension was kept under sonication, the epoxy resin was under constant rotational stirring under a temperature above Tg in a reactor.

Next, the MEK + nanoparticles suspension is deposited in the reactor containing the resin under stirring. The addition is made slowly and after 100% dilution the mixture remains under stirring for 30 minutes, maintaining heating.

Then, the methyl ethyl ketone was removed under vacuum. Next, the catalyst was included, which is a cycloaliphatic amino catalyst in the ratio of 70-30. This way, the test specimens were obtained for the following characterizations.

**Example 21 - Dispersion capacity of niobium pentoxide nanoparticles in polymeric matrix**

In order to verify the dispersion capacity of the nanoparticles, polymer samples containing nanoparticles obtained by milling for 12 hours using the ultramicrotomy technique were prepared. Before being sent to the ultramicrotome, samples of polymer matrices containing particles underwent cutting, trimming and semi-thin cutting before obtaining ultra-thin sections.

The ultra-thin sections have a thickness between 70-100 nm, allowing the passage of the electron beam for the application of the transmission electron microscopy technique.

The ultra-thin sections are placed on a copper grid to be sent to the transmission electron microscopy apparatus. A JEOL JEM-1011 microscope with a maximum acceleration voltage of 100 kV was used for these analyses. However, to maximize the contrast of the images, the voltage used was 80 kV and in certain situations, 60 kV.

The images obtained are bright field, which means that the predominant contrast mechanism is mass-thickness. In other words, the higher the atomic number of the sample or the thicker a given region of the sample, the darker it appears in the image.

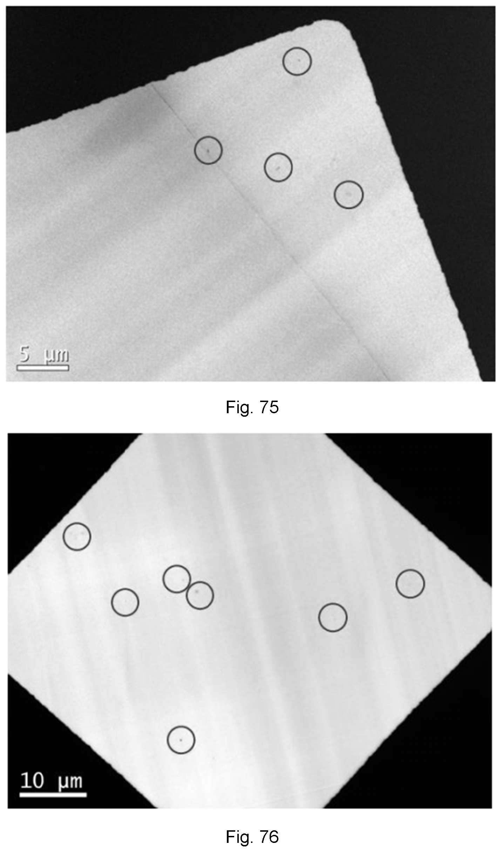

Fig. 75 shows particles of Niobium pentoxide highlighted in an ultra-thin section of the sample with 50 ppm.

Fig. 76 shows particles of Niobium pentoxide highlighted in an ultra-thin section of the sample with 100 ppm.

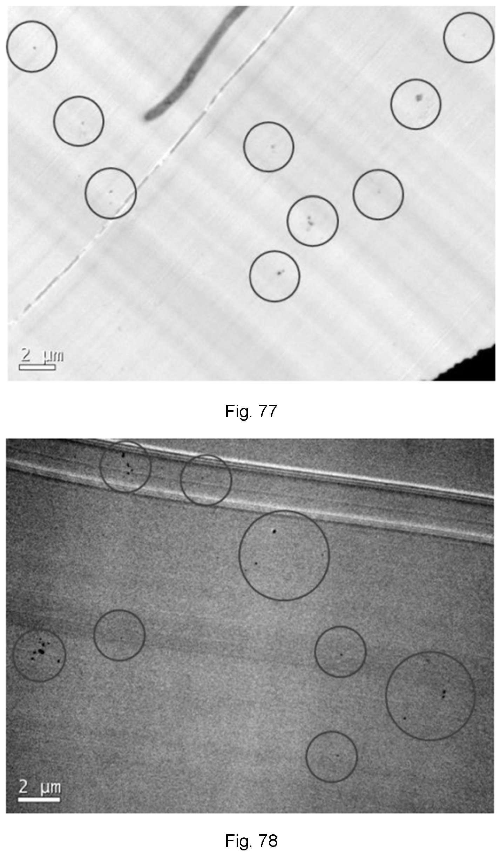

Fig. 77 shows particles of Niobium pentoxide highlighted in an ultra-thin section of the sample with 250 ppm.

Fig. 78 shows particles of Niobium pentoxide highlighted in an ultra-thin section of the sample with 500 ppm.

Figs. 75 to 78 show that there are well dispersed particles proportional to the concentration used.

Without wishing to be bound by theory, it is understood that the degree of crystallinity influences the dispersion capacity of a nanoparticle preparation in the volume of the polymer matrix. The preparation that was subjected to 12h milling showed an excellent dispersion capacity, as observed in the transmission microscopy results in the ultra-thin sections made with the ultramicrotomy technique. It is expected that particles with a higher degree of crystallinity will have a greater tendency to aggregate, consequently dispersing less uniformly in the volume of the polymer matrix and reducing the mean free path between the particles.

## Example 22 - Premix containing phenolic resin and niobium pentoxide nanoparticles and its use to produce friction composite

In order to prove that the premix of the invention containing nanoparticles is useful for modifying the properties of different materials, additional tests were carried out on other polymers.

A premix containing niobium pentoxide nanoparticles obtained from 12h-milling and a phenolic resin was used to produce friction composites of automotive brake pads.

Firstly, premixes with different nanoparticle contents, i.e., 0.1%, 0.7%, 1.0%, and 2.0% m/m, were tested using 3 dispersion and incorporation processes of said nanoparticle preparation were tested, i.e., resin dilution in alcohol + nanoparticles, suspension in alcohol + nanoparticles and dry mix + nanoparticles.

In one embodiment, 6.0 kg of the premix total mixture for this embodiment was prepared with 5.5% by weight of phenolic resin and 94.5% by weight of nanoparticles. This premix was used to prepare a friction composite with the other raw materials for this product. In an EIRICH mixer, two steps were performed. A first step with mixing of all components for 10 min and a second step that continued for 10 min, but with gradual addition in sub-steps (i.e., 2 min, 2 min, 2 min and 4 min).

After the mixing stage was completed, the material was pressed to form the friction material.

Table 57 illustrates each of the samples tested:

| | |
|---|---|
| V1 | dry mix, without NP (baseline) |
| V2 | diluted resin, without NP |
| V3 | diluted resin + 0.1% NP |
| V4 | diluted resin + 0.7% NP |
| V5 | diluted resin + 1.0% NP |
| V6 | diluted resin + 2.0% NP |
| V7 | alcohol + 2.0% NP |
| V8 | resin + 2.0% NP (dry) |

Spark and fire test was performed under the following conditions: Braking from 80 to 24 km/h, in 6s (deceleration 2.7 m/s$^2$); time between braking 90s. Repeat each braking 20 times.

During the test, it was observed that the samples containing Niobium pentoxide nanoparticles in diluted resin showed a delay in the start of spark generation. In addition, there was a reduction in sparks during braking and a reduction in flames after braking.

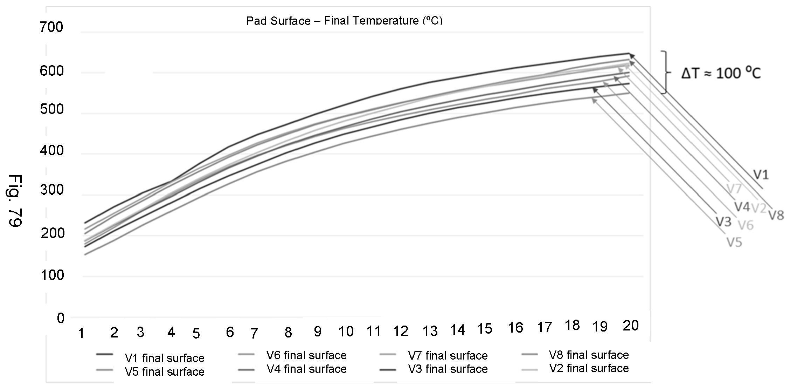

Fig. 79 shows a graph of the surface temperature of the brake pad at the end of each braking cycle for each of the samples tested. It can be seen that sample V5 showed the lowest final surface temperature, approximately 100°C less than sample V1 (reference).

An accelerated corrosion test of the friction material was also performed. The test conditions were as follows: 22h in an oven at 400°C → 2h in a 5% NaCl saline solution (thermal shock) → 6h in a refrigerator at -5°C. Repeat each cycle 10 times.

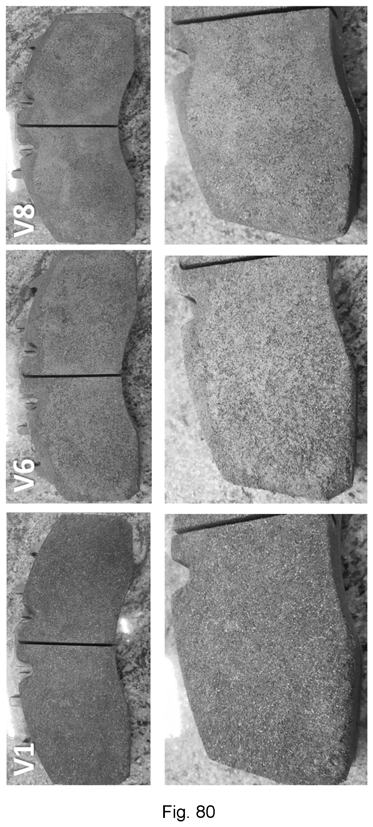

Fig. 80 shows photos of samples V1, V6, and V8 after 3 cycles of the accelerated corrosion test. It can be noted that samples V6 and V8, which have the addition of nanoparticles, showed greater corrosion resistance than the reference V1.

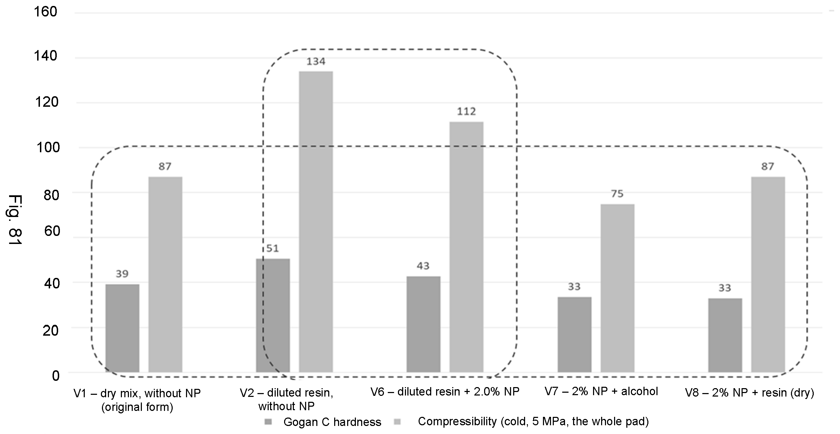

Finally, Fig. 81 shows a graph of the Gogan C hardness and cold compressibility test (5 MPa, whole pad) for the friction materials containing Niobium pentoxide nanoparticles in phenolic resin.

Fig. 81 allows us to conclude that the diluted resin (V2 and V6) increases the hardness and compressibility of the material (reduces the stiffness of the bulk), as well as increases the porosity of the material.

Without wishing to be limited by theory, it is understood that the various improvements in properties in composites due to the simple decrease in particle size (the so-called "scaling effect"), are generally attributed to surface energy effects, since the specific surface area for a given mass of particles of the same material increases directly as the size decreases. On the other hand, what has been ignored until now is that the resulting number of smaller particles increases much faster and that the effect of large numbers of particles can be relevant to the properties obtained. In this context, a person skilled in the art would consider that a very small mass of particles would be practically negligible in terms of effect, but the present results surprisingly show that a huge number of particles (even with a small total mass) can (i) substantially alter the properties of the material; or (ii) cause enormous processing and dispersibility difficulties, disrupting the delicate balance between optimal performance and economic feasibility. The importance of considering small amounts of smaller and well dispersed particles within a polymer matrix can be highlighted in terms of the number of particles required to achieve the greatest gain of the desired property for a given particle size, a given mean free pathway between the closest particles.

Still without wishing to be limited by theory, it is understood that the same positive relationship between the mean free path and the number of particles, as well as between the mean free path and the size of the particles, are observed for both the tensile strength limit and the storage modulus, suggesting that the texturing of the matrix around the particles increases with their size. However, the dependence of stiffness on particle number was shown to be contrary to strength, suggesting that if the mean free path decreases (due to a greater number of particles in the polymer matrix), the expected forced orientation of the polymer chains apparently generates easier sliding, resulting in a more flexible composite but with increased strength.

**Example 23 - Premix in the form of paste or film containing niobium pentoxide nanoparticles and its use in metal welding applications**

In this example, various premixes in paste form were prepared with different polymers, including polyethylene glycols (PEGs), polypropylene glycols (PPGs) of different molecular weights, Mesamoll or butyl glycol, all using niobium pentoxide nanoparticles obtained in accordance with what is described in this patent application, i.e., high-energy milling.

In one embodiment, a premix with PEG 6000 was prepared by mixing (weight ratios) 50% of IPA (isopropyl alcohol), 30% of PEG 6000 and 20% of $Nb_2O_5$. The preparation involved weighing PEG + alcohol, placing them under stirring with gentle heating (>=70°C) until they solubilize, and then adding the $Nb_2O_5$ nanoparticles, maintaining stirring under heating for 10 min. Next, the material obtained is heated in an oven at 100°C for 15 min until a film is formed. The premix obtained is in the form of a film that can be used as is, or it can be scraped off and used in the form of powder or flakes.

In another embodiment, a premix with butyl glycol was prepared by mixing (weight ratios) 65% of butyl glycol and 35% of $Nb_2O_5$. The preparation involved weighing the materials, with butyl glycol being stirred and the $Nb_2O_5$ nano-particles subsequently added. Next, the material so obtained was heated in an oven at 100°C until a paste was formed.

In another embodiment, a premix with Mesamoll was prepared by mixing (weight ratios) 51% of Mesamoll and 49% of $Nb_2O_5$. The preparation involved weighing the materials, with Mesamoll being stirred and the $Nb_2O_5$ nanoparticles subsequently added. In this case, the dispersion was mechanical using a Cowles disperser or basic mixer. Next, the material so obtained was heated in an oven at 100°C until a paste was formed.

A premix in the form of a butyl glycol paste as described above was applied to a steel metal piece on an area that was then directly subjected to a welding process over the area containing the applied premix. The premix carrier in this embodiment of the invention is "sacrificial," since it is vaporized in the welding process, while the nanoparticles are incorporated into the metal alloy formed in the welding process. The metal piece obtained post-welding showed improved properties, notably better tenacity, mechanical strength, heat dissipation (reduction of HAZ) and more consistent hardness, in addition to microstructural improvement with a reduction in vacancies - resulting in a microstructure with fewer primary Widmanstätten ferrites and the like. This new approach of incorporating nanoparticles into the welded material by simply pre-applying a paste to the area to be welded, is surprising to those skilled in the art and solves various technical problems, such as: enabling better welding processes without requiring changes to other materials used; ensuring the correct placement of the premix due to its paste form; adjusting the concentration of nanoparticles in the premix according to the desired amount of nanoparticle to be incorporated into the weld; as well as other technical advantages.

Those skilled in the art will appreciate the knowledge disclosed herein and will be able to reproduce the invention in the disclosed embodiments and in other variants and alternatives thereof. encompassed by the scope of the following claims.

**Claims**

1. A functional premix, **characterized in that** it comprises: a solid, semi-solid, paste-like or liquid carrier or compatibilizer; and a filler of 0.0001 to 50% by weight of nanoparticles having a defined particle size and chemically defined composition.

2. The premix of claim 1, **characterized in that** said carrier or compatibilizer is selected from: a polymeric, ceramic, metallic material, or combinations thereof.

3. The premix of claim 2, **characterized in that** said polymeric material is selected from: diols, polyols, adhesives/-plasticizers, such as mesamoll, elastomers, rubbers, thermoplastic polymers, thermosetting polymers, resins, waxes, epoxy resins, phenolic resins, polymethyl methacrylate (acrylic), polystyrene, polyvinyl chloride (PVC), polyethylene, polypropylene, natural polymers selected from rubber, silk, wool, cellulose, or combinations thereof.

4. The premix of claim 3, **characterized in that** said diol or polyol is selected from: alkyl glycol, alkylene glycol, polyalkylene glycol, ethylene glycol, propylene glycol, butyl glycol, polyethylene glycol, polypropylene glycol, or combinations thereof.

5. The premix of any one of claims 1-4, **characterized in that** said nanoparticles are nanoparticles of metals, transition metals, non-metals, oxides, ceramic oxides, rare earth elements, or combinations thereof.

6. The premix of claim 5, **characterized in that** said nanoparticles are of a material containing niobium, titanium, tantalum, their oxides, hydrates, carbides, oxalates, graphene, graphene oxide, or combinations thereof.

7. The premix of claim 6, **characterized in that** said nanoparticles are of niobium pentoxide, niobium oxalate, niobic acid, FeNb, titanium dioxide, tantalum pentoxide, or combinations thereof.

8. The premix of any one of claims 5-7, **characterized in that** said nanoparticles have a size smaller than 750 nm, preferably smaller than 500 nm.

9. The premix of claim 8, **characterized in that** said nanoparticle filler comprises a degree of crystallinity below 81% or a degree of amorphization of at least 19%.

10. The premix of claim 9, **characterized in that** said nanoparticle filler comprises: (i) a degree of crystallinity below 61%, preferably a degree of crystallinity below 45% and more preferably a degree of crystallinity below 30%; or (ii) a degree of amorphization of at least 39%, preferably a degree of amorphization of at least 55% and more preferably a degree of amorphization of at least 70%.

11. A process for obtaining the functional premix as defined in claim 1, **characterized in that** it comprises the steps of:

    - incorporating 0.0001 to 50% by weight of nanoparticles of metals, transition metals, non-metals, oxides, ceramic oxides, rare earth elements, or combinations thereof into a carrier or compatibilizer selected from a polymeric, ceramic, metallic material, or combinations thereof; and
    - homogenizing until a solid, semi-solid or paste-like premix is obtained.

12. A process for modifying materials, **characterized in that** it comprises one or more steps of adding a functional premix as defined in claim 1 to a processing step of metallic, ceramic, polymeric material or combinations thereof.

13. A material having modified properties, **characterized in that** is obtained by the process of claim 12.

14. The material of claim 13, **characterized in that** it comprises a nanoparticle concentration in the range of 1 to 500 ppm.

Fig. 1A

Fig. 1B

Fig. 2A

Fig. 2B

Fig. 3A

Fig. 3B

Fig. 4A

Fig. 4B

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

Fig. 43

Fig. 44

Fig. 45

FTIR 1010/2

Fig. 46

FTIR 1010/3

Fig. 47

Fig. 48

Fig. 49

FTIR 1020/2

Fig. 50

FTIR 1020/3

Fig. 51

Fig. 52

Fig. 53

Fig. 54

Fig. 55

Fig. 56

Fig. 57

Fig. 58

Fig. 59

Fig. 60

Fig. 61

Fig. 62

Fig. 63

Fig. 64

Fig. 65

Fig. 66

Fig. 67

Fig. 68

Fig. 69

Fig. 70

Fig. 71

Fig. 72

Fig. 73

Fig. 74

Fig. 75

Fig. 76

Fig. 77

Fig. 78

Fig. 79

Fig. 80

Fig. 81

## INTERNATIONAL SEARCH REPORT

| International application No. |
| --- |
| **PCT/BR2024/050419** |

| A. | CLASSIFICATION OF SUBJECT MATTER |
| --- | --- |

**B82Y 30/00**(2011.01)i; **B82Y 40/00**(2011.01)i; *C08F 8/42*(2006.01)i; *C08K 3/22*(2006.01)i; *C08K 3/08*(2006.01)i; **C01F 17/00**(2020.01)i; **C08K 9/00**(2006.01)i; **C09C 1/36**(2006.01)i; *C01G 23/04*(2006.01)i
CPC: B82Y30/00; B82Y40/00; C08F 8/42; C08K2003/221; C08K2003/0881; C01F17/00; C08K9/00; C09C 1/36; C01G 23/04

According to International Patent Classification (IPC) or to both national classification and IPC

| B. | FIELDS SEARCHED |
| --- | --- |

Minimum documentation searched (classification system followed by classification symbols)

B82Y 30/00; B82Y 40/00; C08F 8/42; C08K 3/22; C08K 3/08; C01F 17/00; C08K 9/00; C09C 1/36; C01G 23/04
C09C 1/36; C01G 23/04

Documentation searched other than minimum documentation to the extent that such documents are included in the fields searched

Banco de dados do INPI-BR

Electronic data base consulted during the international search (name of data base and, where practicable, search terms used)

Derwent Innovation / Clarivate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| P,X | WO 2024055091 A1 (INST HERCILIO RANDON [BR]) 21 March 2024 (2024-03-21)<br>The whole document | 1-14 |
| P,X | BR 102022010931 A2 (INST HERCILIO RANDON [BR]) 19 December 2023 (2023-12-19)<br>Abstract. Pages 1, 2, 7-15. Claims 1-9. Figures 1-9. | 1–14 |
| P,X | BR 102023010990 A2 (INST HERCILIO RANDON [BR]) 19 December 2023 (2023-12-19)<br>Abstract. Pages 1-3, 7-19. Claims 1-8. Figures 1-15 | 1–14 |
| X | US 8309632 B2 (SU WEI-FANG [TW]) 13 November 2012 (2012-11-13)<br>Abstract. Columns 2-10. Claims 1-5. | 1–14 |
| X | BR 112015009935 A2 (NANOTECH INNOVATIONS CORP [US]) 15 May 2018 (2018-05-15)<br>Abstract. Pages 1-10 and 35-38. Claims 1-11 and 36. | 1–14 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 December 2024** | **23 December 2024** |

| Name and mailing address of the ISA/BR | Authorized officer |
| --- | --- |
| **Instituto Nacional da Propriedade Industrial (Brasil)**<br>**Rua Mayrink Veiga 9, 20º andar, Centro Rio de Janeiro RJ – CEP 20.090-910**<br>**Brazil** | **José Rufino de Oliveira Junior** |
| Telephone No. **(55 21) 3037-3742, 3037-3984** | Telephone No. **55 21 30374528 - 30373319** |

Form PCT/ISA/210 (second sheet) (July 2022)

**INTERNATIONAL SEARCH REPORT**

International application No.

**PCT/BR2024/050419**

**C.    DOCUMENTS CONSIDERED TO BE RELEVANT**

| Category* | Citation of document, with indication, where appropriate, of the relevant passages | Relevant to claim No. |
|---|---|---|
| X | US 2008038552 A1 (NOACK ANDREAS [DE]) 14 February 2008 (2008-02-14)<br>        Figures 1 and 2. Pages 1-10. Claims 1-43. | 1–14 |
| X | BR PI1010316 A2 (CT DE INVESTIG EN QUIMICA APLICADA [MX]) 15 March 2016 (2016-03-15)<br>        Abstract. Pages 1, 2, 4-13. Claims 1-31. Figures 1 and 2. | 1–14 |
| X | Zhu, Lin; Li, Qiang; Gong, Fang-Ling; Yan, Xiao-Feng; Li, Xiao-Qing; Ma, Guang-Hui; Su, Zhi-Guo; Yuan, Qi-Peng. (2013). An insight into structure regulation of uniform polystyrene micro/nano-particles by porogen in premix membrane emulsification process. Journal of Membrane Science, 448(), 248–255. doi:10.1016/j.memsci.2013.08.002. The whole document. | 1-14 |
| Y | WO 0196512 A2 (PROCTER & GAMBLE [US]) 20 December 2001 (2001-12-20)<br>        The whole document | 1-14 |
| Y | FR 3013052 B1 (EL BOUNIA NOUR EDDINE [FR]) 20 November 2015 (2015-11-20)<br>        The whole document | 1-14 |
| Y | Morris, William H.; Harris, Andrew G.; Lukehart, Charles M. . (2014). Synthesis of VO2Nanopowders. Part II. Hydrolysis of Vanadium Alkoxide/Citric Acid Premixes: VO2Nanostructures of Controlled Shape. Journal of Cluster Science, 25(1), 323–334. doi:10.1007/s10876-013-0670-4 . The whole document | 1-14 |
| A | BR 122020011487 B1 (JANSSEN SCIENCES IRELAND UC [IE]) 20 February 2024 (2024-02-20)<br>        The whole document | 1-14 |
| A | US 2019137838 A1 (BASF SE [DE]) 09 May 2019 (2019-05-09)<br>        The whole document | 1-14 |
| A | Brand, K.; Suryanarayana, C.; Kieback, Bernd; Froes, F.H. . (1996). Phase Formation during Ball Milling of Ti-Al-B Powders. Materials Science Forum, 225-227(), 471–476. doi:10.4028/www.scientific.net/MSF.225-227.471. The whole document | 1-14 |

Form PCT/ISA/210 (second sheet) (July 2022)

## INTERNATIONAL SEARCH REPORT
### Information on patent family members

International application No.

**PCT/BR2024/050419**

| Patent document cited in search report | | | Publication date (day/month/year) | Patent family member(s) | | | Publication date (day/month/year) |
|---|---|---|---|---|---|---|---|
| WO | 2024055091 | A1 | 21 March 2024 | NONE | | | |
| BR | 102022010931 | A2 | 19 December 2023 | NONE | | | |
| BR | 102023010990 | A2 | 19 December 2023 | NONE | | | |
| US | 8309632 | B2 | 13 November 2012 | US | 2011009521 | A1 | 13 January 2011 |
| | | | | TW | 201102408 | A | 16 January 2011 |
| | | | | TW | I432511 | B | 01 April 2014 |
| BR | 112015009935 | A2 | 15 May 2018 | NONE | | | |
| US | 2008038552 | A1 | 14 February 2008 | DE | 102004010967 | A1 | 13 October 2005 |
| | | | | EP | 1720419 | A2 | 15 November 2006 |
| | | | | WO | 2005084462 | A2 | 15 September 2005 |
| | | | | WO | 2005084462 | A3 | 02 March 2006 |
| BR | PI1010316 | A2 | 15 March 2016 | CN | 102438798 | A | 02 May 2012 |
| | | | | CN | 102438798 | B | 26 November 2014 |
| | | | | JP | 2012523327 | A | 04 October 2012 |
| | | | | JP | 5849288 | B2 | 27 January 2016 |
| | | | | MX | 2009003842 | A | 13 October 2010 |
| | | | | US | 2012098163 | A1 | 26 April 2012 |
| | | | | WO | 2010117253 | A2 | 14 October 2010 |
| | | | | WO | 2010117253 | A3 | 25 November 2010 |
| WO | 0196512 | A2 | 20 December 2001 | WO | 0196512 | A3 | 17 October 2002 |
| | | | | AU | 6840401 | A | 24 December 2001 |
| | | | | CA | 2410362 | A1 | 20 December 2001 |
| | | | | CA | 2410362 | C | 12 August 2008 |
| | | | | CN | 1436104 | A | 13 August 2003 |
| | | | | EP | 1290123 | A2 | 12 March 2003 |
| | | | | JP | 2004504925 | A | 19 February 2004 |
| | | | | JP | 4097136 | B2 | 11 June 2008 |
| | | | | KR | 20030036223 | A | 09 May 2003 |
| | | | | MX | PA02012432 | A | 25 April 2003 |
| FR | 3013052 | B1 | 20 November 2015 | FR | 3013052 | A1 | 15 May 2015 |
| BR | 122020011487 | B1 | 20 February 2024 | AP | 2618 | A | 18 March 2013 |
| | | | | AR | 061620 | A1 | 10 September 2008 |
| | | | | AU | 2007262941 | A1 | 27 December 2007 |
| | | | | AU | 2007262941 | B2 | 21 November 2013 |
| | | | | BR | PI0713334 | A2 | 06 March 2012 |
| | | | | BR | PI0713334 | A8 | 02 January 2018 |
| | | | | BR | PI0713334 | B1 | 20 February 2024 |
| | | | | CA | 2654115 | A1 | 27 December 2007 |
| | | | | CA | 2654115 | C | 22 December 2015 |
| | | | | CL | 2007001847 | A1 | 08 February 2008 |
| | | | | CN | 101478950 | A | 08 July 2009 |
| | | | | CN | 101478950 | B | 06 February 2013 |
| | | | | CY | 1120564 | T1 | 10 July 2019 |
| | | | | DK | 2040671 | T3 | 07 May 2018 |
| | | | | DK | 3366278 | T3 | 23 September 2024 |
| | | | | EA | 200970047 | A1 | 28 April 2009 |
| | | | | EA | 021700 | B1 | 31 August 2015 |
| | | | | EP | 2040671 | A2 | 01 April 2009 |
| | | | | EP | 2040671 | B1 | 24 January 2018 |

Form PCT/ISA/210 (patent family annex) (July 2022)

# EP 4 778 882 A1

International application No.

**PCT/BR2024/050419**

| Patent document cited in search report | | | Publication date (day/month/year) | Patent family member(s) | | | Publication date (day/month/year) |
|---|---|---|---|---|---|---|---|
| | | | | EP | 3366278 | A1 | 29 August 2018 |
| | | | | EP | 3366278 | B1 | 07 August 2024 |
| | | | | ES | 2662068 | T3 | 05 April 2018 |
| | | | | ES | 2989051 | T3 | 25 November 2024 |
| | | | | FI | 3366278 | T3 | 25 September 2024 |
| | | | | HR | P20180629 | T1 | 01 June 2018 |
| | | | | HR | P20241265 | T3 | 06 December 2024 |
| | | | | HU | E038797 | T2 | 28 November 2018 |
| | | | | IL | 195491 | A | 30 November 2014 |
| | | | | JO | P20200160 | A1 | 30 October 2022 |
| | | | | JP | 2009541271 | A | 26 November 2009 |
| | | | | JP | 5292288 | B2 | 18 September 2013 |
| | | | | KR | 20090023703 | A | 05 March 2009 |
| | | | | KR | 101406879 | B1 | 13 June 2014 |
| | | | | LT | 2040671 | T | 10 May 2018 |
| | | | | LT | 3366278 | T | 11 November 2024 |
| | | | | MX | 2009000158 | A | 23 January 2009 |
| | | | | NZ | 573291 | A | 25 November 2011 |
| | | | | PE | 20080210 | A1 | 11 April 2008 |
| | | | | PL | 2040671 | T3 | 31 August 2018 |
| | | | | PL | 3366278 | T3 | 28 October 2024 |
| | | | | PT | 2040671 | T | 14 March 2018 |
| | | | | PT | 3366278 | T | 21 October 2024 |
| | | | | RS | 57111 | B1 | 29 June 2018 |
| | | | | RS | 65990 | B1 | 31 October 2024 |
| | | | | SG | 173315 | A1 | 29 August 2011 |
| | | | | SI | 2040671 | T1 | 31 May 2018 |
| | | | | TW | 200817008 | A | 16 April 2008 |
| | | | | TW | I413521 | B | 01 November 2013 |
| | | | | UA | 97641 | C2 | 12 March 2012 |
| | | | | US | 2016089369 | A1 | 31 March 2016 |
| | | | | US | 11389447 | B2 | 19 July 2022 |
| | | | | US | 2009176813 | A1 | 09 July 2009 |
| | | | | US | 2015010637 | A1 | 08 January 2015 |
| | | | | US | 2022273653 | A1 | 01 September 2022 |
| | | | | UY | 30431 | A1 | 31 January 2008 |
| | | | | WO | 2007147882 | A2 | 27 December 2007 |
| | | | | WO | 2007147882 | A3 | 19 June 2008 |
| US | 2019137838 | A1 | 09 May 2019 | CA | 3015945 | A1 | 14 September 2017 |
| | | | | CN | 108780258 | A | 09 November 2018 |
| | | | | EP | 3427106 | A1 | 16 January 2019 |
| | | | | TW | 201805378 | A | 16 February 2018 |
| | | | | WO | 2017153406 | A1 | 14 September 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022036427 A
- US 20070116976 A1
- CN 110229412
- US 2009226711 A1
- JP 2003073558 B
- BR 102022010931